(19)

Europäisches Patentamt

European Patent Office

Office européen des brevets

(11) **EP 3 869 223 A1**

(12) **EUROPEAN PATENT APPLICATION**

(43) Date of publication:
**25.08.2021 Bulletin 2021/34**

(51) Int Cl.:
**G01S 7/41** *(2006.01)*         **G01S 13/88** *(2006.01)*
**G01V 3/12** *(2006.01)*         **G01V 3/38** *(2006.01)*

(21) Application number: **21158553.4**

(22) Date of filing: **22.02.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.02.2020   US 202062980206 P**
**03.03.2020   US 202062984737 P**
**27.03.2020   US 202063001226 P**
**11.06.2020   US 202063038037 P**
**05.12.2020   US 202017113023**
**14.01.2021   US 202117149625**
**20.02.2021   US 202117180766**
**20.02.2021   US 202117180762**
**20.02.2021   US 202117180760**
**20.02.2021   US 202117180763**

(71) Applicant: **Origin Wireless, Inc.**
**Greenbelt, MD 20770 (US)**

(72) Inventors:
• **WU, Chenshu**
  **Greenbelt, MD Maryland 20770 (US)**

• **WANG, Beibei**
  **Clarksville, MD Maryland 21029 (US)**
• **REGANI, Sai Deepika**
  **Hyattsville, MD Maryland 20783 (US)**
• **ZHANG, Feng**
  **Greenbelt, MD Maryland 20770 (US)**
• **HU, Yuqian**
  **College Park, MD Maryland 20740 (US)**
• **LAI, Hung-Quoc Duc**
  **Parkville, MD Maryland 21234 (US)**
• **AU, Oscar Chi-Lim**
  **San Jose, CA California 95136 (US)**
• **BUGOS, Dan**
  **Washington, DC District of Columbia 20010 (US)**
• **XI, Wenchao**
  **Bethesda, MD Maryland 20817 (US)**
• **WU, Min**
  **Clarksville, MD Maryland 21029 (US)**
• **LIU, K.J. Ray**
  **Potomac, MD Maryland 20854 (US)**

(74) Representative: **Boult Wade Tennant LLP**
**Salisbury Square House**
**8 Salisbury Square**
**London EC4Y 8AP (GB)**

(54) **SYSTEM AND METHOD FOR WIRELESS MATERIAL SENSING BASED ON MULTIPATH CHANNEL INFORMATION**

(57)     Methods, apparatus and systems for wireless material sensing are described. In one example, a described system comprises: a transmitter configured for transmitting, using transmit antennas, a first wireless signal through a wireless multipath channel of a venue; a receiver configured for receiving, using receive antennas, a second wireless signal through the wireless multipath channel; and a processor. The second wireless signal comprises a reflection or a refraction of the first wireless signal at a surface of a target material of an object in the venue. The processor is configured for: obtaining a plurality of channel information (CI) of the wireless multipath channel based on the second wireless signal, wherein each CI is associated with a respective transmit antenna and a respective receive antenna; computing a material analytics based on the plurality of CI; and determining a type of the target material of the object based on the material analytics.

FIG. 11

## Description

### TECHNICAL FIELD

The present teaching generally relates to wireless sensing, monitoring and recognition. More specifically, the present teaching relates to: periodic or transient motion detection, e.g. fall event detection, sensing and detecting material, wireless monitoring for motion detection and localization, and periodic or transient motion recognition, e.g. hand motion/gesture recognition, based on wireless signals by processing wireless channel information (CI); wireless tracking a writing on a surface, and improving accuracy and efficiency of the wireless monitoring by processing wireless CI.

### BACKGROUND

As the population ages worldwide, our society should take more and more arduous responsibilities to provide medical care for the elderly people. Among all of the accidents to the elderly people, fall events represent the most frequent ones. In all regions of the world, death rates caused by falls are the highest among adults over the age of 60. Moreover, the damage caused by the falls is not only reflected in the immediate injury of the body, but also in all subsequent adverse effects caused by the lack of timely assistance, especially for those who live alone. Therefore, a real-time indoor fall detection system with timely and automatic alarm is highly desirable, and could potentially save lives by requesting external help timely. The great importance of fall detection has driven the development of various systems, which can be roughly divided into two categories: wearable and non-contact systems. The wearable techniques require users to wear special devices, including electrocardiogram (ECG) sensors, pressure sensors, accelerometer, gyroscope, smart watches, and smartphones, etc., to track the motion of their bodies. However, in addition to the potential false alarms of wearable systems, it is cumbersome and sometimes impractical to ask users especially the elder people to carry specific sensors. This inspires the development of non-contact systems. The most common non-contact systems are vision-based. In an existing non-contact system, an array of cameras, infrared sensors, or depth cameras, need to be deployed to monitor an area of interest. As such, vision-based systems are limited by their visibility requirement and may also bring privacy concerns, especially in some specific environments such as bathrooms and bedrooms.

Efforts have been made to enable material identification on ubiquitous computing machines. In recent years, the proliferation of autonomous devices (e.g., self-driving vehicles, drones), in-home robots (e.g., robot vacuum cleaner, elder care robots) and other smart devices has further driven such demand of object imaging and material identification in mobile environments. Should it be enabled on ubiquitous devices, there could be many applications, ranging from security to automotive and robotics. For example, the capability of material sensing would allow a user to perform convenient in-home detection of a suspicious package containing metals or liquids using a smartphone. A robot could actuate more appropriately by accounting for the target material, e.g., applying different grip strengths for ceramic or metal targets. Further, a smart pencil or a kid educational toy could be enabled to react intelligently with specific functions according to the things it touches or points to. All these exciting applications and many more to be imagined necessitate ubiquitous object material identification in an accurate, portable, and low-cost setting. Conventional systems, however, usually rely on specialized hardware like X-Ray and ultrasonography and are limited to only critical security and medical usage, which prevents them from ubiquitous adoption outside a lab environment. Recently, radio-frequency identification (RFID) tags are deployed for material identification, while ultra-wideband (UWB) signals are employed to identify liquids. These systems, however, rely on multiple transceivers locating on different sides of the target to measure the signals penetrating it, limiting their applications to only fixed, constrained setups and to objects that radio-frequency (RF) signals can penetrate through. Some other systems require specialized radars or mutually orthogonal antennas.

In the era of pervasively connected and sensed Internet of Things, many human-machine interactions have been shifted from a conventional computer keyboard or mouse to hand gestures and writing in the air. While gesture recognition and handwriting recognition have been studied, most existing handwriting tracking systems require cameras, handheld sensors, or dedicated hardware limiting user experience, convenience and usage scaling. A high-precision passive handwriting tracking system is desirable.

Wireless monitoring using wireless channel information (CI) has received a lot of attention in the era of Internet of Things. However, CI, e.g. channel state information (CSI) or channel frequency information (CFI), may be interrupted by many factors, such as hardware imperfection, thermal noise, etc. In addition, there may be many outliers which, if without preprocessing, will affect the performance of wireless monitoring significantly.

Step counting or walking detection is widely used in indoor localization and position systems. It is becoming very popular as an everyday exercise measurer and motivator. Most existing works are based on the periodicity of walking in normal life to develop autocorrelation-based methods or zero-crossing checking methods. However, existing methods ignore the uncertainties and spurious spikes of the acceleration measurements during walking, which can seriously degrade their detection results.

People are being surrounded by a proliferating number of smart connected devices and computers each day.

Human-Computer Interaction (HCI), therefore, forms a significant portion of people's daily routine. Innovative solutions and approaches have been developed to simplify HCI, e.g. from traditional black/whiteboards to keyboards and computer mouse then to touch screens; from push buttons to touch sensors to fingerprint sensors to motion sensors and voice-controlled systems. To further simplify HCI, researchers have experimented with different modalities to build gesture recognition systems. Vision-based gesture recognition tracked the movement of a hand (or finger) to reconstruct the hand trajectory. Because the vision-based approaches specifically target line-of-sight (LOS) applications, they require ambient light and potentially raise privacy concerns. While sensor-based gesture recognition techniques have provided solutions to gesture recognition, passive or device-free approaches become more and more desirable because of better user-convenience and better user-experience.

## SUMMARY

The present teaching generally relates to wireless sensing, monitoring and recognition. More specifically, the present teaching relates to: periodic or transient motion detection, e.g. fall event detection, sensing and detecting material, wireless monitoring for motion detection and localization, and periodic or transient motion recognition, e.g. hand motion/gesture recognition, based on wireless signals by processing wireless channel information (CI); wireless tracking a writing on a surface, and improving accuracy and efficiency of the wireless monitoring by processing wireless CI.

In one embodiment, a system for target motion detection is described. The system comprises: a transmitter configured for transmitting a first wireless signal through a wireless multipath channel of a venue; a receiver configured for receiving a second wireless signal through the wireless multipath channel; and a processor. The second wireless signal differs from the first wireless signal due to the wireless multipath channel that is impacted by a target motion of an object in the venue. The processor is configured for: obtaining a time series of channel information (TSCI) of the wireless multipath channel based on the second wireless signal, computing a time series of spatial-temporal information (STI) of the object based on the TSCI, and detecting the target motion of the object based on the time series of STI (TSSTI).

In another embodiment, a wireless device of a wireless target motion detection system is described. The wireless device comprises: a processor; a memory communicatively coupled to the processor; and a receiver communicatively coupled to the processor. An additional wireless device of the wireless target motion detection system is configured for transmitting a first wireless signal through a wireless multipath channel of a venue to the receiver. The receiver is configured for receiving a second wireless signal through the wireless multipath channel. The second wireless signal differs from the first wireless signal due to the wireless multipath channel that is impacted by a target motion of an object in the venue. The processor is configured for: obtaining a time series of channel information (TSCI) of the wireless multipath channel based on the second wireless signal, computing a time series of spatial-temporal information (TSSTI) of the object based on the TSCI, and detecting the target motion of the object based on at least one of: the TSSTI or the TSCI.

In yet another embodiment, a method of a target motion detection system is described. The method comprises: transmitting, by a transmitter, a first wireless signal through a wireless multipath channel of a venue to a receiver; receiving, by the receiver in an online stage of the target motion detection system, a second wireless signal through the wireless multipath channel, wherein the second wireless signal differs from the first wireless signal due to the wireless multipath channel that is impacted by a target motion of an object in the venue; obtaining a time series of channel information (TSCI) of the wireless multipath channel based on the second wireless signal, using a processor, a memory communicatively coupled with the processor and a set of instructions stored in the memory; computing a time series of spatial-temporal information (TSSTI) of the object based on the TSCI; and detecting the target motion of the object based on at least one of: the TSSTI or the TSCI.

In one embodiment, a system for wireless material sensing is described. The system comprises: a transmitter configured for transmitting, using a plurality of transmit antennas, a first wireless signal through a wireless multipath channel of a venue; a receiver configured for receiving, using a plurality of receive antennas, a second wireless signal through the wireless multipath channel; and a processor. The second wireless signal comprises a reflection or a refraction of the first wireless signal at a target material surface of an object in the venue. The target material surface is a surface of a target material of the object. The processor is configured for: obtaining a plurality of channel information (CI) of the wireless multipath channel based on the second wireless signal, wherein each CI is associated with a respective one of the plurality of transmit antennas of the transmitter and associated with a respective one of the plurality of receive antennas of the receiver, wherein each CI comprises at least one of: a channel state information (CSI), channel impulse response (CIR), channel frequency response (CFR), or received signal strength index (RSSI); computing a material analytics based on the plurality of CI; and determining a type of the target material of the object based on the material analytics.

In another embodiment, a wireless device of a wireless material sensing system is described. The wireless device comprises: a processor; a memory communicatively coupled to the processor; and a receiver communicatively coupled to the processor. An additional wireless device of the wireless material sensing system is configured for transmitting, using a plurality of transmit antennas, a first wireless signal through a wireless multipath channel of a venue. The receiver is configured for receiving, using a plurality of receive antennas, a second wireless signal through the wireless multipath channel. The second wireless signal comprises a reflection or a refraction of the first wireless signal at a target material surface of an object in the venue. The target material surface is a surface of a target material of the object. The processor is configured for: obtaining a plurality of channel information (CI) of the wireless multipath channel based on the second wireless signal, wherein each CI is associated with a respective one of the plurality of transmit antennas and associated with a respective one of the plurality of receive antennas; computing a material analytics based on the plurality of CI; and determining a type of the target material of the object based on the material analytics.

In yet another embodiment, a method of a wireless material sensing system is described. The method comprises: transmitting, using N1 transmit antennas of a transmitter, a first wireless signal through a wireless multipath channel of a venue; receiving, using N2 receive antennas of a receiver, a second wireless signal through the wireless multipath channel, wherein the second wireless signal comprises a reflection or a refraction of the first wireless signal at a surface of a target material of an object in the venue, wherein N1 and N2 are positive integers; obtaining a plurality of channel information (CI) of the wireless multipath channel based on the second wireless signal, wherein each CI is associated with a respective one of the N1 transmit antennas and associated with a respective one of the N2 receive antennas, wherein each CI comprises at least one of: a channel state information (CSI), channel impulse response (CIR), channel frequency response (CFR), or received signal strength index (RSSI); computing a material analytics based on the plurality of CI; and determining a type of the target material of the object based on the material analytics.

In one embodiment, a system for wireless writing tracking is described. The system comprises: a transmitter configured for transmitting a first wireless signal through a wireless multipath channel of a venue; a receiver configured for receiving a second wireless signal through the wireless multipath channel; and a processor. The second wireless signal comprises a reflection of the first wireless signal by a tip of a writing instrument in the venue. The processor is configured for: obtaining a time series of channel information (CI) of the wireless multipath channel based on the second wireless signal, wherein each CI comprises at least one of: a channel state information (CSI), channel impulse response (CIR), channel frequency response (CFR), or received signal strength index (RSSI); and tracking a movement of the tip of the writing instrument based on the time series of CI (TSCI).

In another embodiment, a wireless device of a wireless writing tracking system is described. The wireless device comprises: a processor; a memory communicatively coupled to the processor; and a receiver communicatively coupled to the processor. An additional wireless device of the wireless writing tracking system is configured for transmitting a first wireless signal through a wireless multipath channel of a venue. The receiver is configured for receiving a second wireless signal through the wireless multipath channel. The second wireless signal comprises a reflection of the first wireless signal by a tip of a writing instrument in the venue. The processor is configured for: obtaining a time series of channel information (CI) of the wireless multipath channel based on the second wireless signal, wherein each CI comprises at least one of: a channel state information (CSI), channel impulse response (CIR), channel frequency response (CFR), or received signal strength index (RSSI); and tracking a movement of the tip of the writing instrument based on the time series of CI (TSCI).

In yet another embodiment, a method of a wireless writing tracking system is described. The method comprises: transmitting a first wireless signal through a wireless multipath channel of a venue; receiving a second wireless signal through the wireless multipath channel, wherein the second wireless signal comprises a reflection of the first wireless signal by a tip of a writing instrument in the venue; obtaining a time series of channel information (CI) of the wireless multipath channel based on the second wireless signal, wherein each CI comprises at least one of: a channel state information (CSI), channel impulse response (CIR), channel frequency response (CFR), or received signal strength index (RSSI); and tracking a writing of the tip of the writing instrument based on the time series of CI (TSCI).

In one embodiment, a method for wireless monitoring is described. The method comprises: transmitting a first wireless signal from a first wireless device with N1 transmit antennas through a wireless multipath channel of a venue, wherein N1 is a positive integer larger than one; receiving a second wireless signal by a second wireless device with N2 receive antennas through the wireless multipath channel, wherein the second wireless signal differs from the first wireless signal due to the wireless multipath channel that is impacted by a motion of an object in the venue, wherein N2 is a positive integer larger than one; obtaining a number of time series of channel information (TSCI) of the wireless multipath channel based on the second wireless signal using a processor, a memory communicatively coupled with the processor and a set of instructions stored in the memory, wherein each TSCI is associated with a respective one of the N1 transmit antennas and a respective one of the N2 receive antennas; preprocessing the number of TSCI; and monitoring the motion of the object in the venue based on the number of preprocessed TSCI.

In another embodiment, a wireless monitoring system is described. The wireless monitoring system comprises: a first wireless device having N1 transmit antennas configured for transmitting a first wireless signal through a wireless multipath channel of a venue, wherein N1 is a positive integer larger than one; a second wireless device having N2 receive antennas configured for receiving a second wireless signal through the wireless multipath channel, wherein the second wireless signal differs from the first wireless signal due to the wireless multipath channel that is impacted by a motion of an object in the venue, wherein N2 is a positive integer larger than one; and a processor configured for: obtaining a number of time series of channel information (TSCI) of the wireless multipath channel based on the second wireless signal, wherein each TSCI is associated with a respective one of the N1 transmit antennas and a respective one of the N2 receive antennas, preprocessing the number of TSCI, and monitoring the motion of the object in the venue based on the number of preprocessed TSCI.

In yet another embodiment, a smart speaker is described. The smart speaker comprises: a receiver and a processor. The receiver has a plurality of receive antennas configured for receiving a first wireless signal through a wireless multipath channel of a venue. The first wireless signal is received based on a transmitted wireless signal transmitted by a plurality of transmit antennas of a wireless device separate from the smart speaker. The first wireless signal differs from the transmitted wireless signal due to the wireless multipath channel and a modulation by an object undergoing a motion in the venue. The processor is configured for: obtaining a number of time series of channel information (TSCI) of the wireless multipath channel based on the first wireless signal, wherein each TSCI is associated with a respective one of the transmit antennas and a respective one of the receive antennas, preprocessing the number of TSCI by (i) identifying a time window as a questionable time window which is at least one of: noisy, abnormal, atypical, irregular, untrustworthy, questionable, or erratic, and (ii) removing all CI in the questionable time window, monitoring the motion of the object in the venue based on the number of preprocessed TSCI, and generating, based on the monitoring, at least one of: a response, an assistance or a presentation to the object.

In one embodiment, a system for collaborative wireless motion monitoring is described. The system comprises: a set of Type 1 devices each of which is a heterogeneous wireless device in a venue; a set of Type 2 devices that are wirelessly interconnected; and a processor. Each Type 2 device is a heterogeneous wireless device in the venue. Each Type 2 device is interconnected wirelessly with a respective set of at least one other Type 2 device in the venue. Each Type 2 device is associated with a respective subset of Type 1 devices in the venue. Each Type 2 device is configured for: asynchronously receiving, from each of the respective subset of Type 1 devices associated with the Type 2 device, a respective wireless signal through a respective wireless multipath channel impacted by a motion of an object in the venue, asynchronously receiving, from each of a subset of the respective set of at least one other Type 2 device interconnected wirelessly with the Type 2 device, a respective wireless signal through a respective wireless multipath channel impacted by the motion of the object in the venue, and obtaining a set of asynchronous time series of channel information (CI) associated with the Type 2 device, wherein each asynchronous time series of CI (ATSCI) is associated with a respective wireless multipath channel and is obtained based on the asynchronously received respective wireless signal. The processor is configured for monitoring the motion of the object in the venue based on the set of ATSCI associated with each Type 2 device.

In another embodiment, a method of a collaborative wireless motion monitoring system is described. The method comprises: interconnecting wirelessly a set of Type 2 devices in a venue, wherein: each Type 2 device is a heterogeneous wireless device in the venue, each Type 2 device is interconnected wirelessly with a respective set of at least one other Type 2 device in the venue, each Type 2 device is associated with a respective set of Type 1 devices in the venue, and each Type 1 device is a heterogeneous wireless device in the venue; for each Type 2 device: asynchronously receiving, from each of the respective set of Type 1 devices associated with the Type 2 device, a respective wireless signal through a respective wireless multipath channel impacted by a motion of an object in the venue, asynchronously receiving, from each of a subset of the respective set of at least one other Type 2 device interconnected wirelessly with the Type 2 device, a respective wireless signal through a respective wireless multipath channel impacted by the motion of the object in the venue, and obtaining a set of asynchronous time series of channel information (CI) associated with the Type 2 device, wherein each asynchronous time series of CI (ATSCI) is associated with a respective wireless multipath channel and is obtained based on the asynchronously received respective wireless signal; and monitoring the motion of the object in the venue based on the set of ATSCI associated with each Type 2 device.

In yet another embodiment, a method of a collaborative wireless motion monitoring system is described. The method comprises: interconnecting wirelessly a set of Type 2 devices in a venue, wherein: each Type 2 device is a heterogeneous wireless device in the venue, each Type 2 device is interconnected wirelessly with a respective set of at least one other Type 2 device in the venue, each Type 2 device is associated with a respective set of Type 1 devices in the venue, and each Type 1 device is a heterogeneous wireless device in the venue; for each Type 2 device: communicating asynchronously a respective wireless signal between the Type 2 device and each of the respective set of Type 1 devices associated with the Type 2 device, through a respective wireless multipath channel impacted by a motion of an object in the venue, communicating asynchronously a respective wireless signal between the Type 2 device and each of the respective set of at least one other Type 2 device interconnected wirelessly with the Type 2 device, through a respective wireless multipath channel impacted by the motion of the object in the venue, and obtaining a set of asynchronous time series of channel information (CI) associated with the Type 2 device, wherein each asynchronous time series of CI (ATSCI) is of a respective wireless multipath channel and is obtained based on the asynchronously received respective wireless signal; and monitoring the motion of the object in the venue based on the set of ATSCI associated with each Type 2 device.

In one embodiment, a system for wireless motion recognition is described. The system comprises: a transmitter configured for transmitting a first wireless signal through a wireless multipath channel of a venue; a receiver configured for receiving a second wireless signal through the wireless multipath channel; and a processor. The second wireless signal differs from the first wireless signal due to the wireless multipath channel that is impacted by a motion of an object in the venue. The processor is configured for: obtaining a time series of channel information (TSCI) of the wireless multipath channel based on the second wireless signal, tracking the motion of the object based on the TSCI to generate a gesture trajectory of the object, and determining a gesture shape based on the gesture trajectory and a plurality of pre-determined gesture shapes.

In another embodiment, a wireless device of a wireless motion recognition system is described. The wireless device comprises: a processor; a memory communicatively coupled to the processor; and a receiver communicatively coupled to the processor. An additional wireless device of the wireless motion recognition system is configured for transmitting a first wireless signal through a wireless multipath channel of a venue. The receiver is configured for receiving a second wireless signal through the wireless multipath channel. The second wireless signal differs from the first wireless signal due to the wireless multipath channel that is impacted by a motion of an object in the venue. The processor is configured for: obtaining a time series of channel information (TSCI) of the wireless multipath channel based on the second wireless signal, tracking the motion of the object based on the TSCI to generate a gesture trajectory of the object, and determining a gesture shape based on the gesture trajectory and a plurality of pre-determined gesture shapes.

In yet another embodiment, a method of a wireless motion recognition system is described. The method comprises: transmitting a first wireless signal through a wireless multipath channel of a venue; receiving a second wireless signal through the wireless multipath channel, wherein the second wireless signal differs from the first wireless signal due to the wireless multipath channel that is impacted by a motion of an object in the venue; obtaining a time series of channel information (TSCI) of the wireless multipath channel based on the second wireless signal; tracking the motion of the object based on the TSCI to generate a gesture trajectory of the object; and determining a gesture shape based on the gesture trajectory and a plurality of pre-determined gesture shapes.

Other concepts relate to software for implementing the present teaching on wireless sensing, monitoring and recognition. Additional novel features will be set forth in part in the description which follows, and in part will become apparent to those skilled in the art upon examination of the following and the accompanying drawings or may be learned by production or operation of the examples. The novel features of the present teachings may be realized and attained by practice or use of various aspects of the methodologies, instrumentalities and combinations set forth in the detailed examples discussed below.


## BRIEF DESCRIPTION OF DRAWINGS

The methods, systems, and/or devices described herein are further described in terms of exemplary embodiments. These exemplary embodiments are described in detail with reference to the drawings. These embodiments are non-limiting exemplary embodiments, in which like reference numerals represent similar structures throughout the several views of the drawings.


FIG. 1 illustrates an exemplary wireless indoor rich-scattering environment, according to some embodiments of the present disclosure.

FIG. 2 illustrates a flow chart of an exemplary method for wirelessly detecting a target motion of an object, according to some embodiments of the present teaching.

FIGS. 3A-3D illustrate an exemplary spatial auto-correlation function (ACF) and its differentials for electromagnetic (EM) wave components, according to one embodiment of the present teaching.

FIG. 4 illustrates an exemplary flowchart of a wireless fall detection system, according to one embodiment of the present teaching.

FIGS. 5A-5B illustrate an exemplary application of the principle of segmental locally normalized dynamic time warping (SLN DTW) in series sanitization, according to one embodiment of the present teaching.

FIG. 6 illustrates an exemplary experiment setup for line-of-sight (LOS) and non-LOS scenarios, according to one embodiment of the present teaching.

FIGS. 7A-7D illustrate exemplary instances of speed and acceleration patterns for "walking-then-fall" and "sitting-down" scenarios, according to one embodiment of the present teaching.

FIGS. 8A-8C illustrate exemplary templates of speed and acceleration in one-dimensional and two-dimensional spaces, according to one embodiment of the present teaching.

FIG. 9 illustrates an exemplary performance comparison between a dynamic time warping (DTW) method and a threshold method, according to one embodiment of the present teaching.

FIG. 10A illustrates an exemplary environment for wireless material sensing, according to some embodiments of the present disclosure.

FIG. 10B illustrates an exemplary scenario for wireless material sensing, according to some embodiments of the present disclosure.

FIG. 11 illustrates an exemplary workflow for wireless material sensing based on channel impulse response (CIR), according to some embodiments of the present disclosure.

FIG. 12 illustrates a flow chart of an exemplary method for wireless material sensing, according to some embodiments of the present disclosure.

FIG. 13 illustrates a flow chart of an exemplary method for CIR interpolation and CIR synchronization, according to some embodiments of the present disclosure.

FIG. 14 illustrates a flow chart of an exemplary method for CIR synchronization, according to some embodiments of the present disclosure.

FIG. 15 illustrates a flow chart of another exemplary method for CIR synchronization, according to some embodiments of the present disclosure.

FIG. 16 illustrates a flow chart of an exemplary method for noise cancellation and target detection, according to some embodiments of the present disclosure.

FIG. 17 illustrates a flow chart of an exemplary method for obtaining background CIRs, according to some embodiments of the present disclosure.

FIG. 18 illustrates a flow chart of another exemplary method for obtaining background CIRs, according to some embodiments of the present disclosure.

FIG. 19 illustrates a flow chart of an exemplary method for material reflection feature (MRF) estimation, according to some embodiments of the present disclosure.

FIG. 20 illustrates a flow chart of another exemplary method for MRF estimation, according to some embodiments of the present disclosure.

FIG. 21 illustrates a flow chart of an exemplary method for wireless material sensing based on multiple frames, according to some embodiments of the present disclosure.

FIG. 22 illustrates a flow chart of an exemplary method for training a classifier during a training stage of a wireless material sensing system, according to some embodiments of the present disclosure.

FIG. 23 illustrates an exemplary set of material reflection features (MRFs) of several common materials, according to some embodiments of the present disclosure.

FIG. 24 illustrates exemplary CIR measurements with and without a target object in the field of interest, according to some embodiments of the present disclosure.

FIG. 25A illustrates an exemplary CIR interpolation, according to some embodiments of the present disclosure.

FIG. 25B illustrates an exemplary CIR amplitude after noise cancellation, according to some embodiments of the present disclosure.

FIGS. 26A-26C illustrate exemplary performances of a wireless material sensing system, according to some embodiments of the present disclosure.

FIG. 27A illustrates an exemplary wireless environment for wireless handwriting tracking, according to some embodiments of the present disclosure.

FIG. 27B illustrates an exemplary ground truth for a handwriting tracking, according to some embodiments of the present disclosure.

FIG. 27C illustrates an exemplary reconstructed trajectory for a handwriting tracking, according to some embodiments of the present disclosure.

FIG. 28 illustrates a flow chart of an exemplary method for wireless writing tracking, according to some embodiments of the present disclosure.

FIGS. 29A-29C illustrate exemplary radar concepts used in a wireless writing tracking system, according to some embodiments of the present disclosure.

FIG. 30 illustrates an exemplary channel impulse response, according to some embodiments of the present disclosure.

FIGS. 31A-31B illustrate a CA-CFAR (cell averaging - constant false alarm rate) technique used for target detection, according to some embodiments of the present disclosure.

FIG. 32 illustrates a workflow for an exemplary wireless writing tracking method, according to some embodiments of the present disclosure.

FIG. 33 illustrates estimated target locations with time using two highest Doppler power bins, according to some embodiments of the present disclosure.

FIG. 34 illustrates demonstration of the Doppler power shift from a non-zero frequency bin to the zero-frequency bin when the target has low or zero radial velocity, according to some embodiments of the present disclosure.

FIG. 35A illustrates Doppler power for different range taps with time for a straight line drawn along the range away from the device, according to some embodiments of the present disclosure.

FIG. 35B illustrates the range estimates before and after subsample peak interpolation (SPI), according to some embodiments of the present disclosure.

FIGS. 36A-36C illustrates the target localization and trajectory construction for a word "beam," according to some embodiments of the present disclosure.

FIG. 37 illustrates an exemplary visual comparison of ground truth characters and recovered characters, according to some embodiments of the present disclosure.

FIG. 38 illustrates the recognition accuracy of exemplary characters at different distances from the device with characters written in different scales, according to some embodiments of the present disclosure.

FIGS. 39A-39C illustrate exemplary ground truth and reconstructed trajectories of different shapes, according to some embodiments of the present disclosure.

FIG. 40 illustrates the exemplary tracking error at different ranges and azimuth angles from the radar, according to some embodiments of the present disclosure.

FIGS. 41A-41B illustrate exemplary demonstration of handwriting tracking for characters within 1 cm, according to some embodiments of the present disclosure.

FIG. 42 illustrates an exemplary scenario where object motion is monitored, according to some embodiments of the present disclosure.

FIG. 43A illustrates an exemplary function of an automatic assistant system, according to some embodiments of the present disclosure.

FIG. 43B illustrates another exemplary function of an automatic assistant system, according to some embodiments of the present disclosure.

FIG. 44 illustrates a flow chart of an exemplary method of an accurate wireless monitoring, according to some embodiments of the present teaching.

FIG. 45 illustrates a flow chart of an exemplary method for preprocessing the time series of channel information (TSCI) for accurate wireless monitoring, according to some embodiments of the present teaching.

FIG. 46 illustrates a flow chart of an exemplary method for an accurate wireless monitoring, according to some embodiments of the present teaching.

FIG. 47 illustrates an exemplary floor plan and placement of wireless devices for wireless monitoring with motion detection and localization, according to some embodiments of the present disclosure.

FIG. 48 illustrates a flow chart of an exemplary method for wireless monitoring with motion detection and localization, according to some embodiments of the present teaching.

FIG. 49 illustrates a flow chart of an exemplary method for managing a collaborative wireless motion monitoring system with motion detection and localization, according to some embodiments of the present teaching.

FIG. 50 illustrates an exemplary wireless indoor rich-scattering environment for wireless motion recognition, according to some embodiments of the present disclosure.

FIG. 51 illustrates a flow chart of an exemplary method for wireless motion recognition, according to some embodiments of the present disclosure.

FIG. 52 illustrates an exemplary demonstration of a multipath length difference when a reflector moves by a small distance x, according to some embodiments of the present disclosure.

FIG. 53 illustrates an exemplary demonstration of the movement of a hand pivoted at the shoulder, according to some embodiments of the present disclosure.

FIG. 54 illustrates an exemplary time reversal resonating strength (TRRS) in case of hand movement and a cart movement, according to some embodiments of the present disclosure.

FIG. 55 illustrates a workflow of an exemplary wireless gesture recognition/classification system, according to some embodiments of the present disclosure.

FIG. 56 illustrates exemplary gesture trajectories of upper-case English alphabets with different numbers of segments, according to some embodiments of the present disclosure.

FIGS. 57A-57B illustrate an exemplary gesture segmentation, according to some embodiments of the present disclosure.

FIGS. 58A-58B illustrate an exemplary TRRS decay associated with a turn, according to some embodiments of the present disclosure.

FIGS. 59A-59C illustrate an exemplary TRRS decay associated with a 0o turn, according to some embodiments of the present disclosure.

FIGS. 60A-60C illustrate an exemplary TRRS decay associated with a 45o turn, according to some embodiments of the present disclosure.

FIGS. 61A-61C illustrate an exemplary TRRS decay associated with a 90o turn, according to some embodiments of the present disclosure.

FIGS. 62A-62B illustrate an exemplary matching/intersection detection and the associated TRRS, according to some embodiments of the present disclosure.

FIGS. 63A-63C illustrate exemplary performance matrices for gesture recognition and classification, according to some embodiments of the present disclosure.

FIG. 64 illustrates an exemplary block diagram of a first wireless device of a wireless system, according to some embodiments of the present disclosure.

FIG. 65 illustrates an exemplary block diagram of a second wireless device of a wireless system, according to some embodiments of the present disclosure.

## DETAILED DESCRIPTION

In the following detailed description, numerous specific details are set forth by way of examples in order to provide a thorough understanding of the relevant teachings. However, it should be apparent to those skilled in the art that the present teachings may be practiced without such details. In other instances, well known methods, procedures, components, and/or circuitry have been described at a relatively high-level, without detail, in order to avoid unnecessarily obscuring aspects of the present teachings.

In one embodiment, the present teaching discloses a method, apparatus, device, system, and/or software (method/apparatus/device/system/software) of a wireless monitoring system. A time series of channel information (CI) of a wireless multipath channel (channel) may be obtained (e.g. dynamically) using a processor, a memory communicatively coupled with the processor and a set of instructions stored in the memory. The time series of CI (TSCI) may be extracted from a wireless signal (signal) transmitted between a Type 1 heterogeneous wireless device (e.g. wireless transmitter, TX) and a Type 2 heterogeneous wireless device (e.g. wireless receiver, RX) in a venue through the channel. The channel may be impacted by an expression (e.g. motion, movement, expression, and/or change in position/pose/shape/expression) of an object in the venue. A characteristics and/or a spatial-temporal information (STI, e.g. motion information) of the object and/or of the motion of the object may be monitored based on the TSCI. A task may be performed based on the characteristics and/or STI. A presentation associated with the task may be generated in a user-interface (UI) on a device of a user. The TSCI may be a wireless signal stream. The TSCI or each CI may be preprocessed. A device may be a station (STA). The symbol "A/B" means "A and/or B" in the present teaching.

The expression may comprise placement, placement of moveable parts, location, position, orientation, identifiable place, region, spatial coordinate, presentation, state, static expression, size, length, width, height, angle, scale, shape, curve, surface, area, volume, pose, posture, manifestation, body language, dynamic expression, motion, motion sequence, gesture, extension, contraction, distortion, deformation, body expression (e.g. head, face, eye, mouth, tongue, hair, voice, neck, limbs, arm, hand, leg, foot, muscle, moveable parts), surface expression (e.g. shape, texture, material, color, electromagnetic (EM) characteristics, visual pattern, wetness, reflectance, translucency, flexibility), material property (e.g. living tissue, hair, fabric, metal, wood, leather, plastic, artificial material, solid, liquid, gas, temperature), movement, activity, behavior, change of expression, and/or some combination.

The wireless signal may comprise: transmitted/received signal, EM radiation, RF signal/transmission, signal in licensed/unlicensed /ISM band, bandlimited signal, baseband signal, wireless/mobile/cellular communication signal, wireless/mobile/cellular network signal, mesh signal, light signal/communication, downlink/uplink signal, unicast/multicast/broadcast signal, standard (e.g. WLAN, WWAN, WPAN, WBAN, international, national, industry, defacto, IEEE, IEEE 802, 802.11/15/16, WiFi, 802.1 1n/ac/ax/be, 3G/4G/LTE/SG/6G/7G/8G, 3GPP, Bluetooth, BLE, Zigbee, RFID, UWB, WiMax) compliant signal, protocol signal, standard frame, beacon/pilot/probe/enquiry/acknowledgement/handshake/synchronization signal, management/control/data frame, management/control/data signal, standardized wireless/cellular communication protocol, reference signal, source signal, motion probe/detection/sensing signal, and/or series of signals. The wireless signal may comprise a line-of-sight (LOS), and/or a non-LOS component (or path/link). Each CI may be extracted/generated/computed/sensed at a layer (e.g. PHY/MAC layer in OSI model) of Type 2 device and may be obtained by an application (e.g. software, firmware, driver, app, wireless monitoring software/system).

The wireless multipath channel may comprise: a communication channel, analog frequency channel (e.g. with analog carrier frequency near 700/800/900MHz, 1.8/1.8/2.4/3/5/6/27/60 GHz), coded channel (e.g. in CDMA), and/or channel of a wireless network/system (e.g. WLAN, WiFi, mesh, LTE, 4G/5G, Bluetooth, Zigbee, UWB, RFID, microwave). It may comprise more than one channel. The channels may be consecutive (e.g. with adjacent/overlapping bands) or non-consecutive channels (e.g. non-overlapping WiFi channels, one at 2.4GHz and one at 5GHz).

The TSCI may be extracted from the wireless signal at a layer of the Type 2 device (e.g. a layer of OSI reference model, physical layer, data link layer, logical link control layer, media access control (MAC) layer, network layer, transport layer, session layer, presentation layer, application layer, TCP/IP layer, internet layer, link layer). The TSCI may be extracted from a derived signal (e.g. baseband signal, motion detection signal, motion sensing signal) derived from the wireless signal (e.g. RF signal). It may be (wireless) measurements sensed by the communication protocol (e.g. standardized protocol) using existing mechanism (e.g. wireless/cellular communication standard/network, 3G/LTE/4G/5G/6G/7G/8G, WiFi, IEEE 802.11/15/16). The derived signal may comprise a packet with at least one of: a preamble, a header and a payload (e.g. for data/control/management in wireless links/networks). The TSCI may be extracted from a probe signal (e.g. training sequence, STF, LTF, L-STF, L-LTF, L-SIG, HE-STF, HE-LTF, HE-SIG-A, HE-SIG-B, CEF) in the packet. A motion detection/sensing signal may be recognized/identified base on the probe signal. The packet may be a standard-compliant protocol frame, management frame, control frame, data frame, sounding frame, excitation frame, illumination frame, null data frame, beacon frame, pilot frame, probe frame, request frame, response frame, association frame, reassociation frame, disassociation frame, authentication frame, action frame, report frame, poll frame, announcement frame, extension frame, enquiry frame, acknowledgement frame, RTS frame, CTS frame, QoS frame, CF-Poll frame, CF-Ack frame, block acknowledgement frame, reference frame, training frame, and/or synchronization frame.

The packet may comprise a control data and/or a motion detection probe. A data (e.g. ID/parameters/ characteristics/ settings/ control signal/command/instruction/ notification/ broadcasting-related information of the Type 1 device) may be obtained from the payload. The wireless signal may be transmitted by the Type 1 device. It may be received by the Type 2 device. A database (e.g. in local server, hub device, cloud server, storage network) may be used to store the TSCI, characteristics, STI, signatures, patterns, behaviors, trends, parameters, analytics, output responses, identification information, user information, device information, channel information, venue (e.g. map, environmental model, network, proximity devices/networks) information, task information, class/category information, presentation (e.g. UI) information, and/or other information.

The Type 1/Type 2 device may comprise at least one of: electronics, circuitry, transmitter (TX)/receiver (RX)/transceiver, RF interface, "Origin Satellite"/"Tracker Bot", unicast/multicast/broadcasting device, wireless source device, source/destination device, wireless node, hub device, target device, motion detection device, sensor device, remote/wireless sensor device, wireless communication device, wireless-enabled device, standard compliant device, and/or receiver. The Type 1 (or Type 2) device may be heterogeneous because, when there are more than one instances of Type 1 (or Type 2) device, they may have different circuitry, enclosure, structure, purpose, auxiliary functionality, chip/IC, processor, memory, software, firmware, network connectivity, antenna, brand, model, appearance, form, shape, color, material, and/or specification. The Type 1/Type 2 device may comprise: access point, router, mesh router, internet-of-things (IoT) device, wireless terminal, one or more radio/RF subsystem/wireless interface (e.g. 2.4GHz radio, 5GHz radio, front haul radio, backhaul radio), modem, RF front end, RF/radio chip or integrated circuit (IC).

At least one of: Type 1 device, Type 2 device, a link between them, the object, the characteristics, the STI, the monitoring of the motion, and the task may be associated with an identification (ID) such as UUID. The Type 1/Type 2/another device may obtain/store/retrieve/ access/preprocess/condition/process/analyze/monitor/apply the TSCI. The Type 1 and Type 2 devices may communicate network traffic in another channel (e.g. Ethernet, HDMI, USB, Bluetooth, BLE, WiFi, LTE, other network, the wireless multipath channel) in parallel to the wireless signal. The Type 2 device may passively observe/monitor/receive the wireless signal from the Type 1 device in the wireless multipath channel without establishing connection (e.g. association/authentication) with, or requesting service from, the Type 1 device.

The transmitter (i.e. Type 1 device) may function as (play role of) receiver (i.e. Type 2 device) temporarily, sporadically, continuously, repeatedly, interchangeably, alternately, simultaneously, concurrently, and/or contemporaneously; and vice versa. A device may function as Type 1 device (transmitter) and/or Type 2 device (receiver) temporarily, sporadically, continuously, repeatedly, simultaneously, concurrently, and/or contemporaneously. There may be multiple wireless nodes each being Type 1 (TX) and/or Type 2 (RX) device. A TSCI may be obtained between every two nodes when they exchange/communicate wireless signals. The characteristics and/or STI of the object may be monitored individually based on a TSCI, or jointly based on two or more (e.g. all) TSCI.

The motion of the object may be monitored actively (in that Type 1 device, Type 2 device, or both, are wearable of/associated with the object) and/or passively (in that both Type 1 and Type 2 devices are not wearable of/associated with the object). It may be passive because the object may not be associated with the Type 1 device and/or the Type 2 device. The object (e.g. user, an automated guided vehicle or AGV) may not need to carry/install any wearables/fixtures (i.e. the Type 1 device and the Type 2 device are not wearable/attached devices that the object needs to carry in order perform the task). It may be active because the object may be associated with either the Type 1 device and/or the Type 2 device. The object may carry (or installed) a wearable/a fixture (e.g. the Type 1 device, the Type 2 device, a device communicatively coupled with either the Type 1 device or the Type 2 device).

The presentation may be visual, audio, image, video, animation, graphical presentation, text, etc. A computation of the task may be performed by a processor (or logic unit) of the Type 1 device, a processor (or logic unit) of an IC of the Type 1 device, a processor (or logic unit) of the Type 2 device, a processor of an IC of the Type 2 device, a local server, a cloud server, a data analysis subsystem, a signal analysis subsystem, and/or another processor. The task may be performed with/without reference to a wireless fingerprint or a baseline (e.g. collected, processed, computed, transmitted and/or stored in a training phase/survey/current survey/previous survey/recent survey/initial wireless survey, a passive fingerprint), a training, a profile, a trained profile, a static profile, a survey, an initial wireless survey, an initial setup, an installation, a re-training, an updating and a reset.

The Type 1 device (TX device) may comprise at least one heterogeneous wireless transmitter. The Type 2 device (RX device) may comprise at least one heterogeneous wireless receiver. The Type 1 device and the Type 2 device may be collocated. The Type 1 device and the Type 2 device may be the same device. Any device may have a data processing unit/apparatus, a computing unit/system, a network unit/system, a processor (e.g. logic unit), a memory communicatively coupled with the processor, and a set of instructions stored in the memory to be executed by the processor. Some processors, memories and sets of instructions may be coordinated.

There may be multiple Type 1 devices interacting (e.g. communicating, exchange signal/control/notification/other data) with the same Type 2 device (or multiple Type 2 devices), and/or there may be multiple Type 2 devices interacting with the same Type 1 device. The multiple Type 1 devices/Type 2 devices may be synchronized and/or asynchronous, with same/different window width/size and/or time shift, same/different synchronized start time, synchronized end time, etc. Wireless signals sent by the multiple Type 1 devices may be sporadic, temporary, continuous, repeated, synchronous, simultaneous, concurrent, and/or contemporaneous. The multiple Type 1 devices/Type 2 devices may operate independently and/or collaboratively. A Type 1 and/or Type 2 device may have/comprise/be heterogeneous hardware circuitry (e.g. a heterogeneous chip or a heterogeneous IC capable of generating/receiving the wireless signal, extracting CI from received signal, or making the CI available). They may be communicatively coupled to same or different servers (e.g. cloud server, edge server, local server, hub device).

Operation of one device may be based on operation, state, internal state, storage, processor, memory output, physical location, computing resources, network of another device. Difference devices may communicate directly, and/or via another device/server/hub device/cloud server. The devices may be associated with one or more users, with associated settings. The settings may be chosen once, pre-programmed, and/or changed (e.g. adjusted, varied, modified)/varied over time. There may be additional steps in the method. The steps and/or the additional steps of the method may be performed in the order shown or in another order. Any steps may be performed in parallel, iterated, or otherwise repeated or performed in another manner. A user may be human, adult, older adult, man, woman, juvenile, child, baby, pet, animal, creature, machine, computer module/software, etc.

In the case of one or multiple Type 1 devices interacting with one or multiple Type 2 devices, any processing (e.g. time domain, frequency domain) may be different for different devices. The processing may be based on locations, orientation, direction, roles, user-related characteristics, settings, configurations, available resources, available bandwidth, network connection, hardware, software, processor, co-processor, memory, battery life, available power, antennas, antenna types, directional/unidirectional characteristics of the antenna, power setting, and/or other parameters/characteristics of the devices.

The wireless receiver (e.g. Type 2 device) may receive the signal and/or another signal from the wireless transmitter (e.g. Type 1 device). The wireless receiver may receive another signal from another wireless transmitter (e.g. a second Type 1 device). The wireless transmitter may transmit the signal and/or another signal to another wireless receiver (e.g. a second Type 2 device). The wireless transmitter, wireless receiver, another wireless receiver and/or another wireless transmitter may be moving with the object and/or another object. The another object may be tracked.

The Type 1 and/or Type 2 device may be capable of wirelessly coupling with at least two Type 2 and/or Type 1 devices. The Type 1 device may be caused/controlled to switch/establish wireless coupling (e.g. association, authentication) from the Type 2 device to a second Type 2 device at another location in the venue. Similarly, the Type 2 device may be caused/controlled to switch/establish wireless coupling from the Type 1 device to a second Type 1 device at yet another location in the venue. The switching may be controlled by a server (or a hub device), the processor, the Type 1 device, the Type 2 device, and/or another device. The radio used before and after switching may be different. A second wireless signal (second signal) may be caused to be transmitted between the Type 1 device and the second Type 2 device (or between the Type 2 device and the second Type 1 device) through the channel. A second TSCI of the channel extracted from the second signal may be obtained. The second signal may be the first signal. The characteristics, STI and/or another quantity of the object may be monitored based on the second TSCI. The Type 1 device and the Type 2 device may be the same. The characteristics, STI and/or another quantity with different time stamps may form a waveform. The waveform may be displayed in the presentation.

The wireless signal and/or another signal may have data embedded. The wireless signal may be a series of probe signals (e.g. a repeated transmission of probe signals, a re-use of one or more probe signals). The probe signals may change/vary over time. A probe signal may be a standard compliant signal, protocol signal, standardized wireless protocol signal, control signal, data signal, wireless communication network signal, cellular network signal, WiFi signal, LTE/5G/6G/7G signal, reference signal, beacon signal, motion detection signal, and/or motion sensing signal. A probe signal may be formatted according to a wireless network standard (e.g. WiFi), a cellular network standard (e.g. LTE/5G/6G), or another standard. A probe signal may comprise a packet with a header and a payload. A probe signal may have data embedded. The payload may comprise data. A probe signal may be replaced by a data signal. The probe signal may be embedded in a data signal. The wireless receiver, wireless transmitter, another wireless receiver and/or another wireless transmitter may be associated with at least one processor, memory communicatively coupled with respective processor, and/or respective set of instructions stored in the memory which when executed cause the processor to perform any and/or all steps needed to determine the STI (e.g. motion information), initial STI, initial time, direction, instantaneous location, instantaneous angle, and/or speed, of the object.

The processor, the memory and/or the set of instructions may be associated with the Type 1 device, one of the at least one Type 2 device, the object, a device associated with the object, another device associated with the venue, a cloud server, a hub device, and/or another server.

The Type 1 device may transmit the signal in a broadcasting manner to at least one Type 2 device(s) through the channel in the venue. The signal is transmitted without the Type 1 device establishing wireless connection (e.g. association, authentication) with any Type 2 device, and without any Type 2 device requesting services from the Type 1 device. The Type 1 device may transmit to a particular media access control (MAC) address common for more than one Type 2 devices. Each Type 2 device may adjust its MAC address to the particular MAC address. The particular MAC address may be associated with the venue. The association may be recorded in an association table of an Association Server (e.g. hub device). The venue may be identified by the Type 1 device, a Type 2 device and/or another device based on the particular MAC address, the series of probe signals, and/or the at least one TSCI extracted from the probe signals.

For example, a Type 2 device may be moved to a new location in the venue (e.g. from another venue). The Type 1 device may be newly set up in the venue such that the Type 1 and Type 2 devices are not aware of each other. During set up, the Type 1 device may be instructed/guided/caused/controlled (e.g. using dummy receiver, using hardware pin setting/connection, using stored setting, using local setting, using remote setting, using downloaded setting, using hub device, or using server) to send the series of probe signals to the particular MAC address. Upon power up, the Type 2 device may scan for probe signals according to a table of MAC addresses (e.g. stored in a designated source, server, hub device, cloud server) that may be used for broadcasting at different locations (e.g. different MAC address used for different venue such as house, office, enclosure, floor, multi-storey building, store, airport, mall, stadium, hall, station, subway, lot, area, zone, region, district, city, country, continent). When the Type 2 device detects the probe signals sent to the particular MAC address, the Type 2 device can use the table to identify the venue based on the MAC address.

A location of a Type 2 device in the venue may be computed based on the particular MAC address, the series of probe signals, and/or the at least one TSCI obtained by the Type 2 device from the probe signals. The computing may be performed by the Type 2 device.

The particular MAC address may be changed (e.g. adjusted, varied, modified) over time. It may be changed according to a time table, rule, policy, mode, condition, situation and/or change. The particular MAC address may be selected based on availability of the MAC address, a pre-selected list, collision pattern, traffic pattern, data traffic between the Type 1 device and another device, effective bandwidth, random selection, and/or a MAC address switching plan. The particular MAC address may be the MAC address of a second wireless device (e.g. a dummy receiver, or a receiver that serves as a dummy receiver).

The Type 1 device may transmit the probe signals in a channel selected from a set of channels. At least one CI of the selected channel may be obtained by a respective Type 2 device from the probe signal transmitted in the selected channel.

The selected channel may be changed (e.g. adjusted, varied, modified) over time. The change may be according to a time table, rule, policy, mode, condition, situation, and/or change. The selected channel may be selected based on availability of channels, random selection, a pre-selected list, co-channel interference, inter-channel interference, channel traffic pattern, data traffic between the Type 1 device and another device, effective bandwidth associated with channels, security criterion, channel switching plan, a criterion, a quality criterion, a signal quality condition, and/or consideration.

The particular MAC address and/or an information of the selected channel may be communicated between the Type 1 device and a server (e.g. hub device) through a network. The particular MAC address and/or the information of the selected channel may also be communicated between a Type 2 device and a server (e.g. hub device) through another network. The Type 2 device may communicate the particular MAC address and/or the information of the selected channel to another Type 2 device (e.g. via mesh network, Bluetooth, WiFi, NFC, ZigBee, etc.). The particular MAC address and/or selected channel may be chosen by a server (e.g. hub device). The particular MAC address and/or selected channel may be signaled in an announcement channel by the Type 1 device, the Type 2 device and/or a server (e.g. hub device). Before being communicated, any information may be pre-processed.

Wireless connection (e.g. association, authentication) between the Type 1 device and another wireless device may be established (e.g. using a signal handshake). The Type 1 device may send a first handshake signal (e.g. sounding frame, probe signal, request-to-send RTS) to the another device. The another device may reply by sending a second handshake signal (e.g. a command, or a clear-to-send CTS) to the Type 1 device, triggering the Type 1 device to transmit the signal (e.g. series of probe signals) in the broadcasting manner to multiple Type 2 devices without establishing connection with any Type 2 device. The second handshake signals may be a response or an acknowledge (e.g. ACK) to the first handshake signal. The second handshake signal may contain a data with information of the venue, and/or the Type 1 device. The another device may be a dummy device with a purpose (e.g. primary purpose, secondary purpose) to establish the wireless connection with the Type 1 device, to receive the first signal, and/or to send the second signal. The another device may be physically attached to the Type 1 device.

In another example, the another device may send a third handshake signal to the Type 1 device triggering the Type 1 device to broadcast the signal (e.g. series of probe signals) to multiple Type 2 devices without establishing connection (e.g. association, authentication) with any Type 2 device. The Type 1 device may reply to the third special signal by transmitting a fourth handshake signal to the another device. The another device may be used to trigger more than one Type 1 devices to broadcast. The triggering may be sequential, partially sequential, partially parallel, or fully parallel. The another device may have more than one wireless circuitries to trigger multiple transmitters in parallel. Parallel trigger may also be achieved using at least one yet another device to perform the triggering (similar to what as the another device does) in parallel to the another device. The another device may not communicate (or suspend communication) with the Type 1 device after establishing connection with the Type 1 device. Suspended communication may be resumed. The another device may enter an inactive mode, hibernation mode, sleep mode, stand-by mode, low-power mode, OFF mode and/or power-down mode, after establishing the connection with the Type 1 device. The another device may have the particular MAC address so that the Type 1 device sends the signal to the particular MAC address. The Type 1 device and/or the another device may be controlled and/or coordinated by a first processor associated with the Type 1 device, a second processor associated with the another device, a third processor associated with a designated source and/or a fourth processor associated with another device. The first and second processors may coordinate with each other.

A first series of probe signals may be transmitted by a first antenna of the Type 1 device to at least one first Type 2 device through a first channel in a first venue. A second series of probe signals may be transmitted by a second antenna of the Type 1 device to at least one second Type 2 device through a second channel in a second venue. The first series and the second series may/may not be different. The at least one first Type 2 device may/may not be different from the at least one second Type 2 device. The first and/or second series of probe signals may be broadcasted without connection (e.g. association, authentication) established between the Type 1 device and any Type 2 device. The first and second antennas may be same/different.

The two venues may have different sizes, shape, multipath characteristics. The first and second venues may overlap. The respective immediate areas around the first and second antennas may overlap. The first and second channels may be same/different. For example, the first one may be WiFi while the second may be LTE. Or, both may be WiFi, but the first one may be 2.4GHz WiFi and the second may be 5GHz WiFi. Or, both may be 2.4GHz WiFi, but have different channel numbers, SSID names, and/or WiFi settings.

Each Type 2 device may obtain at least one TSCI from the respective series of probe signals, the CI being of the respective channel between the Type 2 device and the Type 1 device. Some first Type 2 device(s) and some second Type 2 device(s) may be the same. The first and second series of probe signals may be synchronous/asynchronous. A probe signal may be transmitted with data or replaced by a data signal. The first and second antennas may be the same.

The first series of probe signals may be transmitted at a first rate (e.g. 30Hz). The second series of probe signals may be transmitted at a second rate (e.g. 200Hz). The first and second rates may be same/different. The first and/or second rate may be changed (e.g. adjusted, varied, modified) over time. The change may be according to a time table, rule, policy, mode, condition, situation, and/or change. Any rate may be changed (e.g. adjusted, varied, modified) over time.

The first and/or second series of probe signals may be transmitted to a first MAC address and/or second MAC address respectively. The two MAC addresses may be same/different. The first series of probe signals may be transmitted in a first channel. The second series of probe signals may be transmitted in a second channel. The two channels may be same/different. The first or second MAC address, first or second channel may be changed over time. Any change may be according to a time table, rule, policy, mode, condition, situation, and/or change.

The Type 1 device and another device may be controlled and/or coordinated, physically attached, or may be of/in/of a common device. They may be controlled by/connected to a common data processor, or may be connected to a common bus interconnect/ network/ LAN/ Bluetooth network/ NFC network/ BLE network/ wired network/ wireless network/ mesh network/ mobile network/ cloud. They may share a common memory, or be associated with a common user, user device, profile, account, identity (ID), identifier, household, house, physical address, location, geographic coordinate, IP subnet, SSID, home device, office device, and/or manufacturing device.

Each Type 1 device may be a signal source of a set of respective Type 2 devices (i.e. it sends a respective signal (e.g. respective series of probe signals) to the set of respective Type 2 devices). Each respective Type 2 device chooses the Type 1 device from among all Type 1 devices as its signal source. Each Type 2 device may choose asynchronously. At least one TSCI may be obtained by each respective Type 2 device from the respective series of probe signals from the Type 1 device, the CI being of the channel between the Type 2 device and the Type 1 device.

The respective Type 2 device chooses the Type 1 device from among all Type 1 devices as its signal source based on identity (ID) or identifier of Type 1/Type 2 device, task to be performed, past signal source, history (e.g. of past signal source, Type 1 device, another Type 1 device, respective Type 2 receiver, and/or another Type 2 receiver), threshold for switching signal source, and/or information of a user, account, access info, parameter, characteristics, and/or signal strength (e.g. associated with the Type 1 device and/or the respective Type 2 receiver).

Initially, the Type 1 device may be signal source of a set of initial respective Type 2 devices (i.e. the Type 1 device sends a respective signal (series of probe signals) to the set of initial respective Type 2 devices) at an initial time.

Each initial respective Type 2 device chooses the Type 1 device from among all Type 1 devices as its signal source.

The signal source (Type 1 device) of a particular Type 2 device may be changed (e.g. adjusted, varied, modified) when (1) time interval between two adjacent probe signals (e.g. between current probe signal and immediate past probe signal, or between next probe signal and current probe signal) received from current signal source of the Type 2 device exceeds a first threshold; (2) signal strength associated with current signal source of the Type 2 device is below a second threshold; (3) a processed signal strength associated with current signal source of the Type 2 device is below a third threshold, the signal strength processed with low pass filter, band pass filter, median filter, moving average filter, weighted averaging filter, linear filter and/or non-linear filter; and/or (4) signal strength (or processed signal strength) associated with current signal source of the Type 2 device is below a fourth threshold for a significant percentage of a recent time window (e.g. 70%, 80%, 90%). The percentage may exceed a fifth threshold. The first, second, third, fourth and/or fifth thresholds may be time varying.

Condition (1) may occur when the Type 1 device and the Type 2 device become progressively far away from each other, such that some probe signal from the Type 1 device becomes too weak and is not received by the Type 2 device. Conditions (2)-(4) may occur when the two devices become far from each other such that the signal strength becomes very weak.

The signal source of the Type 2 device may not change if other Type 1 devices have signal strength weaker than a factor (e.g. 1, 1.1, 1.2, or 1.5) of the current signal source.

If the signal source is changed (e.g. adjusted, varied, modified), the new signal source may take effect at a near future time (e.g. the respective next time). The new signal source may be the Type 1 device with strongest signal strength, and/or processed signal strength. The current and new signal source may be same/different.

A list of available Type 1 devices may be initialized and maintained by each Type 2 device. The list may be updated by examining signal strength and/or processed signal strength associated with the respective set of Type 1 devices. A Type 2 device may choose between a first series of probe signals from a first Type 1 device and a second series of probe signals from a second Type 1 device based on: respective probe signal rate, MAC addresses, channels, characteristics/properties/ states, task to be performed by the Type 2 device, signal strength of first and second series, and/or another consideration.

The series of probe signals may be transmitted at a regular rate (e.g. 100 Hz). The series of probe signals may be scheduled at a regular interval (e.g. 0.01s for 100 Hz), but each probe signal may experience small time perturbation, perhaps due to timing requirement, timing control, network control, handshaking, message passing, collision avoidance, carrier sensing, congestion, availability of resources, and/or another consideration.

The rate may be changed (e.g. adjusted, varied, modified). The change may be according to a time table (e.g. changed once every hour), rule, policy, mode, condition and/or change (e.g. changed whenever some event occur). For example, the rate may normally be 100Hz, but changed to 1000Hz in demanding situations, and to 1Hz in low power/standby situation. The probe signals may be sent in burst.

The probe signal rate may change based on a task performed by the Type 1 device or Type 2 device (e.g. a task may need 100 Hz normally and 1000 Hz momentarily for 20 seconds). In one example, the transmitters (Type 1 devices), receivers (Type 2 device), and associated tasks may be associated adaptively (and/or dynamically) to classes (e.g. classes that are: low-priority, high-priority, emergency, critical, regular, privileged, non-subscription, subscription, paying, and/or non-paying). A rate (of a transmitter) may be adjusted for the sake of some class (e.g. high priority class). When the need of that class changes, the rate may be changed (e.g. adjusted, varied, modified). When a receiver has critically low power, the rate may be reduced to reduce power consumption of the receiver to respond to the probe signals. In one example, probe signals may be used to transfer power wirelessly to a receiver (Type 2 device), and the rate may be adjusted to control the amount of power transferred to the receiver.

The rate may be changed by (or based on): a server (e.g. hub device), the Type 1 device and/or the Type 2 device. Control signals may be communicated between them. The server may monitor, track, forecast and/or anticipate the needs of the Type 2 device and/or the tasks performed by the Type 2 device, and may control the Type 1 device to change the rate. The server may make scheduled changes to the rate according to a time table. The server may detect an emergency situation and change the rate immediately. The server may detect a developing condition and adjust the rate gradually.

The characteristics and/or STI (e.g. motion information) may be monitored individually based on a TSCI associated with a particular Type 1 device and a particular Type 2 device, and/or monitored jointly based on any TSCI associated with the particular Type 1 device and any Type 2 device, and/or monitored jointly based on any TSCI associated with the particular Type 2 device and any Type 1 device, and/or monitored globally based on any TSCI associated with any Type 1 device and any Type 2 device. Any joint monitoring may be associated with: a user, user account, profile, household, map of venue, environmental model of the venue, and/or user history, etc.

A first channel between a Type 1 device and a Type 2 device may be different from a second channel between another Type 1 device and another Type 2 device. The two channels may be associated with different frequency bands, bandwidth, carrier frequency, modulation, wireless standards, coding, encryption, payload characteristics, networks, network ID, SSID, network characteristics, network settings, and/or network parameters, etc.

The two channels may be associated with different kinds of wireless system (e.g. two of the following: WiFi, LTE, LTE-A, LTE-U, 2.5G, 3G, 3.5G, 4G, beyond 4G, 5G, 6G, 7G, a cellular network standard, UMTS, 3GPP, GSM, EDGE, TDMA, FDMA, CDMA, WCDMA, TD-SCDMA, 802.11 system, 802.15 system, 802.16 system, mesh network, Zigbee, NFC, WiMax, Bluetooth, BLE, RFID, UWB, microwave system, radar like system). For example, one is WiFi and the other is LTE.

The two channels may be associated with similar kinds of wireless system, but in different network. For example, the first channel may be associated with a WiFi network named "Pizza and Pizza" in the 2.4GHz band with a bandwidth of 20MHz while the second may be associated with a WiFi network with SSID of "StarBud hotspot" in the 5GHz band with a bandwidth of 40MHz. The two channels may be different channels in same network (e.g. the "StarBud hotspot" network).

In one embodiment, a wireless monitoring system may comprise training a classifier of multiple events in a venue based on training TSCI associated with the multiple events. A CI or TSCI associated with an event may be considered/may comprise a wireless sample/characteristics/fingerprint associated with the event (and/or the venue, the environment, the object, the motion of the object, a state/ emotional state/ mental state/ condition/ stage/ gesture/ gait/ action/ movement/ activity/ daily activity/ history/ event of the object, etc.).

For each of the multiple known events happening in the venue in a respective training (e.g. surveying, wireless survey, initial wireless survey) time period associated with the known event, a respective training wireless signal (e.g. a respective series of training probe signals) may be transmitted by an antenna of a first Type 1 heterogeneous wireless device using a processor, a memory and a set of instructions of the first Type 1 device to at least one first Type 2 heterogeneous wireless device through a wireless multipath channel in the venue in the respective training time period.

At least one respective time series of training CI (training TSCI) may be obtained asynchronously by each of the at least one first Type 2 device from the (respective) training signal. The CI may be CI of the channel between the first Type 2 device and the first Type 1 device in the training time period associated with the known event. The at least one training TSCI may be preprocessed. The training may be a wireless survey (e.g. during installation of Type 1 device and/or Type 2 device).

For a current event happening in the venue in a current time period, a current wireless signal (e.g. a series of current probe signals) may be transmitted by an antenna of a second Type 1 heterogeneous wireless device using a processor, a memory and a set of instructions of the second Type 1 device to at least one second Type 2 heterogeneous wireless device through the channel in the venue in the current time period associated with the current event.

At least one time series of current CI (current TSCI) may be obtained asynchronously by each of the at least one second Type 2 device from the current signal (e.g. the series of current probe signals). The CI may be CI of the channel between the second Type 2 device and the second Type 1 device in the current time period associated with the current event. The at least one current TSCI may be preprocessed.

The classifier may be applied to classify at least one current TSCI obtained from the series of current probe signals by the at least one second Type 2 device, to classify at least one portion of a particular current TSCI, and/or to classify a combination of the at least one portion of the particular current TSCI and another portion of another TSCI. The classifier may partition TSCI (or the characteristics/STI or other analytics or output responses) into clusters and associate the clusters to specific events/ objects/ subjects/ locations/ movements/ activities. Labels/tags may be generated for the clusters. The clusters may be stored and retrieved. The classifier may be applied to associate the current TSCI (or characteristics/STI or the other analytics/output response, perhaps associated with a current event) with: a cluster, a known/specific event, a class/ category/ group/ grouping/ list/ cluster/ set of known events/subjects/locations/movements/activities, an unknown event, a class/ category/ group/ grouping/ list/ cluster/ set of unknown events/subjects/locations/movements/activities, and/or another event/subject/location/movement/activity/ class/ category/ group/ grouping/ list/ cluster/ set. Each TSCI may comprise at least one CI each associated with a respective timestamp. Two TSCI associated with two Type 2 devices may be different with different: starting time, duration, stopping time, amount of CI, sampling frequency, sampling period. Their CI may have different features. The first and second Type 1 devices may be at same location in the venue. They may be the same device. The at least one second Type 2 device (or their locations) may be a permutation of the at least one first Type 2 device (or their locations). A particular second Type 2 device and a particular first Type 2 device may be the same device.

A subset of the first Type 2 device and a subset of the second Type 2 device may be the same. The at least one second Type 2 device and/or a subset of the at least one second Type 2 device may be a subset of the at least one first Type 2 device. The at least one first Type 2 device and/or a subset of the at least one first Type 2 device may be a permutation of a subset of the at least one second Type 2 device. The at least one second Type 2 device and/or a subset of the at least one second Type 2 device may be a permutation of a subset of the at least one first Type 2 device. The at least one second Type 2 device and/or a subset of the at least one second Type 2 device may be at same respective location as a subset of the at least one first Type 2 device. The at least one first Type 2 device and/or a subset of the at least one first Type 2 device may be at same respective location as a subset of the at least one second Type 2 device.

The antenna of the Type 1 device and the antenna of the second Type 1 device may be at same location in the venue. Antenna(s) of the at least one second Type 2 device and/or antenna(s) of a subset of the at least one second Type 2 device may be at same respective location as respective antenna(s) of a subset of the at least one first Type 2 device. Antenna(s) of the at least one first Type 2 device and/or antenna(s) of a subset of the at least one first Type 2 device may be at same respective location(s) as respective antenna(s) of a subset of the at least one second Type 2 device.

A first section of a first time duration of the first TSCI and a second section of a second time duration of the second section of the second TSCI may be aligned. A map between items of the first section and items of the second section may be computed. The first section may comprise a first segment (e.g. subset) of the first TSCI with a first starting /ending time, and/or another segment (e.g. subset) of a processed first TSCI. The processed first TSCI may be the first TSCI processed by a first operation. The second section may comprise a second segment (e.g. subset) of the second TSCI with a second starting time and a second ending time, and another segment (e.g. subset) of a processed second TSCI. The processed second TSCI may be the second TSCI processed by a second operation. The first operation and/or the second operation may comprise: subsampling, re-sampling, interpolation, filtering, transformation, feature extraction, pre-processing, and/or another operation.

A first item of the first section may be mapped to a second item of the second section. The first item of the first section may also be mapped to another item of the second section. Another item of the first section may also be mapped to the second item of the second section. The mapping may be one-to-one, one-to-many, many-to-one, many-to-many. At least one function of at least one of: the first item of the first section of the first TSCI, another item of the first TSCI, timestamp of the first item, time difference of the first item, time differential of the first item, neighboring timestamp of the first item, another timestamp associated with the first item, the second item of the second section of the second TSCI, another item of the second TSCI, timestamp of the second item, time difference of the second item, time differential of the second item, neighboring timestamp of the second item, and another timestamp associated with the second item, may satisfy at least one constraint.

One constraint may be that a difference between the timestamp of the first item and the timestamp of the second item may be upper-bounded by an adaptive (and/or dynamically adjusted) upper threshold and lower-bounded by an adaptive lower threshold.

The first section may be the entire first TSCI. The second section may be the entire second TSCI. The first time duration may be equal to the second time duration. A section of a time duration of a TSCI may be determined adaptively (and/or dynamically). A tentative section of the TSCI may be computed. A starting time and an ending time of a section (e.g. the tentative section, the section) may be determined. The section may be determined by removing a beginning portion and an ending portion of the tentative section. A beginning portion of a tentative section may be determined as follows. Iteratively, items of the tentative section with increasing timestamp may be considered as a current item, one item at a time.

In each iteration, at least one activity measure/index may be computed and/or considered. The at least one activity measure may be associated with at least one of: the current item associated with a current timestamp, past items of the tentative section with timestamps not larger than the current timestamp, and/or future items of the tentative section with timestamps not smaller than the current timestamp. The current item may be added to the beginning portion of the tentative section if at least one criterion (e.g. quality criterion, signal quality condition) associated with the at least one activity measure is satisfied.

The at least one criterion associated with the activity measure may comprise at least one of: (a) the activity measure is smaller than an adaptive (e.g. dynamically adjusted) upper threshold, (b) the activity measure is larger than an adaptive lower threshold, (c) the activity measure is smaller than an adaptive upper threshold consecutively for at least a predetermined amount of consecutive timestamps, (d) the activity measure is larger than an adaptive lower threshold consecutively for at least another predetermined amount of consecutive timestamps, (e) the activity measure is smaller than an adaptive upper threshold consecutively for at least a predetermined percentage of the predetermined amount of consecutive timestamps, (f) the activity measure is larger than an adaptive lower threshold consecutively for at least another predetermined percentage of the another predetermined amount of consecutive timestamps, (g) another activity measure associated with another timestamp associated with the current timestamp is smaller than another adaptive upper threshold and larger than another adaptive lower threshold, (h) at least one activity measure associated with at least one respective timestamp associated with the current timestamp is smaller than respective upper threshold and larger than respective lower threshold, (i) percentage of timestamps with associated activity measure smaller than respective upper threshold and larger than respective lower threshold in a set of timestamps associated with the current timestamp exceeds a threshold, and (j) another criterion (e.g. a quality criterion, signal quality condition).

An activity measure/index associated with an item at time T1 may comprise at least one of: (1) a first function of the item at time T1 and an item at time T1-D1, wherein D1 is a pre-determined positive quantity (e.g. a constant time offset), (2) a second function of the item at time T1 and an item at time T1+D1, (3) a third function of the item at time T1 and an item at time T2, wherein T2 is a pre-determined quantity (e.g. a fixed initial reference time; T2 may be changed (e.g. adjusted, varied, modified) over time; T2 may be updated periodically; T2 may be the beginning of a time period and T1 may be a sliding time in the time period), and (4) a fourth function of the item at time T1 and another item.

At least one of: the first function, the second function, the third function, and/or the fourth function may be a function (e.g. F(X, Y, ...)) with at least two arguments: X and Y. The two arguments may be scalars. The function (e.g. F) may be a function of at least one of: X, Y, (X-Y), (Y-X), abs(X-Y), $X^a$, $Y^b$, abs($X^a - Y^b$), $(X-Y)^a$, (X/Y), (X+a)/(Y+b), ($X^a/Y^b$), and $((X/Y)^a-b)$, wherein a and b are may be some predetermined quantities. For example, the function may simply be abs(X-Y), or $(X-Y)^2$, $(X-Y)^4$. The function may be a robust function. For example, the function may be $(X-Y)^2$ when abs (X-Y) is less than a threshold T, and (X-Y)+a when abs(X-Y) is larger than T. Alternatively, the function may be a constant when abs(X-Y) is larger than T. The function may also be bounded by a slowly increasing function when abs(X-y) is larger than T, so that outliers cannot severely affect the result. Another example of the function may be (abs(X/Y)-a), where a=1. In this way, if X=Y (i.e. no change or no activity), the function will give a value of 0. If X is larger than Y, (X/Y) will be larger than 1 (assuming X and Y are positive) and the function will be positive. And if X is less than Y, (X/Y) will be smaller than 1 and the function will be negative. In another example, both arguments X and Y may be n-tuples such that $X=(x_1, x_2, ..., x_n)$ and $Y=(y_1, y_2, ..., y_n)$. The function may be a function of at least one of: $x_i$, $y_i$, $(x_i - y_i)$, $(y_i - x_i)$, $abs(x_i - y_i)$, $x_i^a$, $y_i^b$, $abs(x_i^a - y_i^b)$, $(x_i - y_i)^a$, $(x_i/y_i)$, $(x_i+a)/(y_i+b)$, $(x_i^a/y_i^b)$, and $((x_i / y_i)^a-b)$, wherein i is a component index of the n-tuple X and Y, and 1<=i<=n, e.g. component index of $x_1$ is i=1, component index of $x_2$ is i=2. The function may comprise a component-by-component summation of another function of at least one of the following: $x_i$, $y_i$, $(x_i - y_i)$, $(y_i - x_i)$, $abs(x_i - y_i)$, $x_i^a$, $y_i^b$, $abs(x_i^a - y_i^b)$, $(x_i - y_i)^a$, $(x_i/y_i)$, $(x_i+a)/(y_i +b)$, $(x_i^a/ y_i^b)$, and $((x_i / y_i)^a-b)$, wherein i is the component index of the n-tuple X and Y. For example, the function may be in a form of $sum_{i=1}^n (abs(x_i/y_i)-1)/n$, or $sum_{i=1}^n w_i*(abs(x_i/y_i)-1)$, where $w_i$ is some weight for component i.

The map may be computed using dynamic time warping (DTW). The DTW may comprise a constraint on at least one of: the map, the items of the first TSCI, the items of the second TSCI, the first time duration, the second time duration, the first section, and/or the second section. Suppose in the map, the $i^{th}$ domain item is mapped to the $j^{th}$ range item. The constraint may be on admissible combination of i and j (constraint on relationship between i and j). Mismatch cost between a first section of a first time duration of a first TSCI and a second section of a second time duration of a second TSCI may be computed.

The first section and the second section may be aligned such that a map comprising more than one links may be established between first items of the first TSCI and second items of the second TSCI. With each link, one of the first items with a first timestamp may be associated with one of the second items with a second timestamp. A mismatch cost between the aligned first section and the aligned second section may be computed. The mismatch cost may comprise a function of: an item-wise cost between a first item and a second item associated by a particular link of the map, and a link-wise cost associated with the particular link of the map.

The aligned first section and the aligned second section may be represented respectively as a first vector and a second vector of same vector length. The mismatch cost may comprise at least one of: an inner product, inner-product-like quantity, quantity based on correlation, correlation indicator, quantity based on covariance, discriminating score, distance, Euclidean distance, absolute distance, Lk distance (e.g. LI, L2, ... ), weighted distance, distance-like quantity and/or another similarity value, between the first vector and the second vector. The mismatch cost may be normalized by the respective vector length.

A parameter derived from the mismatch cost between the first section of the first time duration of the first TSCI and the second section of the second time duration of the second TSCI may be modeled with a statistical distribution. At least one of: a scale parameter, location parameter and/or another parameter, of the statistical distribution may be estimated.

The first section of the first time duration of the first TSCI may be a sliding section of the first TSCI. The second section of the second time duration of the second TSCI may be a sliding section of the second TSCI.

A first sliding window may be applied to the first TSCI and a corresponding second sliding window may be applied to the second TSCI. The first sliding window of the first TSCI and the corresponding second sliding window of the second TSCI may be aligned.

Mismatch cost between the aligned first sliding window of the first TSCI and the corresponding aligned second sliding window of the second TSCI may be computed. The current event may be associated with at least one of: the known event, the unknown event and/or the another event, based on the mismatch cost.

The classifier may be applied to at least one of: each first section of the first time duration of the first TSCI, and/or each second section of the second time duration of the second TSCI, to obtain at least one tentative classification results. Each tentative classification result may be associated with a respective first section and a respective second section.

The current event may be associated with at least one of: the known event, the unknown event, a class/category/ group/ grouping/list/ set of unknown events, and/or the another event, based on the mismatch cost. The current event may be associated with at least one of: the known event, the unknown event and/or the another event, based on a largest number of tentative classification results in more than one sections of the first TSCI and corresponding more than sections of the second TSCI. For example, the current event may be associated with a particular known event if the mismatch cost points to the particular known event for N consecutive times (e.g. N=10). In another example, the current event may be associated with a particular known event if the percentage of mismatch cost within the immediate past N consecutive N pointing to the particular known event exceeds a certain threshold (e.g. >80%).

In another example, the current event may be associated with a known event that achieves smallest mismatch cost for the most times within a time period. The current event may be associated with a known event that achieves smallest overall mismatch cost, which is a weighted average of at least one mismatch cost associated with the at least one first sections. The current event may be associated with a particular known event that achieves smallest of another overall cost. The current event may be associated with the "unknown event" if none of the known events achieve mismatch cost lower than a first threshold T1 in a sufficient percentage of the at least one first section. The current event may also be associated with the "unknown event" if none of the events achieve an overall mismatch cost lower than a second threshold T2. The current event may be associated with at least one of: the known event, the unknown event and/or the another event, based on the mismatch cost and additional mismatch cost associated with at least one additional section of the first TSCI and at least one additional section of the second TSCI. The known events may comprise at least one of: a door closed event, door open event, window closed event, window open event, multi-state event, on-state event, off-state event, intermediate state event, continuous state event, discrete state event, human-present event, human-absent event, sign-of-life-present event, and/or a sign-of-life-absent event.

A projection for each CI may be trained using a dimension reduction method based on the training TSCI. The dimension reduction method may comprise at least one of: principal component analysis (PCA), PCA with different kernel, independent component analysis (ICA), Fisher linear discriminant, vector quantization, supervised learning, unsupervised learning, self-organizing maps, auto-encoder, neural network, deep neural network, and/or another method. The projection may be applied to at least one of: the training TSCI associated with the at least one event, and/or the current TSCI, for the classifier.

The classifier of the at least one event may be trained based on the projection and the training TSCI associated with the at least one event. The at least one current TSCI may be classified/categorized based on the projection and the current TSCI. The projection may be re-trained using at least one of: the dimension reduction method, and another dimension reduction method, based on at least one of: the training TSCI, at least one current TSCI before retraining the projection, and/or additional training TSCI. The another dimension reduction method may comprise at least one of: principal component analysis (PCA), PCA with different kernels, independent component analysis (ICA), Fisher linear discriminant, vector quantization, supervised learning, unsupervised learning, self-organizing maps, auto-encoder, neural network, deep neural network, and/or yet another method. The classifier of the at least one event may be re-trained based on at least one of: the re-trained projection, the training TSCI associated with the at least one events, and/or at least one current TSCI. The at least one current TSCI may be classified based on: the re-trained projection, the re-trained classifier, and/or the current TSCI.

Each CI may comprise a vector of complex values. Each complex value may be preprocessed to give the magnitude of the complex value. Each CI may be preprocessed to give a vector of non-negative real numbers comprising the magnitude of corresponding complex values. Each training TSCI may be weighted in the training of the projection. The projection may comprise more than one projected components. The projection may comprise at least one most significant projected component. The projection may comprise at least one projected component that may be beneficial for the classifier.

Channel/channel information/venue/spatial-temporal info/motion/object

The channel information (CI) may be associated with/may comprise signal strength, signal amplitude, signal phase, spectral power measurement, modem parameters (e.g. used in relation to modulation/ demodulation in digital communication systems such as WiFi, 4G/LTE), dynamic beamforming information, transfer function components, radio state (e.g. used in digital communication systems to decode digital data, baseband processing state, RF processing state, etc.), measurable variables, sensed data, coarse-grained/ fine-grained information of a layer (e.g. physical layer, data link layer, MAC layer, etc.), digital setting, gain setting, RF filter setting, RF front end switch setting, DC offset setting, DC correction setting, IQ compensation setting, effect(s) on the wireless signal by the environment (e.g. venue) during propagation, transformation of an input signal (the wireless signal transmitted by the Type 1 device) to an output signal (the wireless signal received by the Type 2 device), a stable behavior of the environment, a state profile, wireless channel measurements, received signal strength indicator (RSSI), channel state information (CSI), channel impulse response (CIR), channel frequency response (CFR), characteristics of frequency components (e.g. subcarriers) in a bandwidth, channel characteristics, channel filter response, timestamp, auxiliary information, data, meta data, user data, account data, access data, security data, session data, status data, supervisory data, household data, identity (ID), identifier, device data, network data, neighborhood data, environment data, real-time data, sensor data, stored data, encrypted data, compressed data, protected data, and/or another channel information. Each CI may be associated with a time stamp, and/or an arrival time. A CSI can be used to equalize/undo/ minimize/reduce the multipath channel effect (of the transmission channel) to demodulate a signal similar to the one transmitted by the transmitter through the multipath channel. The CI may be associated with information associated with a frequency band, frequency signature, frequency phase, frequency amplitude, frequency trend, frequency characteristics, frequency-like characteristics, time domain element, frequency domain element, time-frequency domain element, orthogonal decomposition characteristics, and/or non-orthogonal decomposition characteristics of the signal through the channel. The TSCI may be a stream of wireless signals (e.g. CI).

The CI may be preprocessed, processed, postprocessed, stored (e.g. in local memory, portable/mobile memory, removable memory, storage network, cloud memory, in a volatile manner, in a non-volatile manner), retrieved, transmitted and/or received. One or more modem parameters and/or radio state parameters may be held constant. The modem parameters may be applied to a radio subsystem. The modem parameters may represent a radio state. A motion detection signal (e.g. baseband signal, and/or packet decoded/demodulated from the baseband signal, etc.) may be obtained by processing (e.g. down-converting) the first wireless signal (e.g. RF/WiFi/LTE/5G signal) by the radio subsystem using the radio state represented by the stored modem parameters. The modem parameters/radio state may be updated (e.g. using previous modem parameters or previous radio state). Both the previous and updated modem parameters/radio states may be applied in the radio subsystem in the digital communication system. Both the previous and updated modem parameters/radio states may be compared/ analyzed/ processed/ monitored in the task.

The channel information may also be modem parameters (e.g. stored or freshly computed) used to process the wireless signal. The wireless signal may comprise a plurality of probe signals. The same modem parameters may be used to process more than one probe signals. The same modem parameters may also be used to process more than one wireless signals. The modem parameters may comprise parameters that indicate settings or an overall configuration for the operation of a radio subsystem or a baseband subsystem of a wireless sensor device (or both). The modem parameters may include one or more of: a gain setting, an RF filter setting, an RF front end switch setting, a DC offset setting, or an IQ compensation setting for a radio subsystem, or a digital DC correction setting, a digital gain setting, and/or a digital filtering setting (e.g. for a baseband subsystem). The CI may also be associated with information associated with a time period, time signature, timestamp, time amplitude, time phase, time trend, and/or time characteristics of the signal. The CI may be associated with information associated with a time-frequency partition, signature, amplitude, phase, trend, and/or characteristics of the signal. The CI may be associated with a decomposition of the signal. The CI may be associated with information associated with a direction, angle of arrival (AoA), angle of a directional antenna, and/or a phase of the signal through the channel. The CI may be associated with attenuation patterns of the signal through the channel. Each CI may be associated with a Type 1 device and a Type 2 device. Each CI may be associated with an antenna of the Type 1 device and an antenna of the Type 2 device.

The CI may be obtained from a communication hardware (e.g. of Type 2 device, or Type 1 device) that is capable of providing the CI. The communication hardware may be a WiFi-capable chip/IC (integrated circuit), chip compliant with a 802.11 or 802.16 or another wireless/radio standard, next generation WiFi-capable chip, LTE-capable chip, 5G-capable chip, 6G/7G/8G-capable chip, Bluetooth-enabled chip, NFC (near field communication)-enabled chip, BLE (Bluetooth low power)-enabled chip, UWB chip, another communication chip (e.g. Zigbee, WiMax, mesh network), etc. The communication hardware computes the CI and stores the CI in a buffer memory and make the CI available for extraction. The CI may comprise data and/or at least one matrices related to channel state information (CSI). The at least one matrices may be used for channel equalization, and/or beam forming, etc. The channel may be associated with a venue. The attenuation may be due to signal propagation in the venue, signal propagating/reflection/ refraction/ diffraction through/at/around air (e.g. air of venue), refraction medium/reflection surface such as wall, doors, furniture, obstacles and/or barriers, etc. The attenuation may be due to reflection at surfaces and obstacles (e.g. reflection surface, obstacle) such as floor, ceiling, furniture, fixtures, objects, people, pets, etc. Each CI may be associated with a timestamp. Each CI may comprise N1 components (e.g. N1 frequency domain components in CFR, N1 time domain components in CIR, or N1 decomposition components). Each component may be associated with a component index. Each component may be a real, imaginary, or complex quantity, magnitude, phase, flag, and/or set. Each CI may comprise a vector or matrix of complex numbers, a set of mixed quantities, and/or a multi-dimensional collection of at least one complex numbers.

Components of a TSCI associated with a particular component index may form a respective component time series associated with the respective index. A TSCI may be divided into N1 component time series. Each respective component time series is associated with a respective component index. The characteristics/STI of the motion of the object may be monitored based on the component time series. In one example, one or more ranges of CI components (e.g. one range being from component 11 to component 23, a second range being from component 44 to component 50, and a third range having only one component) may be selected based on some criteria/cost function/signal quality metric (e.g. based on signal-to-noise ratio, and/or interference level) for further processing.

A component-wise characteristic of a component-feature time series of a TSCI may be computed. The component-wise characteristics may be a scalar (e.g. energy) or a function with a domain and a range (e.g. an autocorrelation function, transform, inverse transform). The characteristics/STI of the motion of the object may be monitored based on the component-wise characteristics. A total characteristics (e.g. aggregate characteristics) of the TSCI may be computed based on the component-wise characteristics of each component time series of the TSCI. The total characteristics may be a weighted average of the component-wise characteristics. The characteristics/STI of the motion of the object may be monitored based on the total characteristics. An aggregate quantity may be a weighted average of individual quantities.

The Type 1 device and Type 2 device may support WiFi, WiMax, 3G/beyond 3G, 4G/beyond 4G, LTE, LTE-A, 5G, 6G, 7G, Bluetooth, NFC, BLE, Zigbee, UWB, UMTS, 3GPP, GSM, EDGE, TDMA, FDMA, CDMA, WCDMA, TD-SCDMA, mesh network, proprietary wireless system, IEEE 802.11 standard, 802.15 standard, 802.16 standard, 3GPP standard, and/or another wireless system.

A common wireless system and/or a common wireless channel may be shared by the Type 1 transceiver and/or the at least one Type 2 transceiver. The at least one Type 2 transceiver may transmit respective signal contemporaneously (or: asynchronously, synchronously, sporadically, continuously, repeatedly, concurrently, simultaneously and/or temporarily) using the common wireless system and/or the common wireless channel. The Type 1 transceiver may transmit a signal to the at least one Type 2 transceiver using the common wireless system and/or the common wireless channel.

Each Type 1 device and Type 2 device may have at least one transmitting/receiving antenna. Each CI may be associated with one of the transmitting antenna of the Type 1 device and one of the receiving antenna of the Type 2 device. Each pair of a transmitting antenna and a receiving antenna may be associated with a link, a path, a communication path, signal hardware path, etc. For example, if the Type 1 device has M (e.g. 3) transmitting antennas, and the Type 2 device has N (e.g. 2) receiving antennas, there may be MxN (e.g. 3x2=6) links or paths. Each link or path may be associated with a TSCI.

The at least one TSCI may correspond to various antenna pairs between the Type 1 device and the Type 2 device. The Type 1 device may have at least one antenna. The Type 2 device may also have at least one antenna. Each TSCI may be associated with an antenna of the Type 1 device and an antenna of the Type 2 device. Averaging or weighted averaging over antenna links may be performed. The averaging or weighted averaging may be over the at least one TSCI. The averaging may optionally be performed on a subset of the at least one TSCI corresponding to a subset of the antenna pairs.

Timestamps of CI of a portion of a TSCI may be irregular and may be corrected so that corrected timestamps of time-corrected CI may be uniformly spaced in time. In the case of multiple Type 1 devices and/or multiple Type 2 devices, the corrected timestamp may be with respect to the same or different clock. An original timestamp associated with each of the CI may be determined. The original timestamp may not be uniformly spaced in time. Original timestamps of all CI of the particular portion of the particular TSCI in the current sliding time window may be corrected so that corrected timestamps of time-corrected CI may be uniformly spaced in time.

The characteristics and/or STI (e.g. motion information) may comprise: location, location coordinate, change in location, position (e.g. initial position, new position), position on map, height, horizontal location, vertical location, distance, displacement, speed, acceleration, rotational speed, rotational acceleration, direction, angle of motion, azimuth, direction of motion, rotation, path, deformation, transformation, shrinking, expanding, gait, gait cycle, head motion, repeated motion, periodic motion, pseudo-periodic motion, impulsive motion, sudden motion, fall-down motion, transient motion, behavior, transient behavior, period of motion, frequency of motion, time trend, temporal profile, temporal characteristics, occurrence, change, temporal change, change of CI, change in frequency, change in timing, change of gait cycle, timing, starting time, initiating time, ending time, duration, history of motion, motion type, motion classification, frequency, frequency spectrum, frequency characteristics, presence, absence, proximity, approaching, receding, identity/identifier of the object, composition of the object, head motion rate, head motion direction, mouth-related rate, eye-related rate, breathing rate, heart rate, tidal volume, depth of breath, inhale time, exhale time, inhale time to exhale time ratio, airflow rate, heart heat-to-beat interval, heart rate variability, hand motion rate, hand motion direction, leg motion, body motion, walking rate, hand motion rate, positional characteristics, characteristics associated with movement (e.g. change in position/location) of the object, tool motion, machine motion, complex motion, and/or combination of multiple motions, event, signal statistics, signal dynamics, anomaly, motion statistics, motion parameter, indication of motion detection, motion magnitude, motion phase, similarity score, distance score, Euclidean distance, weighted distance, $L\_1$ norm, $L\_2$ norm, $L\_k$ norm for $k>2$, statistical distance, correlation, correlation indicator, auto-correlation, covariance, auto-covariance, cross-covariance, inner product, outer product, motion signal transformation, motion feature, presence of motion, absence of motion, motion localization, motion identification, motion recognition, presence of object, absence of object, entrance of object, exit of object, a change of object, motion cycle, motion count, gait cycle, motion rhythm, deformation motion, gesture, handwriting, head motion, mouth motion, heart motion, internal organ motion, motion trend, size, length, area, volume, capacity, shape, form, tag, starting/initiating location, ending location, starting/initiating quantity, ending quantity, event, fall-down event, security event, accident event, home event, office event, factory event, warehouse event, manufacturing event, assembly line event, maintenance event, car-related event, navigation event, tracking event, door event, door-open event, door-close event, window event, window-open event, window-close event, repeatable event, one-time event, consumed quantity, unconsumed quantity, state, physical state, health state, well-being state, emotional state, mental state, another event, analytics, output responses, and/or another information. The characteristics and/or STI may be computed/monitored based on a feature computed from a CI or a TSCI (e.g. feature computation/extraction). A static segment or profile (and/or a dynamic segment/profile) may be identified /computed/analyzed/ monitored/ extracted/ obtained/ marked/ presented/ indicated/ highlighted/ stored/ communicated based on an analysis of the feature. The analysis may comprise a motion detection/movement assessment/presence detection. Computational workload may be shared among the Type 1 device, the Type 2 device and another processor.

The Type 1 device and/or Type 2 device may be a local device. The local device may be: a smart phone, smart device, TV, sound bar, set-top box, access point, router, repeater, wireless signal repeater/extender, remote control, speaker, fan, refrigerator, microwave, oven, coffee machine, hot water pot, utensil, table, chair, light, lamp, door lock, camera, microphone, motion sensor, security device, fire hydrant, garage door, switch, power adapter, computer, dongle, computer peripheral, electronic pad, sofa, tile, accessory, home device, vehicle device, office device, building device, manufacturing device, watch, glasses, clock, television, oven, air-conditioner, accessory, utility, appliance, smart machine, smart vehicle, internet-of-thing (IoT) device, internet-enabled device, computer, portable computer, tablet, smart house, smart office, smart building, smart parking lot, smart system, and/or another device.

Each Type 1 device may be associated with a respective identifier (e.g. ID). Each Type 2 device may also be associated with a respective identify (ID). The ID may comprise: numeral, combination of text and numbers, name, password, account, account ID, web link, web address, index to some information, and/or another ID. The ID may be assigned. The ID may be assigned by hardware (e.g. hardwired, via dongle and/or other hardware), software and/or firmware. The ID may be stored (e.g. in database, in memory, in server (e.g. hub device), in the cloud, stored locally, stored remotely, stored permanently, stored temporarily) and may be retrieved. The ID may be associated with at least one record, account, user, household, address, phone number, social security number, customer number, another ID, another identifier, timestamp, and/or collection of data. The ID and/or part of the ID of a Type 1 device may be made available to a Type 2 device. The ID may be used for registration, initialization, communication, identification, verification, detection, recognition, authentication, access control, cloud access, networking, social networking, logging, recording, cataloging, classification, tagging, association, pairing, transaction, electronic transaction, and/or intellectual property control, by the Type 1 device and/or the Type 2 device.

The object may be person, user, subject, passenger, child, older person, baby, sleeping baby, baby in vehicle, patient, worker, high-value worker, expert, specialist, waiter, customer in mall, traveler in airport/ train station/ bus terminal/ shipping terminals, staff/worker/customer service personnel in factory/ mall/ supermarket/ office/ workplace, serviceman in sewage/air ventilation system/lift well, lifts in lift wells, elevator, inmate, people to be tracked/ monitored, animal, plant, living object, pet, dog, cat, smart phone, phone accessory, computer, tablet, portable computer, dongle, computing accessory, networked devices, WiFi devices, IoT devices, smart watch, smart glasses, smart devices, speaker, keys, smart key, wallet, purse, handbag, backpack, goods, cargo, luggage, equipment, motor, machine, air conditioner, fan, air conditioning equipment, light fixture, moveable light, television, camera, audio and/or video equipment, stationary, surveillance equipment, parts, signage, tool, cart, ticket, parking ticket, toll ticket, airplane ticket, credit card, plastic card, access card, food packaging, utensil, table, chair, cleaning equipment/tool, vehicle, car, cars in parking facilities, merchandise in warehouse/ store/ supermarket/ distribution center, boat, bicycle, airplane, drone, remote control car/plane/ boat, robot, manufacturing device, assembly line, material/unfinished part/robot/wagon/ transports on factory floor, object to be tracked in airport/shopping mart/supermarket, non-object, absence of an object, presence of an object, object with form, object with changing form, object with no form, mass of fluid, mass of liquid, mass of gas/smoke, fire, flame, electromagnetic (EM) source, EM medium, and/or another object.

The object itself may be communicatively coupled with some network, such as WiFi, MiFi, 3G/ 4G/ LTE/ 5G/ 6G/ 7G, Bluetooth, NFC, BLE, WiMax, Zigbee, UMTS, 3GPP, GSM, EDGE, TDMA, FDMA, CDMA, WCDMA, TD-SCDMA, mesh network, adhoc network, and/or other network. The object itself may be bulky with AC power supply, but is moved during installation, cleaning, maintenance, renovation, etc. It may also be installed in moveable platform such as lift, pad, movable, platform, elevator, conveyor belt, robot, drone, forklift, car, boat, vehicle, etc. The object may have multiple parts, each part with different movement (e.g. change in position/location). For example, the object may be a person walking forward. While walking, his left hand and right hand may move in different direction, with different instantaneous speed, acceleration, motion, etc.

The wireless transmitter (e.g. Type 1 device), the wireless receiver (e.g. Type 2 device), another wireless transmitter and/or another wireless receiver may move with the object and/or another object (e.g. in prior movement, current movement and/or future movement. They may be communicatively coupled to one or more nearby device. They may transmit TSCI and/or information associated with the TSCI to the nearby device, and/or each other. They may be with the nearby device. The wireless transmitter and/or the wireless receiver may be part of a small (e.g. coin-size, cigarette box size, or even smaller), light-weight portable device. The portable device may be wirelessly coupled with a nearby device.

The nearby device may be smart phone, iPhone, Android phone, smart device, smart appliance, smart vehicle, smart gadget, smart TV, smart refrigerator, smart speaker, smart watch, smart glasses, smart pad, iPad, computer, wearable computer, notebook computer, gateway. The nearby device may be connected to a cloud server, local server (e.g. hub device) and/or other server via internet, wired internet connection and/or wireless internet connection. The nearby device may be portable. The portable device, the nearby device, a local server (e.g. hub device) and/or a cloud server may share the computation and/or storage for a task (e.g. obtain TSCI, determine characteristics/STI of the object associated with the movement (e.g. change in position/location) of the object, computation of time series of power (e.g. signal strength) information, determining/computing the particular function, searching for local extremum, classification, identifying particular value of time offset, de-noising, processing, simplification, cleaning, wireless smart sensing task, extract CI from signal, switching, segmentation, estimate trajectory/path/track, process the map, processing trajectory/path/track based on environment models/constraints/limitations, correction, corrective adjustment, adjustment, map-based (or model-based) correction, detecting error, checking for boundary hitting, thresholding) and information (e.g. TSCI). The nearby device may/ may not move with the object. The nearby device may be portable/ not portable/ moveable/ non-moveable. The nearby device may use battery power, solar power, AC power and/or other power source. The nearby device may have replaceable/non-replaceable battery, and/or rechargeable/non-rechargeable battery. The nearby device may be similar to the object. The nearby device may have identical (and/or similar) hardware and/or software to the object. The nearby device may be a smart device, network enabled device, device with connection to WiFi/ 3G/ 4G/ 5G/ 6G/ Zigbee/ Bluetooth/ NFC/ UMTS/ 3GPP/ GSM/ EDGE/ TDMA/ FDMA/ CDMA/ WCDMA/ TD-SCDMA/ adhoc network/ other network, smart speaker, smart watch, smart clock, smart appliance, smart machine, smart equipment, smart tool, smart vehicle, internet-of-thing (IoT) device, internet-enabled device, computer, portable computer, tablet, and another device. The nearby device and/or at least one processor associated with the wireless receiver, the wireless transmitter, the another wireless receiver, the another wireless transmitter and/or a cloud server (in the cloud) may determine the initial STI of the object. Two or more of them may determine the initial spatial-temporal info jointly. Two or more of them may share intermediate information in the determination of the initial STI (e.g. initial position).

In one example, the wireless transmitter (e.g. Type 1 device, or Tracker Bot) may move with the object. The wireless transmitter may send the signal to the wireless receiver (e.g. Type 2 device, or Origin Register) or determining the initial STI (e.g. initial position) of the object. The wireless transmitter may also send the signal and/or another signal to another wireless receiver (e.g. another Type 2 device, or another Origin Register) for the monitoring of the motion (spatial-temporal info) of the object. The wireless receiver may also receive the signal and/or another signal from the wireless transmitter and/or the another wireless transmitter for monitoring the motion of the object. The location of the wireless receiver and/or the another wireless receiver may be known. In another example, the wireless receiver (e.g. Type 2 device, or Tracker Bot) may move with the object. The wireless receiver may receive the signal transmitted from the wireless transmitter (e.g. Type 1 device, or Origin Register) for determining the initial spatial-temporal info (e.g. initial position) of the object. The wireless receiver may also receive the signal and/or another signal from another wireless transmitter (e.g. another Type 1 device, or another Origin Register) for the monitoring of the current motion (e.g. spatial-temporal info) of the object. The wireless transmitter may also transmit the signal and/or another signal to the wireless receiver and/or the another wireless receiver (e.g. another Type 2 device, or another Tracker Bot) for monitoring the motion of the object. The location of the wireless transmitter and/or the another wireless transmitter may be known.

The venue may be a space such as a sensing area, room, house, office, property, workplace, hallway, walkway, lift, lift well, escalator, elevator, sewage system, air ventilations system, staircase, gathering area, duct, air duct, pipe, tube, enclosed space, enclosed structure, semi-enclosed structure, enclosed area, area with at least one wall, plant, machine, engine, structure with wood, structure with glass, structure with metal, structure with walls, structure with doors, structure with gaps, structure with reflection surface, structure with fluid, building, roof top, store, factory, assembly line, hotel room, museum, classroom, school, university, government building, warehouse, garage, mall, airport, train station, bus terminal, hub, transportation hub, shipping terminal, government facility, public facility, school, university, entertainment facility, recreational facility, hospital, pediatric/neonatal wards, seniors home, elderly care facility, geriatric facility, community center, stadium, playground, park, field, sports facility, swimming facility, track and/or field, basketball court, tennis court, soccer stadium, baseball stadium, gymnasium, hall, garage, shopping mart, mall, supermarket, manufacturing facility, parking facility, construction site, mining facility, transportation facility, highway, road, valley, forest, wood, terrain, landscape, den, patio, land, path, amusement park, urban area, rural area, suburban area, metropolitan area, garden, square, plaza, music hall, downtown facility, over-air facility, semi-open facility, closed area, train platform, train station, distribution center, warehouse, store, distribution center, storage facility, underground facility, space (e.g. above ground, outer-space) facility, floating facility, cavern, tunnel facility, indoor facility, open-air facility, outdoor facility with some walls/ doors/ reflective barriers, open facility, semi-open facility, car, truck, bus, van, container, ship/boat, submersible, train, tram, airplane, vehicle, mobile home, cave, tunnel, pipe, channel, metropolitan area, downtown area with relatively tall buildings, valley, well, duct, pathway, gas line, oil line, water pipe, network of interconnecting pathways/alleys/roads/tubes/cavities/ caves/pipe-like structure/air space/fluid space, human body, animal body, body cavity, organ, bone, teeth, soft tissue, hard tissue, rigid tissue, non-rigid tissue, blood/body fluid vessel, windpipe, air duct, den, etc. The venue may be indoor space, outdoor space, The venue may include both the inside and outside of the space. For example, the venue may include both the inside of a building and the outside of the building. For example, the venue can be a building that has one floor or multiple floors, and a portion of the building can be underground. The shape of the building can be, e.g., round, square, rectangular, triangle, or irregular-shaped. These are merely examples. The disclosure can be used to detect events in other types of venue or spaces.

The wireless transmitter (e.g. Type 1 device) and/or the wireless receiver (e.g. Type 2 device) may be embedded in a portable device (e.g. a module, or a device with the module) that may move with the object (e.g. in prior movement and/or current movement). The portable device may be communicatively coupled with the object using a wired connection (e.g. through USB, microUSB, Firewire, HDMI, serial port, parallel port, and other connectors) and/or a connection (e.g. Bluetooth, Bluetooth Low Energy (BLE), WiFi, LTE, NFC, ZigBee). The portable device may be a lightweight device. The portable may be powered by battery, rechargeable battery and/or AC power. The portable device may be very small (e.g. at sub-millimeter scale and/or sub-centimeter scale), and/or small (e.g. coin-size, card-size, pocket-size, or larger). The portable device may be large, sizable, and/or bulky (e.g. heavy machinery to be installed). The portable device may be a WiFi hotspot, access point, mobile WiFi (MiFi), dongle with USB/micro USB/ Firewire/ other connector, smartphone, portable computer, computer, tablet, smart device, internet-of-thing (IoT) device, WiFi-enabled device, LTE-enabled device, a smart watch, smart glass, smart mirror, smart antenna, smart battery, smart light, smart pen, smart ring, smart door, smart window, smart clock, small battery, smart wallet, smart belt, smart handbag, smart clothing/garment, smart ornament, smart packaging, smart paper/ book/ magazine/ poster/ printed matter/ signage/ display/ lighted system/ lighting system, smart key/ tool, smart bracelet/ chain/ necklace/ wearable/ accessory, smart pad/ cushion, smart tile/ block/ brick/ building material/ other material, smart garbage can/ waste container, smart food carriage/ storage, smart ball/ racket, smart chair/ sofa/ bed, smart shoe/ footwear/ carpet/ mat/ shoe rack, smart glove/ hand wear/ ring/ hand ware, smart hat/ headwear/ makeup/ sticker/ tattoo, smart mirror, smart toy, smart pill, smart utensil, smart bottle/food container, smart tool, smart device, IoT device, WiFi enabled device, network enabled device, 3G/4G/5G/6G enabled device, UMTS devices, 3GPP devices, GSM devices, EDGE devices, TDMA devices, FDMA devices, CDMA devices, WCDMA devices, TD-SCDMA devices, embeddable device, implantable device, air conditioner, refrigerator, heater, furnace, furniture, oven, cooking device, television/ set-top box (STB)/ DVD player/ audio player/ video player/ remote control, hi-fi, audio device, speaker, lamp/ light, wall, door, window, roof, roof tile/ shingle/ structure/ attic structure/ device/ feature/ installation/ fixtures, lawn mower/ garden tools/ yard tools/ mechanics tools/ garage tools/, garbage can/ container, 20-ft/40-ft container, storage container, factory/ manufacturing/ production device, repair tools, fluid container, machine, machinery to be installed, vehicle, cart, wagon, warehouse vehicle, car, bicycle, motorcycle, boat, vessel, airplane, basket/ box/ bag/ bucket/ container, smart plate/ cup/ bowl/ pot/ mat/ utensils/ kitchen tools/ kitchen devices/ kitchen accessories/ cabinets/ tables/ chairs/ tiles/ lights/ water pipes/ taps/ gas range/ oven/ dishwashing machine/ etc. The portable device may have a battery that may be replaceable, irreplaceable, rechargeable, and/or non-rechargeable. The portable device may be wirelessly charged. The portable device may be a smart payment card. The portable device may be a payment card used in parking lots, highways, entertainment parks, or other venues/facilities that need payment. The portable device may have an identity (ID)/identifier as described above.

An event may be monitored based on the TSCI. The event may be an object related event, such as fall-down of the object (e.g. an person and/or a sick person), rotation, hesitation, pause, impact (e.g. a person hitting a sandbag, door, window, bed, chair, table, desk, cabinet, box, another person, animal, bird, fly, table, chair, ball, bowling ball, tennis ball, football, soccer ball, baseball, basketball, volley ball), two-body action (e.g. a person letting go a balloon, catching a fish, molding a clay, writing a paper, person typing on a computer), car moving in a garage, person carrying a smart phone and walking around an airport/mall/government building/office/etc., autonomous moveable object/machine moving around (e.g. vacuum cleaner, utility vehicle, car, drone, self-driving car).

The task or the wireless smart sensing task may comprise: object detection, presence detection, proximity detection, object recognition, activity recognition, object verification, object counting, daily activity monitoring, well-being monitoring, vital sign monitoring, health condition monitoring, baby monitoring, elderly monitoring, sleep monitoring, sleep stage monitoring, walking monitoring, exercise monitoring, tool detection, tool recognition, tool verification, patient detection, patient monitoring, patient verification, machine detection, machine recognition, machine verification, human detection, human recognition, human verification, baby detection, baby recognition, baby verification, human breathing detection, human breathing recognition, human breathing estimation, human breathing verification, human heart beat detection, human heart beat recognition, human heart beat estimation, human heart beat verification, fall-down detection, fall-down recognition, fall-down estimation, fall-down verification, emotion detection, emotion recognition, emotion estimation, emotion verification, motion detection, motion degree estimation, motion recognition, motion estimation, motion verification, periodic motion detection, periodic motion recognition, periodic motion estimation, periodic motion verification, repeated motion detection, repeated motion recognition, repeated motion estimation, repeated motion verification, stationary motion detection, stationary motion recognition, stationary motion estimation, stationary motion verification, cyclo-stationary motion detection, cyclo-stationary motion recognition, cyclo-stationary motion estimation, cyclo-stationary motion verification, transient motion detection, transient motion recognition, transient motion estimation, transient motion verification, trend detection, trend recognition, trend estimation, trend verification, breathing detection, breathing recognition, breathing estimation, breathing estimation, human biometrics detection, human biometric recognition, human biometrics estimation, human biometrics verification, environment informatics detection, environment informatics recognition, environment informatics estimation, environment informatics verification, gait detection, gait recognition, gait estimation, gait verification, gesture detection, gesture recognition, gesture estimation, gesture verification, machine learning, supervised learning, unsupervised learning, semi-supervised learning, clustering, feature extraction, featuring training, principal component analysis, eigen-decomposition, frequency decomposition, time decomposition, time-frequency decomposition, functional decomposition, other decomposition, training, discriminative training, supervised training, unsupervised training, semi-supervised training, neural network, sudden motion detection, fall-down detection, danger detection, life-threat detection, regular motion detection, stationary motion detection, cyclo-stationary motion detection, intrusion detection, suspicious motion detection, security, safety monitoring, navigation, guidance, map-based processing, map-based correction, model-based processing/correction, irregularity detection, locationing, room sensing, tracking, multiple object tracking, indoor tracking, indoor position, indoor navigation, energy management, power transfer, wireless power transfer, object counting, car tracking in parking garage, activating a device/system (e.g. security system, access system, alarm, siren, speaker, television, entertaining system, camera, heater/air-conditioning (HVAC) system, ventilation system, lighting system, gaming system, coffee machine, cooking device, cleaning device, housekeeping device), geometry estimation, augmented reality, wireless communication, data communication, signal broadcasting, networking, coordination, administration, encryption, protection, cloud computing, other processing and/or other task. The task may be performed by the Type 1 device, the Type 2 device, another Type 1 device, another Type 2 device, a nearby device, a local server (e.g. hub device), edge server, a cloud server, and/or another device. The task may be based on TSCI between any pair of Type 1 device and Type 2 device. A Type 2 device may be a Type 1 device, and vice versa. A Type 2 device may play/perform the role (e.g. functionality) of Type 1 device temporarily, continuously, sporadically, simultaneously, and/or contemporaneously, and vice versa. A first part of the task may comprise at least one of: preprocessing, processing, signal conditioning, signal processing, post-processing, processing sporadically/continuously/ simultaneously/ contemporaneously/ dynamically/ adaptive/ on-demand/ as-needed, calibrating, denoising, feature extraction, coding, encryption, transformation, mapping, motion detection, motion estimation, motion change detection, motion pattern detection, motion pattern estimation, motion pattern recognition, vital sign detection, vital sign estimation, vital sign recognition, periodic motion detection, periodic motion estimation, repeated motion detection/estimation, breathing rate detection, breathing rate estimation, breathing pattern detection, breathing pattern estimation, breathing pattern recognition, heart beat detection, heart beat estimation, heart pattern detection, heart pattern estimation, heart pattern recognition, gesture detection, gesture estimation, gesture recognition, speed detection, speed estimation, object locationing, object tracking, navigation, acceleration estimation, acceleration detection, fall-down detection, change detection, intruder (and/or illegal action) detection, baby detection, baby monitoring, patient monitoring, object recognition, wireless power transfer, and/or wireless charging.

A second part of the task may comprise at least one of: a smart home task, smart office task, smart building task, smart factory task (e.g. manufacturing using a machine or an assembly line), smart internet-of-thing (IoT) task, smart system task, smart home operation, smart office operation, smart building operation, smart manufacturing operation (e.g. moving supplies/parts/raw material to a machine/an assembly line), IoT operation, smart system operation, turning on a light, turning off the light, controlling the light in at least one of: a room, region, and/or the venue, playing a sound clip, playing the sound clip in at least one of: the room, the region, and/or the venue, playing the sound clip of at least one of: a welcome, greeting, farewell, first message, and/or a second message associated with the first part of the task, turning on an appliance, turning off the appliance, controlling the appliance in at least one of: the room, the region, and/or the venue, turning on an electrical system, turning off the electrical system, controlling the electrical system in at least one of: the room, the region, and/or the venue, turning on a security system, turning off the security system, controlling the security system in at least one of: the room, the region, and/or the venue, turning on a mechanical system, turning off a mechanical system, controlling the mechanical system in at least one of: the room, the region, and/or the venue, and/or controlling at least one of: an air conditioning system, heating system, ventilation system, lighting system, heating device, stove, entertainment system, door, fence, window, garage, computer system, networked device, networked system, home appliance, office equipment, lighting device, robot (e.g. robotic arm), smart vehicle, smart machine, assembly line, smart device, internet-of-thing (IoT) device, smart home device, and/or a smart office device.

The task may include: detect a user returning home, detect a user leaving home, detect a user moving from one room to another, detect/control/lock/unlock/open/ close/partially open a window/door/garage door/blind/curtain/panel/solar panel/sun shade, detect a pet, detect/monitor a user doing something (e.g. sleeping on sofa, sleeping in bedroom, running on treadmill, cooking, sitting on sofa, watching TV, eating in kitchen, eating in dining room, going upstairs/downstairs, going outside/coming back, in the rest room), monitor/detect location of a user/pet, do something (e.g. send a message, notify/report to someone) automatically upon detection, do something for the user automatically upon detecting the user, turn on/off/dim a light, turn on/off music/radio/home entertainment system, turn on/off/adjust/control TV/HiFi/set-top-box (STB)/ home entertainment system/smart speaker/smart device, turn on/off/adjust air conditioning system, turn on/off/adjust ventilation system, turn on/off/adjust heating system, adjust/control curtains/light shades, turn on/off/wake a computer, turn on/off/pre-heat/control coffee machine/hot water pot, turn on/off/control/preheat cooker/oven/microwave oven/another cooking device, check/adjust temperature, check weather forecast, check telephone message box, check mail, do a system check, control/adjust a system, check/control/arm/disarm security system/baby monitor, check/control refrigerator, give a report (e.g. through a speaker such as Google home, Amazon Echo, on a display/screen, via a webpage/email/messaging system/notification system).

For example, when a user arrives home in his car, the task may be to, automatically, detect the user or his car approaching, open the garage door upon detection, turn on the driveway/garage light as the user approaches the garage, turn on air conditioner/ heater/ fan, etc. As the user enters the house, the task may be to, automatically, turn on the entrance light, turn off driveway/garage light, play a greeting message to welcome the user, turn on the music, turn on the radio and tuning to the user's favorite radio news channel, open the curtain/blind, monitor the user's mood, adjust the lighting and sound environment according to the user's mood or the current/imminent event (e.g. do romantic lighting and music because the user is scheduled to eat dinner with girlfriend in 1 hour) on the user's daily calendar, warm the food in microwave that the user prepared in the morning, do a diagnostic check of all systems in the house, check weather forecast for tomorrow's work, check news of interest to the user, check user's calendar and to-do list and play reminder, check telephone answer system/messaging system/email and give a verbal report using dialog system/speech synthesis, remind (e.g. using audible tool such as speakers/HiFi/ speech synthesis/sound/voice/ music/song/sound field/ background sound field/ dialog system, using visual tool such as TV/entertainment system/ computer/ notebook/smart pad/display/light/color/brightness/patterns/symbols, using haptic tool/virtual reality tool/gesture/ tool, using a smart device/appliance/material/furniture/fixture, using web tool/server/ hub device/cloud server/fog server/edge server/home network/mesh network, using messaging tool/notification tool/communication tool/scheduling tool/email, using user interface/GUI, using scent/smell/ fragrance/taste, using neural tool/nervous system tool, using a combination) the user of his mother's birthday and to call her, prepare a report, and give the report (e.g. using a tool for reminding as discussed above). The task may turn on the air conditioner/heater/ventilation system in advance, or adjust temperature setting of smart thermostat in advance, etc. As the user moves from the entrance to the living room, the task may be to turn on the living room light, open the living room curtain, open the window, turn off the entrance light behind the user, turn on the TV and set-top box, set TV to the user's favorite channel, adjust an appliance according to the user's preference and conditions/states (e.g. adjust lighting and choose/play music to build a romantic atmosphere), etc.

Another example may be: When the user wakes up in the morning, the task may be to detect the user moving around in the bedroom, open the blind/curtain, open the window, turn off the alarm clock, adjust indoor temperature from night-time temperature profile to day-time temperature profile, turn on the bedroom light, turn on the restroom light as the user approaches the restroom, check radio or streaming channel and play morning news, turn on the coffee machine and preheat the water, turn off security system, etc. When the user walks from bedroom to kitchen, the task may be to turn on the kitchen and hallway lights, turn off the bedroom and restroom lights, move the music/message/reminder from the bedroom to the kitchen, turn on the kitchen TV, change TV to morning news channel, lower the kitchen blind and open the kitchen window to bring in fresh air, unlock backdoor for the user to check the backyard, adjust temperature setting for the kitchen, etc. Another example may be: When the user leaves home for work, the task may be to detect the user leaving, play a farewell and/or have-a-good-day message, open/close garage door, turn on/off garage light and driveway light, turn off/dim lights to save energy (just in case the user forgets), close/lock all windows/doors (just in case the user forgets), turn off appliance (especially stove, oven, microwave oven), turn on/arm the home security system to guard the home against any intruder, adjust air conditioning/heating/ventilation systems to "away-from-home" profile to save energy, send alerts/reports/updates to the user's smart phone, etc.

A motion may comprise at least one of: a no-motion, resting motion, non-moving motion, movement, change in position/location, deterministic motion, transient motion, fall-down motion, repeating motion, periodic motion, pseudo-periodic motion, periodic/repeated motion associated with breathing, periodic/repeated motion associated with heartbeat, periodic/repeated motion associated with living object, periodic/repeated motion associated with machine, periodic/repeated motion associated with man-made object, periodic/repeated motion associated with nature, complex motion with transient element and periodic element, repetitive motion, non-deterministic motion, probabilistic motion, chaotic motion, random motion, complex motion with non-deterministic element and deterministic element, stationary random motion, pseudo-stationary random motion, cyclo-stationary random motion, non-stationary random motion, stationary random motion with periodic autocorrelation function (ACF), random motion with periodic ACF for period of time, random motion that is pseudo-stationary for a period of time, random motion of which an instantaneous ACF has a pseudo-periodic/repeating element for a period of time, machine motion, mechanical motion, vehicle motion, drone motion, air-related motion, wind-related motion, weather-related motion, water-related motion, fluid-related motion, ground-related motion, change in electro-magnetic characteristics, sub-surface motion, seismic motion, plant motion, animal motion, human motion, normal motion, abnormal motion, dangerous motion, warning motion, suspicious motion, rain, fire, flood, tsunami, explosion, collision, imminent collision, human body motion, head motion, facial motion, eye motion, mouth motion, tongue motion, neck motion, finger motion, hand motion, arm motion, shoulder motion, body motion, chest motion, abdominal motion, hip motion, leg motion, foot motion, body joint motion, knee motion, elbow motion, upper body motion, lower body motion, skin motion, below-skin motion, subcutaneous tissue motion, blood vessel motion, intravenous motion, organ motion, heart motion, lung motion, stomach motion, intestine motion, bowel motion, eating motion, breathing motion, facial expression, eye expression, mouth expression, talking motion, singing motion, eating motion, gesture, hand gesture, arm gesture, keystroke, typing stroke, user-interface gesture, man-machine interaction, gait, dancing movement, coordinated movement, and/or coordinated body movement.

The heterogeneous IC of the Type 1 device and/or any Type 2 receiver may comprise low-noise amplifier (LNA), power amplifier, transmit-receive switch, media access controller, baseband radio, 2.4 GHz radio, 3.65 GHz radio, 4.9 GHz radio, 5 GHz radio, 5.9GHz radio, below 6GHz radio, below 60 GHz radio and/or another radio. The heterogeneous IC may comprise a processor, a memory communicatively coupled with the processor, and a set of instructions stored in the memory to be executed by the processor. The IC and/or any processor may comprise at least one of: general purpose processor, special purpose processor, microprocessor, multi-processor, multi-core processor, parallel processor, CISC processor, RISC processor, microcontroller, central processing unit (CPU), graphical processor unit (GPU), digital signal processor (DSP), application specific integrated circuit (ASIC), field programmable gate array (FPGA), embedded processor (e.g. ARM), logic circuit, other programmable logic device, discrete logic, and/or a combination. The heterogeneous IC may support broadband network, wireless network, mobile network, mesh network, cellular network, wireless local area network (WLAN), wide area network (WAN), and metropolitan area network (MAN), WLAN standard, WiFi, LTE, LTE-A, LTE-U, 802.11 standard, 802.11a, 802.11b, 802.11g, 802.11n, 802.11ac, 802.11ad, 802.11af, 802,11ah, 802.11ax, 802.11ay, mesh network standard, 802.15 standard, 802.16 standard, cellular network standard, 3G, 3.5G, 4G, beyond 4G, 4.5G, 5G, 6G, 7G, 8G, 9G, UMTS, 3GPP, GSM, EDGE, TDMA, FDMA, CDMA, WCDMA, TD-SCDMA, Bluetooth, Bluetooth Low-Energy (BLE), NFC, Zigbee, WiMax, and/or another wireless network protocol.

The processor may comprise general purpose processor, special purpose processor, microprocessor, microcontroller, embedded processor, digital signal processor, central processing unit (CPU), graphical processing unit (GPU), multi-processor, multi-core processor, and/or processor with graphics capability, and/or a combination. The memory may be volatile, non-volatile, random access memory (RAM), Read Only Memory (ROM), Electrically Programmable ROM (EPROM), Electrically Erasable Programmable ROM (EEPROM), hard disk, flash memory, CD-ROM, DVD-ROM, magnetic storage, optical storage, organic storage, storage system, storage network, network storage, cloud storage, edge storage, local storage, external storage, internal storage, or other form of non-transitory storage medium known in the art. The set of instructions (machine executable code) corresponding to the method steps may be embodied directly in hardware, in software, in firmware, or in combinations thereof. The set of instructions may be embedded, pre-loaded, loaded upon boot up, loaded on the fly, loaded on demand, pre-installed, installed, and/or downloaded.

The presentation may be a presentation in an audio-visual way (e.g. using combination of visual, graphics, text, symbols, color, shades, video, animation, sound, speech, audio, etc.), graphical way (e.g. using GUI, animation, video), textual way (e.g. webpage with text, message, animated text), symbolic way (e.g. emoticon, signs, hand gesture), or mechanical way (e.g. vibration, actuator movement, haptics, etc.).

Basic computation

Computational workload associated with the method is shared among the processor, the Type 1 heterogeneous wireless device, the Type 2 heterogeneous wireless device, a local server (e.g. hub device), a cloud server, and another processor.

An operation, pre-processing, processing and/or postprocessing may be applied to data (e.g. TSCI, autocorrelation, features of TSCI). An operation may be preprocessing, processing and/or postprocessing. The preprocessing, processing and/or postprocessing may be an operation. An operation may comprise preprocessing, processing, post-processing, scaling, computing a confidence factor, computing a line-of-sight (LOS) quantity, computing a non-LOS (NLOS) quantity, a quantity comprising LOS and NLOS, computing a single link (e.g. path, communication path, link between a transmitting antenna and a receiving antenna) quantity, computing a quantity comprising multiple links, computing a function of the operands, filtering, linear filtering, nonlinear filtering, folding, grouping, energy computation, lowpass filtering, bandpass filtering, highpass filtering, median filtering, rank filtering, quartile filtering, percentile filtering, mode filtering, finite impulse response (FIR) filtering, infinite impulse response (IIR) filtering, moving average (MA) filtering, autoregressive (AR) filtering, autoregressive moving averaging (ARMA) filtering, selective filtering, adaptive filtering, interpolation, decimation, subsampling, upsampling, resampling, time correction, time base correction, phase correction, magnitude correction, phase cleaning, magnitude cleaning, matched filtering, enhancement, restoration, denoising, smoothing, signal conditioning, enhancement, restoration, spectral analysis, linear transform, nonlinear transform, inverse transform, frequency transform, inverse frequency transform, Fourier transform (FT), discrete time FT (DTFT), discrete FT (DFT), fast FT (FFT), wavelet transform, Laplace transform, Hilbert transform, Hadamard transform, trigonometric transform, sine transform, cosine transform, DCT, power-of-2 transform, sparse transform, graph-based transform, graph signal processing, fast transform, a transform combined with zero padding, cyclic padding, padding, zero padding, feature extraction, decomposition, projection, orthogonal projection, non-orthogonal projection, over-complete projection, eigen-decomposition, singular value decomposition (SVD), principle component analysis (PCA), independent component analysis (ICA), grouping, sorting, thresholding, soft thresholding, hard thresholding, clipping, soft clipping, first derivative, second order derivative, high order derivative, convolution, multiplication, division, addition, subtraction, integration, maximization, minimization, least mean square error, recursive least square, constrained least square, batch least square, least absolute error, least mean square deviation, least absolute deviation, local maximization, local minimization, optimization of a cost function, neural network, recognition, labeling, training, clustering, machine learning, supervised learning, unsupervised learning, semi-supervised learning, comparison with another TSCI, similarity score computation, quantization, vector quantization, matching pursuit, compression, encryption, coding, storing, transmitting, normalization, temporal normalization, frequency domain normalization, classification, clustering, labeling, tagging, learning, detection, estimation, learning network, mapping, remapping, expansion, storing, retrieving, transmitting, receiving, representing, merging, combining, splitting, tracking, monitoring, matched filtering, Kalman filtering, particle filter, intrapolation, extrapolation, histogram estimation, importance sampling, Monte Carlo sampling, compressive sensing, representing, merging, combining, splitting, scrambling, error protection, forward error correction, doing nothing, time varying processing, conditioning averaging, weighted averaging, arithmetic mean, geometric mean, harmonic mean, averaging over selected frequency, averaging over antenna links, logical operation, permutation, combination, sorting, AND, OR, XOR, union, intersection, vector addition, vector subtraction, vector multiplication, vector division, inverse, norm, distance, and/or another operation. The operation may be the preprocessing, processing, and/or post-processing. Operations may be applied jointly on multiple time series or functions.

The function (e.g. function of operands) may comprise: scalar function, vector function, discrete function, continuous function, polynomial function, characteristics, feature, magnitude, phase, exponential function, logarithmic function, trigonometric function, transcendental function, logical function, linear function, algebraic function, nonlinear function, piecewise linear function, real function, complex function, vector-valued function, inverse function, derivative of function, integration of function, circular function, function of another function, one-to-one function, one-to-many function, many-to-one function, many-to-many function, zero crossing, absolute function, indicator function, mean, mode, median, range, statistics, histogram, variance, standard deviation, measure of variation, spread, dispersion, deviation, divergence, range, interquartile range, total variation, absolute deviation, total deviation, arithmetic mean, geometric mean, harmonic mean, trimmed mean, percentile, square, cube, root, power, sine, cosine, tangent, cotangent, secant, cosecant, elliptical function, parabolic function, hyperbolic function, game function, zeta function, absolute value, thresholding, limiting function, floor function, rounding function, sign function, quantization, piecewise constant function, composite function, function of function, time function processed with an operation (e.g. filtering), probabilistic function, stochastic function, random function, ergodic function, stationary function, deterministic function, periodic function, repeated function, transformation, frequency transform, inverse frequency transform, discrete time transform, Laplace transform, Hilbert transform, sine transform, cosine transform, triangular transform, wavelet transform, integer transform, power-of-2 transform, sparse transform, projection, decomposition, principle component analysis (PCA), independent component analysis (ICA), neural network, feature extraction, moving function, function of moving window of neighboring items of time series, filtering function, convolution, mean function, histogram, variance/standard deviation function, statistical function, short-time transform, discrete transform, discrete Fourier transform, discrete cosine transform, discrete sine transform, Hadamard transform, eigen-decomposition, eigenvalue, singular value decomposition (SVD), singular value, orthogonal decomposition, matching pursuit, sparse transform, sparse approximation, any decomposition, graph-based processing, graph-based transform, graph signal processing, classification, identifying a class/group/category, labeling, learning, machine learning, detection, estimation, feature extraction, learning network, feature extraction, denoising, signal enhancement, coding, encryption, mapping, remapping, vector quantization, lowpass filtering, highpass filtering, bandpass filtering, matched filtering, Kalman filtering, preprocessing, postprocessing, particle filter, FIR filtering, IIR filtering, autoregressive (AR) filtering, adaptive filtering, first order derivative, high order derivative, integration, zero crossing, smoothing, median filtering, mode filtering, sampling, random sampling, resampling function, downsampling, down-converting, upsampling, up-converting, interpolation, extrapolation, importance sampling, Monte Carlo sampling, compressive sensing, statistics, short term statistics, long term statistics, autocorrelation function, cross correlation, moment generating function, time averaging, weighted averaging, special function, Bessel function, error function, complementary error function, Beta function, Gamma function, integral function, Gaussian function, Poisson function, etc.

Machine learning, training, discriminative training, deep learning, neural network, continuous time processing, distributed computing, distributed storage, acceleration using GPU/DSP/coprocessor/multicore/multiprocessing may be applied to a step (or each step) of this disclosure.

A frequency transform may include Fourier transform, Laplace transform, Hadamard transform, Hilbert transform, sine transform, cosine transform, triangular transform, wavelet transform, integer transform, power-of-2 transform, combined zero padding and transform, Fourier transform with zero padding, and/or another transform. Fast versions and/or approximated versions of the transform may be performed. The transform may be performed using floating point, and/or fixed point arithmetic.

An inverse frequency transform may include inverse Fourier transform, inverse Laplace transform, inverse Hadamard transform, inverse Hilbert transform, inverse sine transform, inverse cosine transform, inverse triangular transform, inverse wavelet transform, inverse integer transform, inverse power-of-2 transform, combined zero padding and transform, inverse Fourier transform with zero padding, and/or another transform. Fast versions and/or approximated versions of the transform may be performed. The transform may be performed using floating point, and/or fixed point arithmetic.

A quantity/feature from a TSCI may be computed. The quantity may comprise statistic of at least one of: motion, location, map coordinate, height, speed, acceleration, movement angle, rotation, size, volume, time trend, pattern, one-time pattern, repeating pattern, evolving pattern, time pattern, mutually excluding patterns, related/correlated patterns, cause-and-effect, correlation, short-term/long-term correlation, tendency, inclination, statistics, typical behavior, atypical behavior, time trend, time profile, periodic motion, repeated motion, repetition, tendency, change, abrupt change, gradual change, frequency, transient, breathing, gait, action, event, suspicious event, dangerous event, alarming event, warning, belief, proximity, collision, power, signal, signal power, signal strength, signal intensity, received signal strength indicator (RSSI), signal amplitude, signal phase, signal frequency component, signal frequency band component, channel state information (CSI), map, time, frequency, time-frequency, decomposition, orthogonal decomposition, non-orthogonal decomposition, tracking, breathing, heart beat, statistical parameters, cardiopulmonary statistics/analytics (e.g. output responses), daily activity statistics/analytics, chronic disease statistics/analytics, medical statistics/analytics, an early (or instantaneous or contemporaneous or delayed) indication/suggestion/sign/indicator/verifier/ detection/symptom of a disease/condition/ situation, biometric, baby, patient, machine, device, temperature, vehicle, parking lot, venue, lift, elevator, spatial, road, fluid flow, home, room, office, house, building, warehouse, storage, system, ventilation, fan, pipe, duct, people, human, car, boat, truck, airplane, drone, downtown, crowd, impulsive event, cyclo-stationary, environment, vibration, material, surface, 3-dimensional, 2-dimensional, local, global, presence, and/or another measurable quantity/variable.

Sliding window/algorithm

Sliding time window may have time varying window width. It may be smaller at the beginning to enable fast acquisition and may increase over time to a steady-state size. The steady-state size may be related to the frequency, repeated motion, transient motion, and/or STI to be monitored. Even in steady state, the window size may be adaptively (and/or dynamically) changed (e.g. adjusted, varied, modified) based on battery life, power consumption, available computing power, change in amount of targets, the nature of motion to be monitored, etc.

The time shift between two sliding time windows at adjacent time instance may be constant/variable/locally adaptive/dynamically adjusted over time. When shorter time shift is used, the update of any monitoring may be more frequent which may be used for fast changing situations, object motions, and/or objects. Longer time shift may be used for slower situations, object motions, and/or objects.

The window width/size and/or time shift may be changed (e.g. adjusted, varied, modified) upon a user request/choice. The time shift may be changed automatically (e.g. as controlled by processor/ computer/server/hub device/cloud server) and/or adaptively (and/or dynamically).

At least one characteristics (e.g. characteristic value, or characteristic point) of a function (e.g. auto-correlation function, auto-covariance function, cross-correlation function, cross-covariance function, power spectral density, time function, frequency domain function, frequency transform) may be determined (e.g. by an object tracking server, the processor, the Type 1 heterogeneous device, the Type 2 heterogeneous device, and/or another device). The at least one characteristics of the function may include: a maximum, minimum, extremum, local maximum, local minimum, local extremum, local extremum with positive time offset, first local extremum with positive time offset, n^th local extremum with positive time offset, local extremum with negative time offset, first local extremum with negative time offset, n^th local extremum with negative time offset, constrained maximum, constrained minimum, constrained extremum, significant maximum, significant minimum, significant extremum, slope, derivative, higher order derivative, maximum slope, minimum slope, local maximum slope, local maximum slope with positive time offset, local minimum slope, constrained maximum slope, constrained minimum slope, maximum higher order derivative, minimum higher order derivative, constrained higher order derivative, zero-crossing, zero crossing with positive time offset, n^th zero crossing with positive time offset, zero crossing with negative time offset, n^th zero crossing with negative time offset, constrained zero-crossing, zero-crossing of slope, zero-crossing of higher order derivative, and/or another characteristics. At least one argument of the function associated with the at least one characteristics of the function may be identified. Some quantity (e.g. spatial-temporal information of the object) may be determined based on the at least one argument of the function.

A characteristics (e.g. characteristics of motion of an object in the venue) may comprise at least one of: an instantaneous characteristics, short-term characteristics, repetitive characteristics, recurring characteristics, history, incremental characteristics, changing characteristics, deviational characteristics, phase, magnitude, degree, time characteristics, frequency characteristics, time-frequency characteristics, decomposition characteristics, orthogonal decomposition characteristics, non-orthogonal decomposition characteristics, deterministic characteristics, probabilistic characteristics, stochastic characteristics, autocorrelation function (ACF), mean, variance, standard deviation, measure of variation, spread, dispersion, deviation, divergence, range, interquartile range, total variation, absolute deviation, total deviation, statistics, duration, timing, trend, periodic characteristics, repetition characteristics, long-term characteristics, historical characteristics, average characteristics, current characteristics, past characteristics, future characteristics, predicted characteristics, location, distance, height, speed, direction, velocity, acceleration, change of the acceleration, angle, angular speed, angular velocity, angular acceleration of the object, change of the angular acceleration, orientation of the object, angular of rotation, deformation of the object, shape of the object, change of shape of the object, change of size of the object, change of structure of the object, and/or change of characteristics of the object.

At least one local maximum and at least one local minimum of the function may be identified. At least one local signal-to-noise-ratio-like (SNR-like) parameter may be computed for each pair of adjacent local maximum and local minimum. The SNR-like parameter may be a function (e.g. linear, log, exponential function, monotonic function) of a fraction of a quantity (e.g. power, magnitude) of the local maximum over the same quantity of the local minimum. It may also be the function of a difference between the quantity of the local maximum and the same quantity of the local minimum. Significant local peaks may be identified or selected. Each significant local peak may be a local maximum with SNR-like parameter greater than a threshold T1 and/or a local maximum with amplitude greater than a threshold T2. The at least one local minimum and the at least one local minimum in the frequency domain may be identified/computed using a persistence-based approach.

A set of selected significant local peaks may be selected from the set of identified significant local peaks based on a selection criterion (e.g. a quality criterion, a signal quality condition). The characteristics/STI of the object may be computed based on the set of selected significant local peaks and frequency values associated with the set of selected significant local peaks. In one example, the selection criterion may always correspond to select the strongest peaks in a range. While the strongest peaks may be selected, the unselected peaks may still be significant (rather strong).

Unselected significant peaks may be stored and/or monitored as "reserved" peaks for use in future selection in future sliding time windows. As an example, there may be a particular peak (at a particular frequency) appearing consistently over time. Initially, it may be significant but not selected (as other peaks may be stronger). But in later time, the peak may become stronger and more dominant and may be selected. When it became "selected", it may be back-traced in time and made "selected" in the earlier time when it was significant but not selected. In such case, the back-traced peak may replace a previously selected peak in an early time. The replaced peak may be the relatively weakest, or a peak that appear in isolation in time (i.e. appearing only briefly in time).

In another example, the selection criterion may not correspond to select the strongest peaks in the range. Instead, it may consider not only the "strength" of the peak, but the "trace" of the peak - peaks that may have happened in the past, especially those peaks that have been identified for a long time.

For example, if a finite state machine (FSM) is used, it may select the peak(s) based on the state of the FSM. Decision thresholds may be computed adaptively (and/or dynamically) based on the state of the FSM.

A similarity score and/or component similarity score may be computed (e.g. by a server (e.g. hub device), the processor, the Type 1 device, the Type 2 device, a local server, a cloud server, and/or another device) based on a pair of temporally adjacent CI of a TSCI. The pair may come from the same sliding window or two different sliding windows. The similarity score may also be based on a pair of, temporally adjacent or not so adjacent, CI from two different TSCI. The similarity score and/or component similar score may be/comprise: time reversal resonating strength (TRRS), correlation, cross-correlation, auto-correlation, correlation indicator, covariance, cross-covariance, auto-covariance, inner product of two vectors, distance score, norm, metric, quality metric, signal quality condition, statistical characteristics, discrimination score, neural network, deep learning network, machine learning, training, discrimination, weighted averaging, preprocessing, denoising, signal conditioning, filtering, time correction, timing compensation, phase offset compensation, transformation, component-wise operation, feature extraction, finite state machine, and/or another score. The characteristics and/or STI may be determined/computed based on the similarity score.

Any threshold may be pre-determined, adaptively (and/or dynamically) determined and/or determined by a finite state machine. The adaptive determination may be based on time, space, location, antenna, path, link, state, battery life, remaining battery life, available power, available computational resources, available network bandwidth, etc.

A threshold to be applied to a test statistics to differentiate two events (or two conditions, or two situations, or two states), A and B, may be determined. Data (e.g. CI, channel state information (CSI), power parameter) may be collected under A and/or under B in a training situation. The test statistics may be computed based on the data. Distributions of the test statistics under A may be compared with distributions of the test statistics under B (reference distribution), and the threshold may be chosen according to some criteria. The criteria may comprise: maximum likelihood (ML), maximum aposterior probability (MAP), discriminative training, minimum Type 1 error for a given Type 2 error, minimum Type 2 error for a given Type 1 error, and/or other criteria (e.g. a quality criterion, signal quality condition). The threshold may be adjusted to achieve different sensitivity to the A, B and/or another event/condition/situation/state. The threshold adjustment may be automatic, semi-automatic and/or manual. The threshold adjustment may be applied once, sometimes, often, periodically, repeatedly, occasionally, sporadically, and/or on demand. The threshold adjustment may be adaptive (and/or dynamically adjusted). The threshold adjustment may depend on the object, object movement/location/ direction/action, object characteristics/ STI/size/ property/trait/habit/behavior, the venue, feature/ fixture/ furniture/barrier/ material/ machine/living thing/thing/object/boundary/ surface/ medium that is in/at/of the venue, map, constraint of the map (or environmental model), the event/state/ situation/condition, time, timing, duration, current state, past history, user, and/or a personal preference, etc.

A stopping criterion (or skipping or bypassing or blocking or pausing or passing or rejecting criterion) of an iterative algorithm may be that change of a current parameter (e.g. offset value) in the updating in an iteration is less than a threshold. The threshold may be 0.5, 1, 1.5, 2, or another number. The threshold may be adaptive (and/or dynamically adjusted). It may change as the iteration progresses. For the offset value, the adaptive threshold may be determined based on the task, particular value of the first time, the current time offset value, the regression window, the regression analysis, the regression function, the regression error, the convexity of the regression function, and/or an iteration number.

The local extremum may be determined as the corresponding extremum of the regression function in the regression window. The local extremum may be determined based on a set of time offset values in the regression window and a set of associated regression function values. Each of the set of associated regression function values associated with the set of time offset values may be within a range from the corresponding extremum of the regression function in the regression window.

The searching for a local extremum may comprise robust search, minimization, maximization, optimization, statistical optimization, dual optimization, constraint optimization, convex optimization, global optimization, local optimization an energy minimization, linear regression, quadratic regression, higher order regression, linear programming, nonlinear programming, stochastic programming, combinatorial optimization, constraint programming, constraint satisfaction, calculus of variations, optimal control, dynamic programming, mathematical programming, multi-objective optimization, multi-modal optimization, disjunctive programming, space mapping, infinite-dimensional optimization, heuristics, metaheuristics, convex programming, semidefinite programming, conic programming, cone programming, integer programming, quadratic programming, fractional programming, numerical analysis, simplex algorithm, iterative method, gradient descent, subgradient method, coordinate descent, conjugate gradient method, Newton's algorithm, sequential quadratic programming, interior point method, ellipsoid method, reduced gradient method, quasi-Newton method, simultaneous perturbation stochastic approximation, interpolation method, pattern search method, line search, non-differentiable optimization, genetic algorithm, evolutionary algorithm, dynamic relaxation, hill climbing, particle swarm optimization, gravitation search algorithm, simulated annealing, memetic algorithm, differential evolution, dynamic relaxation, stochastic tunneling, Tabu search, reactive search optimization, curve fitting, least square, simulation based optimization, variational calculus, and/or variant. The search for local extremum may be associated with an objective function, loss function, cost function, utility function, fitness function, energy function, and/or an energy function.

Regression may be performed using regression function to fit sampled data (e.g. CI, feature of CI, component of CI) or another function (e.g. autocorrelation function) in a regression window. In at least one iteration, a length of the regression window and/or a location of the regression window may change. The regression function may be linear function, quadratic function, cubic function, polynomial function, and/or another function.

The regression analysis may minimize at least one of: error, aggregate error, component error, error in projection domain, error in selected axes, error in selected orthogonal axes, absolute error, square error, absolute deviation, square deviation, higher order error (e.g. third order, fourth order), robust error (e.g. square error for smaller error magnitude and absolute error for larger error magnitude, or first kind of error for smaller error magnitude and second kind of error for larger error magnitude), another error, weighted sum (or weighted mean) of absolute/square error (e.g. for wireless transmitter with multiple antennas and wireless receiver with multiple antennas, each pair of transmitter antenna and receiver antenna form a link), mean absolute error, mean square error, mean absolute deviation, and/or mean square deviation. Error associated with different links may have different weights. One possibility is that some links and/or some components with larger noise or lower signal quality metric may have smaller or bigger weight.), weighted sum of square error, weighted sum of higher order error, weighted sum of robust error, weighted sum of the another error, absolute cost, square cost, higher order cost, robust cost, another cost, weighted sum of absolute cost, weighted sum of square cost, weighted sum of higher order cost, weighted sum of robust cost, and/or weighted sum of another cost.

The regression error determined may be an absolute error, square error, higher order error, robust error, yet another error, weighted sum of absolute error, weighted sum of square error, weighted sum of higher order error, weighted sum of robust error, and/or weighted sum of the yet another error.

The time offset associated with maximum regression error (or minimum regression error) of the regression function with respect to the particular function in the regression window may become the updated current time offset in the iteration.

A local extremum may be searched based on a quantity comprising a difference of two different errors (e.g. a difference between absolute error and square error). Each of the two different errors may comprise an absolute error, square error, higher order error, robust error, another error, weighted sum of absolute error, weighted sum of square error, weighted sum of higher order error, weighted sum of robust error, and/or weighted sum of the another error.

The quantity may be compared with a reference data or a reference distribution, such as an F-distribution, central F-distribution, another statistical distribution, threshold, threshold associated with probability/histogram, threshold associated with probability/histogram of finding false peak, threshold associated with the F-distribution, threshold associated the central F-distribution, and/or threshold associated with the another statistical distribution.

The regression window may be determined based on at least one of: the movement (e.g. change in position/location) of the object, quantity associated with the object, the at least one characteristics and/or STI of the object associated with the movement of the object, estimated location of the local extremum, noise characteristics, estimated noise characteristics, signal quality metric, F-distribution, central F-distribution, another statistical distribution, threshold, preset threshold, threshold associated with probability/histogram, threshold associated with desired probability, threshold associated with probability of finding false peak, threshold associated with the F-distribution, threshold associated the central F-distribution, threshold associated with the another statistical distribution, condition that quantity at the window center is largest within the regression window, condition that the quantity at the window center is largest within the regression window, condition that there is only one of the local extremum of the particular function for the particular value of the first time in the regression window, another regression window, and/or another condition.

The width of the regression window may be determined based on the particular local extremum to be searched. The local extremum may comprise first local maximum, second local maximum, higher order local maximum, first local maximum with positive time offset value, second local maximum with positive time offset value, higher local maximum with positive time offset value, first local maximum with negative time offset value, second local maximum with negative time offset value, higher local maximum with negative time offset value, first local minimum, second local minimum, higher local minimum, first local minimum with positive time offset value, second local minimum with positive time offset value, higher local minimum with positive time offset value, first local minimum with negative time offset value, second local minimum with negative time offset value, higher local minimum with negative time offset value, first local extremum, second local extremum, higher local extremum, first local extremum with positive time offset value, second local extremum with positive time offset value, higher local extremum with positive time offset value, first local extremum with negative time offset value, second local extremum with negative time offset value, and/or higher local extremum with negative time offset value.

A current parameter (e.g. time offset value) may be initialized based on a target value, target profile, trend, past trend, current trend, target speed, speed profile, target speed profile, past speed trend, the motion or movement (e.g. change in position/location) of the object, at least one characteristics and/or STI of the object associated with the movement of object, positional quantity of the object, initial speed of the object associated with the movement of the object, predefined value, initial width of the regression window, time duration, value based on carrier frequency of the signal, value based on subcarrier frequency of the signal, bandwidth of the signal, amount of antennas associated with the channel, noise characteristics, signal h metric, and/or an adaptive (and/or dynamically adjusted) value. The current time offset may be at the center, on the left side, on the right side, and/or at another fixed relative location, of the regression window.

In the presentation, information may be displayed with a map (or environmental model) of the venue. The information may comprise: location, zone, region, area, coverage area, corrected location, approximate location, location with respect to (w.r.t.) a map of the venue, location w.r.t. a segmentation of the venue, direction, path, path w.r.t. the map and/or the segmentation, trace (e.g. location within a time window such as the past 5 seconds, or past 10 seconds; the time window duration may be adjusted adaptively (and/or dynamically); the time window duration may be adaptively (and/or dynamically) adjusted w.r.t. speed, acceleration, etc.), history of a path, approximate regions/zones along a path, history/ summary of past locations, history of past locations of interest, frequently-visited areas, customer traffic, crowd distribution, crowd behavior, crowd control information, speed, acceleration, motion statistics, breathing rate, heart rate, presence/absence of motion, presence/absence of people or pets or object, presence/absence of vital sign, gesture, gesture control (control of devices using gesture), location-based gesture control, information of a location-based operation, identity (ID) or identifier of the respect object (e.g. pet, person, self-guided machine/device, vehicle, drone, car, boat, bicycle, self-guided vehicle, machine with fan, air-conditioner, TV, machine with movable part), identification of a user (e.g. person), information of the user, location/speed/acceleration/direction/motion/gesture/gesture control/ motion trace of the user, ID or identifier of the user, activity of the user, state of the user, sleeping/resting characteristics of the user, emotional state of the user, vital sign of the user, environment information of the venue, weather information of the venue, earthquake, explosion, storm, rain, fire, temperature, collision, impact, vibration, event, door-open event, door-close event, window-open event, window-close event, fall-down event, burning event, freezing event, water-related event, wind-related event, air-movement event, accident event, pseudo-periodic event (e.g. running on treadmill, jumping up and down, skipping rope, somersault, etc.), repeated event, crowd event, vehicle event, gesture of the user (e.g. hand gesture, arm gesture, foot gesture, leg gesture, body gesture, head gesture, face gesture, mouth gesture, eye gesture, etc.).

The location may be 2-dimensional (e.g. with 2D coordinates), 3-dimensional (e.g. with 3D coordinates). The location may be relative (e.g. w.r.t. a map or environmental model) or relational (e.g. halfway between point A and point B, around a corner, up the stairs, on top of table, at the ceiling, on the floor, on a sofa, close to point A, a distance R from point A, within a radius of R from point A, etc.). The location may be expressed in rectangular coordinate, polar coordinate, and/or another representation.

The information (e.g. location) may be marked with at least one symbol. The symbol may be time varying. The symbol may be flashing and/or pulsating with or without changing color/intensity. The size may change over time. The orientation of the symbol may change over time. The symbol may be a number that reflects an instantaneous quantity (e.g. vital sign/ breathing rate/heart rate/gesture/state/status/action/motion of a user, temperature, network traffic, network connectivity, status of a device/machine, remaining power of a device, status of the device, etc.). The rate of change, the size, the orientation, the color, the intensity and/or the symbol may reflect the respective motion. The information may be presented visually and/or described verbally (e.g. using prerecorded voice, or voice synthesis). The information may be described in text. The information may also be presented in a mechanical way (e.g. an animated gadget, a movement of a movable part).

The user-interface (UI) device may be a smart phone (e.g. iPhone, Android phone), tablet (e.g. iPad), laptop (e.g. notebook computer), personal computer (PC), device with graphical user interface (GUI), smart speaker, device with voice/audio/speaker capability, virtual reality (VR) device, augmented reality (AR) device, smart car, display in the car, voice assistant, voice assistant in a car, etc.

The map (or environmental model) may be 2-dimensional, 3-dimensional and/or higher-dimensional. (e.g. a time varying 2D/3D map/environmental model) Walls, windows, doors, entrances, exits, forbidden areas may be marked on the map or the model. The map may comprise floor plan of a facility. The map or model may have one or more layers (overlays). The map/model may be a maintenance map/model comprising water pipes, gas pipes, wiring, cabling, air ducts, crawl-space, ceiling layout, and/or underground layout. The venue may be segmented/subdivided/zoned/grouped into multiple zones/ regions/geographic regions/ sectors/ sections/ territories/ districts/ precincts/ localities/ neighborhoods/ areas/ stretches/expanse such as bedroom, living room, storage room, walkway, kitchen, dining room, foyer, garage, first floor, second floor, rest room, offices, conference room, reception area, various office areas, various warehouse regions, various facility areas, etc. The segments/regions/areas may be presented in a map/model. Different regions may be color-coded. Different regions may be presented with a characteristic (e.g. color, brightness, color intensity, texture, animation, flashing, flashing rate, etc.). Logical segmentation of the venue may be done using the at least one heterogeneous Type 2 device, or a server (e.g. hub device), or a cloud server, etc.

Here is an example of the disclosed system, apparatus, and method. Stephen and his family want to install the disclosed wireless motion detection system to detect motion in their 2000 sqft two-storey town house in Seattle, Washington. Because his house has two storeys, Stephen decided to use one Type 2 device (named A) and two Type 1 devices (named B and C) in the ground floor. His ground floor has predominantly three rooms: kitchen, dining room and living room arranged in a straight line, with the dining room in the middle. The kitchen and the living rooms are on opposite end of the house. He put the Type 2 device (A) in the dining room, and put one Type 1 device (B) in the kitchen and the other Type 1 device (C) in the living room. With this placement of the devices, he is practically partitioning the ground floor into 3 zones (dining room, living room and kitchen) using the motion detection system. When motion is detected by the AB pair and the AC pair, the system would analyze the motion information and associate the motion with one of the 3 zones.

When Stephen and his family go out on weekends (e.g. to go for a camp during a long weekend), Stephen would use a mobile phone app (e.g. Android phone app or iPhone app) to turn on the motion detection system. When the system detects motion, a warning signal is sent to Stephen (e.g. an SMS text message, an email, a push message to the mobile phone app, etc.). If Stephen pays a monthly fee (e.g. $10/month), a service company (e.g. security company) will receive the warning signal through wired network (e.g. broadband) or wireless network (e.g. home WiFi, LTE, 3G, 2.5G, etc.) and perform a security procedure for Stephen (e.g. call him to verify any problem, send someone to check on the house, contact the police on behalf of Stephen, etc.). Stephen loves his aging mother and cares about her well- being when she is alone in the house. When the mother is alone in the house while the rest of the family is out (e.g. go to work, or shopping, or go on vacation), Stephen would turn on the motion detection system using his mobile app to ensure the mother is ok. He then uses the mobile app to monitor his mother's movement in the house. When Stephen uses the mobile app to see that the mother is moving around the house among the 3 regions, according to her daily routine, Stephen knows that his mother is doing ok. Stephen is thankful that the motion detection system can help him monitor his mother's well-being while he is away from the house.

On a typical day, the mother would wake up at around 7 AM. She would cook her breakfast in the kitchen for about 20 minutes. Then she would eat the breakfast in the dining room for about 30 minutes. Then she would do her daily exercise in the living room, before sitting down on the sofa in the living room to watch her favorite TV show. The motion detection system enables Stephen to see the timing of the movement in each of the 3 regions of the house. When the motion agrees with the daily routine, Stephen knows roughly that the mother should be doing fine. But when the motion pattern appears abnormal (e.g. there is no motion until 10 AM, or she stayed in the kitchen for too long, or she remains motionless for too long, etc.), Stephen suspects something is wrong and would call the mother to check on her. Stephen may even get someone (e.g. a family member, a neighbor, a paid personnel, a friend, a social worker, a service provider) to check on his mother.

At some time, Stephen feels like repositioning the Type 2 device. He simply unplugs the device from the original AC power plug and plug it into another AC power plug. He is happy that the wireless motion detection system is plug-and-play and the repositioning does not affect the operation of the system. Upon powering up, it works right away.

Sometime later, Stephen is convinced that our wireless motion detection system can really detect motion with very high accuracy and very low alarm, and he really can use the mobile app to monitor the motion in the ground floor. He decides to install a similar setup (i.e. one Type 2 device and two Type 1 devices) in the second floor to monitor the bedrooms in the second floor. Once again, he finds that the system set up is extremely easy as he simply needs to plug the Type 2 device and the Type 1 devices into the AC power plug in the second floor. No special installation is needed. And he can use the same mobile app to monitor motion in the ground floor and the second floor. Each Type 2 device in the ground floor/second floor can interact with all the Type 1 devices in both the ground floor and the second floor. Stephen is happy to see that, as he doubles his investment in the Type 1 and Type 2 devices, he has more than double the capability of the combined systems.

According to various embodiments, each CI (CI) may comprise at least one of: channel state information (CSI), frequency domain CSI, frequency representation of CSI, frequency domain CSI associated with at least one sub-band, time domain CSI, CSI in domain, channel response, estimated channel response, channel impulse response (CIR), channel frequency response (CFR), channel characteristics, channel filter response, CSI of the wireless multipath channel, information of the wireless multipath channel, timestamp, auxiliary information, data, meta data, user data, account data, access data, security data, session data, status data, supervisory data, household data, identity (ID), identifier, device data, network data, neighborhood data, environment data, real-time data, sensor data, stored data, encrypted data, compressed data, protected data, and/or another CI. In one embodiment, the disclosed system has hardware components (e.g. wireless transmitter/receiver with antenna, analog circuitry, power supply, processor, memory) and corresponding software components. According to various embodiments of the present teaching, the disclosed system includes Bot (referred to as a Type 1 device) and Origin (referred to as a Type 2 device) for vital sign detection and monitoring. Each device comprises a transceiver, a processor and a memory.

The disclosed system can be applied in many cases. In one example, the Type 1 device (transmitter) may be a small WiFi-enabled device resting on the table. It may also be a WiFi-enabled television (TV), set-top box (STB), a smart speaker (e.g. Amazon echo), a smart refrigerator, a smart microwave oven, a mesh network router, a mesh network satellite, a smart phone, a computer, a tablet, a smart plug, etc. In one example, the Type 2 (receiver) may be a WiFi-enabled device resting on the table. It may also be a WiFi-enabled television (TV), set-top box (STB), a smart speaker (e.g. Amazon echo), a smart refrigerator, a smart microwave oven, a mesh network router, a mesh network satellite, a smart phone, a computer, a tablet, a smart plug, etc. The Type 1 device and Type 2 devices may be placed in/near a conference room to count people. The Type 1 device and Type 2 devices may be in a well-being monitoring system for older adults to monitor their daily activities and any sign of symptoms (e.g. dementia, Alzheimer's disease). The Type 1 device and Type 2 device may be used in baby monitors to monitor the vital signs (breathing) of a living baby. The Type 1 device and Type 2 devices may be placed in bedrooms to monitor quality of sleep and any sleep apnea. The Type 1 device and Type 2 devices may be placed in cars to monitor well-being of passengers and driver, detect any sleeping of driver and detect any babies left in a car. The Type 1 device and Type 2 devices may be used in logistics to prevent human trafficking by monitoring any human hidden in trucks and containers. The Type 1 device and Type 2 devices may be deployed by emergency service at disaster area to search for trapped victims in debris. The Type 1 device and Type 2 devices may be deployed in an area to detect breathing of any intruders. There are numerous applications of wireless breathing monitoring without wearables.

Hardware modules may be constructed to contain the Type 1 transceiver and/or the Type 2 transceiver. The hardware modules may be sold to/used by variable brands to design, build and sell final commercial products. Products using the disclosed system and/or method may be home/office security products, sleep monitoring products, WiFi products, mesh products, TV, STB, entertainment system, HiFi, speaker, home appliance, lamps, stoves, oven, microwave oven, table, chair, bed, shelves, tools, utensils, torches, vacuum cleaner, smoke detector, sofa, piano, fan, door, window, door/window handle, locks, smoke detectors, car accessories, computing devices, office devices, air conditioner, heater, pipes, connectors, surveillance camera, access point, computing devices, mobile devices, LTE devices, 3G/4G/5G/6G devices, UMTS devices, 3GPP devices, GSM devices, EDGE devices, TDMA devices, FDMA devices, CDMA devices, WCDMA devices, TD-SCDMA devices, gaming devices, eyeglasses, glass panels, VR goggles, necklace, watch, waist band, belt, wallet, pen, hat, wearables, implantable device, tags, parking tickets, smart phones, etc.

The summary may comprise: analytics, output response, selected time window, subsampling, transform, and/or projection. The presenting may comprise presenting at least one of: monthly/weekly/daily view, simplified/detailed view, cross-sectional view, small/large form-factor view, color-coded view, comparative view, summary view, animation, web view, voice announcement, and another presentation related to the periodic/repetition characteristics of the repeating motion.

A Type 1/Type 2 device may be an antenna, a device with antenna, a device with a housing (e.g. for radio, antenna, data/signal processing unit, wireless IC, circuits), device that has interface to attach/connect to/link antenna, device that is interfaced to/attached to/connected to/linked to another device/system/computer/phone/network/data aggregator, device with a user interface(UI)/graphical UI/display, device with wireless transceiver, device with wireless transmitter, device with wireless receiver, internet-of-thing (IoT) device, device with wireless network, device with both wired networking and wireless networking capability, device with wireless integrated circuit (IC), Wi-Fi device, device with Wi-Fi chip (e.g. 802.1 1a/b/g/n/ac/ax standard compliant), Wi-Fi access point (AP), Wi-Fi client, Wi-Fi router, Wi-Fi repeater, Wi-Fi hub, Wi-Fi mesh network router/hub/AP, wireless mesh network router, adhoc network device, wireless mesh network device, mobile device (e.g. 2G/2.5G/3G/3.5G/4G/LTE/ 5G/6G/7G, UMTS, 3GPP, GSM, EDGE, TDMA, FDMA, CDMA, WCDMA, TD-SCDMA), cellular device, base station, mobile network base station, mobile network hub, mobile network compatible device, LTE device, device with LTE module, mobile module (e.g. circuit board with mobile-enabling chip (IC) such as Wi-Fi chip, LTE chip, BLE chip), Wi-Fi chip (IC), LTE chip, BLE chip, device with mobile module, smart phone, companion device (e.g. dongle, attachment, plugin) for smart phones, dedicated device, plug-in device, AC-powered device, battery-powered device, device with processor/memory/set of instructions, smart device/gadget/items: clock, stationary, pen, user-interface, paper, mat, camera, television (TV), set-top-box, microphone, speaker, refrigerator, oven, machine, phone, wallet, furniture, door, window, ceiling, floor, wall, table, chair, bed, nightstand, air-conditioner, heater, pipe, duct, cable, carpet, decoration, gadget, USB device, plug, dongle, lamp/light, tile, ornament, bottle, vehicle, car, AGV, drone, robot, laptop, tablet, computer, harddisk, network card, instrument, racket, ball, shoe, wearable, clothing, glasses, hat, necklace, food, pill, small device that moves in the body of creature (e.g. in blood vessels, in lymph fluid, digestive system), and/or another device. The Type 1 device and/or Type 2 device may be communicatively coupled with: the internet, another device with access to internet (e.g. smart phone), cloud server (e.g. hub device), edge server, local server, and/or storage. The Type 1 device and/or the Type 2 device may operate with local control, can be controlled by another device via a wired/wireless connection, can operate automatically, or can be controlled by a central system that is remote (e.g. away from home).

In one embodiment, a Type B device may be a transceiver that may perform as both Origin (a Type 2 device, a Rx device) and Bot (a Type 1 device, a Tx device), i.e., a Type B device may be both Type 1 (Tx) and Type 2 (Rx) devices (e.g. simultaneously or alternately), for example, mesh devices, a mesh router, etc. In one embodiment, a Type A device may be a transceiver that may only function as Bot (a Tx device), i.e., Type 1 device only or Tx only, e.g., simple IoT devices. It may have the capability of Origin (Type 2 device, Rx device), but somehow it is functioning only as Bot in the embodiment. All the Type A and Type B devices form a tree structure. The root may be a Type B device with network (e.g. internet) access. For example, it may be connected to broadband service through a wired connection (e.g. Ethernet, cable modem, ADSL/HDSL modem) connection or a wireless connection (e.g. LTE, 3G/4G/5G, WiFi, Bluetooth, microwave link, satellite link, etc.). In one embodiment, all the Type A devices are leaf node. Each Type B device may be the root node, non-leaf node, or leaf node.

Type 1 device (transmitter, or Tx) and Type 2 device (receiver, or Rx) may be on same device (e.g. RF chip/IC) or simply the same device. The devices may operate at high frequency band, such as 28GHz, 60GHz, 77GHz, etc. The RF chip may have dedicated Tx antennas (e.g. 32 antennas) and dedicated Rx antennas (e.g. another 32 antennas).

One Tx antenna may transmit a wireless signal (e.g. a series of probe signal, perhaps at 100Hz). Alternatively, all Tx antennas may be used to transmit the wireless signal with beamforming (in Tx), such that the wireless signal is focused in certain direction (e.g. for energy efficiency or boosting the signal to noise ratio in that direction, or low power operation when "scanning" that direction, or low power operation if object is known to be in that direction).

The wireless signal hits an object (e.g. a living human lying on a bed 4 feet away from the Tx/Rx antennas, with breathing and heart beat) in a venue (e.g. a room). The object motion (e.g. lung movement according to breathing rate, or blood-vessel movement according to heart beat) may impact/modulate the wireless signal. All Rx antennas may be used to receive the wireless signal.

Beamforming (in Rx and/or Tx) may be applied (digitally) to "scan" different directions. Many directions can be scanned or monitored simultaneously. With beamforming, "sectors" (e.g. directions, orientations, bearings, zones, regions, segments) may be defined related to the Type 2 device (e.g. relative to center location of antenna array). For each probe signal (e.g. a pulse, an ACK, a control packet, etc.), a channel information or CI (e.g. channel impulse response/CIR, CSI, CFR) is obtained/computed for each sector (e.g. from the RF chip). In breathing detection, one may collect CIR in a sliding window (e.g. 30 sec, and with 100Hz sounding/probing rate, one may have 3000 CIR over 30 sec).

The CIR may have many taps (e.g. N1 components/taps). Each tap may be associated with a time lag, or a time-of-flight (tof, e.g. time to hit the human 4 feet away and back). When a person is breathing in a certain direction at a certain distance (e.g. 4ft), one may search for the CIR in the "certain direction". Then one may search for the tap corresponding to the "certain distance". Then one may compute the breathing rate and heart rate from that tap of that CIR.

One may consider each tap in the sliding window (e.g. 30 second window of "component time series") as a time function (e.g. a "tap function", the "component time series"). One may examine each tap function in search of a strong periodic behavior (e.g. corresponds to breathing, perhaps in the range of 10bpm to 40bpm).

The Type 1 device and/or the Type 2 device may have external connections/links and/or internal connections/links. The external connections (e.g. connection 1110) may be associated with 2G/2.5G/3G/3.5G/4G/LTE/5G/6G/7G/NBIoT, UWB, WiMax, Zigbee, 802.16 etc. The internal connections (e.g., 1114A and 1114B, 1116, 1118, 1120) may be associated with WiFi, an IEEE 802.11 standard, 802.11a/b/g/n/ac/ad/af/ag/ah/ai/aj/aq/ax/ay, Bluetooth, Bluetooth 1.0/1.1/1.2/2.0/2.1/3.0/4.0/4.1/ 4.2/5, BLE, mesh network, an IEEE 802.16/1/1a/1b/2/2a/a/b/c/d/e1f/g/h/i/j/k/l/m/n/o/p/ standard.

The Type 1 device and/or Type 2 device may be powered by battery (e.g. AA battery, AAA battery, coin cell battery, button cell battery, miniature battery, bank of batteries, power bank, car battery, hybrid battery, vehicle battery, container battery, non-rechargeable battery, rechargeable battery, NiCd battery, NiMH battery, Lithium ion battery, Zinc carbon battery, Zinc chloride battery, lead acid battery, alkaline battery, battery with wireless charger, smart battery, solar battery, boat battery, plane battery, other battery, temporary energy storage device, capacitor, fly wheel).

Any device may be powered by DC or direct current (e.g. from battery as described above, power generator, power convertor, solar panel, rectifier, DC-DC converter, with various voltages such as 1.2V, 1.5V, 3V, 5V, 6V, 9V, 12V, 24V, 40V, 42V, 48V, 110V, 220V, 380V, etc.) and may thus have a DC connector or a connector with at least one pin for DC power.

Any device may be powered by AC or alternating current (e.g. wall socket in a home, transformer, invertor, shorepower, with various voltages such as 100V, 110V, 120V, 100-127V, 200V, 220V, 230V, 240V, 220-240V, 100-240V, 250V, 380V, 50Hz, 60Hz, etc.) and thus may have an AC connector or a connector with at least one pin for AC power. The Type 1 device and/or the Type 2 device may be positioned (e.g. installed, placed, moved to) in the venue or outside the venue.

For example, in a vehicle (e.g. a car, truck, lorry, bus, special vehicle, tractor, digger, excavator, teleporter, bulldozer, crane, forklift, electric trolley, AGV, emergency vehicle, freight, wagon, trailer, container, boat, ferry, ship, submersible, airplane, air-ship, lift, mono-rail, train, tram, rail-vehicle, railcar, etc.), the Type 1 device and/or Type 2 device may be an embedded device embedded in the vehicle, or an add-on device (e.g. aftermarket device) plugged into a port in the vehicle (e.g. OBD port/socket, USB port/socket, accessory port/socket, 12V auxiliary power outlet, and/or 12V cigarette lighter port/socket).

For example, one device (e.g. Type 2 device) may be plugged into 12V cigarette lighter/accessory port or OBD port or the USB port (e.g. of a car/truck/vehicle) while the other device (e.g. Type 1 device) may be plugged into 12V cigarette lighter/accessory port or the OBD port or the USB port. The OBD port and/or USB port can provide power, signaling and/or network (of the car/truck/vehicle). The two devices may jointly monitor the passengers including children/babies in the car. They may be used to count the passengers, recognize the driver, detect presence of passenger in a particular seat/position in the vehicle.

In another example, one device may be plugged into 12V cigarette lighter/accessory port or OBD port or the USB port of a car/truck/vehicle while the other device may be plugged into 12V cigarette lighter/accessory port or OBD port or the USB port of another car/truck/vehicle.

In another example, there may be many devices of the same type A (e.g. Type 1 or Type 2) in many heterogeneous vehicles/portable devices/smart gadgets (e.g. automated guided vehicle/AGV, shopping/luggage/moving cart, parking ticket, golf cart, bicycle, smart phone, tablet, camera, recording device, smart watch, roller skate, shoes, jackets, goggle, hat, eye-wear, wearable, Segway, scooter, luggage tag, cleaning machine, vacuum cleaner, pet tag/collar/wearable/implant), each device either plugged into 12V accessory port/OBD port/USB port of a vehicle or embedded in a vehicle. There may be one or more device of the other type B (e.g. B is Type 1 if A is Type 2, or B is Type 2 if A is Type 1) installed at locations such as gas stations, street lamp post, street corners, tunnels, multi-storey parking facility, scattered locations to cover a big area such as factory/ stadium/ train station/ shopping mall/construction site. The Type A device may be located, tracked or monitored based on the TSCI.

The area/venue may have no local connectivity, e.g., broadband services, WiFi, etc. The Type 1 and/or Type 2 device may be portable. The Type 1 and/or Type 2 device may support plug and play.

Pairwise wireless links may be established between many pairs of devices, forming the tree structure. In each pair (and the associated link), a device (second device) may be a non-leaf (Type B). The other device (first device) may be a leaf (Type A or Type B) or non-leaf (Type B). In the link, the first device functions as a bot (Type 1 device or a Tx device) to send a wireless signal (e.g. probe signal) through the wireless multipath channel to the second device. The second device may function as an Origin (Type 2 device or Rx device) to receive the wireless signal, obtain the TSCI and compute a "linkwise analytics" based on the TSCI.

In some embodiments, the present teaching discloses a WiFi-based passive fall detection system (hereinafter "DeFall") that can work independent of its environment and free of prior training in new environments. Unlike previous works, the disclosed DeFall system can probe the physiological features inherently associated with human falls, i.e., the distinctive patterns of speed and acceleration during a fall. In some embodiments, the DeFall system comprises an offline template-generating stage and an online decision-making stage, both taking the speed estimates as input. In the offline stage, augmented Dynamic Time Warping (DTW) algorithms are performed to generate a representative template of the speed and acceleration patterns for a typical human fall. In the online phase, the system may compare the patterns of the real-time speed/acceleration estimates against the template to detect falls. To evaluate the performance of DeFall, one may build a prototype using commercial WiFi devices and conducted experiments under different settings. In some embodiments, the evaluation results demonstrate that DeFall achieves a detection rate of 96% with a false alarm lower than 1.50% under both line-of-sight (LOS) and non-LOS (NLOS) scenarios with one link measurement.

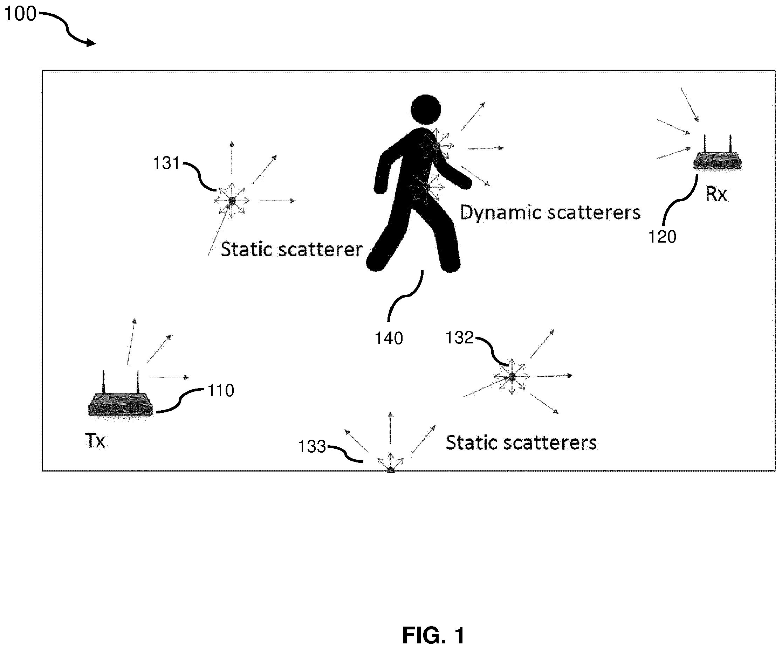

FIG. 1 illustrates an exemplary wireless indoor rich-scattering environment 100, according to some embodiments of the present disclosure. As shown in FIG. 1, in the wireless indoor rich-scattering environment 100, a transmitter 110 (which may be a Bot) transmits wireless signals to a receiver 120 (which may be an Origin) through a multipath channel that is impacted by various scatterers, including static scatterers 131, 132, 133, and/or dynamic scatterers 140. In some embodiments, one may estimate the speed of a motion based on a statistical model of EM wave theory assuming the practical rich-scattering environment 100 in FIG. 1, which can make use of the CSI magnitude information.

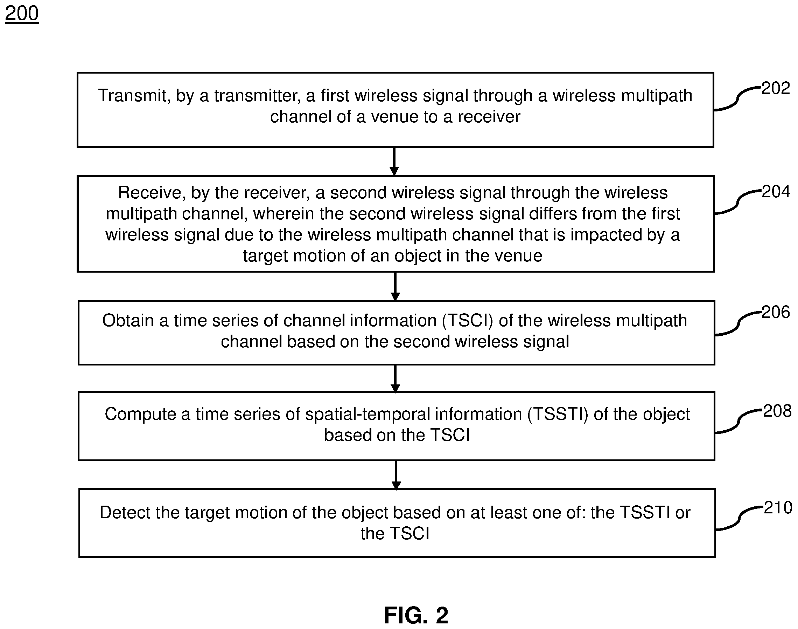

FIG. 2 illustrates a flow chart of an exemplary method 200 for wirelessly detecting a target motion of an object, according to some embodiments of the present teaching. At operation 202, a first wireless signal is transmitted from a first wireless device, e.g. a transmitter, through a wireless multipath channel of a venue to a second wireless device, e.g. a receiver. At operation 204, a second wireless signal is received by the second wireless device through the wireless multipath channel. The second wireless signal differs from the first wireless signal due to the wireless multipath channel that is impacted by a target motion of an object in the venue. At operation 206, a time series of channel information (TSCI) of the wireless multipath channel is obtained based on the second wireless signal, e.g. using a processor, a memory communicatively coupled with the processor and a set of instructions stored in the memory. At operation 208, a time series of spatial-temporal information (TSSTI) of the object is computed based on the TSCI. At operation 210, the target motion of the object is detected based on at least one of: the TSSTI or the TSCI. The order of the operations in FIG. 2 may be changed according to various embodiments of the present teaching.

The target motion detected by the Bot and Origin may be a transient motion or a periodic motion. In some embodiments, the Bot and Origin are wireless devices in the WiFi-based robust and environment-independent fall detection system DeFall, to detect fall events. The DeFall system exploits of the physiological patterns of body speed and accelerations during the fall events, rather than less explainable data-driven features used previously. Because a human fall event experiences different speed and/or acceleration from other daily activities, one may utilize the unique patterns of speed and acceleration to recognize fall events. With the feasibility to extract speed information passively from WiFi signals even in NLOS environments, the DeFall system can perform the WiFi-based speed estimation. Since a fall involves a unique pattern of speed transition and lasts for some time duration, the DeFall can use the time series of speed/acceleration captured continuously instead of the instantaneous values for identifying fall events. This can tremendously reduce the unwanted false alarm in a real environment. The temporal variability in time series brings up a challenge. To adapt to the non-linear compression or stretching over time, one may apply the augmented Dynamic Time Warping (DTW) based algorithms for the time series processing.

In some embodiments, the DeFall system comprises two key components: the offline template-generating stage and the online decision-making stage. In the offline stage, a representative template for speed and acceleration series is generated. After that, the similarity between real-time speed/acceleration series and the template is evaluated in the online stage to detect a fall. Since the speed and acceleration are inherent properties of the human motion that are independent of the static background environment, the DeFall system needs only one-time light training and is robust against different environments in an unsupervised manner. In addition, due to the rich-scattering model used in speed estimation, the system can work very well under both line-of-sight (LOS) and non-line-of-sight (NLOS) scenarios.

To evaluate the performance of DeFall, extensive experiments have been conducted in a typical indoor environment in various settings. One may first use a human-like dummy with a similar size and weight to real human to carry out more than 800 fall experiments under LOS and NLOS to calculate the detection rate (DR). One may also test the false alarm rate (FAR) while the real human performs daily indoor activities including walking and sitting. Furthermore, real human fall samples are applied to verify the feasibility of the disclosed system. The experimental results show that DeFall can achieve a DR of 96% with an FAR of 1.47%, outperforming existing solutions in terms of both accuracy and coverage.

While the DeFall system is the first one to leverage the time series of speed and acceleration to detect the falls based on WiFi devices, it works well in both LOS and NLOS scenarios, getting rid of the limitation of coverage while also protecting privacy. Through long-term testing, the system can work independently without any re-training in a changing environment.

Speed and acceleration are two characteristics that are usually used to describe motion. Intuitively, fall can be viewed as a type of abnormal indoor event with abnormal speed and acceleration. Therefore, they are both considered as the unique characteristics that help distinguishing falls from other daily activities. The uniqueness resides not only in the absolute values of speed and acceleration during a fall, but also in how they change along the time. More specifically, when a human falls to the ground, his/her body will experience a rapid acceleration first. Once the body hits the floor, the body speed reduces to nearly zero sharply. In fact, most of the unexpected falls exhibit a similar pattern and this implies the feasibility of developing an environment-independent system by monitoring the speed and acceleration variation, which is utilized by the DeFall system.

Speed estimation from CSI: In wireless communication, channel state information (CSI), or alternatively channel frequency response (CFR), describes the propagation of the signals from the transmitter (Tx) to the receiver (Rx). The estimate of the CSI over a subcarrier with frequency $f$ at time t can be represented as:

$$H(t,f) = \frac{Y(t,f)}{X(t,f)}, \qquad (1)$$

where $X(t,f)$ and $Y(t,f)$ are transmitted and received signals. The transmitted WiFi signals experience multiple reflections in their propagation in indoor environments, and therefore CSI contains a lot of useful information on the channel conditions, which implies that one could capture the changes of the surrounding environment through CSI.

Since the unique pattern of the series of speed and acceleration is utilized, it is critical to have an accurate and reliable estimate of the speed based on WiFi CSI, which is not trivial due to the multi-path effects of the indoor propagation. Some device-free CSI-based speed estimators make use of the Doppler Frequency Shift (DFS) to calculate the moving speed of human body with the constraint of LOS coverage since the moving body should be able to be "seen" by both Tx and Rx. The DFS-based methods are based on the assumption of a limited number of propagation paths, which usually does not hold in a practical indoor environment with rich multi-path propagation. In addition, DFS-based speed estimators take CSI phase into account. However, the phase of CSI on commercial WiFi devices cannot be measured accurately due to the phase synchronization errors between the WiFi Tx and Rx.

The disclosed system may estimate the speed based on a statistical model of EM wave theory assuming a practical rich-scattering environment as in FIG. 1, which only makes use of the CSI magnitude information. Specifically, the CSI magnitude can be measured through CSI power response $G(t,f)$ defined as:

$$G(t,f) \triangleq |H(t,f)|^2 = \xi(t,f) + \varepsilon(t,f), \qquad (2)$$

where $\xi(t,f) = || \vec{E}_{Rx}(t,f) ||^2$, and $\vec{E}_{Rx}(t,f)$ denotes the propagated signals. $\varepsilon(t,f)$ notes the additive noise, and $\xi(t,f)$ and $\varepsilon(t,f)$ are assumed to be independent of each other. It has been shown that the speed of a moving object can be reliably estimated by evaluating the autocorrelation function (ACF) of $G(t,f)$. The theoretical ACF of $G(t,f)$, $\rho_G(\tau,f)$, can be derived as:

$$\rho_G(\tau,f) \quad = \frac{\sigma_\xi^2(f)}{\sigma_\xi^2(f)+\sigma_\varepsilon^2(f)} \rho_\xi(\tau,f) + \frac{\sigma_\varepsilon^2(f)}{\sigma_\xi^2(f)+\sigma_\varepsilon^2(f)} \delta(\tau), \qquad (3)$$

where $\tau$ is the time lag of the ACF. $\sigma_\xi^2(f)$ and $\sigma_\varepsilon^2(f)$ are the variances of $\xi(t,f)$ and $\varepsilon(t,f)$, respectively. $\rho_\xi(\tau,f)$ and Dirac delta function $\delta(\cdot)$ are the ACFs of $\xi(t,f)$ and $\varepsilon(t,f)$. When $\tau \neq 0$, one could have $\delta(\tau) = 0$ and $\rho_G(\tau,f)$ can be further derived based on the statistical theory of EM waves as:

$$\rho_G(\tau,f) \quad = \sum_{u \in \{x,y,z\}} (C_1(f)\rho_{E_u}(\tau,f) + C_2(f)\rho_{E_u}^2(\tau,f)), \qquad (4)$$

where $C_1(f)$ and $C_2(f)$ are scaling factors determined by the power reflected by all scatterers. $\rho_{E_u}(\tau,f)$ is the ACF of $\vec{E}_{Rx}(t,f)$ in u-axis direction where u E {x,y,z}.

For the i-th dynamic scatterer that moves at speed $v_i$ along z-axis, the scattered signal is denoted as $\vec{E}_{iu}(t,f)$. Then the components of its ACF $\rho_{E_{iu}}(\tau,f)$ in {x,y,z}-axes can be expressed as the following closed-form equations, respectively:

$$\rho_{E_{ix}}(\tau,f) \quad = \rho_{E_{iy}}(\tau,f)$$
$$= \frac{3}{2}\frac{sin(kv_i\tau)}{kv_i\tau}(1 - \frac{1}{(kv_i\tau)^2}) + \frac{3}{2}\frac{cos(kv_i\tau)}{(kv_i\tau)^2}, \qquad (5)$$

$$\rho_{E_{iz}}(\tau, f) = \frac{3}{(kv_i\tau)^2}\left(\frac{sin(kv_i\tau)}{kv_i\tau} - cos(kv_i\tau)\right), \qquad\qquad (6)$$

where $k$ denotes the wave number. Intuitively, the equations above have established a relationship between the ACF $\rho_G(\tau, f)$ and the presence of motion and also the moving speed.

The relationship between $\rho_G(\tau, f)$ and the presence of motion is described here. From (3), if motion is present in the propagation environment of WiFi signals, as $\tau \to 0$, one could have $\delta(\tau) = 0$ and $\rho_\xi(\tau, f) \to 1$ due to the property of white noise and the continuity of motion. Consequently, $\rho_G(\tau, f) \to \frac{\sigma_\xi^2(f)}{\sigma_\xi^2(f)+\sigma_\varepsilon^2(f)} > 0$ as $\tau \to 0$. If there is no motion, the environment is static and the variance $\sigma_\xi^2(\tau, f) = 0$ and thus $\rho_G(\tau, f) = 0$ as $\tau \to 0$. Therefore the value of $\lim_{\tau \to 0} \rho_G(\tau, f)$ can indicate the presence of motion in the surrounding environment.

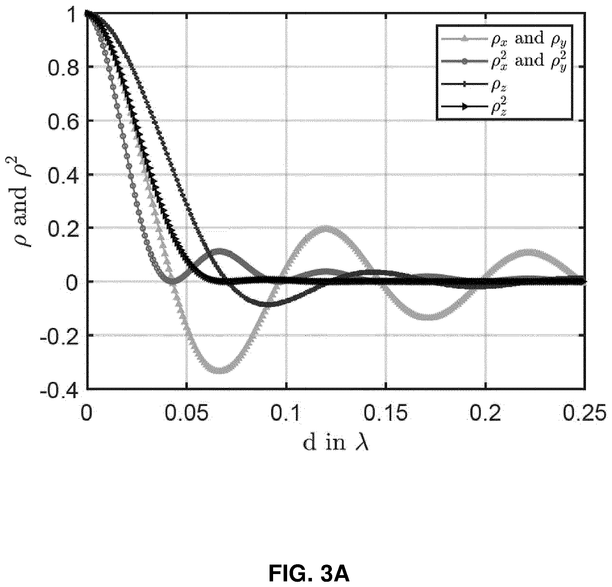

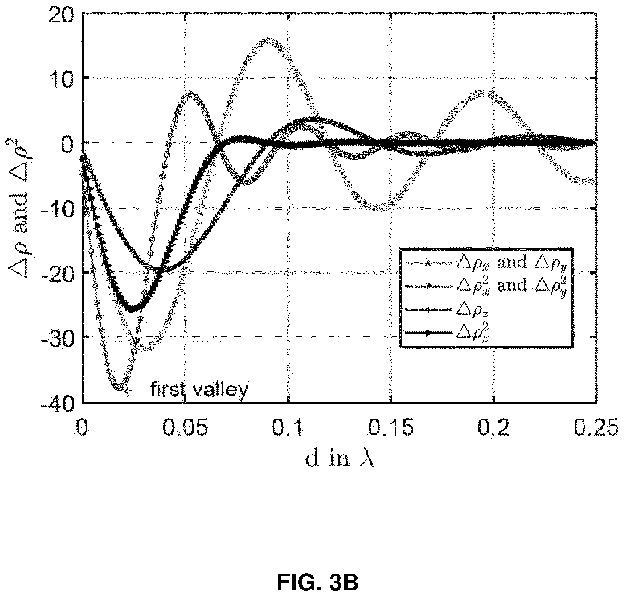

The relationship between $\rho_G(\tau, f)$ and the moving speed is described here. For the simple case of all dynamic scatterers moving in the same speed and direction, without loss of generality, one can assume the moving direction is in the z-axis and get the $\rho_G(\tau, f)$ as (4) with its components expressed in (5) and (6). Each component and its differential can be visualized in FIG. 3A and FIG. 3B, respectively.

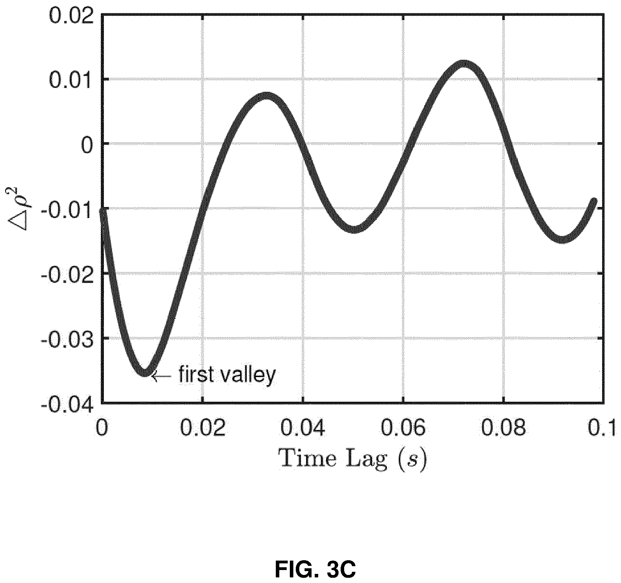

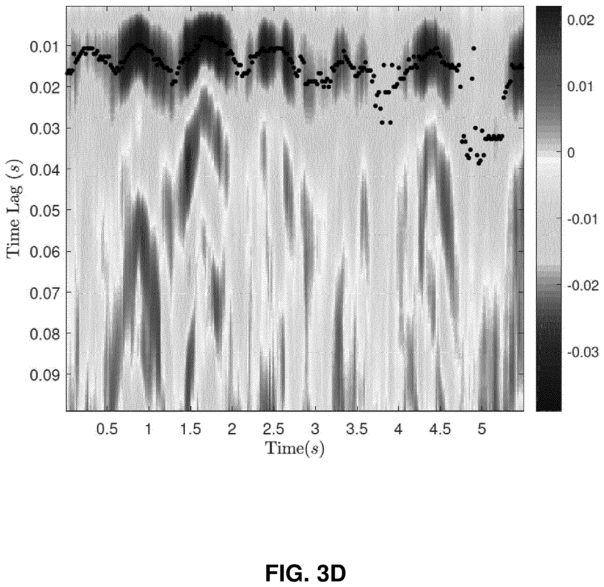

FIGS. 3A-3D illustrate an exemplary spatial auto-correlation function (ACF) and its differentials for electromagnetic (EM) wave components, according to one embodiment of the present teaching. FIG. 3A shows the theoretical spatial ACFs; FIG. 3B shows the theoretical differential spatial ACFs; FIG. 3C shows the instance of differential spatial ACFs of CSI power; and FIG. 3D shows the differential ACF of CSI power and the valley location.

Observing that the first local valley of $\rho_{E_u}^2(\tau, f)$, $\forall u \in \{x, y\}$, happens to be the first local peak of $\Delta\rho_G(\tau)$ as well, one can extract the speed information of the moving scatterers by locating the first local valley of $\Delta\rho_G(\tau, f)$. In the case where a single subject, e.g. a human, moves within the coverage of the pair of Rx and Tx, the dynamic signals are dominated by the parts that are reflected by the human body. Therefore, it is reasonable to assume that in this case, all dynamic scatterers are moving at the same speed as well as in the same direction, and one can estimate the speed of the human during a fall using the disclosed method and further detect a fall.

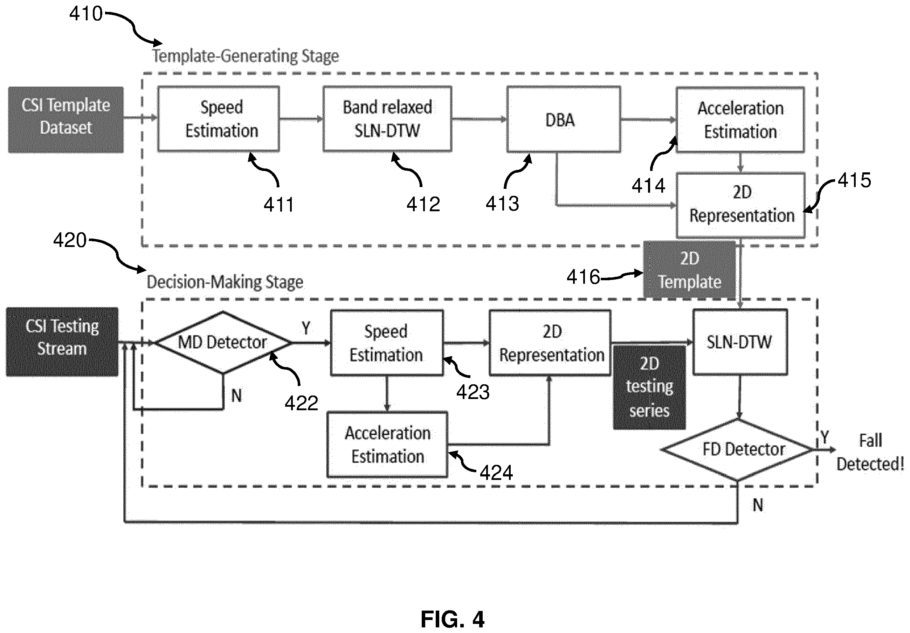

The DeFall system mainly includes two stages as illustrated in FIG. 4: an offline template-generating stage 410 and an online decision-making stage 420. In the offline stage 410, the speed of a fall is estimated at operation 411 from the WiFi CSI by applying a statistical model on the radio propagation in an indoor rich-scattering environment. Then Dynamic Time Warping (DTW) based algorithms may be performed to generate a representative template for a typical human fall. The representative template may be a two-dimensional (2D) template 416 including both speed and acceleration patterns 415.

For example, a segmental locally normalized dynamic time warping (SLN-DTW) algorithm and a DTW barycenter averaging (DBA) algorithm may be performed at operations 412 and 413 respectively to generate a speed template. An acceleration template may be generated at operation 414 based on the speed template generated at operation 413. The 2D template 416 includes information from both the speed template and the acceleration template.

Then a fall event can be detected in the online stage 420 by evaluating the similarity between the patterns of real-time speed/acceleration estimates 423, 424 and the representative template 416. In addition, an online motion detection module 422 is added before the fall detection as a pre-judgment procedure. In this embodiment, the fall detection is performed only after a presence of a motion is detected by the module 422.

In some embodiments, during the offline template-generating stage 410, M CSI sequences of fall events are picked randomly and a "template database" $\mathbb{S} = \{S_1, S_2, ..., S_M\}$ is built based on the corresponding estimated speed series. To construct a single representative template, one may perform an "average" on the database. Since the collected data are all time sequences, the result by direct point-to-point matching and averaging will be easily affected by sequence shift and misalignment. Therefore, the operation of distance measurement, as well as series alignment, will be performed in the DTW space.

There may be redundant speed segments of other activities before or after the fall event, and the classic DTW algorithm is sensitive to the endpoints of the sequences. Therefore, the endpoints of the series may be carefully defined and the template database cleaning may be performed.

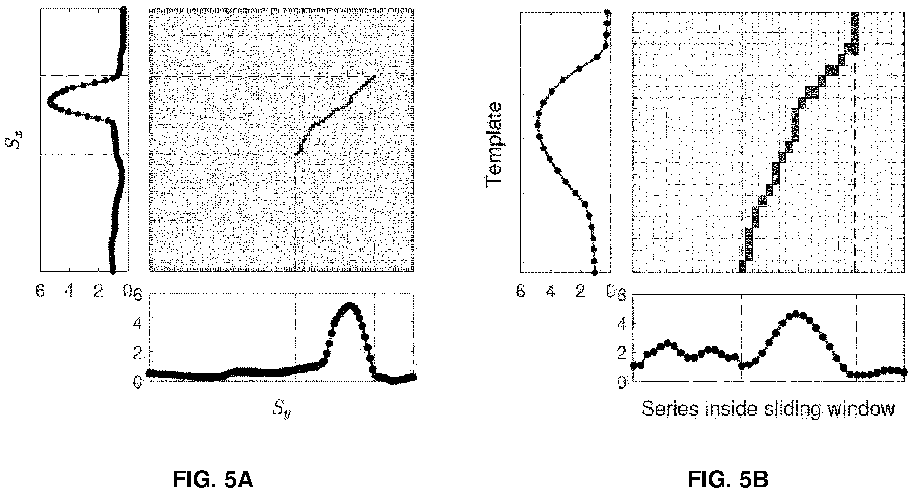

Template database cleaning: To remove the redundancy while adapting to the possible variability in event instances, one may resort to the band-relaxed segmental locally normalized dynamic time warping (SLN-DTW). FIG. 5A and FIG. 5B illustrate an instance of the sanitized speed series by applying SLN-DTW.

Averaging in the DTW measure space: The M cleaned speed series in the refined database $\widehat{\mathbb{S}}$ are then scaled to the same length and averaged in the DTW measure space to construct a single representative profile. The problem to find an optimal average can be formulated as an optimization problem that given a set of template time series $\hat{\mathbb{S}} = \{\hat{S}_1, \hat{S}_2, \ldots, \hat{S}_M\}$, the averaged series S is the series that minimizes the sum of squared DTW distances between $\overline{S}$ and all of sequences in $\hat{\mathbb{S}}$ as:

$$\overline{S} = \underset{S}{argmin} \sum_{x=1}^{M} DTW^2(S, S_x). \qquad (7)$$

The DTW distance of two sequences $DTW(A,B)$ is defined as the Euclidean distance between series $A$ and series $B$ along the optimal warping path as follows:

$$DTW(A, B) \quad = \sqrt{\sum_{p^*=1}^{|P^*|} \| A[a_{p^*}] - B[b_{p^*}] \|^2,} \qquad (8)$$

where $P^*$ is the optimal warping path that minimizes the normalized distance:

$$P^* \quad = \underset{P}{min} \frac{1}{|P|} \sum_{p=1}^{|P|} \| A[a_p] - B[b_p] \|^2, \qquad (9)$$

where $a_p$ and $b_p$ are indices of $A$ and $B$ associated with the p-th point on path $P$.

To solve the minimization problem in (7) and get the optimal average series, DTW Barycenter Averaging (DBA) algorithm may be implemented. DBA is an iterative algorithm that refines an average sequence $\overline{S}$ on each iteration following an expectation-maximization scheme, whose convergence has been proved. The optimal speed time series $\overline{S}$, produced by DBA, is then considered as the speed template.

Besides speed, acceleration depicts the motion during a fall from another different point of view. To get a more comprehensive description of the fall events, one may derive an acceleration series $\overline{S}'$ from the speed template $\overline{S}$ and combine them by point-to-point stitching to generate a 2D template $\overline{S}_{2D}$.

Decision-making stage: Fall events experience distinct speed and acceleration patterns which could be used for distinguishing falls from other indoor daily activities. Since a high sampling rate is needed for speed estimation, in the decision-making stage, a low-rate motion detection (MD) module is included in addition to the fall detection (FD) module to save energy and computation.

Motion detection module: As $\lim_{\tau \to 0} \rho_G(\tau, f)$ could be utilized as a criterion for MD, one could only use $\rho_G(\tau = \frac{1}{F_s}, f)$ to approximate $\tau \to 0$. For the purpose of efficient energy-saving, the MD module is added as a pre-detection of human motion prior to the FD module, and the FD module is triggered only in the presence of motion.

Fall detection module: In the FD module, one may apply a sliding window W on the incoming CSI stream. The testing speed sequence T is estimated from the CSI series in window W. The acceleration sequence T' is further derived from T, followed by a combination operation to form a 2-D pattern $T_{2D}$.

Then fall events can be detected by comparing the testing time series $T_{2D}$ with the template $\overline{S}_{2D}$. The corresponding similarity of the two series is evaluated in DTW space to adapt to misalignment of the two sequences in the time domain.

Since the fall events involving different people may experience different duration, the series segmented by a length-fixed sliding window may also include other activities before or after the target event, which cannot be handled by a traditional DTW. Thus, one may adopt the segmental locally normalized DTW (SLN-DTW) again to localize the start and end instances of an event. Regarding the template $\overline{S}_{2D}$ as the objective series and $T_{2D}$ as the testing series, one may set the lengths of starting and ending bands of $S_{2D}$ to be 1, since the template $\overline{S}_{2D}$ is already sanitized.

By implementing SLN-DTW, the similarity of the testing stream $T_{2D}$ and $\overline{S}_{2D}$ is evaluated. When the DTW distance between the testing series and the reference template is less than a preset empirical threshold $\gamma$, the testing sequence $T_{2D}$ has a similar pattern to the reference fall template $\overline{S}_{2D}$ and the detector will alert that a fall occurs, where $\gamma$ is decided by experiments as well as the requirement of FAR and DR.

According to some embodiments, in the real-time monitoring, MD module keeps running with a lower sampling rate. As long as the motion is detected, the FD module starts working with a high sampling rate to detect fall events. When the estimated speed stays lower than some threshold for a long enough time, it can switch back to MD module to save power consumption and computation cost.

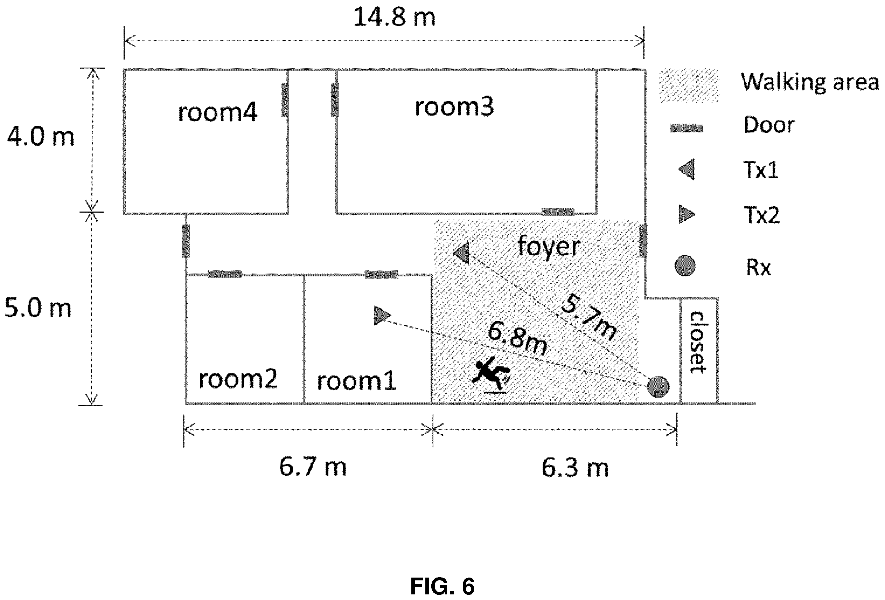

According to some embodiments, one prototype of DeFall is implemented based on the commodity off-the-shelf (COTS) WiFi devices at carrier frequency 5.808GHz with a 40MHz bandwidth. The detailed setup for this experiment is presented in FIG. 6 with the locations of Tx and Rx marked, where one may conduct the experiments under LOS scenario and NLOS scenario, respectively.

Under LOS scenario, where Tx and Rx could both "see" the object, the Tx is deployed in position $Tx_1$. The falls of the dummy are performed close to the direct link of Tx and Rx.

Under NLOS scenario, there does not exist any direct link between the subject and one or more devices, which is very common for an indoor environment. The Tx is deployed on position $Tx_2$ while the position of Rx keeps the same as that under LOS scenario. In order to guarantee the block of the direct path, tinfoil foil is placed on the wall between $Tx_2$ and the subject. The data collection is carried out on different days lasting for more than three months, during which the surrounding propagation environment keeps changing, including the changes of the placement of furniture, the opening or closing of doors and windows, etc. To validate the feasibility of DeFall, one may first use a human-like dummy to collect both the template data and testing data. After that, the samples from real human falls are evaluated to further verify the efficacy of the system.

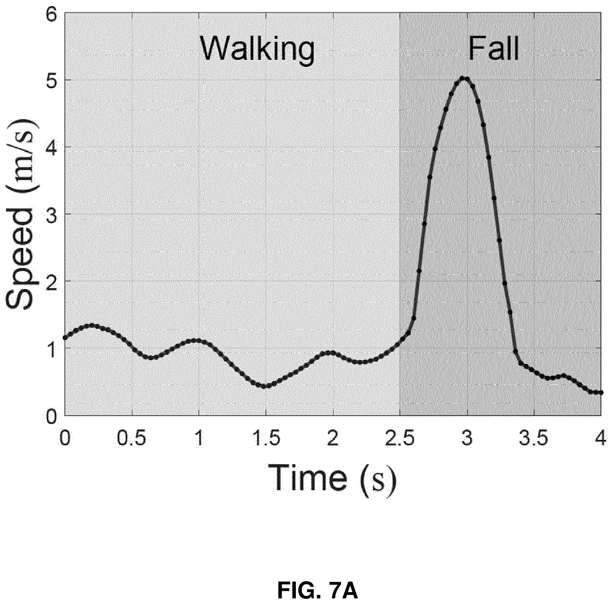

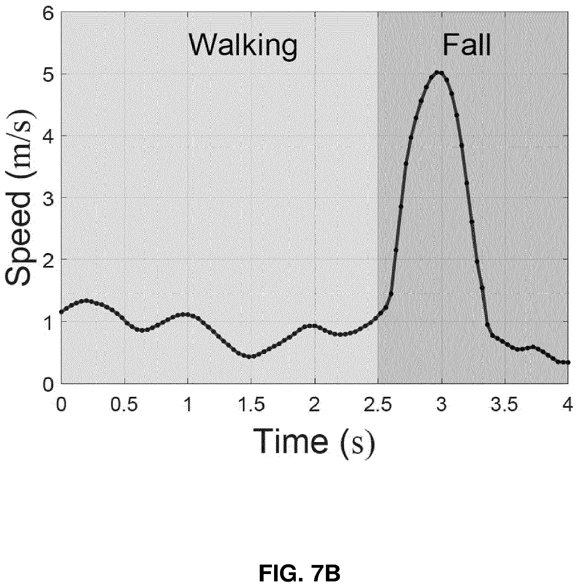

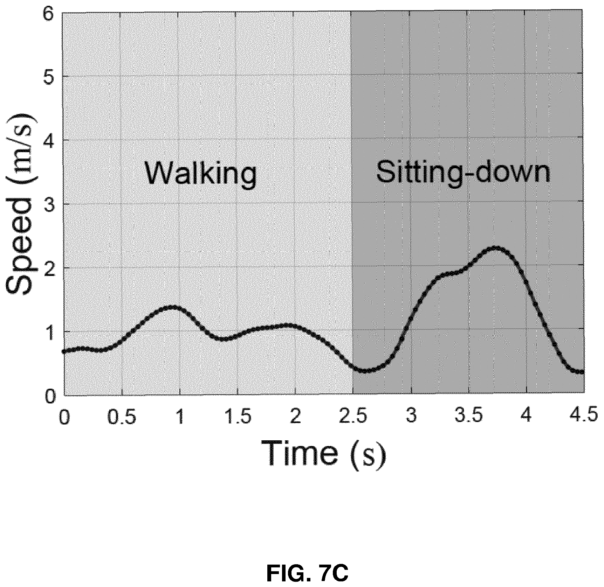

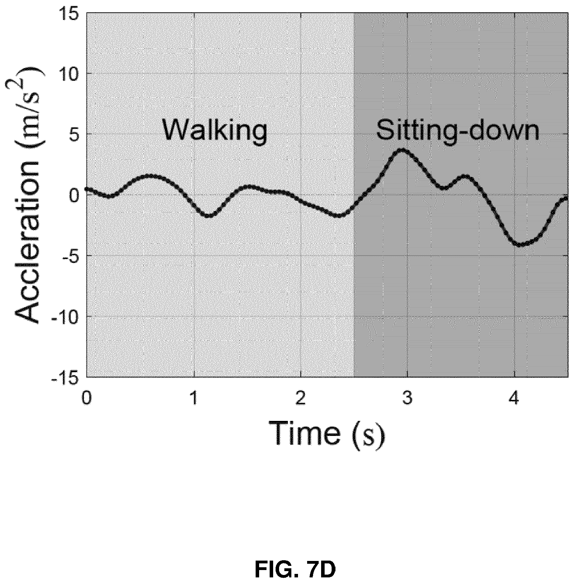

In the experiments, two types of fall events are considered, "stand-then-fall" and "walk-then-fall". "Stand-then-fall" is realized by first letting the dummy stand straight and then making it fall freely; while "walk-then-fall" requires the experimenter to walk around the standing dummy at a normal speed and then make it fall. An instance of the speed and acceleration patterns for "walk-then-fall" is presented in FIG. 7A and FIG. 7B respectively. For non-falls, daily activities with high speeds are taken into consideration including walking and sitting. FIG. 7C and FIG. 7D indicate an instance of the speed and acceleration patterns for "sitting-down". After the long-term data collection, there are 846 fall samples and 814 non-fall samples in total.

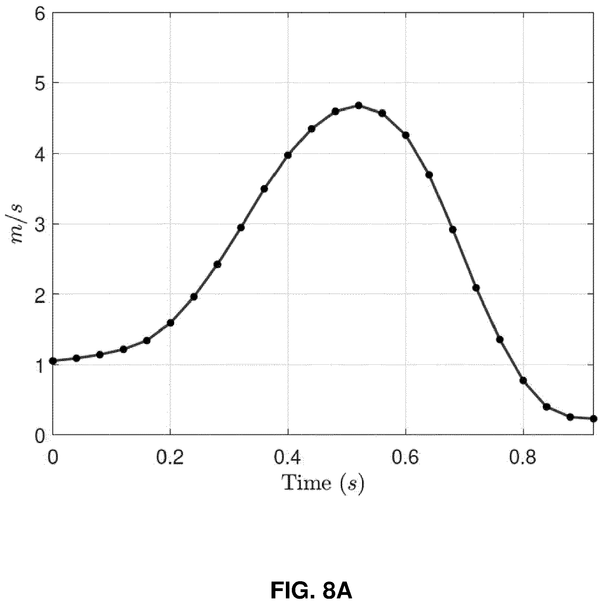

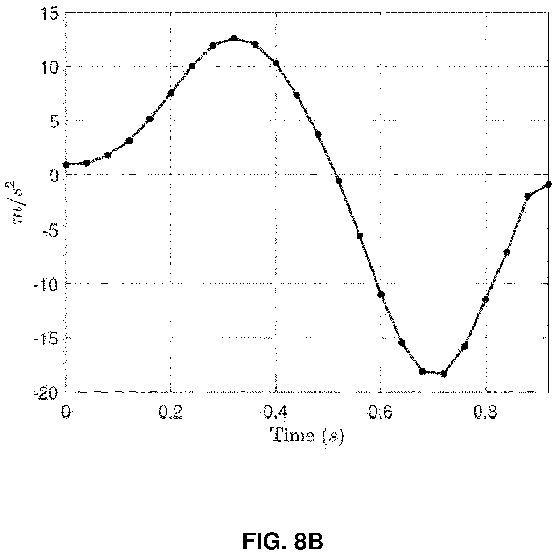

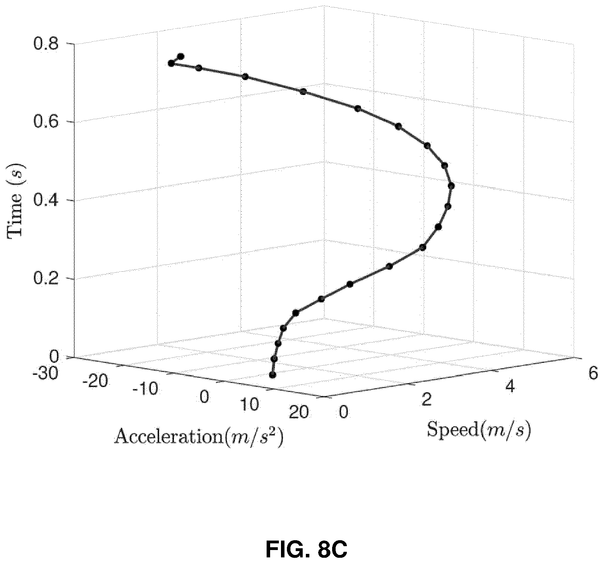

The generated template after refinement and averaging is presented in FIGS. 8A-8C, showing that the speed rises to a peak value first and then drops, while the acceleration is positive first and then becomes negative. FIG. 8A shows the template speed series; FIG. 8B shows the template acceleration series; and FIG. 8C shows the template in the two-dimensional space.

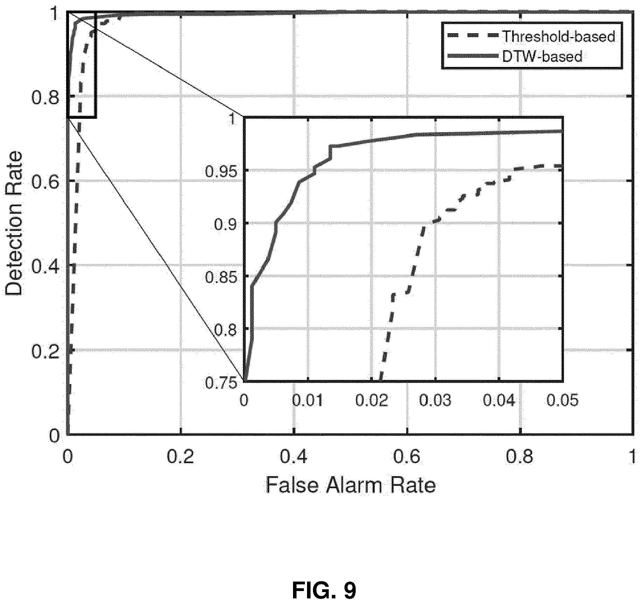

The evaluation metrics of the system performance are detection rate and false alarm rate. Detection rate, shorted as DR, is defined as the percentage of correctly detected falls among all falls, while false alarm rate, simplified as FAR, is the percentage of non-falls that are mistaken as falls among all non-falls. A threshold-based method may be applied to detect falls and two features are disclosed: (i) the maximum speed; (ii) the maximum change in acceleration within 0.5s. To show the efficiency of the DeFall system, one may compare its receiver operating characteristic (ROC) curve with that of the threshold-based method in FIG. 9. FIG. 9 illustrates the ROC curve for a dynamic time warping (DTW) method disclosed in the present teaching vs. a threshold method, according to one embodiment of the present teaching. As FIG. 9 illustrates, at the same level of FAR, the DR of DeFall is higher than the threshold-based method. The Area Under the Curve (AUC) of the ROC of DeFall is larger as well, proving a better performance. In particular, indicated by the magnified part in FIG. 9, when the FAR is less than 1.5%, DeFall can still achieve a high DR over 95% while the corresponding DR of threshold-based method drops to a level less than 75%.

The results of DR and FAR for all types of events are summarized in Table 1. According to the results listed in Table 1, DeFall succeeds in performing a high DR and low FAR under both LOS and NLOS scenarios. Comparing the results of different fall events, one can note higher DR on "stand-then-fall" events than "walk-then-fall" events, since "walk-then-fall" may introduce interference to the speed estimation at the beginning of falls. In addition, among the non-fall events, as "sitting-down" experiences an acceleration followed by a deceleration, which is more similar to the fall pattern than "walking", it can be observed that FAR of "sitting-down" is slightly higher than that of "walking".

Table 1: Experimental results in terms of FAR and DR

| Scenario | Events | | DR | | FAR | |
|---|---|---|---|---|---|---|
| LOS | Fall | Stand-then-Fall | 97.40% | 97.10% | - | - |
| | | Walk-then-Fall | 95.74% | | - | |
| | non-Fall | Walking | - | - | 0.00% | 1.45% |
| | | Sitting down | - | | 2.82% | |
| NLOS | Fall | Stand-then-Fall | 98.15% | 97.56% | - | - |
| | | Walk-then-Fall | 94.83% | | - | |
| | non-Fall | Walking | - | - | 0.47% | 1.49% |
| | | Sitting down | - | | 2.33% | |

In some embodiments, in order to prove that our system can come in handy in real application, two volunteers are asked to perform real falls under the protection of a thin medium-firm cushion on the ground. There is a total of 100 real fall samples collected from one male and one female. Using the template generated from the dummy falls and taking the threshold selected based on the results above, the DR for real falls achieves 96%, which further demonstrates the independence of DeFall from environments and subjects, and presents its great potential for real-world deployment.

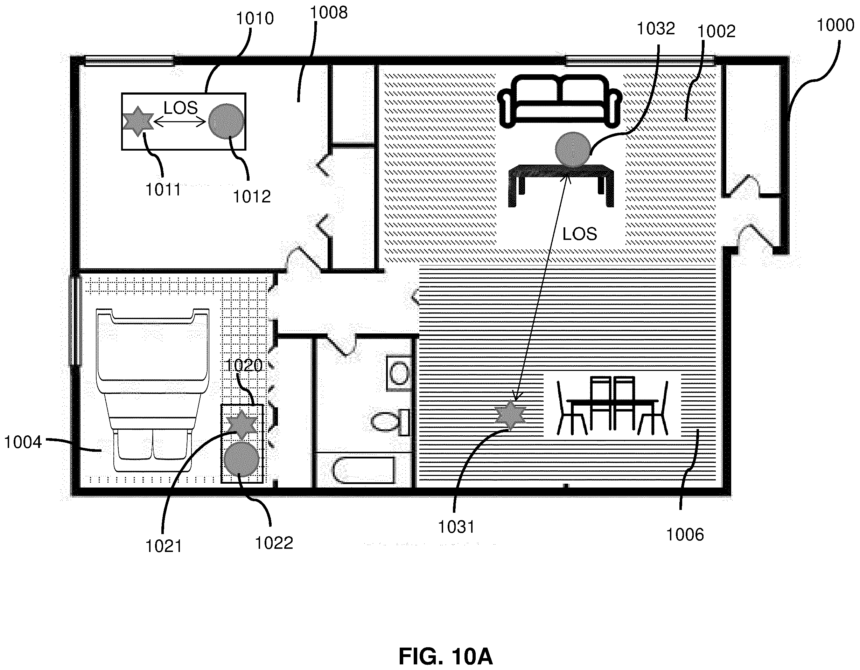

FIG. 10A illustrates an exemplary environment for wireless material sensing, according to some embodiments of the present disclosure. For example, as shown in FIG. 10A, in a 2-bedroom apartment 1000, Origin 1032 may be placed in the living-room area 1002, while Bot 1031 may be placed in the dining-room area 1006. In this example, the Origin 1032 and the Bot 1031 are in two separate devices, while there is a line-of-sight (LOS) between the Origin 1032 and the Bot 1031, when they cooperate to perform wireless material sensing as a Bot-Origin pair.

In another example, as shown in FIG. 10A, a device 1020 including both a Bot 1021 and an Origin 1022 is placed in a bedroom1-area 1004. In this example, the Origin 1022 and the Bot 1021 are located next to each other on the device 1020, when they cooperate to perform wireless material sensing as a Bot-Origin pair.

In yet another example, as shown in FIG. 10A, a device 1010 including both a Bot 1011 and an Origin 1012 is placed in a bedroom2-area 1008. In this example, the Origin 1012 and the Bot 1011 are located far apart from each other on the device 1010 with a LOS between them, when they cooperate to perform wireless material sensing as a Bot-Origin pair.

Each Bot of a Bot-Origin pair can transmit a wireless signal through a wireless multipath channel, while a corresponding Origin of the pair can obtain channel information of the wireless multipath channel based on the wireless signal. As the wireless signal may experience reflection by a surface of a material of an object after being transmitted by the Bot and before being received by the Origin, the channel information obtained by the Origin somehow includes information related to the type of the material. For example, the Origin, by itself or through a third device like a material detector, can compute material feature information based on the channel information and detect the type of the material based on the material feature information.

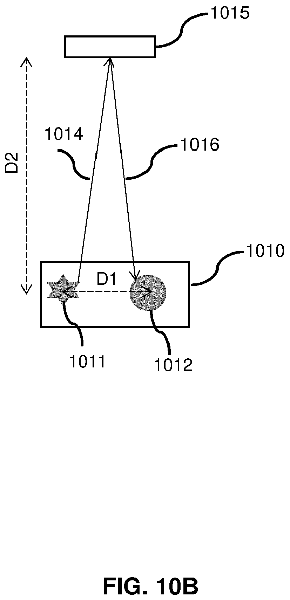

FIG. 10B illustrates an exemplary scenario for wireless material sensing, according to some embodiments of the present disclosure. The wireless material sensing shown in FIG. 10B is performed by the device 1010 having both the Bot 1011 and the Origin 1012. As shown in FIG. 10B, the Bot 1011 and the Origin 1012 are in LOS of each other, and there is a LOS distance D1 between them. Although each of the Bot 1011 and the Origin 1012 may have both transmitter and receiver, in this example, the Bot 1011 serves as a transmitter (including one or more transmit antennas) and the Origin 1012 serves as a receiver (including one or more receive antennas). The Bot 1011 may transmit a wireless signal 1014, which is reflected by a surface of an object 1015. The object 1015 may be a wall, a piece of furniture, a device, a person, an animal, etc. The surface material of the object 1015 may impact the wireless signal 1014, such that the reflected wireless signal 1016 after the reflection at the surface can include information related to the type of the surface material. As such, after the Origin 1012 receives the reflected wireless signal 1016, the Origin 1012 can compute or detect the type of the material of the object 1015, based on the reflected wireless signal 1016 and/or other context information. In some embodiments, the context information may include: the distance D1 between the Bot 1011 and the Origin 1012, and/or the distance D2 between the object 1015 and the device 1010 as shown in FIG. 10B.

In some embodiments of the present teaching, a mobile material sensing system (referred to as "mSense" hereinafter) using a single millimeter-wave (mmWave) radio is disclosed. Unlike existing systems that mostly rely on penetrating signals and/or multiple transceivers, mSense exploits the signals reflecting off the target and employs a single commodity mmWave networking radio. Different objects, depending on their specific materials, reflect the incident electromagnetic waves at distinct extents. For example, metals typically reflect much more energy than woods. The mSense system circumvents the need to put up two or more radios on both sides of the target or to instrument it with any device, and thus allows everyday usage in ubiquitous environments. To identify the target material, a user can simply point the radio towards the target, either holding it still or moving it for a short distance. The mSense system can then measure Channel Impulse Response (CIR) of the reflected signals and calculates a novel parameter from the extracted CIR to determine the material type, without involving any unexplainable features or machine learning.

In some embodiments, the mSense system models the signal propagation with the reflection coefficient, an intrinsic property of the material. The mSense system then derives a novel material reflection feature (MRF) that quantitatively characterizes the material's reflectivity and accordingly associates the target's material type. Being independent of the environments and the propagation distance, the MRF allows material identification in mobile contexts with flexible setup. To estimate the MRF precisely and reliably may entail various challenges in practice. Particularly, the CIR measured using an mmWave platform offers limited range resolution (4.26 cm given the bandwidth of 3.52 GHz), contains synchronization drifts, and suffers from significant measurement noises, all leading to errors in the estimation of the propagation distance and the signal amplitude. To overcome these challenges, the mSense system first upsamples the measured CIR to break down the range estimation precision to the sub-centimeter level. A novel synchronization scheme by leveraging the direct path, i.e., direct leakage between the co-located transmitter (Tx) and receiver (Rx), to synchronize all the CIRs is then presented. To combat the measurement noises, noise cancellation may be deployed to eliminate the hardware distortions and measurement noises and obtain the components that only relate to the target reflection. The spatial diversity attributed by the large antenna arrays to facilitate the robustness is further studied. Then target detection on the CIR is presented to estimate the accurate propagation distance and the corresponding amplitude response and accordingly calculate the MRF. Finally, the mSense system can directly determine the material type by looking up the best-matched record in a prior database with the estimated MRF value.

One may implement a prototype of the mSense system on a mmWave testbed, which enables radar-like operations on a commodity high frequency 802.11ad/ay chipset by attaching one additional antenna array, each including multiple (e.g. 32) antennas. One may conduct experiments using this testbed to validate the performance on several (e.g., 5) common types of materials: metal (aluminum), plastic, ceramic, water, wood. The results show that the mSense system achieves an average identification accuracy of 92.87%, regardless of the various target sizes, thicknesses, and distances to the device. More importantly, the accuracy retains 89.36% in mobile scenarios where a user holds and moves the device for sensing. Relying merely on the reflection signals measured by a mobile radio, the disclosed system sheds light on ubiquitous material identification for everyday usage. The practice on the radar platform that reuses a networking device also takes a step towards joint radar communication systems, which may promise the future paradigm of wireless communication and sensing.

One may aim at mobile applications in ubiquitous contexts that demand the awareness of the material type of a target. For example, one may be interested in knowing the materials of daily objects, e.g., telling whether a whiteboard is made up of metal or plastic; a robot (e.g., a robot vacuum cleaner) can accordingly adapt its behavior according to the material types of surrounding objects. Next-generation educational toys and equipment could instruct kids to perceive the physical world in interactive ways. Novel applications like interactive input devices that change their functions based on the material it touches would also be enabled. Taking a further step, if the mmWave radio becomes available on smartphones, the mSense system will immediately offer the capability of a smartphone for daily material sensing. A key enabler to these applications is ubiquitous material sensing in mobile environments, without dedicated hardware or the cumbersome setup.

Specifically, one may envision the following usage scenarios: A user simply holds the portable radio and points the antenna array towards the target for a short instance, and the system will automatically recognize the material of the target. The user will be allowed to either hold the device still, or if he likes, move it towards the target. If a user chooses to move the radio, he/she generally can move it at will but only needs to keep the antennas as perpendicular as possible towards the target. The radar keeps transmitting signals and receiving reflection signals during the sensing period. From the series of the received signals, the mSense system will automatically determine its material type, independent of the environments, target sizes, and thicknesses, etc. While specialized devices have been explored for material recognition, in the present teaching, one may aim to leverage commodity wireless devices for a low-cost and portable solution. More specifically, the ultimate goal is to enable such capability on a smartphone or another smart device, should it be equipped with an mmWave radio in the future, to perform target material sensing everywhere.

The past years have seen an explosion in wireless sensing and tracking. Another trend, in the meanwhile, is the synergistic design of communication and radar systems that use the same hardware and spectral resources for dual functions of both wireless communication and radar sensing. Today, millimeter-wave radios have emerged as an increasingly popular technology for next-generation WiFi, as standardized as 802.11ad/ay. 60GHz WiFi is already offered in commodity routers and is being integrated into smartphones and in vehicles. The same radio, with the large bandwidth and phased antenna array, is also promising for short-range radar applications. In addition to academic research, the industry is also actively exploring to enable radar-like capabilities like gesture recognition and room mapping by reusing the 60GHz radios. The device can transmit and receive on a single 60GHz chip and thus underpins radar-like features. Such a dual networking and radar device has distinct advantages compared to existing solutions since it reuses the networking device and will immediately become a ubiquitous radar on mobile devices when 60GHz WiFi is widely deployed. In fact, it is no surprise that radar capability will go into smartphones in the near future. Operating a 60GHz radio in a radar mode likely provides higher quality for material identification and other sensing applications compared to 2.4GHz/5GHz WiFi. The second motivation for using 60GHz radio is the design choice of using reflection signals only. A bottleneck preventing existing solutions from ubiquitous applications is that they require a special setup with two or more transceivers on both sides of the target or with a tag attached to the target. These devices are limited to be used at fixed locations and not yet ready to enable truly ubiquitous material sensing anywhere. In addition to the inconvenience, the use of penetrating signals imposes two fundamental issues. First, EM wave propagating in different medias (e.g., lossy media vs. lossless media) decays significantly differently. For example, in free space and approximately in air, the amplitude decreases linearly with respect to $1/d$ where $d$ is the propagation distance. Differently, in a lossy media, amplitude experiences exponential decrease over $d$. As a result, prior works either apply a universal model for different media present in the propagation path or assume a specific category of materials (particularly different liquids). The second issue is that for conductive materials (e.g., metals, graphite), RF signals may not be able to penetrate the target. Neither can wireless signals, especially those at mmWave frequency bands, penetrate very thick objects. In the present teaching, to overcome the limitations and improve usability, one may exploit only the reflection signals for analysis, hence avoiding a special two-sided setup as well as bypassing the model generality issue. The 60GHz signals, with the large bandwidth and many antennas, offer better resolution in resolving the reflection signals.

Overall, the mSense system aims to achieve target material sensing from reflection signals by using one single 60GHz device, which would promise ubiquitous usage in mobile environments. It is more challenging and somewhat indirect to use reflection signals for material sensing since the received signals have not passed through the material at all. The rationale is that different materials reflect the incoming signals at distinctly different extents and thus "encode" the material type information in the reflected signals.

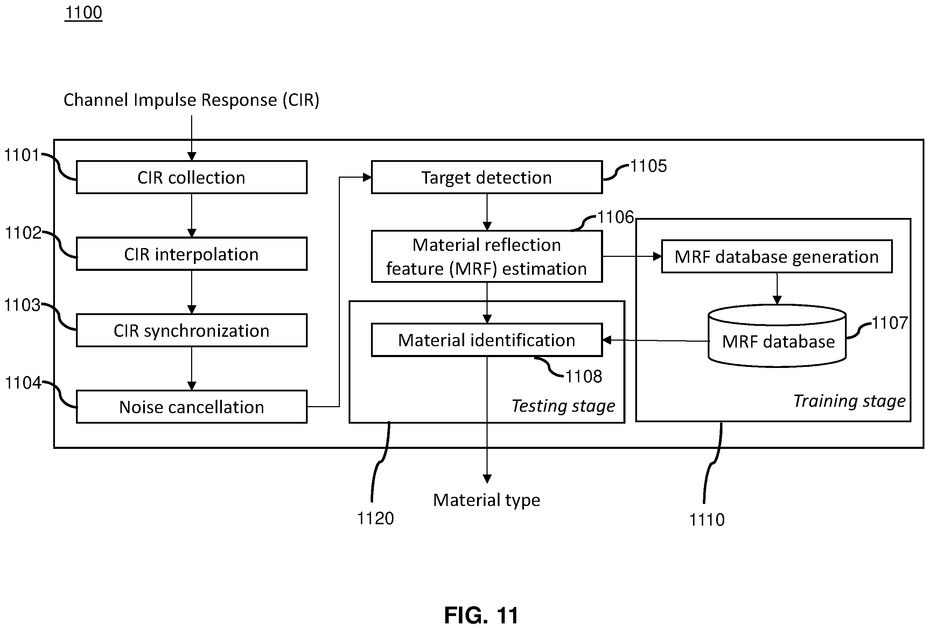

FIG. 11 illustrates an exemplary workflow for wireless material sensing based on channel impulse response (CIR), according to some embodiments of the present disclosure. To be specific, FIG. 11 shows a method 1100 of the mSense system for determining a material type based on a channel impulse response (CIR) obtained from a reflected wireless signal. As shown in FIG. 11, the mSense system's operations include two stages: a training stage 1110 that constructs a database 1107 of different materials and a testing stage 1120 that tests a target by matching against the database 1107.

To determine or identify the material type at operation 1108 in the testing stage 1120, multiple operations may be performed to process the raw CIR. The mSense system may collect CIRs at operation 1101. For example, the CIRs may be collected when the user points the radio towards a target object (e.g. roughly perpendicularly). Then a CIR interpolation is performed at operation 1102. For example, the raw CIRs are upsampled to improve range accuracy. The time series of CIR measurements are then synchronized, at operation 1103.

Then at operation 1104, the system may employ noise cancellation to eliminate the hardware distortions and measurement noises. The system may then perform target detection at operation 1105 to obtain the amplitudes and distances from all available antenna pairs, from which the system may estimate the Material Reflection Feature (MRF) at operation 1106. In some embodiments, the MRF can characterize the material's reflectivity and can be easily computed from reflection signals only. Finally, the system may determine the material type at operation 1108 by finding the best match against the pre-trained database 1107 storing the MRF of different materials.

In some embodiments, the training and testing stages share the same processing procedure for MRF extraction and estimation, i.e. the operations 1101-1106 as shown in FIG. 11. The training only needs to be done once for each type of material and can be done under a different setting from the testing stage.

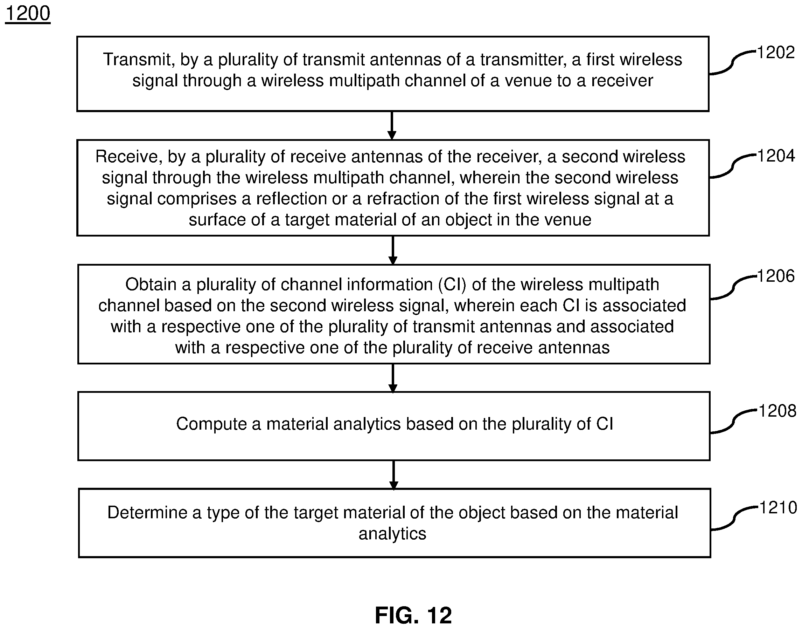

FIG. 12 illustrates a flow chart of an exemplary method 1200 for wireless material sensing, according to some embodiments of the present teaching. At operation 1202, a first wireless signal is transmitted, by a plurality of transmit antennas of a transmitter, through a wireless multipath channel of a venue to a receiver. At operation 1204, a second wireless signal is received, by a plurality of receive antennas of the receiver, through the wireless multipath channel. The second wireless signal comprises a reflection or a refraction of the first wireless signal at a surface of a target material of an object in the venue. At operation 1206, a plurality of channel information (CI) of the wireless multipath channel is obtained based on the second wireless signal, e.g. using a processor, a memory communicatively coupled with the processor and a set of instructions stored in the memory. Each CI is associated with a respective one of the plurality of transmit antennas and associated with a respective one of the plurality of receive antennas. At operation 1208, a material analytics is computed based on the plurality of CI. At operation 1210, a type of the target material of the object is determined based on the material analytics. In some embodiments, the first wireless signal is a wireless probe signal. In some embodiments, each CI comprises at least one of: a channel state information (CSI), channel impulse response (CIR), channel frequency response (CFR), or received signal strength index (RSSI). The order of the operations in FIG. 12 may be changed according to various embodiments of the present teaching.

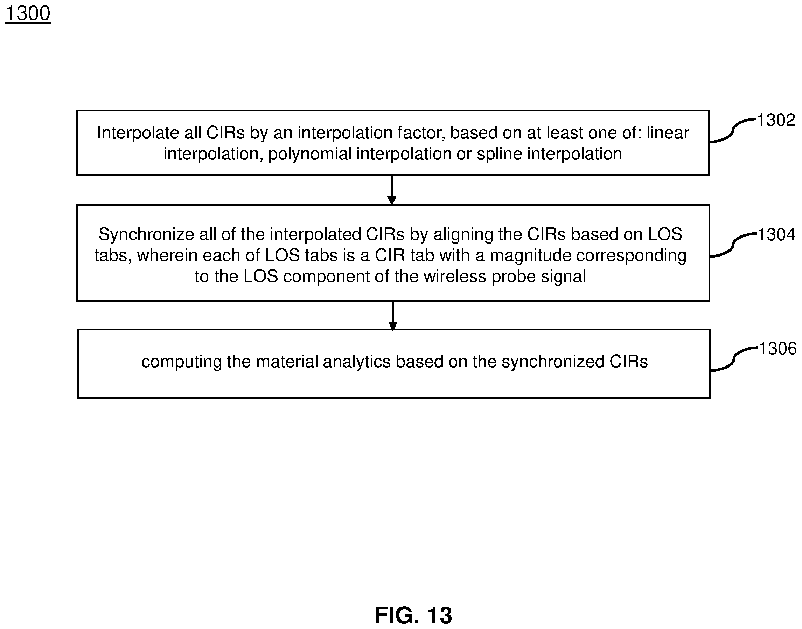

FIG. 13 illustrates a flow chart of an exemplary method 1300 for CIR interpolation and CIR synchronization, according to some embodiments of the present disclosure. At operation 1302, all CIRs are interpolated by an interpolation factor, based on at least one of: linear interpolation, polynomial interpolation or spline interpolation. At operation 1304, all of the interpolated CIRs are synchronized by aligning the CIRs based on LOS tabs, wherein each of LOS tabs is a CIR tab with a magnitude corresponding to the LOS component of the wireless probe signal. At operation 1306, the material analytics is computed based on the synchronized CIRs. The order of the operations in FIG. 13 may be changed according to various embodiments of the present teaching.

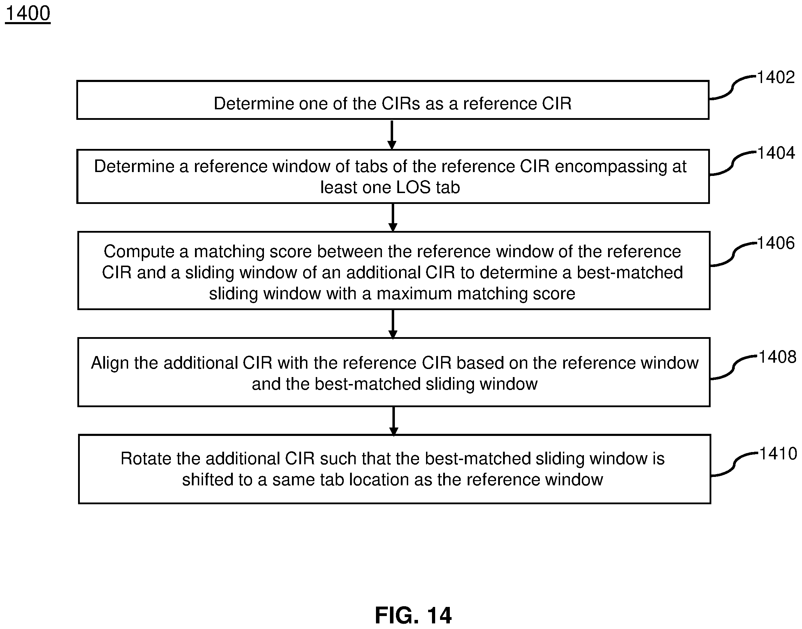

FIG. 14 illustrates a flow chart of an exemplary method 1400 for CIR synchronization, according to some embodiments of the present disclosure. At operation 1402, one of the CIRs is determined as a reference CIR. At operation 1404, a reference window of tabs of the reference CIR encompassing at least one LOS tab is determined. At operation 1406, a matching score is computed between the reference window of the reference CIR and a sliding window of an additional CIR to determine a best-matched sliding window with a maximum matching score. At operation 1408, the additional CIR is aligned with the reference CIR based on the reference window and the best-matched sliding window. At operation 1410, the additional CIR is rotated such that the best-matched sliding window is shifted to a same tab location as the reference window. The order of the operations in FIG. 14 may be changed according to various embodiments of the present teaching.

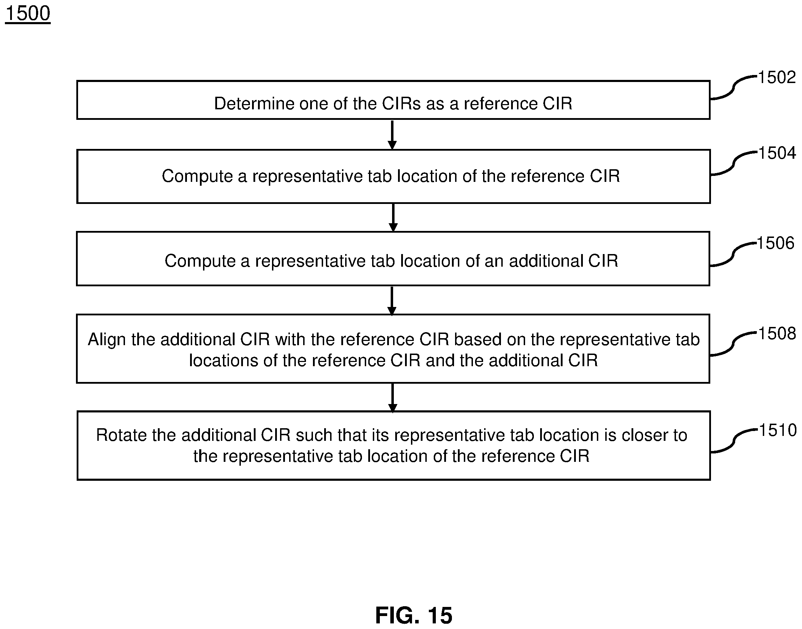

FIG. 15 illustrates a flow chart of another exemplary method 1500 for CIR synchronization, according to some embodiments of the present disclosure. At operation 1502, one of the CIRs is determined as a reference CIR. At operation 1504, a representative tab location of the reference CIR is computed. At operation 1506, a representative tab location of an additional CIR is computed. At operation 1508, the additional CIR is aligned with the reference CIR based on the representative tab locations of the reference CIR and the additional CIR. At operation 1510, the additional CIR is rotated such that its representative tab location is closer to the representative tab location of the reference CIR. The order of the operations in FIG. 15 may be changed according to various embodiments of the present teaching.

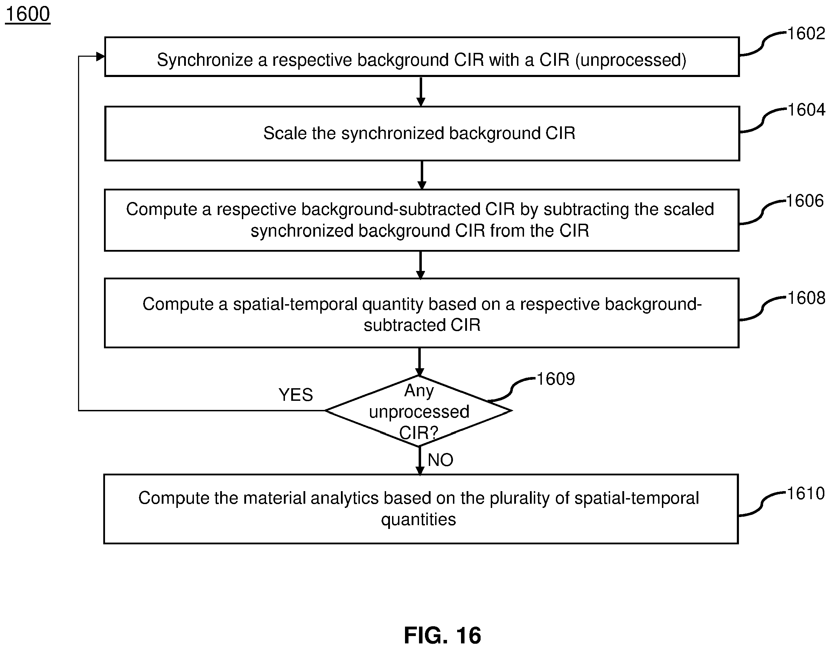

FIG. 16 illustrates a flow chart of an exemplary method 1600 for noise cancellation and target detection, according to some embodiments of the present disclosure. At operation 1602, a respective background CIR is synchronized with a CIR (unprocessed). At operation 1604, the synchronized background CIR is scaled. At operation 1606, a respective background-subtracted CIR is computed by subtracting the scaled synchronized background CIR from the CIR. At operation 1608, a spatial-temporal quantity is computed based on a respective background-subtracted CIR. At operation 1609, it is determined whether there is any unprocessed CIR left. If so, the method goes back to operation 1602 to perform noise cancellation regarding the unprocessed CIR. If not, the method goes to operation 1610 to compute the material analytics based on the plurality of spatial-temporal quantities computed based on all of the CIRs. The order of the operations in FIG. 16 may be changed according to various embodiments of the present teaching.

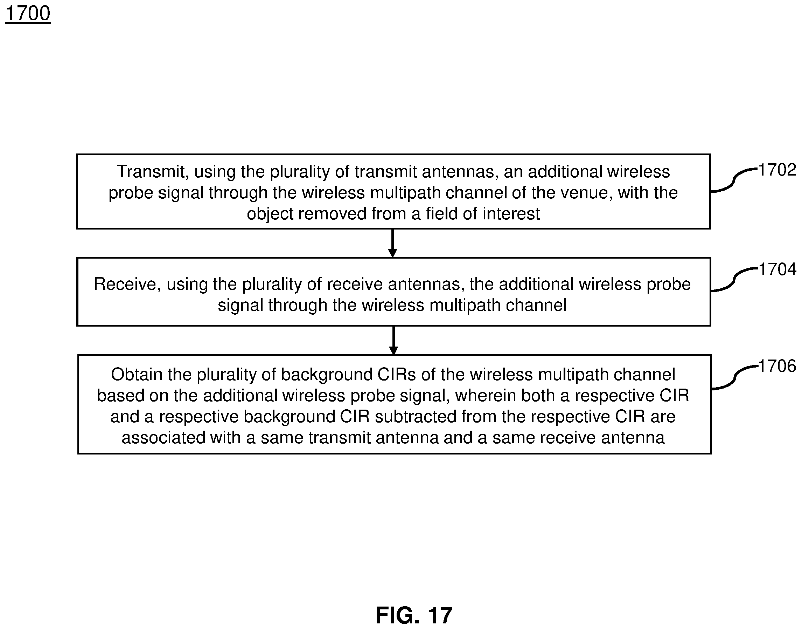

FIG. 17 illustrates a flow chart of an exemplary method 1700 for obtaining background CIRs, according to some embodiments of the present disclosure. At operation 1702, an additional wireless probe signal is transmitted, by the plurality of transmit antennas of the transmitter, through the wireless multipath channel of the venue, with the object removed from a field of interest. At operation 1704, the additional wireless probe signal is received, by the plurality of receive antennas of the receiver, through the wireless multipath channel. At operation 1706, the plurality of background CIRs of the wireless multipath channel is obtained based on the additional wireless probe signal. Both a respective CIR and a respective background CIR subtracted from the respective CIR are associated with a same transmit antenna and a same receive antenna. The order of the operations in FIG. 17 may be changed according to various embodiments of the present teaching.

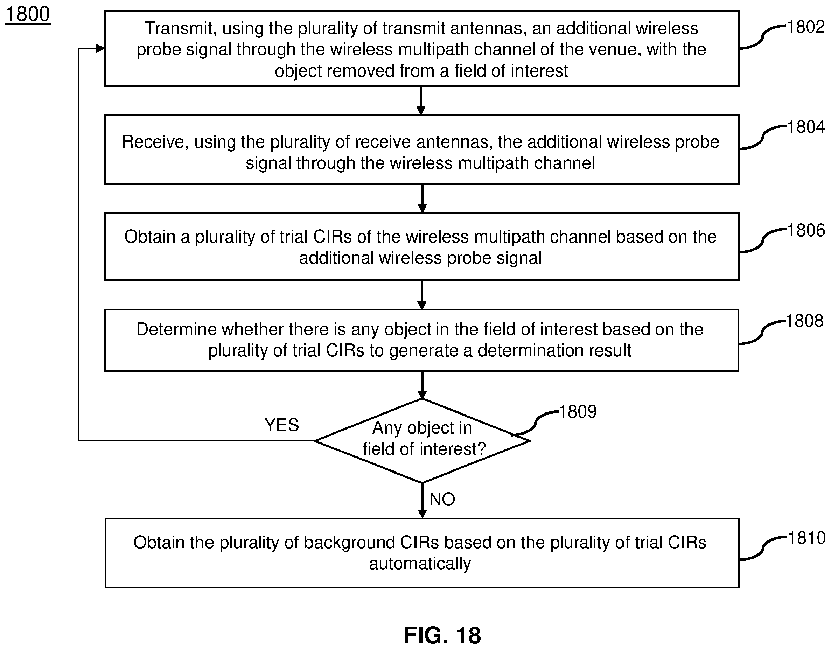

FIG. 18 illustrates a flow chart of another exemplary method 1800 for obtaining background CIRs, according to some embodiments of the present disclosure. At operation 1802, an additional wireless probe signal is transmitted, by the plurality of transmit antennas of the transmitter, through the wireless multipath channel of the venue, with the object removed from a field of interest. At operation 1804, the additional wireless probe signal is received, by the plurality of receive antennas of the receiver, through the wireless multipath channel. At operation 1806, a plurality of trial CIRs of the wireless multipath channel is obtained based on the additional wireless probe signal. At operation 1808, it is determined whether there is any object in the field of interest based on the plurality of trial CIRs to generate a determination result. If it is determined there is any object in the field of interest at operation 1809, the method goes back to operation 1802 to transmit another wireless probe signal to obtain background CIRs. If it is determined there is no object in the field of interest at operation 1809, the method goes to operation 1810 to obtain the plurality of background CIRs based on the plurality of trial CIRs automatically. The order of the operations in FIG. 18 may be changed according to various embodiments of the present teaching.

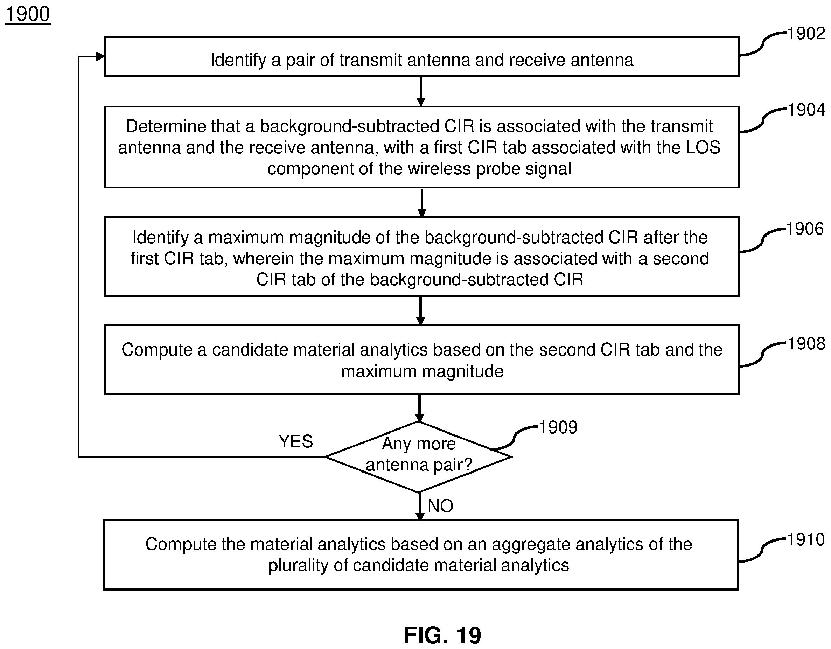

FIG. 19 illustrates a flow chart of an exemplary method 1900 for material reflection feature (MRF) estimation, according to some embodiments of the present disclosure. At operation 1902, a pair of transmit antenna and receive antenna is identified. At operation 1904, it is determined that a background-subtracted CIR is associated with the transmit antenna and the receive antenna, with a first CIR tab associated with the LOS component of the wireless probe signal. At operation 1906, a maximum magnitude of the background-subtracted CIR is identified after the first CIR tab, wherein the maximum magnitude is associated with a second CIR tab of the background-subtracted CIR. At operation 1908, a candidate material analytics is computed based on the second CIR tab and the maximum magnitude. At operation 1909, it is determined whether there is any more antenna pair. If so, the method goes back to operation 1902 to compute a candidate material analytics based on the next antenna pair. If not, the method goes to operation 1910 to compute the material analytics based on an aggregate analytics of the plurality of candidate material analytics computed based on all antenna pairs. The order of the operations in FIG. 19 may be changed according to various embodiments of the present teaching.

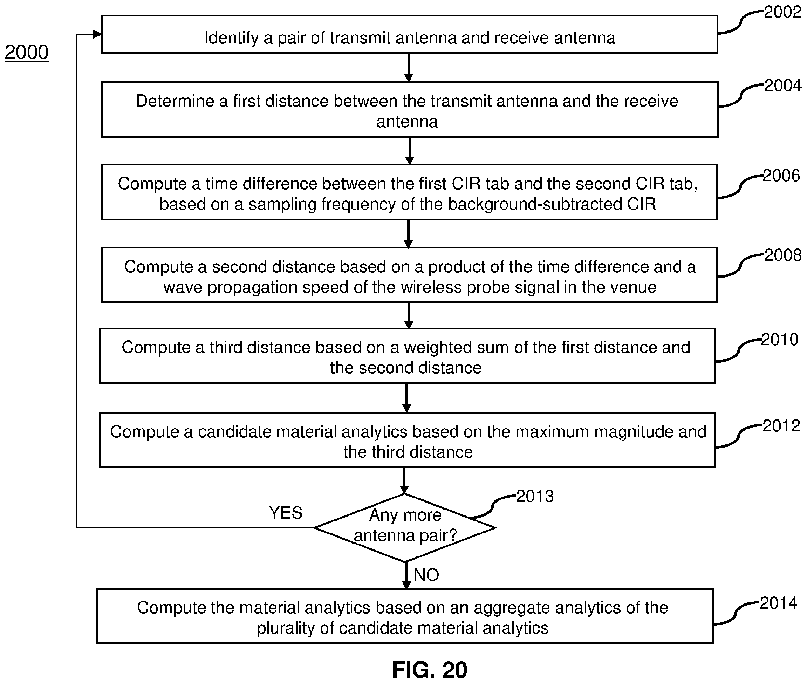

FIG. 20 illustrates a flow chart of another exemplary method 2000 for MRF estimation, according to some embodiments of the present disclosure. At operation 2002, a pair of transmit antenna and receive antenna is identified. At operation 2004, a first distance is determined between the transmit antenna and the receive antenna. At operation 2006, a time difference is computed between the first CIR tab and the second CIR tab, based on a sampling frequency of the background-subtracted CIR. At operation 2008, a second distance is computed based on a product of the time difference and a wave propagation speed of the wireless probe signal in the venue. At operation 2010, a third distance is computed based on a weighted sum of the first distance and the second distance. At operation 2012, a candidate material analytics is computed based on the maximum magnitude and the third distance. At operation 2013, it is determined whether there is any more antenna pair. If so, the method goes back to operation 2002 to compute a candidate material analytics based on the next antenna pair. If not, the method goes to operation 2014 to compute the material analytics based on an aggregate analytics of the plurality of candidate material analytics computed based on all antenna pairs. The order of the operations in FIG. 20 may be changed according to various embodiments of the present teaching.

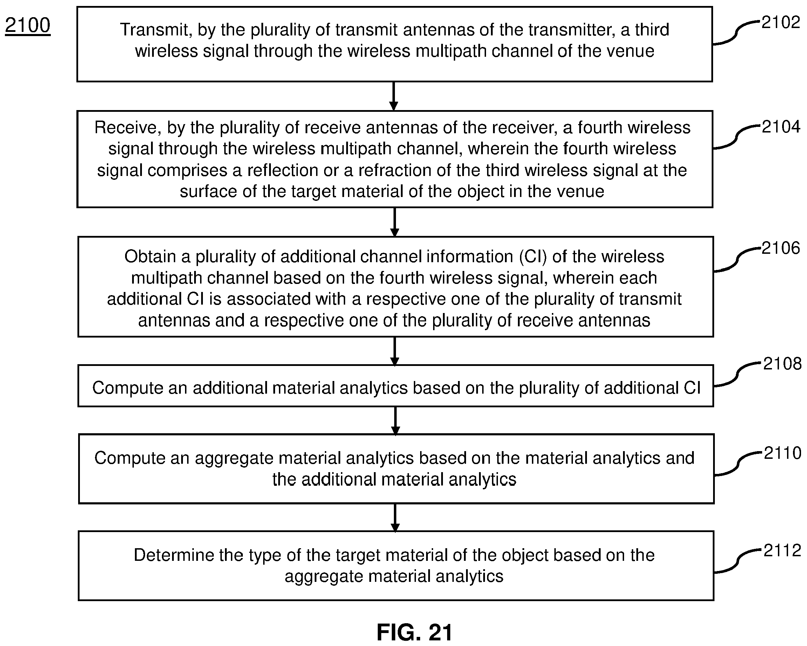

FIG. 21 illustrates a flow chart of an exemplary method 2100 for wireless material sensing based on multiple frames, according to some embodiments of the present disclosure. At operation 2102, a third wireless signal is transmitted, by the plurality of transmit antennas of the transmitter, through the wireless multipath channel of the venue to the receiver. At operation 2104, a fourth wireless signal is received, by the plurality of receive antennas of the receiver, through the wireless multipath channel. The fourth wireless signal comprises a reflection or a refraction of the third wireless signal at the surface of the target material of the object in the venue. At operation 2106, a plurality of additional channel information (CI) of the wireless multipath channel is obtained based on the fourth wireless signal. Each additional CI is associated with a respective one of the plurality of transmit antennas and associated with a respective one of the plurality of receive antennas. At operation 2108, an additional material analytics is computed based on the plurality of additional CI. At operation 2110, an aggregate material analytics is computed based on the additional material analytics and the material analytics computed based on the method 1200 in FIG. 12. At operation 2112, the type of the target material of the object is determined based on the aggregate material analytics. The order of the operations in FIG. 21 may be changed according to various embodiments of the present teaching.

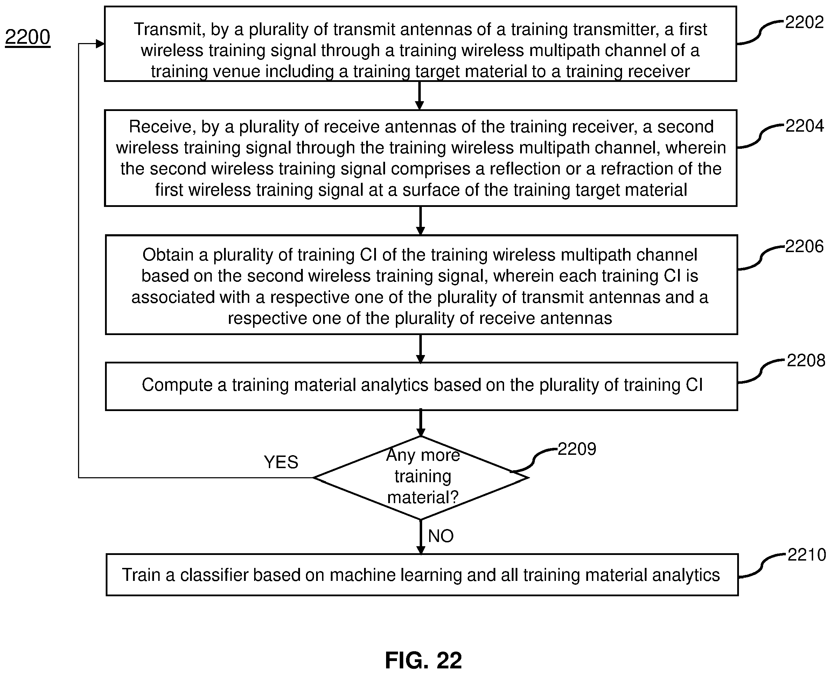

FIG. 22 illustrates a flow chart of an exemplary method 2200 for training a classifier during a training stage of a wireless material sensing system, according to some embodiments of the present disclosure. At operation 2202, a first wireless training signal is transmitted, by a plurality of transmit antennas of a training transmitter, through a training wireless multipath channel of a training venue including a training target material to a training receiver. At operation 2204, a second wireless training signal is received, by a plurality of receive antennas of the training receiver, through the wireless multipath channel. The second wireless training signal comprises a reflection or a refraction of the first wireless training signal at a surface of the training target material. At operation 2206, a plurality of training channel information (CI) of the training wireless multipath channel is obtained based on the second wireless training signal. Each training CI is associated with a respective one of the plurality of transmit antennas and associated with a respective one of the plurality of receive antennas. At operation 2208, a training material analytics is computed based on the plurality of training CI. At operation 2209, it is determined whether there is any more training material. If so, the method goes back to operation 2202 to compute a training material analytics for the next based on the next training material. If not, the method goes to operation 2210 to train a classifier based on machine learning and all training material analytics. The order of the operations in FIG. 22 may be changed according to various embodiments of the present teaching.

For an EM wave propagating in free space, the signal amplitude decreases as the inverse of the propagation distance d, which is well modeled by the Friis Transmission Formula as:

$$A_d = A_0 g_t g_r \frac{\lambda}{4\pi d}, \qquad\qquad (A1)$$

where $A_0$ denotes the amplitude of the transmitted signal, $A_d$ denotes the received amplitude at propagation distance $d$, $g_t$ and $g_r$ are the transmit and receive antenna gains, respectively, and $\lambda$ is the wavelength. The model above generally applies to air propagation, which is approximated to free space propagation. In practice, due to multipath effects, an additional exponential component may be applied to d, which is not the case for 60GHz signals with few multipath.

When the EM wave encounters a material boundary, causing an impedance discontinuity in the propagation medium, the incident energy will be partially reflected and partially transmitted into the new material. The ratio of the amplitude of the reflected wave to that of the incident wave is given by the reflection coefficient, denoted as r:

$$A_{\text{out}} = A_{\text{in}} \cdot r, \qquad\qquad (A2)$$

where $A_{\text{in}}$ and $A_{\text{out}}$ denote the amplitudes of the incoming and reflecting signals respectively. At normal incidence, the reflection coefficient r is, according to the Fresnel Equations, expressed as $r = \frac{n_2 - n_1}{n_2 + n_1}$, where $n_1$ and $n_2$ are the refractive indices of the incident and transmitted materials, respectively. The refractive index $n$ of a material is defined as the ratio of the speed of light in vacuum, c, and the speed of EM waves in the propagation medium, $v$: $n = \frac{c}{v}$. The refractive index $n$ is an intrinsic characteristic of a material related to the material's complex permittivity $\varepsilon_r = \varepsilon'_r + \varepsilon''_r$:

$$n = \sqrt{\frac{1}{2}\left(\sqrt{(\varepsilon'_r)^2 + (\varepsilon''_r)^2} + \varepsilon'_r\right)}. \tag{A3}$$

Typically, the incident material is air, for which we have $n_{air} = 1$. And thus r becomes r = (n-1)/(n+ 1), where n denotes the refractive index of the target material.

For the EM wave that continues to travel inside the target, assuming a uniform lossy media, its amplitude experiences exponential decrease over the propagation distance d:

$$A_{d_{in}} = A_{in}e^{-\alpha d_{in}}, \tag{A4}$$

where $A_{d_{in}}$ denotes the amplitude at distance $d_{in}$ to the target surface and $A_{in}$ denotes the amplitude at the incident surface. $\alpha$ is the attenuation constant that depends on the intrinsic material properties. From (A4), $\alpha$ is defined as the inverse of a distance $\delta$, often called the skin depth (or penetration depth), over which the strength of the electromagnetic field decays to $1/e = 0.368$ of its original value.

Similar to the refractive index, the attenuation constant $\alpha$ is also related to the material's intrinsic relative permittivity:

$$\alpha = \frac{2\pi}{\lambda_0}\sqrt{\frac{1}{2}\left(\sqrt{(\varepsilon'_r)^2 + (\varepsilon''_r)^2} - \varepsilon'_r\right)}. \tag{A5}$$

Thus, if n and $\alpha$ are available, the above two equations can be jointly solved to derive the two unknowns, i.e., $\varepsilon'_r$ and $\varepsilon''_r$.

One may extract an effective metric related to the material's reflection behavior, termed as material reflection feature (MRF). Recall Eqn. (A1) and Eqn. (A2), the received amplitude at the Rx, which is co-located with the Tx, can be expressed as

$$A_d = A_0 g_t g_r \frac{\lambda}{4\pi(2d)} \cdot r \propto \frac{r}{d}. \tag{A6}$$

The above expression accounts for the round-trip propagation distance 2d and the reflection coefficient r of the target. Note that here d denotes the range of the target, i.e., the distance from the target surface to the radio. Let $A_d \triangleq \gamma\frac{1}{d}$, then one can have

$$\gamma = A_0 g_t g_r \frac{\lambda}{8\pi} \cdot r = A_d \cdot d. \tag{A7}$$

The defined $\gamma$ has the following properties. First, $\gamma$ is a linear function of the target reflection coefficient r, an intrinsic characteristic of the target material, and is independent of the propagation distance. As shown by the middle term, except for three constants, i.e., the transmitting amplitude $A_0$, the Tx and Rx antenna gains $g_t$ and $g_r$, $\gamma$ is only related to the reflection coefficient r and is thus unique to a particular material. Second, implied by the right term, one can easily estimate $\gamma$ as long as one can obtain the range d of the target and the corresponding signal amplitude $A_d$.

As a result, one can term $\gamma$ as the MRF and employ it for material identification, successfully avoiding the need of knowing the precise $A_0$ to derive r. In practice, only an estimated version of $\gamma$, denoted as $\hat{\gamma} = \hat{A}_d\hat{d}$, can be obtained, where $\hat{d}$ and $\hat{A}_d$ are the estimated target range and the corresponding measured amplitude, respectively.

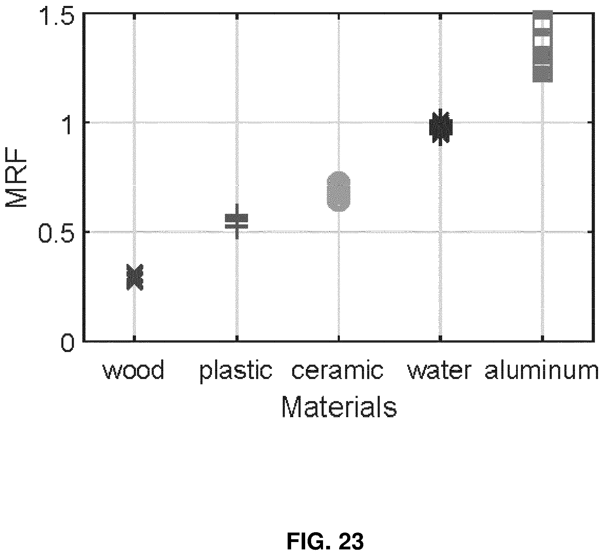

FIG. 23 illustrates an exemplary set of material reflection features (MRFs) of several common materials, according to some embodiments of the present disclosure. As shown in FIG. 23, preliminary measurements demonstrate that the MRF $\gamma$ is discernible, reliable, and accurate in distinguishing different material types. The stronger the target reflects the incident signals, the larger MRF values it has. Albeit small variances exist, the measured MRFs of the exemplified materials are set apart as shown in FIG. 23.

A Channel Impulse Response (CIR) profiles the propagation delays and the channel responses of different signal paths between Tx and Rx, which is denoted by

$$h(\tau) = \sum_{l=1}^{L} a_l e^{-j\theta_l}\delta(\tau - \tau_l), \qquad\qquad (A8)$$

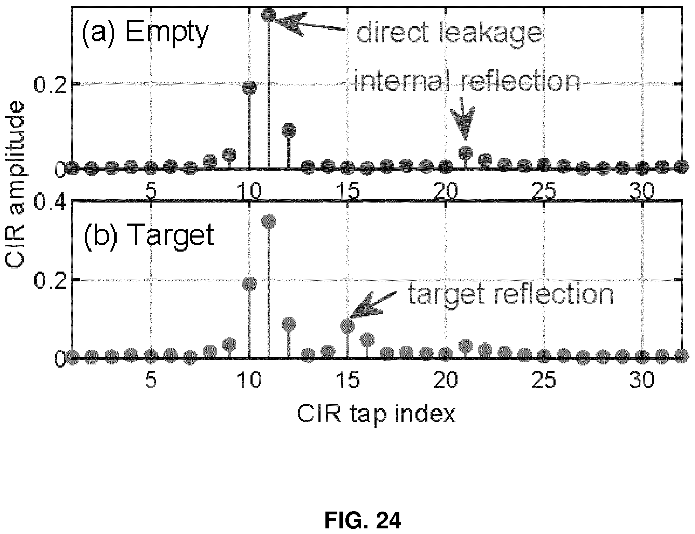

where $a_l$, $\theta_l$ and $\tau_l$ are the amplitude, phase and time delay of the lth path, respectively; L is the total number of paths and $\delta(\tau)$ is the Dirac delta function. FIG. 24 shows an example of the CIR measured by an mmWave device. Each impulse tap of a CIR, $h(\tau_l)$, represents a delayed multipath component. The device uses a bandwidth of 3.52 GHz centered at 60GHz frequency band, resulting in a time-of-flight (ToF) resolution of 0.28 nanosecond, which, given the speed of light $c = 3 \times 10^8 m/s$, corresponds to a range resolution of 4.26 cm (for reflecting paths).

Compared to 2.4GHz/5GHz WiFi, the CIR of 60GHz mmWave signals offer distinct advantages due to the many antennas, large bandwidth, and high carrier frequency. Applying the reported CIR for material sensing entails practical challenges. While the high range resolution is impressive for indoor localization, it is inadequate for material sensing. Furthermore, as demonstrated by experimental measurements, the device contains considerable noises and exhibits unreliable amplitudes, making the material sensing even challenging. Specifically, FIG. 24 shows the respective CIR measurements in the cases with and without a target in the field of interest. There are a few major challenges with the CIR estimation with the present implementation of the radar-like radio. First, the physical range resolution of 4.26 cm is inadequate for estimating the MRF precisely. Second, the reported CIR measurements over time might be out of synchronization. Third, there may be measurement noise. Ideally, the CIR should be all nearly zeros in absence of reflection objects. As shown in FIG. 24, the CIR measurements contain strong direct leakage from the Tx to the co-located Rx and noticeable internal reflection, significantly interfering the measurements in presence of a target.

Several operations are performed by the disclosed system to overcome the above mentioned challenges: CIR Interpolation, CIR Synchronization, and Noise Cancellation.

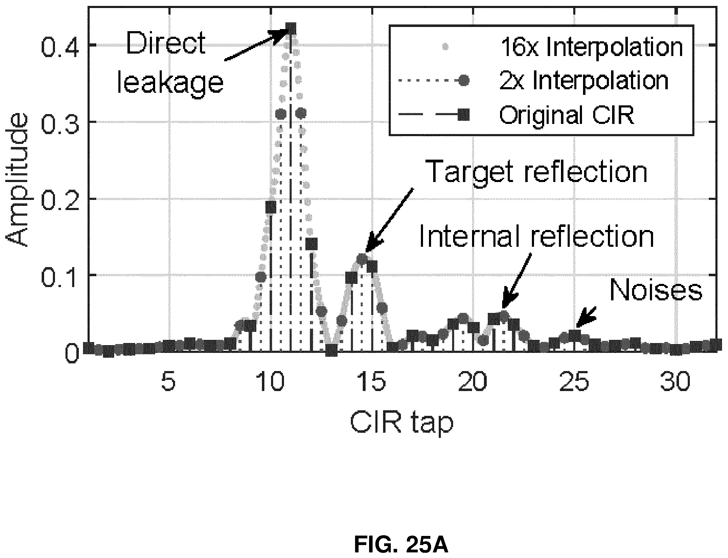

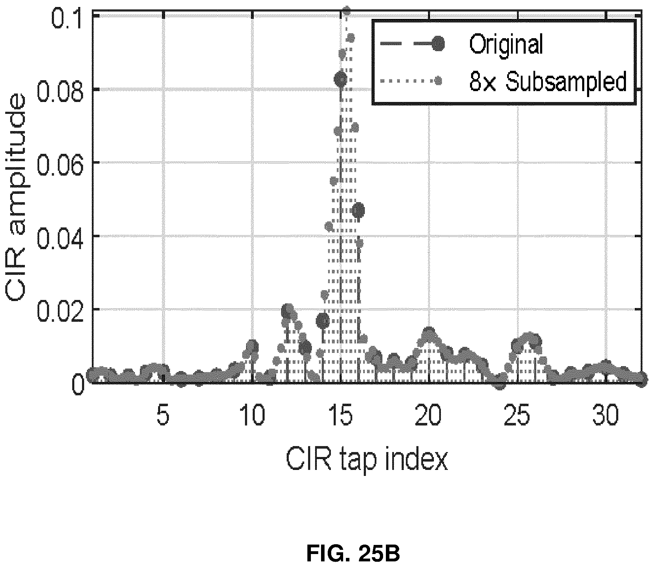

CIR Interpolation: To obtain finer details, one may up-sample the raw CIR via interpolation. Since the disclosed mSense system mainly utilizes CIR amplitudes for material identification, spline interpolation may be performed on the amplitude, which subsamples the amplitude effectively. The interpolated CIR has denser sample points, and peak tap of a particular path tends to be close to the real maximum tap value. Thereby, the interpolation offers finer granularity in delay (and thus range) and amplitude estimation, both of which are critical to material identification. The mSense system may perform 8x interpolation, promoting the ToF precision to 35.2 picoseconds and promoting the distance precision to 0.52 cm. FIG. 25A illustrates an example with $2\times$ and $16\times$ interpolations of the original CIR. FIG. 25B illustrates the CIR amplitude after the noise cancellation, where the maximum CIR amplitude is after the first tab at the second tab.

CIR Synchronization: The default synchronization of the 60GHz radio is not precise enough due to the resolution limit. For example, misalignment of one tap would lead to an offset of 4.26 cm in distance estimation. Neither is the synchronization reliable, i.e., the leakage tap would vary over time (especially due to temperature changes) and even over antenna pairs. To synchronize all the CIRs more precisely and reliably, one may leverage the direct leakage from the Tx to the Rx. The direct leakage between the co-located Tx and Rx is free of multipaths and produces a fixed time of flight, e.g. about 0.13 nanoseconds in a platform with a separation of about 4 cm between the Tx and the Rx. Thus, the direct leakage tap can serve as a reference tap, and the system may align this leakage tap of all CIR measurements to synchronize them and derive the relative ToF of each subsequent tap. The system can then obtain the absolute ToF for range estimation by compensating the ToF of the direct path from a specific Tx-Rx link on top of the relative ToF.

Regarding the synchronization, the system may first select one reference CIR whose direct leakage tap is assigned to a specific tap, denoted as the $l_0$th tap. Then for each CIR, the system may correlate it with the reference CIR. The correlation only involves the first $L_0$ taps that cover the direct leakage, excluding the other taps that potentially associate with target or background reflections. Since the direct leakage keeps relatively stable with a similar pattern for different measurements, the tap at which the maximum correlation occurs is declared as the direct leakage tap. The CIR is accordingly synchronized by shifting the direct leakage tap to the $l_0$th tap, if they are different. To maintain the same length of the CIR, the system may perform circular shift for the alignment, which could alternatively be achieved by padding zeros to the first (or last) taps. The interpolated CIR may be used for the sake of finer-grained delays. The synchronization technique is also applicable to the general case of 60GHz networking with unsynchronized, separate Tx and Rx devices. As long as the LOS distance between the Tx and Rx is known, all measurements can be synchronized by referring to the LOS delay, provided that the energy of LOS path dominates the other paths.

Noise Cancellation: The CIR can be modeled as a sum of the components reflected off the target, denoted as $h^t$ and the components contributed by the direct leakage, internal reflection, measurement noises, and background reflection if any, denoted as $h^n$. To obtain $h^t$ from the measured h, the system may utilize a reference CIR measured with no target in the field of interest, which characterizes the components $h^n$. Such a reference CIR can be easily obtained by collecting measurements when the device is pointing towards the air without the presence of the target. When there are Q such measurements, $h^n$ will be estimated as the average sample, i.e. , $h^n(\tau_l) = \frac{1}{Q}\sum_{i=1}^{Q} h(\tau_l, t_i).$

Then one may subtract $h^n$ from a new h measured at time t towards a target and obtain $h^t$. Since the measured CIR amplitudes may slightly vary over time due to the automatic gain control (AGC), one may apply a scaling factor $\beta$ for complete cancellation:

$$h^t(\tau, t) = h(\tau, t) - \beta h^n(\tau). \qquad (A9)$$

Assuming that the direct leakage should be constant, the scaling factor is computed based on the first $L_0$ taps concerning only the direct leakage and noises by minimizing the mean square error (MMSE):

$$\beta^{\text{â}} = \arg\min_{\beta} \sum_{l=1}^{L_0} |h(\tau_l, t) - \beta h^n(\tau_l)|^2. \qquad (A10)$$

In some embodiments, the cancellation is mainly used to remove the hardware distortions and measurement noises, rather than the background-tailored interferences. Therefore, the reference CIR can be a one-time calibration and does not need to be measured for every data capturing session, which largely consolidates its practical usage in mobile environments. In practice, it is possible to automatically collect the reference CIR since the system can detect whether there is a target within the range of interests (e.g., within 1 meter). If there is no target in the range of interest, the corresponding CIR samples can be used to generate the reference CIR. Although distant objects in the background (e.g., walls, furniture, etc.) may also reflect signals to be included in the reference CIR, they do not affect the wireless material sensing of the mSense system, because they are typically out of the range of interests.

Material Reflection Feature Estimation: Given that the direct leakage and internal reflection have been eliminated, one can simply locate the CIR tap that holds the maximum amplitude as the one where the target presents at and accordingly derive the relative ToF $\Delta t$ corresponding to that tap. The associated amplitude is taken as the amplitude of the signals reflected by the target.

The ToF $\Delta t$ derived from the synchronized CIR is the relative value referenced to the direct leakage tap. One can compensate the direct leakage delay to obtain the absolute ToF. Given the geometry of the Tx and Rx antenna arrays, the separation distance between each pair of Tx and Rx antennas can be pre-obtained, and the direct propagation delay can thereby be derived on top. For the M Tx antennas and N Rx antennas, an M × N matrix S may be defined to represent the Tx-Rx separation distances, with $s_{m,n}$ denoting its entry at the mth Tx element and the nth Rx element, where m = 1, ⋯ M, n = 1,⋯, N. Then given the measurements between the mth Tx antenna and the nth Rx antenna, the range of the target can be computed by

$$d_{m,n} = \frac{c\Delta t_{m,n} + s_{m,n}}{2}. \qquad (A11)$$

Here half of the propagation distance is taken as the range, assuming normal incident, i.e., the device is pointing to the target approximately at elevation 0°.

The disclosed system can perform the above target detection for the CIR measured by every pair of Tx-Rx antennas and obtain M × N estimates of $\gamma$ in total, each denoted as $\gamma_{m,n} = \frac{A_{m,n} d_{m,n}}{g_t g_r}$ for the mth Tx element and the nth Rx element, where $A_{m,n}$ is the amplitude estimate at $d_{m,n}$ and $g_t$, $g_r$ are the AGC gains reported by the device. The system can leverage the antenna diversity to achieve a more robust estimate of $\gamma$ by removing potential outliers in the target detection. Specifically, the system excludes those tuples whose distance estimate $d_{m,n}$ deviates from the majority of all the M × N estimates.

$$\hat{\gamma} = \frac{1}{|\mathcal{S}|} \sum_{(m,n) \in \mathcal{S}} \gamma_{m,n}. \qquad (A12)$$

Here $\mathcal{S}$ is defined as the set of tuples (m, n) that satisfy $\|d_{m,n} - \tilde{d}\| \leq \delta$, m = 1,...,M, n = 1,⋯,N, where $\delta$ is a threshold set to the default range resolution, i.e. , $\delta$ = 4.26 cm, $\tilde{d}$ is the median of all $d_{m,n}$.

The disclosed mSense system merely needs one single frame to yield an estimate of the MRF $\gamma$. In case there are multiple frames over time, the system will further improve the estimation by taking their average:

$$\bar{\gamma} = \frac{1}{K} \sum_{k=1}^{K} \hat{\gamma}(k), \qquad (A13)$$

where $\hat{\gamma}(k)$ is the estimation from the kth CIR frame and K is total number of available frames. The device could be either moving or static during the measurements of successive frames.

Two steps are involved to identify material: an offline step to construct a database of the MRF for different materials; and an online step that retrieves the best matches for a given target.

Given a set of materials of interests, the system can perform a "scan" on each of them and store the distribution of the estimated $\gamma$. To reduce the data amount needed for training, one can build a histogram, rather than fitting a certain distribution, for each material type T, denoted as $\{< \gamma_i(T), p_i(T) >, i = 1,2, \cdots, P\}$, where $\gamma_i(T)$ is the bin value and $p_i(T)$ is the corresponding probability (normalized count of observations), and P is the total number of bins. In some embodiments, a median filter is applied to remove the outlier estimates from the training samples in prior to building the histogram. Let $\mathcal{T}$ be the set of materials considered. Then in the online operating stage, for each material with $\gamma$ to test, the best matching can be found as follows:

$$T^{\mathring{a}} = \underset{T \in \mathcal{T}}{\arg\min} \sum_{i=1}^{P} ||\gamma - \gamma_i(T)|| \cdot p_i(T). \qquad (A14)$$

Besides, an additional rule can be applied to check the "null" class, i.e., the materials unseen in the training database. Specifically, for a given material, if its measured $\gamma$ does not match any $\gamma_i(T)$, for any i = 1, $\cdots$, P and any

$$T \in \mathcal{T},$$

then the system treats it as the "unknown" type.

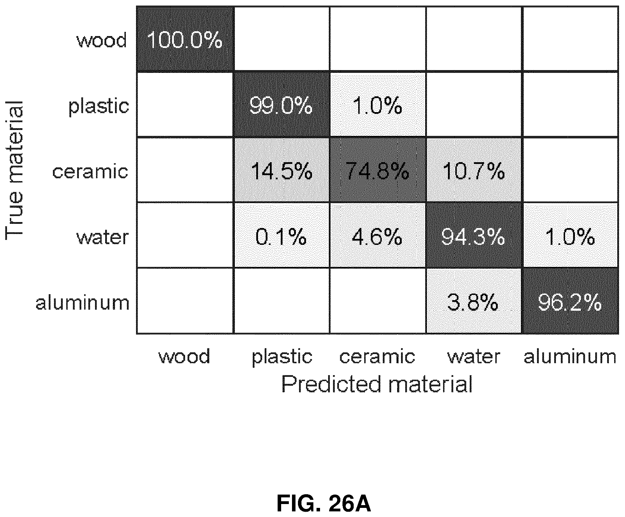

To present the overall recognition performance of the system, two frames per sample are used for training, while five frames are averaged as a testing sample. The impacts of the number of frames per sample will be evaluated subsequently. The results of both the mobile and static cases are fused together. As shown in FIG. 26A, the overall recognition accuracy is 92.87%, comparable to the existing works that need to penetrate the target with bilateral device setup and cannot be used for mobile material sensing. In some embodiments, the mSense system achieves a remarkable recognition accuracy exceeding 90% for all the tested materials except for ceramic, of which the estimated MRFs exhibit a larger variance and overlap with both plastic and water. In some embodiments, metals (e.g., aluminum) are identified correctly by the disclosed system with high accuracy, even in mobile cases, which would be particularly useful to detect suspicious targets for security. The accuracy promises valuable applications for ubiquitous contexts thanks to the mSense system's simple setup of using single radio and reflection signals.

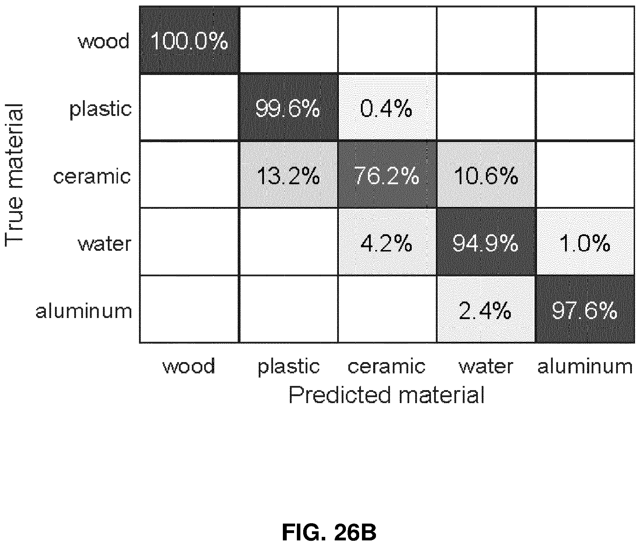

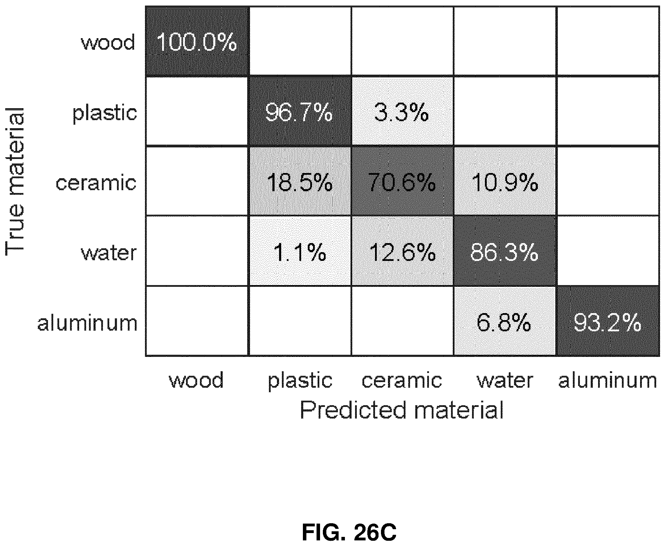

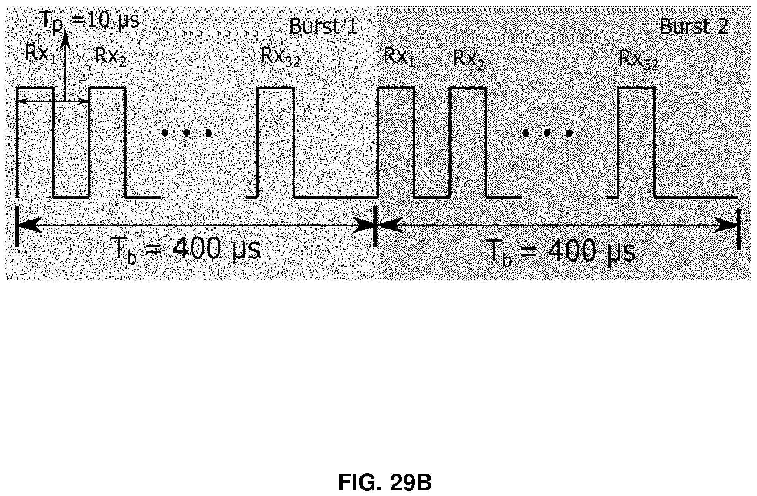

It is interesting to examine the performance of the mSense system in mobile environments. Thereby, as shown in FIGS. 29B and 26C, the accuracy of the wireless sensing of the system is demonstrated in mobile and static scenarios, respectively. As shown in FIGS. 26B and 26C, the overall performance in the static scenario is as expected slightly better than that in the mobile scenario, 93.66% v. 89.36%. The retained performance in mobile environments, with around 4% accuracy degradation, is delightful and sufficiently accurate for many everyday applications, considering that mmWave signals are sensitive to tiny location/orientation due to the short wavelength.

According to various embodiments of the present teaching, millimeter wave (mmWave, e.g. 28 GHz or 60GHz) signals are used or re-used between a mmWave transmitter and a mmWave receiver to detect/ recognize/ differentiate a material of a target surface. The system exploits reflection characteristics (e.g. reflectivity) of the mmWave signal at the material surface, which are different from refraction characteristics of the mmWave signal through the material. As such, the transmitter and the receiver can be on the same side of the material, instead on two different sides of the material. The transmitter (transmitting device of the system with a processor/memory/software) and the receiver (receiving device of the system) may or may not be on a same device. The transmitter and/or receiver may each have an antenna array including distributed antennas. There may be multiple receivers each receiving the mmWave signal from the transmitter. There may be multiple transmitters each transmitting a respective mmWave signal to the receiver. There may be multiple transmitters and multiple receivers, where each transmitter transmits a respective mmWave signal to one or more receivers.

The device may have a commodity mmWave networking or communication chip/chipset which may operate in a radar mode enabled by attaching an extra antenna array to the chipset. It may use the chip/chipset to transmit the mmWave signal using a transmitting radio, and to receive the reflected mmWave signal using a receiving radio. The chip may transmit/receive simultaneously or contemporaneously. The chip may switch rapidly between transmitting and receiving to simulate or mimic "simultaneous" transmitting/receiving.

A user may hold the portable radio of the transmitter and/or receiver and point the antenna array towards the target surface for a short instance (short time) in order for the system to capture the mmWave signal/CI needed for the material sensing.

In some embodiments, a transmitter transmits a mmWave signal onto a surface of unknown material. A receiver (e.g. on the same device as transmitter) receives the mmWave, extracts channel information (CI, such as signal strength/RSSI, channel state information/CSI, channel impulse response/CIR, and/or channel frequency response/CFR), analyzes the channel information to determine the material. It computes a material reflection feature (MRF) based on the CI that quantitatively characterizes the material's reflectivity, and detects or recognizes the material based on the MRF.

In a learning phase (or training stage), the system may capture training CI by shinning mmWave signals onto a number of known material surface, extract the training CI, compute training MRF, apply machine learning to categorize/classify the training MRF, and compute reference MRF classes associated with the known materials. A database may be established based on the MRF classes and/or an associated classifier. In the learning phase, a histogram of MRF may be obtained for each known (training) material. The histogram may be cleaned (e.g. using median filter or lowpass filter) and normalized. An additional class of MRF called "null" may be added to account for any unknown material different from the known material.

In an operating (testing) phase, the system may capture testing CI by shinning mmWave signals onto a test material surface, extract the testing CI, compute testing MRF, and analyze the testing MRF. The target material may be computed or determined as a known material associated with smallest conditional distortion (e.g. absolute distortion, square distortion, or a monotonic non-increasing function of absolute distortion).

The CI (or CSI or CIR or CFR) or MRF may be preprocessed/processed/postprocessed by (a) CI interpolation, (b) CI synchronization, (c) background/noise cancellation, (d) target detection, (e) MRF estimation, and/or (f) material identification. The CI (or CSI or CIR or CFR) or MRF may be preprocessed/processed by (1) interpolation to increase temporal resolution (with finer temporal details) of CI, (2) synchronization (e.g. direct path based), (3) background cancellation and/or noise cancellation to eliminate hardware distortion and measurement noise, (4) spatial diversity attributed by large antenna arrays to facilitate robustness, (5) estimating propagation distance associated with the target surface, (6) estimating the corresponding amplitude response, (7) computing the MRF, (8) associating the MRF with a particular reference MRF class, (9) determining the testing material as the material associated with the particular reference MRF class. One or more of the preprocessing/processing of CI may be applied in the learning phase and/or the operating phase.

The CI may be interpolated using linear interpolation, piecewise constant interpolation, polynomial interpolation, spline interpolation, fractional interpolation, extrapolation, and/or another interpolation. The interpolation may be performed in complex domain, real domain, imaginary domain, magnitude domain, and/or phase domain.

The transmitter and the receiver may be on the same device such that there may be direct leakage (line-of-sight/LOS transmission) between the transmitter and receiver leading to a very strong leakage pulse (e.g. observable in the CI, or CIR, or CFR) with a very strong local maximum of the magnitude (or magnitude square or any monotonic increasing function of magnitude) of CI.

In some embodiments, each pair of transmitting antenna and receiving antenna gives rise to a time series of CI (TSCI). Different TSCIs may not be synchronized and may exhibit different patterns due to different multipath propagation. The TSCIs may be synchronized by (i) searching for local/global maxima of each TSCI (or each time series of features of CI, the features being magnitude, magnitude square, time average, moving average, moving median, weighted average, autoregressive moving average (ARMA), correlation, a function of one or more of the previous, and/or other features) corresponding to the powerful direct leakage pulse and (ii) aligning the TSCI by aligning the associated local/global maxima.

Alternatively, one particular TSCI may be chosen as a reference TSCI, and a local maximum of the reference TSCI (or the associated features) corresponding to direct leakage may be identified. A time window of CI (i.e. a section of the reference TSCI) encompassing the high-energy direct leakage pulse shape (possibly including some past CI, but not future CI - to avoid including effects of multipaths from target surface) may be chosen as a reference window. The length of the time window may be associated with pulse width of the leakage pulse. Any other TSCI may be synchronized with respect to the reference TSCI by aligning the reference window to a corresponding time window of the other TSCI that gives maximum cross correlation or cross covariance.

By performing the CI interpolation before the CI synchronization, the synchronization may be performed in the higher sampling rate of the interpolated CI and thus at higher precision.

To perform background/noise (including direct leakage, internal reflection, measurement noise and background reflection) cancellation, the user may point the antenna array with no target in the field of interest (e.g. by removing the target and pointing the antenna array into air) and capture the CI for each pair of transmit antenna and receive antenna (which is effectively "background CI" which does not have effects of the target) associated with a respective TSCI. Multiple measurements may be taken and characteristic values (e.g. simple mean, weighted average, trimmed mean, median) may be taken as a robust estimate of the background CI. This process of obtaining background CI may be called "calibration" and may be performed once. The calibration may be a self-calibration as the system can detect if there is a target within the range of interest. Distant objects may not affect the material sensing as the distant objects are typically out of range of interests.

The background CI may be scaled and then subtracted from the respective TSCI. The scaling factor may be obtained by best-fitting (e.g. mean square error, mean absolute error, etc.) in a window encompassing the direct leakage profile (possibly including some past CI, but not future CI - to avoid including effects of multipaths from target surface). Alternatively, the background CI (for each link or each pair of transmit antenna and receive antenna) may be replaced by a common background CI obtained/computed for all pairs of transmit antennas and receive antennas.

In some embodiments, the distance of the target surface from the antenna array ("target distance") is needed to compute MRF. To find the distance, a search may be performed to find the tab with maximum CI amplitude (called "target reflection amplitude" which is amplitude of reflection at target material surface) in each background-subtracted TSCI for each respective transmit/receive antenna pair and the time-of-flight (ToF) may be obtained from the tab. The target distance may be computed based on the ToF and a correction factor to account for distance between the transmit (Tx) antenna and the receive (Rx) antenna (or to account for the time of flight in LOS path between the Tx antenna and the Rx antenna, i.e. the time after the mmWave signal was transmitted and before it is received).

For each Tx/Rx antenna-pair, compute pair-wise MRF based on the target reflection amplitude, the target distance, Tx antenna gain (from Tx chip, the gain due to automatic gain control/AGC of Tx radio), and Rx antenna gain (from Rx chip, the gain due to AGC of Rx radio). The MRF may be computed as a product of the target reflection amplitude and the target distance divided by the Tx antenna gain and the Rx antenna gain.

A combined MRF may be computed as a representative value of the pair-wise MRF. A representative value may be mean, arithmetic mean, geometric mean, harmonic mean, weighted mean, trimmed mean, median, maximum likelihood (ML) value, maximum a posteriori (MAP) value, expected value/statistical mean, conditional mean, or another representative value.

The mmWave probe signal may be transmitted multiple times (each time being called a "frame"). Each frame may correspond to a different target distance as the user may move the antenna array and/or the target material surface may move or vibrate. In some embodiments, an aggregate MRF may be computed as a representative value of the combined MRF.

Rapid increase in automation has stimulated the development of more efficient and convenient approaches for Human-Computer Interaction (HCI). Touch screens and smart surfaces (e.g., electronic whiteboards) have emerged as a more user-friendly alternative to the traditional input devices such as the keyboard and computer mouse. However, the smart surfaces are usually in small form factors limiting the space for HCI and ubiquitous smart environments. Handwriting is a convenient mode of interaction for people and can be considered as a more general form of a gesture, which is a promising approach for HCI. Aided by the advanced handwriting recognition systems, enabling robust and accurate handwriting tracking can realize countless applications in the field of HCI. Handwriting tracking involves tracking and recovering the trajectory traced by a writing instrument or writing target (e.g., a finger, stylus pen or a marker) and can be achieved either actively or passively. Active systems need to instrument the moving target with sensors like smartphone accelerometers, RFID tags, or other radios. Differently, in passive tracking, there is no electronic device attached to the target. Camera-based approaches dominate the passive tracking systems, yet impose restrictions on the availability of ambient light and raise privacy concerns. Other modalities, such as acoustic signals, have been used to differentiate patterns of hand movements. However, their performances are severely degraded with distance, and they usually need retraining for every new alphabet and surface.

Wireless signals, particularly WiFi signals, have been exploited to achieve pervasive device-free sensing for various applications, such as motion detection, vital sign monitoring, human identification, gait recognition, indoor tracking, etc.. The capabilities of wireless sensing are limited by parameters such as the bandwidth, wavelength, and the antenna amount, etc. While the bandwidth limits the range resolution that can be achieved, the wavelength affects the scale of changes that can be perceived. For example, the 802.11 ac WiFi operating on 2.4 GHz or 5 GHz band with bandwidths up to 80 MHz offers about a range resolution of several meters, which is low for handwriting tracking. Two trends have arisen that may underpin much finer-resolution wireless sensing, including high-precision handwriting tracking. First, 60GHz millimeter-wave WiFi, introduced for high-rate networking with 802.11ad/ay standards, brings distinct advantages for wireless sensing. Compared to 2.4 GHz/5 GHz WiFi signals, mmWave signals offer shorter wavelengths that create stronger reflections off small objects and enable motion capturing at millimeter scales. The mmWave radios usually have bigger phased antenna array, producing higher directivity and fewer multipaths, which allows better spatial resolution. 60GHz WiFi has been offered in commercial routers and is being put into smartphones. Second, while wireless sensing aims to enable radar-like features using radio signals proposed for communication, indoor portable radars are also becoming popular. Frequency-modulated continuous-wave (FMCW) radar has been widely exploited for wireless and acoustic sensing, while ultra-wide-band (UWB) radar and mmWave radar have been equipped into commodity smartphones. One may leverage a synergy between the above two trends by reusing a commodity 60GHz networking device as an mmWave radar. Utilizing a mmWave radio to deliver such a handwriting tracking system, however, entails unique challenges in practice. First, the 60GHz mmWave signals, although with a large bandwidth of a few GHz, does not offer adequate range resolution for mm-scale handwriting tracking. In one example, the range resolution is 4.26 cm given the bandwidth of 3.52 GHz, far worse than the desired tracking accuracy at millimeter level. Second, given the high attenuation nature and near-far effects of mmWave signals (i.e., the spatial resolution of the directional signals decreases over distance), it is non-trivial to achieve a large coverage using a single radio. Third, reflection signals from background environments and especially irrelevant moving objects (e.g., body and arms) can distort the reflections from the target of interest (e.g., the finger) and thus influence the tracking performance.

In some embodiments, the present teaching discloses a high-precision passive writing tracking system (referred to as "mmWrite" hereinafter). In some embodiments of the present teaching, the mmWrite system uses a single commodity millimeter wave (mmWave) radio to perform a passive tracking of a writing. Leveraging the short wavelength and large bandwidth of 60 GHz signals and the radar-like capabilities enabled by the large phased array, the mmWrite system can transform any flat region into an interactive writing surface that supports handwriting tracking at millimeter accuracy. In some embodiments of the present teaching, the mmWrite system employs an end-to-end pipeline of signal processing to enhance the range and spatial resolution limited by the hardware, boost the coverage, and suppress interference from backgrounds and irrelevant objects. One may implement and evaluate the mmWrite system on a commodity 60 GHz device. In some embodiments of the present teaching, experimental results show that the mmWrite system can track a finger/pen with a median error of 2.8 mm and thus can reproduce handwritten characters as small as 1 cm $\times$ 1 cm, with a coverage of up to 8 m$^2$ supported. With minimal infrastructure needed, the mmWrite system promises ubiquitous handwriting tracking for new applications in the field of human-computer interactions.

The mmWrite system is the first passive motion tracking system that can recover the trajectory of handwritten traces with high precision. The mmWrite system can capture the signals reflected off a writing object (e.g., a finger or a pen) using a single commodity 60GHz mmWave radio, and employs a pipeline of signal processing to reproduce the moving trajectory. Unlike gesture recognition systems, the mmWrite system does not require any calibration or supervised learning. Instead, the mmWrite system directly tracks the location of the writing target and recovers the entire trace. With one single radio and without instrumenting the writing object, the mmWrite system can achieve handwriting tracking with millimeter accuracy over a large area of up to 8 $m^2$, thus converting a conventional surface into an interactive trackpad with minimal supporting infrastructure.

The mmWrite system utilizes an algorithm designed to conquer the above challenges and build a robust handwriting tracking system. In some embodiments, the time series of the channel impulse response (CIR) is captured during handwriting. The time-of-arrival (ToA) information embedded in the CIR, along with the spatial information extracted by digital beamforming, contains a rough estimate of the received signals' spatial origin. The contribution of the irrelevant signals from the environment to the received signal is suppressed by background subtraction. Moreover, the Doppler spectrum is used to isolate the signals reflected from the dynamic targets. The presence of the target is then detected from the Doppler spectrum using a constant false alarm rate (CFAR) technique, and the corresponding spatial location is extracted. The coarse spatial information of the target is then refined further using the subsample peak interpolation technique. These target localization steps are repeated for each time instance to construct an estimated trajectory of the target, which is then enhanced to output the final trajectory using discrete cosine transform-based smoothing technique.

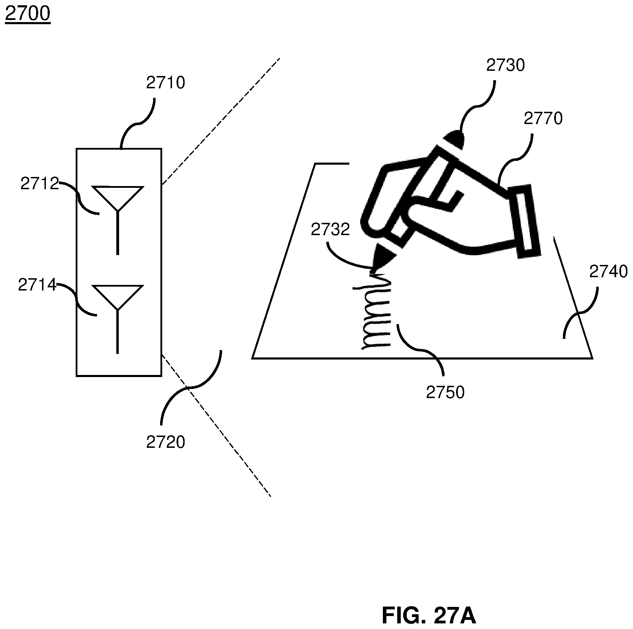

FIG. 27A illustrates an exemplary wireless environment 2700 for wireless handwriting tracking, according to some embodiments of the present disclosure. As shown in FIG. 27A, the wireless environment 2700 includes a device 2710, a writing instrument 2730, and a writing surface 2740. In some embodiments, the writing instrument 2730 may be a pen, a pencil, a marker, a finger, a stylus pen or any other instrument that can write information. In some embodiments, the writing surface 2740 may be a paper, a board, a touchscreen, or any other surface that can receive written information. While the writing instrument 2730 is writing on the writing surface 2740 using a tip or nib 2732, the device 2710 may detect what is written by the writing instrument 2730 based on a passive wireless writing tracking method.

In some embodiments, the device 2710 may implement functions of a writing tracking system, e.g. the mmWrite system. As shown in FIG. 27A, the device 2710 includes a transmitter 2712 and a receiver 2714, focusing a tracking area 2720. The device 2710 can monitor and track any movement in the tracking area 2720 with a great precision, and can distinguish between the movement of the tip 2732 and other movements if any.

In some embodiments, while the tip 2732 of the writing instrument 2730 is moving on the writing surface 2740 to write a word 2750, the transmitter 2712 may transmit a first wireless signal through a wireless multipath channel of the tracking area 2720. The receiver 2714 can receive a second wireless signal through the wireless multipath channel, where the second wireless signal comprises a reflection of the first wireless signal by the tip 2732 of the writing instrument 2730 in the tracking area 2720. As such, the device 2710 may obtain a time series of channel information (CI) of the wireless multipath channel based on the second wireless signal, and track a movement of the tip 2732 based on the time series of CI (TSCI).

In some embodiments, the transmitter 2712 is a Bot as described above; and the receiver 2714 is an Origin as described above. While the transmitter 2712 and the receiver 2714 are physically coupled to each other in FIG. 27A, they may be separated in different devices in other embodiments. In some embodiments, the writing surface 2740 and the device 2710 lie on a same flat surface. For example, the height of the writing surface 2740 may be adjusted to be around a zero elevation angle of the transmitter 2712, the receiver 2714 or both. In other embodiments, the writing surface 2740 and the device 2710 do not lie on a same flat surface. They may lie on two flat surfaces that are in parallel or not in parallel.

In some embodiments, the device 2710 serves like a radar, and handwriting is performed so that the writing instrument 2730 faces the radar 2710 and is the closest moving target to the radar 2710 in the tracking area 2720. In some embodiments, the writing instrument 2730 is held at its upper portion to facilitate differentiation of the reflections from the writing instrument 2730 and the hand/fingers 2770. The handwriting itself can be performed with natural writing speed using a marker on a paper/board. The TSCI, e.g. CIR time series, is recorded during the writing and is processed later by the mmWrite system of the device 2710.

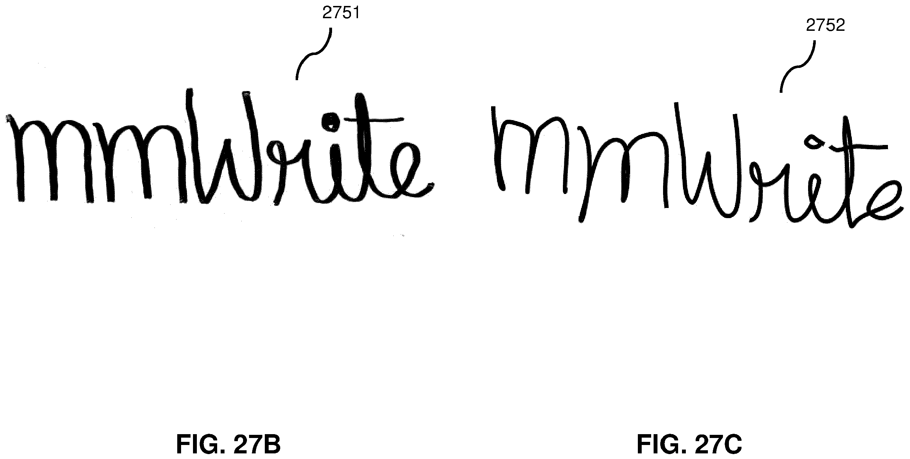

FIG. 27B illustrates an exemplary ground truth trajectory 2751 for a handwriting tracking, while FIG. 27C illustrates an exemplary reconstructed trajectory 2752 for the handwriting tracking, according to some embodiments of the present disclosure. As shown in FIG. 27B and FIG. 27C, the handwritten word "mmWrite" can be well reconstructed by the disclosed system.

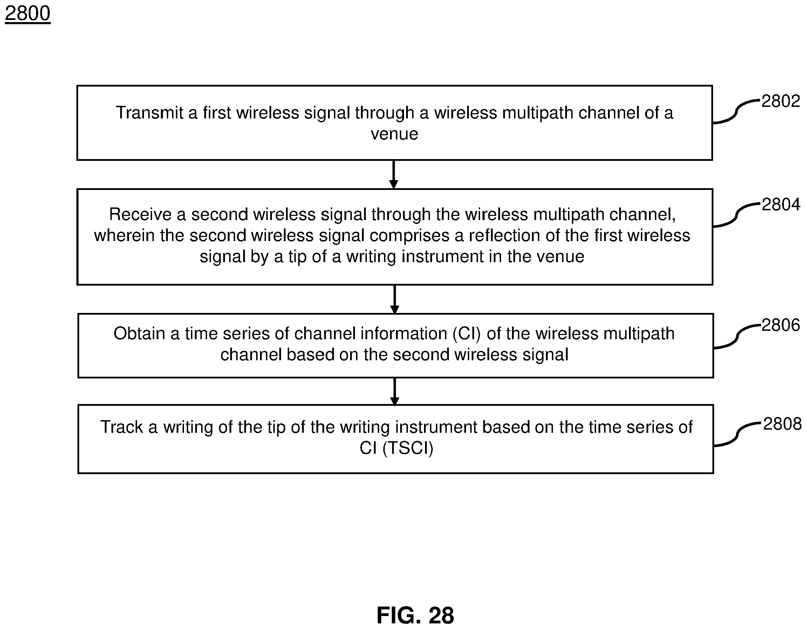

FIG. 28 illustrates a flow chart of an exemplary method 2800 for wireless writing tracking, according to some embodiments of the present disclosure. At operation 2802, a first wireless signal is transmitted from a first wireless device, e.g. a transmitter, through a wireless multipath channel of a venue to a second wireless device, e.g. a receiver. At operation 2804, a second wireless signal is received by the second wireless device through the wireless multipath channel. The second wireless signal comprises a reflection of the first wireless signal by a tip of a writing instrument in the venue. At operation 2806, a time series of channel information (TSCI) of the wireless multipath channel is obtained based on the second wireless signal, e.g. using a processor, a memory communicatively coupled with the processor and a set of instructions stored in the memory. At operation 2808, a writing (i.e. a movement) of the tip of the writing instrument is tracked based on the time series of CI (TSCI). The order of the operations in FIG. 28 may be changed according to various embodiments of the present teaching.

According to some embodiments of the present disclosure, one may implement the mmWrite system on a commodity 60GHz 802.11ad device, which is turned into a radar-like mode by attaching an extra antenna array to the radio. The performance of the mmWrite system may be validated using three different approaches. First, one may visually examine the shape-preserving capability of the mmWrite system by showing the recovered trajectories, which demonstrate that the mmWrite system can reproduce characters spanning a few centimeters that are recognizable by human eyes. Second, one may also feed the recovered trajectories to some standard handwriting recognition software, which reports an accuracy of 80% for 3 cm × 3 cm characters written at a distance of 20 cm. Finally, one may quantify the tracking error at different ranges and azimuth angles. The mmWrite system can achieve a median tracking error of 2.8 mm at a range of 20 cm from the device and can track handwriting in a region spanning about 8 $m^2$.

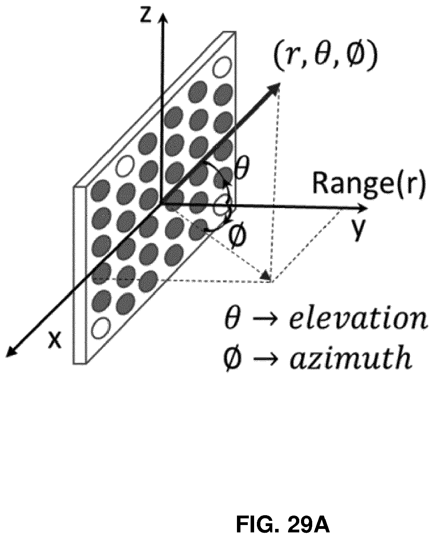

In some embodiments, the experimental testbed reuses a commodity 60GHz 802.11ad chipset as a pulsed mmWave radar by attaching an additional antenna array to the radio. The co-located Tx and Rx arrays are both equipped with 32 elements, arranged in a 6×6 grid with a separation of 3 mm between the adjacent pair of antennas. The arrangement of the 32 antennas and the coordinate system of the radar is shown in FIG. 29A.

In some embodiments, the pulsed radar transmits electromagnetic waves as discrete pulses reflected by various objects and received by the receiver antenna. A burst is a group of 32 pulses and is transmitted by one Tx. Each of the 32 received pulses is detected by the receiving antenna sequentially, and the corresponding CIR is recorded. FIG. 29B shows two bursts each including 32 pulses. The CIR is computed in the hardware sequentially by switching the antenna elements. The CIR is used as an input to the mmWrite system pipeline.

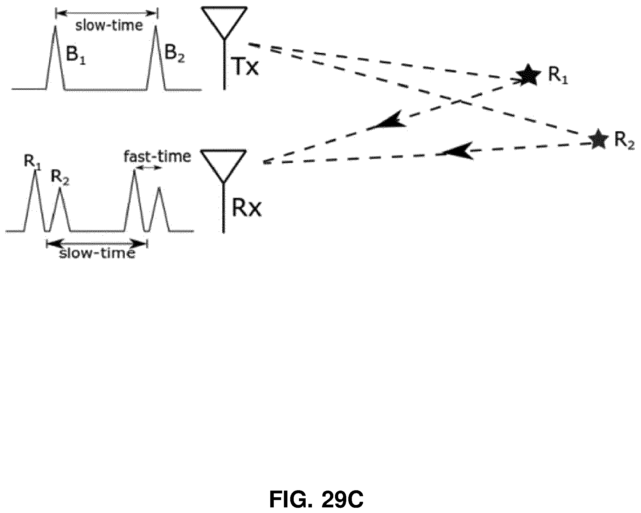

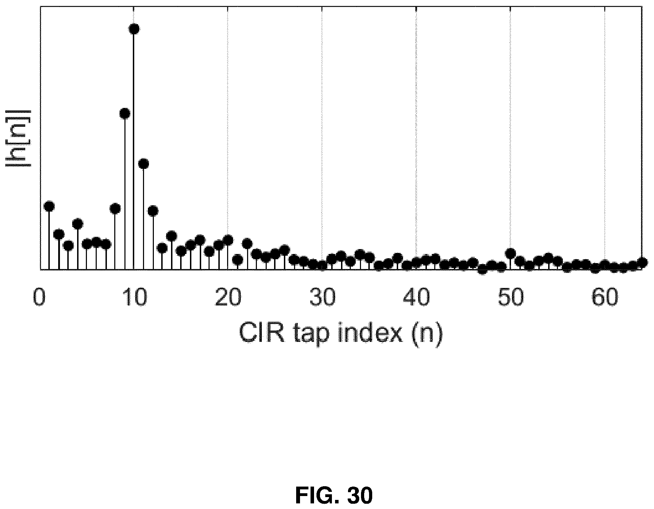

In some embodiments, two different notions of time will be used to extract information about the writing object. The burst dimension is known as a slow-time dimension while the time dimension corresponding to the CIR taps is known as a fast-time dimension. The concept of slow-time and fast-time is demonstrated in FIG.29C. Consider one Tx, one Rx and two reflectors $R_1$ and $R_2$. In the example shown in FIG. 29C, the Tx transmits two bursts, $B_1$ and $B_2$, which are reflected and received by the Rx. Here a burst includes only one pulse, as it is assumed there is only one Rx. For each burst, the two reflections from $R_1$ and $R_2$ result in different time-of-arrival (ToA) due to different path lengths which are captured on different CIR taps. For instance, FIG. 30 shows one realization of CIR h, including of 64 taps. In some embodiments, a bandwidth of BW = 3.52 GHz on the mmWave platform allows a time resolution of 0.28 ns ($\Delta t$), i.e., signals whose propagation delays differ by greater than $\Delta t$ are recorded on different taps. The CIR tap index n, can therefore give an estimate of the range of the reflector. On the other hand, the slow-time captures the temporal difference in the position of a moving target which will be used to differentiate the moving target from the static objects. In some embodiments, a time resolution of 0.28 ns corresponds to a range accuracy of $\frac{c\Delta t}{2} = 4.261$ cm, where $c$ is the speed of light. The antenna response of the antenna array is measured and available on a grid on 2 degrees in the azimuth and elevation dimensions, and hence accuracy of 2 degrees can be achieved in those dimensions.

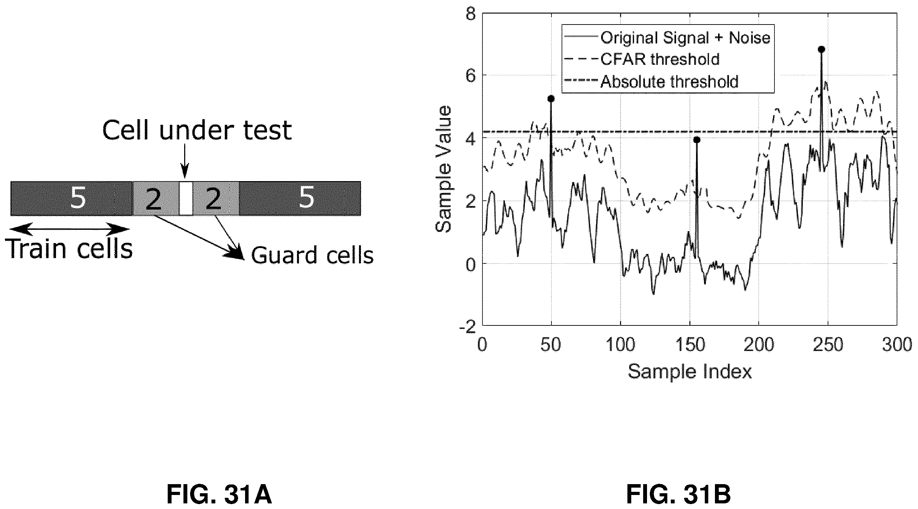

FIGS. 31A-31B illustrate a CA-CFAR (cell averaging - constant false alarm rate) technique used for target detection, according to some embodiments of the present disclosure. FIG. 31B demonstrates the CFAR technique for a one-dimensional signal. A noisy signal with three targets of interest is indicated by dots in FIG. 31B. The CFAR window is designed as shown in FIG. 31A with the guard cells as zeros and train cells as ones. This CFAR window is convolved with the signal to estimate the average noise level. An additional fixed threshold (equal to 2 in this example) is added to the estimated noise level to obtain the adaptive CFAR threshold. The locations at which the signal is greater than the CFAR threshold are identified as target locations.

Subsample Peak Interpolation (SPI) may be used to determine the location of peak of a signal at sub-sample accuracy in different applications. To include the information from the adjacent taps, one can use the parabolic interpolation technique. The circular points correspond to the discrete signal around a potential local maximum. By inspection, the center point (X=0) is considered as the location of the peak. Using a parabolic fit through the three points can help to estimate the location of the peak at sub-sample accuracy.

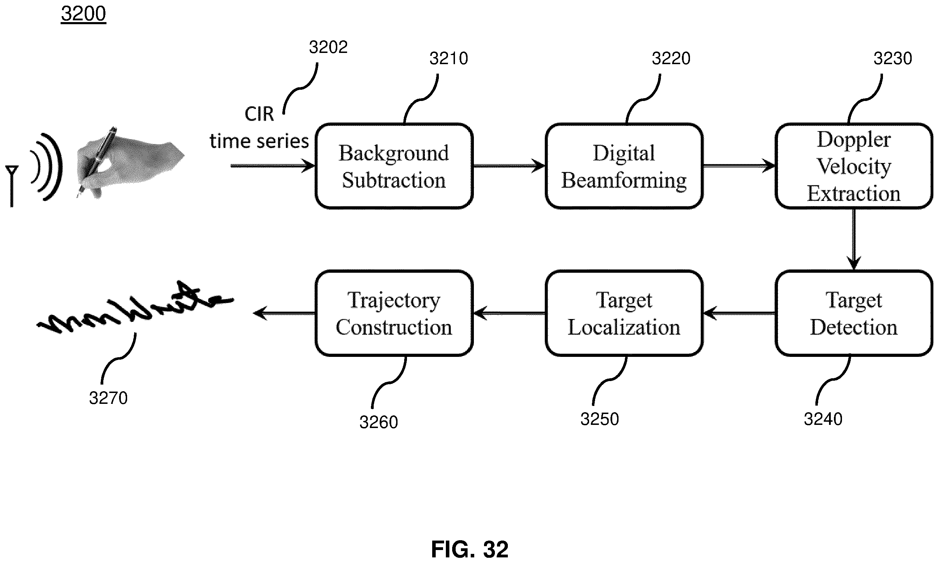

FIG. 32 illustrates a workflow for an exemplary wireless writing tracking method 3200, according to some embodiments of the present disclosure. The wireless writing tracking method 3200 may be implemented by the mmWrite system to recover a handwriting trajectory from CIR time series 3202 recorded by a radar while writing. As shown in FIG. 32, the CIR time series 3202 is processed in different operations. First, background subtraction is performed at operation 3210 to reduce the contribution of the static objects in the environment to the received signal. Next, digital beamforming is used at operation 3220 to obtain the spatial information, followed by the transformation at operation 3230 to the Doppler domain to differentiate the moving/writing object from other static objects in the environment. The target is detected using the 3D-CFAR and clutter mapping techniques at operation 3240, is further finely localized at operation 3250 within the detected spatial bins using the subsample interpolation technique. Then, the trajectory points corresponding to the target of interest are gathered and combined at operation 3260 to form a raw trajectory, which may be further smoothed using a discrete cosine transform (DCT) based smoothing technique to obtain the handwriting trajectory 3270.

Background subtraction: Let the CIR recorded by the $r$th Rx at time instance t be denoted by $h[r, n, t]$, where n is the tap index of the CIR. To highlight the target of interest (i.e., the writing object or instrument) and reduce the contribution from other static objects in the environment, the background CIR is subtracted from $\boldsymbol{h}$. In some embodiments, the background CIR is estimated by taking the average of the CIR time series along the slow-time dimension. When designing a causal system or if the duration of the handwriting is short, a calibration step may be introduced, and the background can be recorded without the writing object. The background subtraction can be mathematically written as:

$$\hat{h}[r, n, t] = h[r, n, t] - \overline{h[r, n, .]}, \qquad (B1)$$

where $\overline{h}$ is the average CIR over time and $\hat{h}$ is the CIR after background subtraction. In the following steps, the notation $\boldsymbol{h}$ will be used instead of $\hat{\boldsymbol{h}}$ to denote the CIR after background subtraction. The tap index n corresponds to the fast-time and contains information about the range of the reflecting object. There could be multiple signals from different directions at the same range, making the target identification task difficult. To address this, the received signal is spatially filtered, thereby extracting the directional information by leveraging the antenna's phased array structure. Digital beamforming thus forms the next stage of the writing tracking method.

As one has the raw CIR at each receiving element, one can perform digital beamforming to separate the target-reflected signals from other irrelevant reflection signals. The steering vector used for beamforming is available with the device. The Fraunhofer distance, which determines the near-field limit, may be calculated as 18 cm. Hence, a range greater than that can be considered a far-field.

Let K reflected signals be incident on the receiving antenna array and let $\boldsymbol{g}_k$ denote the $k$th incoming reflected signal. Let the azimuth and elevation angles corresponding to $\boldsymbol{g}_k$ be represented by $az_k$ and $el_k$ respectively. If the measured antenna response of the receiver r is denoted by $a_r$, then the combined received signal $\boldsymbol{h}$ at the receiver antenna can be modeled as:

$$h[r, n, t] = \sum_{k=1}^{K} a_r(az_k, el_k) g_k[az_k, el_k, n, t], \qquad (B2)$$

where $n$ is the CIR tap index and t is the time instance. The beamformed CIR $y$ is a four-dimensional matrix obtained by compensating for the array response as:

$$y[az, el, n, t] = a^H(az, el) h(., n, t), \qquad (B3)$$

where $a(az, el)$ is the 32-dimensional vector of antenna responses of all the receiver antennas for a signal arriving at an angle (*az,el*) and (.)$^H$ is the Hermitian operator. To simplify the notation, a vector **T** is used to denote the triplet (*az,el,n*) as follows:

$$h[r, n, t] \xrightarrow{\text{beamforming}} y[\underbrace{az, el, n}_{T=[az,el,n]}, t] = y[T, t]. \qquad (B4)$$

At this stage, the range and direction of the reflected signals can be determined from the beamformed received signal. To differentiate the writing object from other static objects in the environment, the mmWrite system can exploit its dynamic nature. Next, the beamformed CIR may be further processed to extract the velocity information of the targets.

The correspondence between the relative radial velocity of the target w.r.t. the source and the observed frequency of the received signal, from the Doppler effect, motivated one to transform the beamformed signal into the frequency domain. This transformation may be achieved by performing a Short-Time Fourier Transform (STFT) along the slow-time dimension t. The Fourier transform is applied in a window of length $w_l$ and a step size of $w_s$. A smaller value of $w_s$ increases the sampling frequency of points on the trajectory, reducing computational complexity. As $w_s$ is halved, the complexity doubles. As one may have more points on the trajectory, it can capture more drastic changes in the writing. Increasing $w_l$ improves the resolution in the frequency domain; and the instantaneous information is smoothed out. The transformation can be written as:

$$Y[T, s, f] \xleftarrow{\text{FFT}} y[T, t + (s - 1)w_s - w_l + 1 : t + (s - 1)w_s], \qquad (B5)$$

where s is the window index which is also indicative of the slow-time. As the target moves, the observed frequency of the received signal is altered due to the Doppler effect. This change in frequency ($\Delta f$) depends on the direction and speed of the moving target and is given by:

$$\Delta f = \frac{2v}{c} f_c, \qquad (B6)$$

where $v$ is the relative radial velocity of the target, $f_c$ is the frequency of the carrier wave and c is the speed of light. This correspondence between the observed frequency, $f = f_c + \Delta f$, and the target radial velocity can be shown on the transformed CIR as:

$$Y[T, s, f] \leftrightarrow Y[T, s, v]. \qquad (B7)$$

The reflected signals from the static objects in the environment contribute to the zero frequency bin of the transformed CIR, while those reflected from the moving targets contribute to the non-zero frequency bins corresponding to their relative radial velocity. Thus, to detect the moving target, i.e., the writing object, the power in the non-zero frequency bins should be analyzed. Among the non-zero frequency bins, the maximum Doppler power (P) is extracted for each spatial bin (azimuth, elevation and range) and each time instance as follows:

$$v_{T,s}^* = \underset{v \neq 0}{\text{argmax}} |Y[T, s, v]|, \qquad (B8)$$

$$P[T, s] = |Y[T, s, v_{T,s}^*]|. \qquad (B9)$$

Recall that the non-zero frequency bins of the Doppler power capture the reflected signals corresponding to the target with non-zero radial velocity. During handwriting, there may be instances when the writing object has a zero radial velocity, and P does not capture the contribution from signals of interest. The zero radial velocity could be due to one of the following reasons: (a) the speed of the target is zero, or (b) the radial component of the velocity of the target is zero, i.e., the target is moving perpendicular to the range dimension. In such instances, the Doppler power corresponding to the zero frequency bin ($P_0$) is analyzed to capture the reflected signals from the target of interest. Mathematically, this is written as,

$$P_0[T, s] = |Y[T, s, 0]|. \qquad (B10)$$

Target detection: a three-dimensional CFAR window may be used, corresponding to the range, azimuth, and elevation dimensions. A CFAR threshold map is computed for $P[T, s]$, and the spatial bins with Doppler power above the CFAR threshold are extracted. Let the 3D CFAR window be denoted by $C_{win}$ and $C_{add}$ be the additional threshold. The overall CFAR threshold matrix $C^{th}$ is given by:

$$C^{th} = C_{win} * P[.,s] + C_{add},\qquad\text{(B11)}$$

where * is the convolution operation. The Doppler power matrix after CFAR thresholding, $P^c$, is written as:

$$P^c[T,s] = \begin{cases} P[T,s], & \text{if } P[T,s] > C^{th}[T] \\ 0, & \text{otherwise.} \end{cases}\qquad\text{(B12)}$$

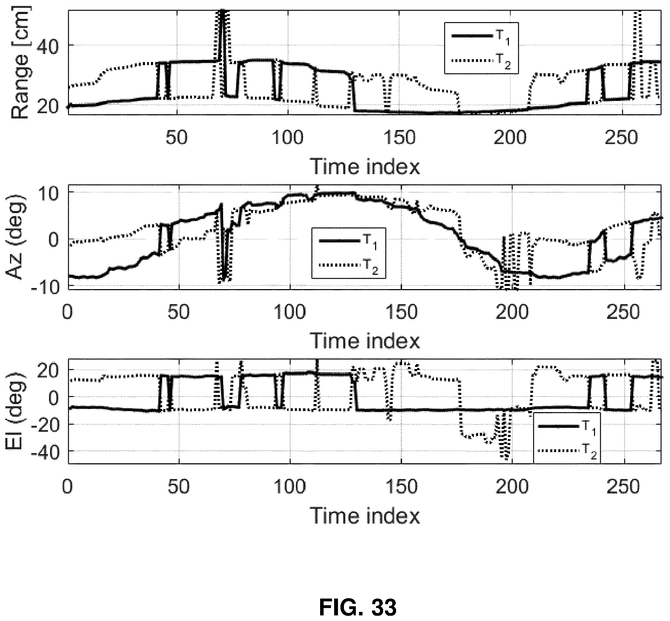

Multiple moving parts: During handwriting, at any given instance of time, different parts of the hand (or fingers, wrist, or arm) move in different directions and speeds, resulting in different radial velocities due to different inclinations. As a result, the highest Doppler power does not necessarily correspond to the target of interest (the tip of the pen, for example) at all times. For instance, FIG. 33 shows the range, azimuth, and elevation corresponding to the two highest values in the Doppler power matrix P with time. The traces $T_1$ and $T_2$ indicate the spatial information corresponding to the first and second highest Doppler power bins, respectively. As shown, two distinct target traces can be observed, and the highest Doppler power keeps switching between the two. The Doppler power at a particular spatial bin and time depends on many factors such as the instantaneous radial velocity of the dynamic target if present, the radar cross-section, material, and location of the target. To avoid misdetection of the target of interest, N targets may be detected at each instance instead of one. These N targets are identified iteratively in the decreasing order of Doppler power by comparing the Doppler power with the CFAR threshold and by nulling the region around the previously detected targets to avoid overlap of detections. The target of interest may then be identified from amongst the N targets at each time instance using a target tracking algorithm.

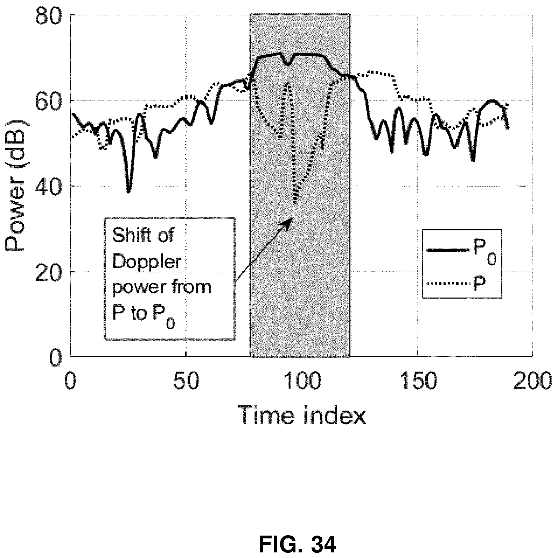

Zero radial velocity: As mentioned above, to detect a target with zero radial velocity, the Doppler power corresponding to the zero frequency bin $P_0$ needs to be analyzed. This is because, at low/zero radial velocity, the received power contributed by the target is shifted to the zero Doppler velocity bin. For example, in FIG. 34, the Doppler power corresponding to one spatial bin T is shown. Specifically, the time series $P_0[T, s]$ and $P[T, s]$ are shown with respect to s. It can be observed that when the target reaches a low radial velocity at the time indices highlighted in the figure, there is a shift in the (maximum) Doppler power from P to $P_0$. Application of CFAR target detection on $P_0$ is not effective due to reflections from irrelevant static objects in the environment, usually referred to as clutter in the radar literature. The noise level or the clutter can be estimated from the Doppler power of a particular spatial bin when the target is not present. Therefore, instead of estimating the noise from the adjacent spatial locations as in the CFAR technique, one may estimate it from the median power of a particular bin over time. Let $C_0^{th}$ denote the threshold for target detection on $P_0$. It can be written as, $C_0^{th}[T] = median(P_0[T,.])$. The Doppler power matrix after CFAR thresholding, $P_0^c$ is written as:

$$P_0^c[T,s] = \begin{cases} P_0[T,s], & \text{if } P_0[T,s] > C_0^{th}[T] \\ 0, & \text{otherwise.} \end{cases}\qquad\text{(B13)}$$

Based on the above discussions, the target detection module is designed as follows. For each time instance, one may identify a maximum of N non-overlapping probable locations of the target corresponding to the decreasing Doppler power from $P_0^c$ and $P^c$. The location coordinates corresponding to the spatial bins of the targets are stored in $T_0^*$ and $T^*$ respectively.

From the previous stage, the location bin of the target can be determined from $T^*[., s]$ at every time step. In some embodiments, since the accuracy of the estimates is limited to 2 degrees in the azimuth and elevation dimensions and 4.25 cm in the range dimension from the design of the radar, a discontinuous/quantized trajectory is obtained for characters spanning only a few centimeters. Due to the smooth and continuous nature of handwriting, it has been observed that the Doppler power "flows" gradually from one bin to another. This is leveraged to obtain finer location estimates, which can be demonstrated by a simple experiment shown below.

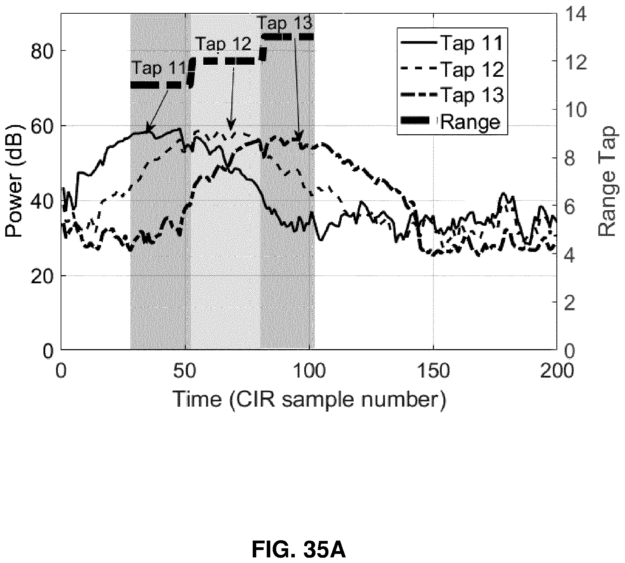

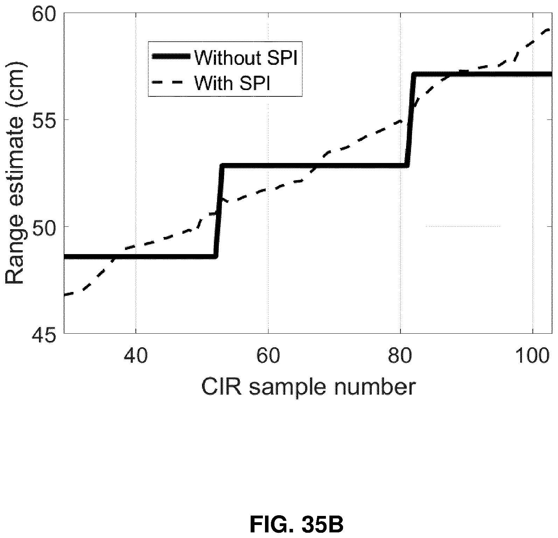

A straight line is drawn away from the device keeping the azimuth and elevation near zero and the corresponding Doppler power in the range taps is analyzed. As shown in FIG. 35A, as the target moves away from the radar, the Doppler power shifts gradually from tap 11 (46.46 cm) to tap 13 (55.38 cm). According to the disclosed method, the tap corresponding to the maximum Doppler power is considered as the range of the target. Therefore, one may get the discrete range estimates as shown in black. This observation motivated one to combine the information in adjacent taps to obtain an improved location estimate. In some embodiments, using adjacent four values near the peak is not very useful. For example, during the period when the power corresponding to tap 13 is the maximum (orange line), the power corresponding to tap 11 (purple line) is already close to the noise level. This observation motivated one to use the SPI technique to improve the location estimates. SPI is applied to the range, azimuth, and elevation dimension independently. FIG. 35B shows the range estimates before and after SPI. Interpolation using the combined information from the three dimensions could improve the estimation.

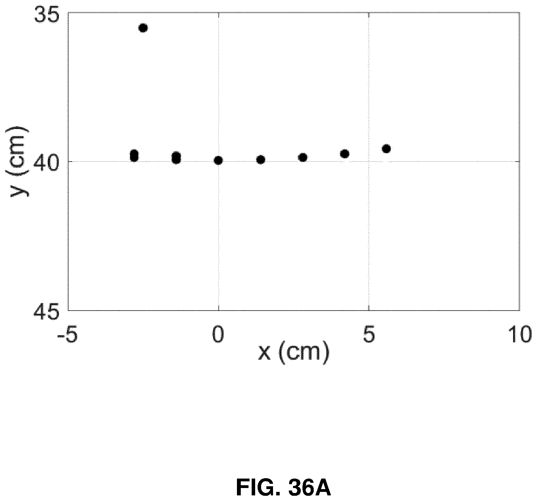

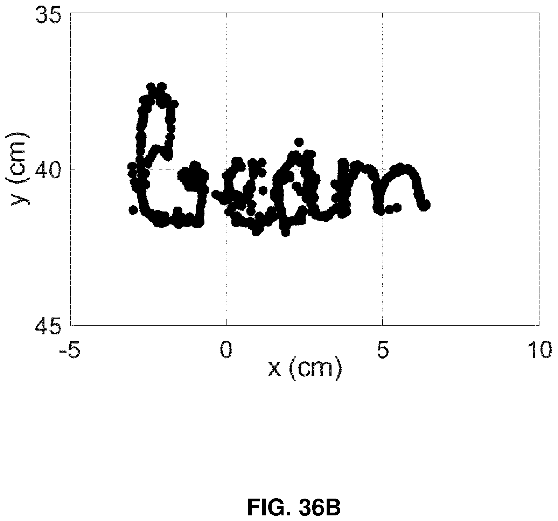

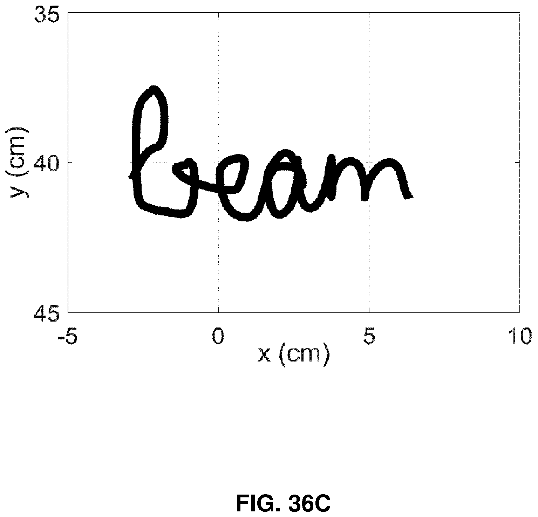

The SPI operation has a significant effect on the performance of handwriting tracking as demonstrated in FIGS. 36A-36C, since it largely boosts the spatial resolution. FIG. 36A shows discrete points of a trajectory from target detection; FIG. 36B shows finer location estimates obtained from SPI; and FIG. 36C shows the trajectory after DCT-based smoothing.

The trajectory of the word "beam" is formed by many overlapping points as shown in FIG. 36A because of the discrete location taps (range, azimuth and elevation), while the trajectory formed after SPI in FIG. 36B is readable by the naked eye. Let $T^\star_{a,b,c}[i,s] = [az^\star[i,s] + a, el^\star[i,s] + b, r^\star[i,s] + c]$, where $a, b, c$ are the index offsets in the corresponding dimensions. The final estimates of azimuth, elevation and range coordinates are obtained from the SPI as:

$$az^\star_{SI}[i,s] = \mathrm{SPI}\{P[T^\star_{-1,0,0}[i,s],s], P[T^\star_{0,0,0}[i,s],s], P[T^\star_{1,0,0}[i,s],s]\}, \tag{B14}$$

$$el^\star_{SI}[i,s] = \mathrm{SPI}\{P[T^\star_{0,-1,0}[i,s],s], P[T^\star_{0,0,0}[i,s],s], P[T^\mathring{a}_{0,1,0}[i,s],s]\}, \tag{B15}$$

$$r^\star_{SI}[i,s] = \mathrm{SPI}\{P[T^\star_{0,0,-1}[i,s],s], P[T^\star_{0,0,0}[i,s],s], P[T^\star_{0,0,1}[i,s],s]\}. \tag{B16}$$

At time instant s, the location of the $i^{th}$ moving target is given by $L[i,s] = [az^\star_{SI}[i,s], el^\star_{SI}[i,s], r^\star_{SI}[i,s]]$. Let the location estimates obtained from $T^\star_0[i,s]$ be denoted by $L_0[i, s]$. The ultimate trajectory is constructed using **L** and $\boldsymbol{L_0}$.

Trajectory construction: A trajectory tracking algorithm may be designed to extract the raw trajectory of the target of interest from **L** and $\boldsymbol{L_0}$. Following are some observations that will be used to build the algorithm. First, assuming the handwriting is on a flat surface and is smooth and is continuous, the elevation angle of the writing object does not change abruptly. This is used to define continuity of target location at two successive time instances. Second, at any given time instance, the elevation angle corresponding to the target of interest, i.e., the tip/lower part of the writing tool, is the least among all the other detected target locations. Third, if a particular location is being continuously detected for many time instances in L and suddenly disappears, there is a possibility that the target has reached a low radial velocity and is detected in $\boldsymbol{L_0}$.

In the target tracking algorithm, the target locations are read from **L** over time. The continuous trajectories are tracked and stored in a list. If a trajectory segment is continuous for more than a predefined number of time instances, then it is considered as a potential trajectory of the target of interest. If there are multiple potential trajectories, the lowest elevation trajectory may be considered as the mmWrite system trajectory. Additionally, if a trajectory suddenly becomes discontinuous after being detected as the mmWrite system trajectory for a while, then the target location may be detected in $L_0$ to determine continuity. Some of the terms used are summarized below.

CS (Continuity Score): Each detected target location is associated with a score abbreviated as CS. It is a scalar that indicates the length of the continuous trajectory detected in the previous instances of which the current location is a part.

$CS_{th}$: Threshold on the continuity score.

CTL (Continuous Target List): List of target locations detected whose CS is greater than 0.

Cont(a,b): Function to check if two locations a and b are continuous. In some embodiments, two locations detected at successive time instances are treated to be continuous if the elevation angle does not change significantly.

In some embodiments, the trajectory tracking algorithm also removes outliers that result from sudden changes in the point of reflection or missed targets. The tracked target locations with time are stored in the vector **W.** A raw trajectory can be formed by combining all the estimates. Such a trajectory is noisy and an example is shown in FIG. 36B. To obtain a smoother trajectory, one may adopt a smoothing technique based on the Discrete Cosine Transform (DCT). The idea is to compute the DCT of the noisy data and inverse transform to the data domain while preserving only the significant coefficients. By doing so, one may discard the insignificant coefficients that account for the noisy and irrelevant part of the signal, thereby obtaining a smooth trajectory. Mathematically, the recovered writing trajectory, $\hat{W}$ is given by,

$$\hat{W} = \text{IDCT}(\tau\text{DCT}(W)), \qquad\qquad (B17)$$

Here, IDCT is the inverse discrete cosine transform, and $\tau$ is a diagonal matrix whose entries are given by,

$$\tau_{i,j} = \begin{cases} [1 + s(2 - 2\cos(\frac{(i-1)\pi}{n}))^2]^{-1} & i = j, \\ 0 & i \neq j, \end{cases}$$

where n is the number of data points and s is the smoothing factor. The DCT coefficients of the data points are scaled by the matrix $\tau$ in the transform domain. The scaled coefficients are converted back to the data domain using the IDCT. In some embodiments, the trajectory smoothing is achieved by the scaling matrix $\tau$ with the smoothing factor s and the cosine factor which imposes decreasing weights to the DCT coefficients. An example of the smoothed trajectory after DCT-based smoothing ($\hat{W}$) is shown in FIG. 36C.

The performance of the mmWrite system may be evaluated using three different approaches: visual inspection and shape matching; character recognition accuracy; and tracking accuracy.

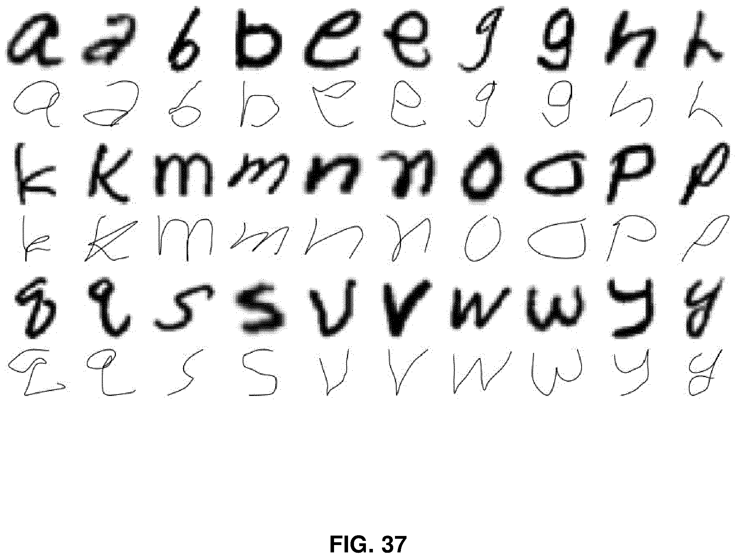

Visual inspection and Shape matching: A valid handwriting tracking system should be able to preserve the relative shape of the handwriting trajectory that is legible to humans or recognizable by any standard handwriting recognition software. One may assess this by visually comparing the ground-truth handwritten trajectories and the recovered trajectories by the mmWrite system. In one experiment, randomly selected English alphabets are printed and traced within an area about 5 cm × 5 cm on an A4 paper with a marker. FIG. 37 shows two versions of different English alphabets with the first, third and fifth row showing the ground truth character images, and with the second, fourth and sixth rows showing the recovered characters. It can be confirmed that the relative shapes of the alphabets are well preserved by the mmWrite system, and are visually similar to those of the ground-truth handwriting, and can be recognized by humans confidently. Additionally, one can evaluate the shape similarity using shape context. In some embodiments, classification using shape context can achieve an accuracy of 96.6% on the characters shown in FIG. 37.

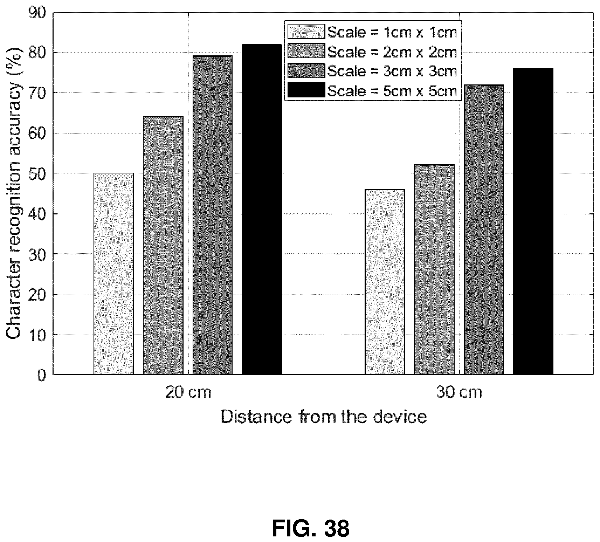

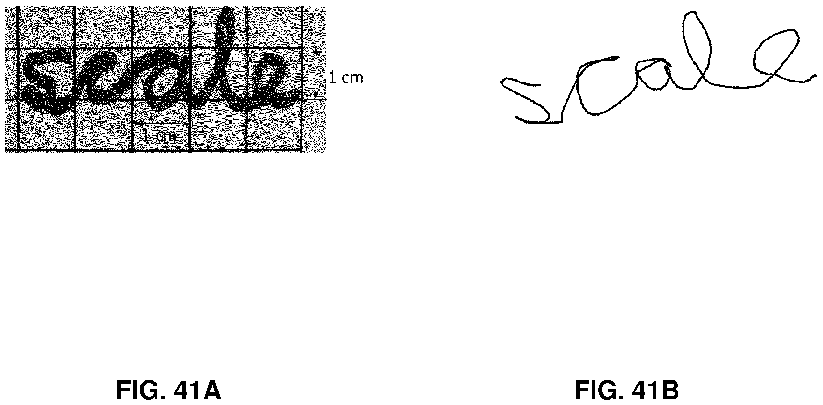

Character recognition accuracy: It would be interesting to see how good the recovered characters could be recognized by standard handwriting recognition tools. To evaluate that, one can write English alphabets in different sized grids and at different distances from the device. For each scenario, one can randomly pick 50 alphabets and trace their trajectories on a paper. The trajectories obtained by the mmWrite system are then exported to control the mouse pointer and are then fed to standard handwriting recognition software. The character recognition accuracy reported by the software is recorded and shown in FIG. 38. It can be observed from FIG. 38 that the accuracy decreases with distance from the device and increases with the scale of handwriting. This is because of the decreasing cross-range accuracy. For instance, the character recognition accuracy for characters written within 3 cm x 3 cm is 80% and 72% at distances 20 cm and 30 cm respectively. The accuracy for the same distance of 20 cm is 80% and 82% for scales of 3 cm x 3cm and 5 cm x 5 cm respectively. As shown in FIG. 41A and FIG. 41B, the tracked characters, even written in really small scales (1 cm × 1 cm), can still be easily read by human eyes, although they might not be accurately recognized by standard software. FIG. 41A shows an actual trajectory in a grid of 1 cm x 1 cm; and FIG. 41B shows the corresponding reconstructed trajectory.

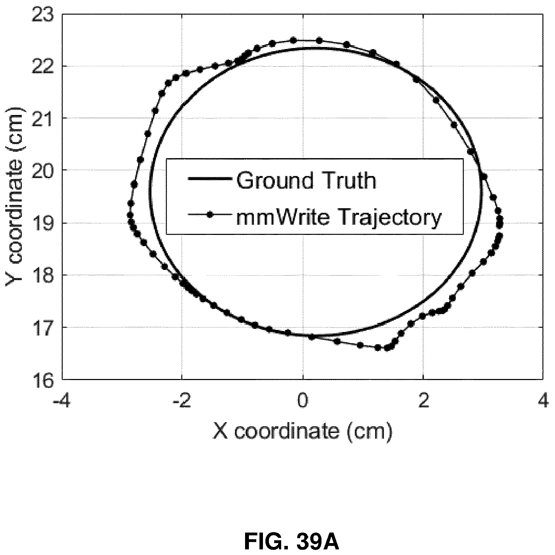

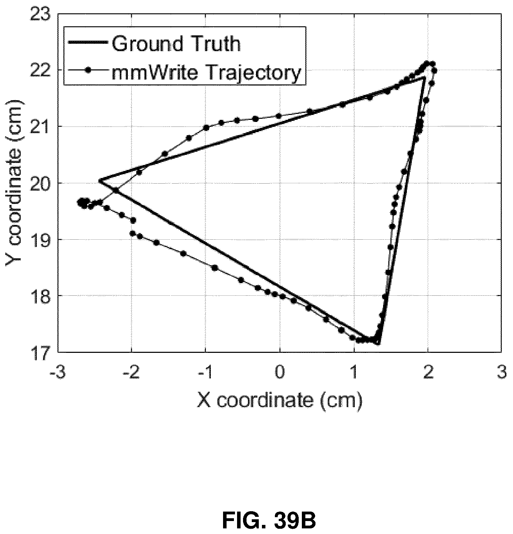

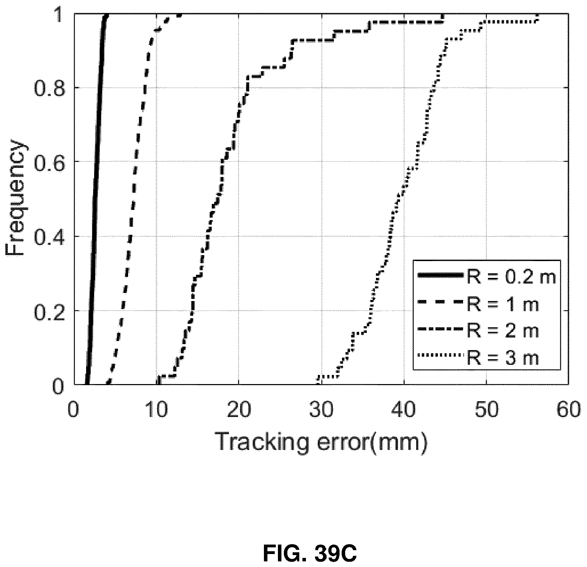

FIGS. 39A-39C illustrate exemplary ground truth and reconstructed trajectories of different shapes, according to some embodiments of the present disclosure. FIG. 39A illustrates the case of a circle; FIG. 39B illustrates the case of a triangle; and FIG. 39C illustrates the cumulative distribution function (CDF) of tracking error.

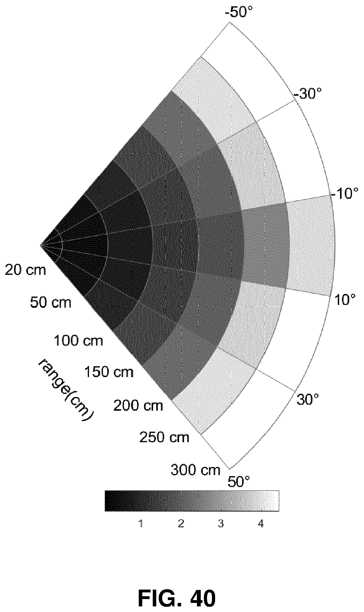

Tracking accuracy: The distance from the device affects the tracking performance due to the reduced cross-range accuracy. This can be observed from the CDF of the tracking errors shown in FIG. 39C where the tracking error increases with distance from the radar (R). To further gauge the influence of range and azimuth angles on the tracking error, one can repeat the above experiment for different ranges and azimuth angles. FIG. 40 shows the resultant error map. In this example, the median tracking error increases from about 3 mm at a range of 20 cm to 40 mm at a range of 3 m. The tracking error also slightly increases with the azimuth angle at any given range. In some embodiments, the reflected power from the tiny writing object is too weak to be detected by the radar, beyond a range of 3 m. In addition, the target cannot be detected beyond an azimuth angle of 50-55 degrees due to the hardware limitations. FIG. 40 has demonstrated that the mmWrite system can already cover an area of about 8 m$^2$.

According to various embodiments of the present teaching, millimeter wave (mmWave, e.g. 28 GHz or 60GHz or 77GHz) signals are used or re-used between a mmWave transmitter and a mmWave receiver to track a writing on a flat surface. A disclosed system exploits reflection characteristics (e.g. reflectivity) of the mmWave signal at the tip of the writing instrument. As such, the transmitter and the receiver can be on the same side of the material, instead on two different sides of the material. The transmitter (transmitting device of the system with a processor/memory/software) and the receiver (receiving device of the system) may or may not be on a same device. The transmitter and/or receiver may each have an antenna array including distributed antennas. There may be multiple receivers each receiving the mmWave signal from the transmitter. There may be multiple transmitters each transmitting a respective mmWave signal to the receiver. There may be multiple transmitters and multiple receivers, where each transmitter transmits a respective mmWave signal to one or more receivers.

The device may have a commodity mmWave networking or communication chip/chipset which may operate in a radar mode enabled by attaching an extra antenna array to the chipset. It may use the chip/chipset to transmit the mmWave signal using a transmitting radio, and to receive the reflected mmWave signal using a receiving radio. The chip may transmit/receive simultaneously or contemporaneously. The chip may switch rapidly between transmitting and receiving to simulate or mimic "simultaneous" transmitting/receiving.

The CI (or CSI or CIR or CFR) or MRF may be preprocessed/processed/postprocessed by (a) CI interpolation, (b) CI synchronization, (c) background/noise cancellation, (d) target detection. The CI (or CSI or CIR or CFR) or MRF may be preprocessed/processed by (1) interpolation to increase temporal resolution (with finer temporal details) of CI, (2) synchronization (e.g. direct path based), (3) background cancellation and/or noise cancellation to eliminate hardware distortion and measurement noise, (4) spatial diversity attributed by large antenna arrays to facilitate robustness.

The CI may be interpolated using linear interpolation, piecewise constant interpolation, polynomial interpolation, spline interpolation, fractional interpolation, extrapolation, and/or another interpolation. The interpolation may be performed in complex domain, real domain, imaginary domain, magnitude domain, and/or phase domain.

The transmitter and the receiver may be on the same device such that there may be direct leakage (line-of-sight/LOS transmission) between the transmitter and receiver leading to a very strong leakage pulse (e.g. observable in the CI, or CIR, or CFR) with a very strong local maximum of the magnitude (or magnitude square or any monotonic increasing function of magnitude) of CI.

In some embodiments, each pair of transmitting antenna and receiving antenna gives rise to a time series of CI (TSCI). Different TSCIs may not be synchronized and may exhibit different patterns due to different multipath propagation. The TSCIs may be synchronized by (i) searching for local/global maxima of each TSCI (or each time series of features of CI, the features being magnitude, magnitude square, time average, moving average, moving median, weighted average, autoregressive moving average (ARMA), correlation, a function of one or more of the previous, and/or other features) corresponding to the powerful direct leakage pulse and (ii) aligning the TSCI by aligning the associated local/global maxima.

Alternatively, one particular TSCI may be chosen as a reference TSCI, and a local maximum of the reference TSCI (or the associated features) corresponding to direct leakage may be identified. A time window of CI (i.e. a section of the reference TSCI) encompassing the high-energy direct leakage pulse shape (possibly including some past CI, but not future CI - to avoid including effects of multipaths from target surface) may be chosen as a reference window. The length of the time window may be associated with pulse width of the leakage pulse. Any other TSCI may be synchronized with respect to the reference TSCI by aligning the reference window to a corresponding time window of the other TSCI that gives maximum cross correlation or cross covariance.

By performing the CI interpolation before the CI synchronization, the synchronization may be performed in the higher sampling rate of the interpolated CI and thus at higher precision.

To perform background/noise (including direct leakage, internal reflection, measurement noise and background reflection) cancellation, the user may point the antenna array with no target in the field of interest (e.g. by removing the target and pointing the antenna array into air) and capture the CI for each pair of transmit antenna and receive antenna (which is effectively "background CI" which does not have effects of the target) associated with a respective TSCI. Multiple measurements may be taken and characteristic values (e.g. simple mean, weighted average, trimmed mean, median) may be taken as a robust estimate of the background CI. This process of obtaining background CI may be called "calibration" and may be performed once. The calibration may be a self-calibration as the system can detect if there is a target within the range of interest. Distant objects may not affect the material sensing as the distant objects are typically out of range of interests.

The background CI may be scaled and then subtracted from the respective TSCI. The scaling factor may be obtained by best-fitting (e.g. mean square error, mean absolute error, etc.) in a window encompassing the direct leakage profile (possibly including some past CI, but not future CI - to avoid including effects of multipaths from target surface).

Alternatively, the background CI (for each link or each pair of transmit antenna and receive antenna) may be replaced by a common background CI obtained/computed for all pairs of transmit antennas and receive antennas.

In some embodiments, a wireless tracking method includes steps s1 to s7 as described below.

At step s1: a time series of CIR is captured using multiple transmit (Tx) antennas and multiple receive (Rx) antennas.

At step s2: the contribution (e.g., the sum of the reflected signals) from the static environment (comprising all the static objects) is reduced in the CIR captured with the moving object (e.g., a pen/marker/hand) by performing background subtraction, which includes s2a and s2b. At step s2a: background CIR may be estimated by time-averaging the CIR without a moving object for each tap (i.e., range) and Rx. At step s2b: background CIR may be directly subtracted from the CIR associated with a moving object (e.g., a pen/marker/hand).

At step s3: beamforming may be applied to get directional CIR. Steps s2 and s3 may be swapped, where the background CIR may be estimated by time-averaging the CIR without moving object for every direction.

At step s4: for each time instance, s and for each direction, the reflected power from the moving and static objects may be differentiated based on their velocities, which includes steps s4a and s4b. The dominant power in each direction contributed independently by both the static and moving objects may be determined and saved separately (P and Po).

At step s4a: For each direction, Fourier transform may be applied along a moving window of CIR time series (e.g. Short Time Fourier Transform) to obtain the contribution from different frequencies. The Doppler effect may be used to differentiate the contributions from static and moving objects using the power of the zero and non-zero frequencies, respectively.

At step s4b: for each direction, perform steps s4b1 and s4b2. At step s4b1: the highest non-zero frequency power may be stored and may correspond to the moving object of interest (i.e., pen/marker/hand), i.e., P. At step s4b2: the power of the zero-frequency may be stored, i.e., Po, and may correspond to either a static object or a static instance of a moving object.

At step s5: determine the approximate direction (i.e., the location using the azimuth, elevation, and range coordinates) for multiple objects (N) of interest using the N highest spatially separated power values from the two dominant power matrices saved in step s4, which includes steps s5a to s5c. At step s5a: threshold the dominant non-zero power matrix in each direction. The threshold may be computed using a three-dimensional CFAR or an adaptive threshold. At step s5b: threshold the zero-power matrix using the same approach as in s5a. At step s5c: find the location of the top N objects from the indices of the highest N spatially separated power values. A separation threshold may separate the locations of the objects, Δ in each of the three dimensions. Repeat the same for the zero power case.

At step s6: estimate the locations of all the N targets in step s5 with a finer resolution, maybe using an interpolation technique. Parabolic/linear/sinc interpolation may be used in each dimension (i.e., azimuth, elevation, and range) independently or combined in multiple dimensions. Steps s4 to s6 may be repeated for each time instance.

At step s7: from the N locations corresponding to each of dynamic and static targets/objects at each time instance, s, determine the location of the target of interest (TOI), which includes steps s7a to s7d. The locations at different time instances of TOI may be joined to form a trajectory of the moving object (e.g., the handwriting trajectory drawn with a pen/marker/hand).

At step s7a: two locations at adjacent time instances may be treated as continuous if they are closer than a threshold. The threshold may be defined independently in each dimension or only in the elevation dimension.

At step s7b: continuous target locations may be stored, and a continuity score may be calculated to store the continuity length. Locations with a continuity score greater than a threshold may be taken as potential TOI locations. If multiple locations satisfy the continuity threshold criterion, the location with the lowest elevation angle may be preferred and taken as the location of TOI at that time instance.

At step s7c: If a dynamic target location with a significant continuity score (i.e., greater than a threshold) disappears at any time instance, it may be worth checking the N static target locations for continuity. If such a location is found, it may be the location of TOI at that time instance. The steps s7a to s7c may be repeated for each time instance, s.

At step s7d: raw handwriting trajectory may be obtained by merely joining all the TOI location estimates determined in steps s7a to s7c for each time instance, s. A smooth trajectory may be obtained using outlier removal methods such as median filtering. The smoothing may be performed using interpolation or moving average. The noisy portion of the trajectory may be filtered using transform methods such as the cosine transform and discarding higher frequency components or using weighted average while transforming back to the signal domain.

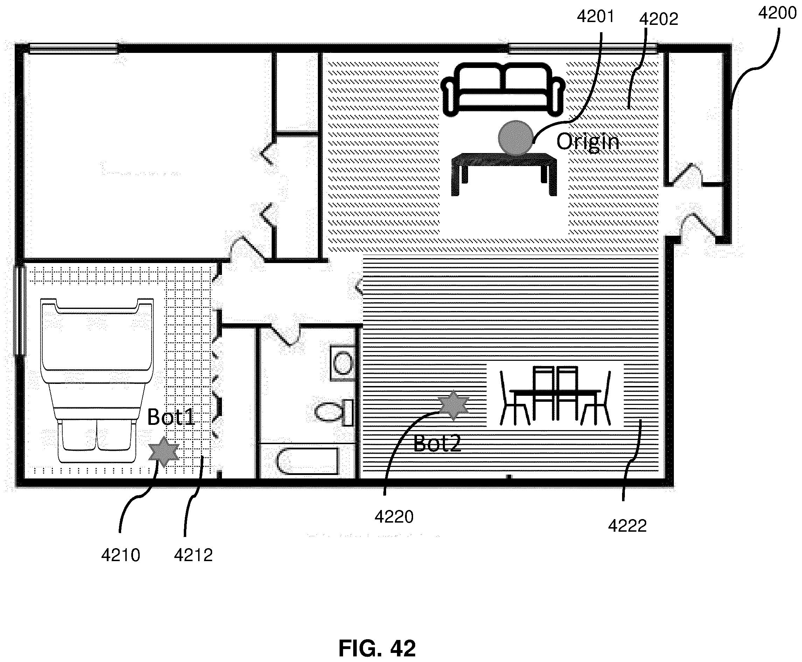

FIG. 42 illustrates an exemplary scenario where object motion is detected based on channel state information in a venue, according to one embodiment of the present teaching. For example, as shown in FIG. 42, in a 2-bedroom apartment 4200, Origin 4201 may be placed in the living-room area 4202, Bot 1 4210 may be placed in a bedroom1-area 4212, and Bot 2 4220 may be placed in the dining-room area 4222. Each of Bot 1 4210 and Bot 2 4220 can transmit a wireless signal to the Origin 4201, which can obtain channel information of a wireless multipath channel based on the wireless signal. The Origin 4201, by itself or through a third device like a motion detector, can compute motion information based on the channel information and detect object motion/activity based on the motion information. That is, the Origin 4201, by itself or through a third device like a motion detector, can detect object motion/activity based on wireless signals transmitted by Bot 1 4210 and/or Bot 2 4220.

If object motion/activity is detected based on wireless signals transmitted by both Bot 1 4210 and Bot 2 4220, the activity/motion or the object (e.g. person/user) may be in the living-room area 4202. If object motion/activity is detected based only on wireless signals transmitted by Bot 1 4210, the activity/motion or the object (e.g. person/user) may be in the bedroom-1 area 4212. If object motion/activity is detected based only on wireless signals transmitted by Bot 2 4220, the activity/motion or the object (e.g. person/user) may be in the dining-room area 4222. If object motion/activity cannot be detected based on wireless signals transmitted by either Bot 1 4210 or Bot 2 4220, then it may be determined that nobody and no object is in the apartment 4200. The corresponding area where the activity/motion/person/user is detected may be marked with a predetermined pattern.

Bot(s) and Origin(s) may also be utilized in a wireless monitoring system for monitoring an object or detecting an event to trigger an assistance device or a digital assistance system, e.g. a smart speaker or a smart assistant, such as Google home, Amazon Alexa, etc. With the outcome of a wireless monitoring system, it is possible to automatically trigger and/or adjust the operation of a digital assistance system, e.g., turn on or adjust the operation of the digital assistance system upon motion detection, motion disappearance, motion localization, etc. The wireless monitoring system together with an assistance device may be referred to as an automatic assistant system.

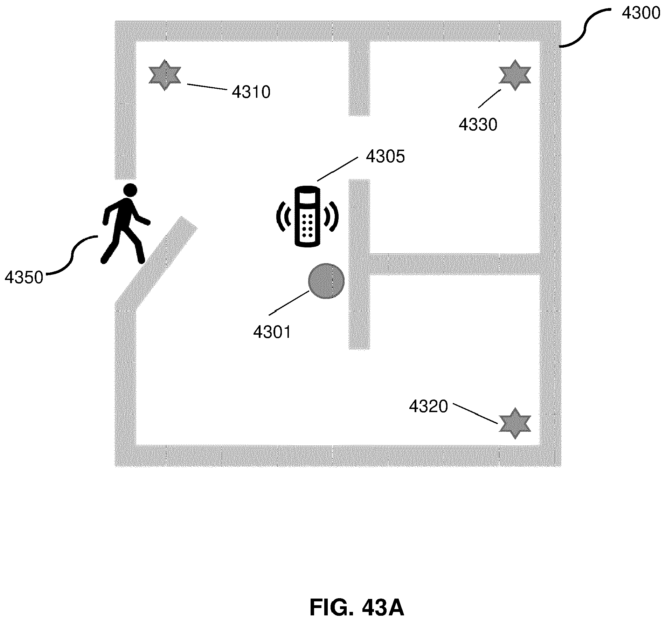

FIG. 43A illustrates an exemplary function of an automatic assistant system, according to some embodiments of the present disclosure. As shown in FIG. 43A, an automatic assistant system may be used to detect and monitor a person entering a house 4300. The person may be any one of: an illegitimate user like intruder or thief, a legitimate user like the house owner or house resident. For example, based on wireless signals transmitted between Bots 4310, 4320, 4330 and Origin 4301 of the automatic assistant system, the system can identify a motion of an object 4350 entering the house 4300. In one embodiment, the system includes an assistance device 4305 communicatively coupled to the Origin 4301. The assistance device 4305 may or may not be physically coupled to the Origin 4301.

Based on the detection and/or monitoring of the object motion, the assistance device 4305 can try to communicate with the object (person 4350), and/or automatically generate an assistance based on the communication (or attempt of communication, same below). In one example, after the assistance device 4305 determines that the person 4350 is the house owner based on the communication, the assistance device 4305 may turn on light in the house automatically. In another example, after the assistance device 4305 determines that the person 4350 is an intruder based on the communication, the assistance device 4305 may turn on an alarm and/or call 911 or other predetermined numbers automatically for help.

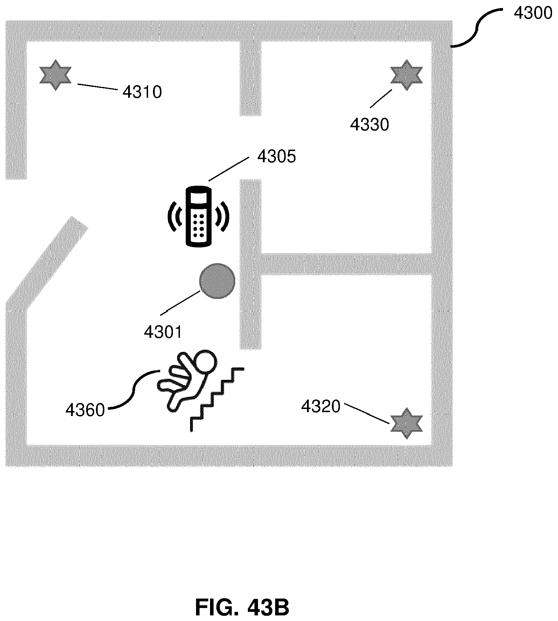

FIG. 43B illustrates another exemplary function of an automatic assistant system, according to some embodiments of the present disclosure. As shown in FIG. 43B, the automatic assistant system may also be used to detect and monitor a person's sudden motion, e.g. a fall down, in the house 4300. The person 4360 may be the house owner or a house resident. For example, based on wireless signals transmitted between Bots 4310, 4320, 4330 and Origin 4301 of the automatic assistant system, the system can identify a fall down of the person 4360. Based on the detection of the fall down, the assistance device 4305 can try to communicate with the person 4360, and/or automatically generate an assistance based on the communication. In one example, after the assistance device 4305 determines that the person 4360 does not need help based on the communication, the assistance device 4305 may turn on more light or adjust temperature of the house based on a predetermined configuration. In another example, after the assistance device 4305 determines that the person 4360 has fainted and/or needs help immediately based on the communication, the assistance device 4305 may call 911 or other predetermined numbers automatically for help.

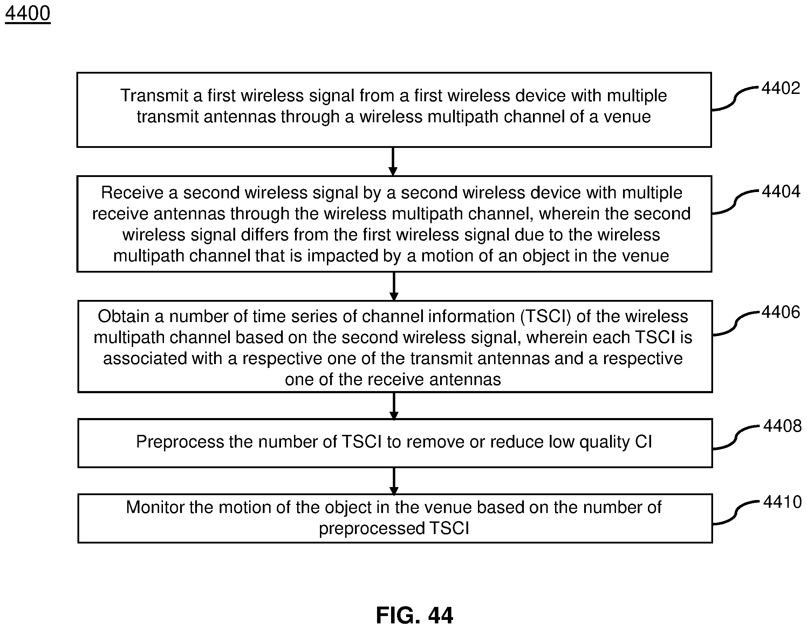

FIG. 44 illustrates a flow chart of an exemplary method 4400 of an accurate wireless monitoring, according to some embodiments of the present teaching. At operation 4402, a first wireless signal is transmitted from a first wireless device with multiple transmit antennas through a wireless multipath channel of a venue. At operation 4404, a second wireless signal is received by a second wireless device with multiple receive antennas through the wireless multipath channel. The second wireless signal differs from the first wireless signal due to the wireless multipath channel that is impacted by a motion of an object in the venue. At operation 4406, a number of time series of channel information (TSCI) of the wireless multipath channel is obtained based on the second wireless signal, e.g. using a processor, a memory communicatively coupled with the processor and a set of instructions stored in the memory. Each TSCI is associated with a respective one of the transmit antennas and a respective one of the receive antennas. At operation 4408, the number of TSCI is preprocessed to remove or reduce low quality CI. At operation 4410, the motion of the object in the venue is monitored based on the number of preprocessed TSCI. The order of the operations in FIG. 44 may be changed according to various embodiments of the present teaching.

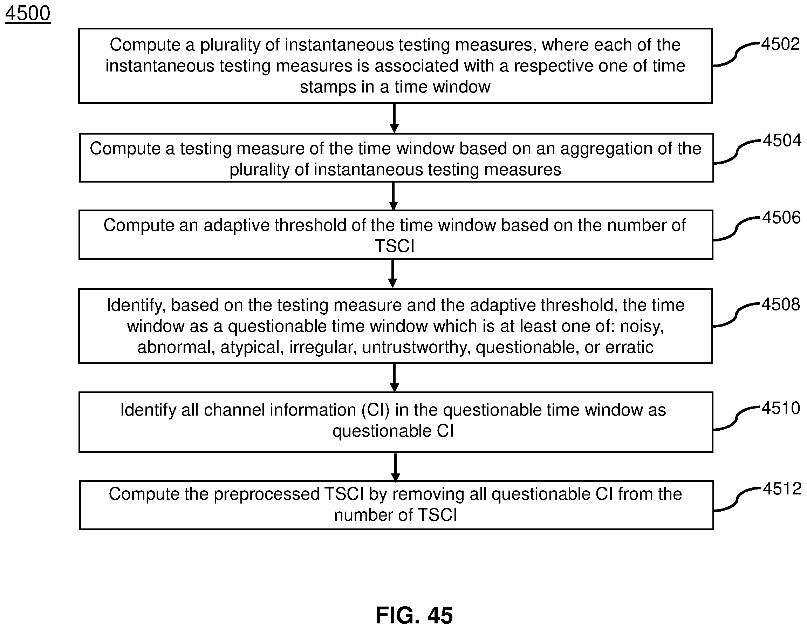

FIG. 45 illustrates a flow chart of an exemplary method 4500 for preprocessing the time series of channel information (TSCI), e.g. the operation 4408 in FIG. 44, for accurate wireless monitoring, according to some embodiments of the present teaching. At operation 4502, a plurality of instantaneous testing measures is computed, where each of the instantaneous testing measures is associated with a respective one of time stamps in a time window. At operation 4504, a testing measure of the time window is computed based on an aggregation of the plurality of instantaneous testing measures. At operation 4506, an adaptive threshold of the time window is computed based on the number of TSCI. At operation 4508, based on the testing measure and the adaptive threshold, the time window is identified as a questionable time window which is at least one of: noisy, abnormal, atypical, irregular, untrustworthy, questionable, or erratic. For example, the time window may be identified as the questionable time window when the testing measure exceeds the adaptive threshold. At operation 4510, all channel information (CI) in the questionable time window are identified as questionable CI. At operation 4512, the preprocessed TSCI is computed by removing all questionable CI from the number of TSCI. The order of the operations in FIG. 45 may be changed according to various embodiments of the present teaching.

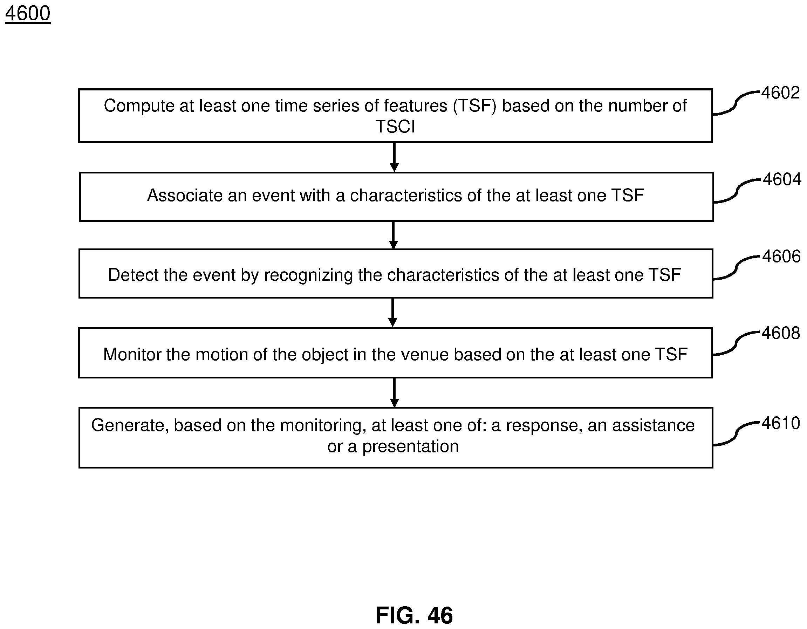

FIG. 46 illustrates a flow chart of an exemplary method 4600 for an accurate wireless monitoring, according to some embodiments of the present teaching. In one embodiment, the exemplary method 4600 can be implemented as the operation 4410 in FIG. 44. At operation 4602, at least one time series of features (TSF) is computed based on the number of TSCI. At operation 4604, an event is associated with a characteristics of the at least one TSF. At operation 4606, the event is detected by recognizing the characteristics of the at least one TSF. At operation 4608, the motion of the object in the venue is monitored based on the at least one TSF. At operation 4610, based on the monitoring, at least one of: a response, an assistance or a presentation is generated. The order of the operations in FIG. 46 may be changed according to various embodiments of the present teaching.

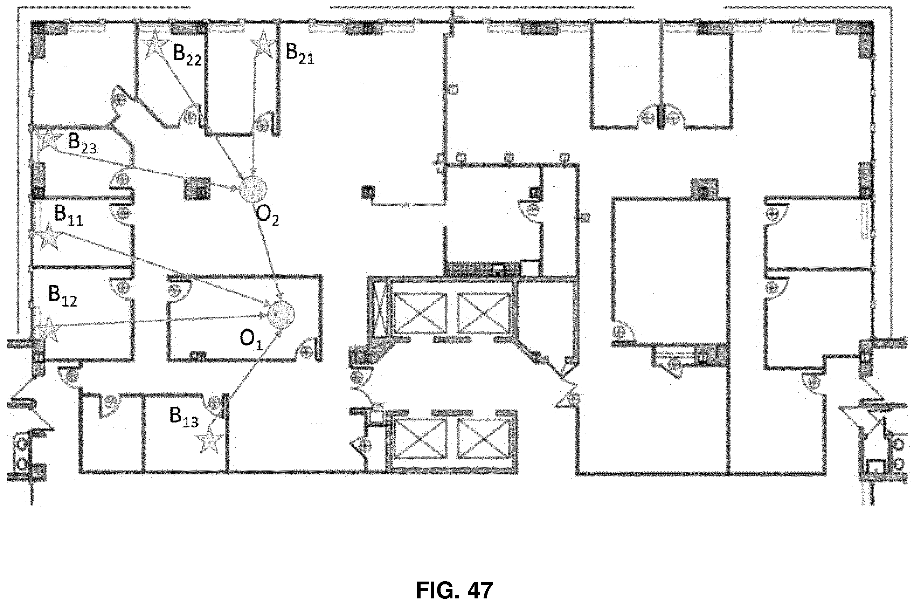

FIG. 47 illustrates an exemplary floor plan and placement of wireless devices for wireless monitoring with motion detection and localization, according to some embodiments of the present disclosure. In the example shown in FIG. 47, there are two origins O1 and O2. Each origin is associated with three bots. For example, O1 is associated with bots B11, B12, and B13; and O2 is associated with bots B21, B22, and B23. Each device of the bots and origins is fixed at a different location. In one embodiment, the origin O1 is called a master origin; and the origin O2 is called a child origin, where the child origin can transmit statistics and information to the master origin for combination.

In some embodiments, the floor plan and placement of wireless devices in FIG. 47 can be used to perform multi-person or multi-object motion localization based on motion statistics. When there are two or more origins, motion statistics measured from different links of different origins are combined to contribute together to the motion localization. For each activated bot, it is determined which origin the bot is associated with, e.g. based on a smoothed motion statistics in a time window. For example, when the smoothed motion statistics of Bot k with respect to Origin j is larger than a threshold, Bot k is determined to be associated with Origin j. The same threshold can be used for other origins. Thus, for each origin, a set of activated bots associated with the origin can be determined. A likelihood is calculated for each activated bot k to detect a motion, and is smoothed over a time window. For each origin group including an origin and its associated bots, an average motion statistics is computed for the origin group across all the associated bots. Each calculation or computation above can be performed at the origin or the bot.

When there is any motion detected in the environment, an origin group with the highest average motion statistics is chosen. When the average motion statistics of the chosen origin group is larger than a threshold, the motion is determined to be around the origin of the group. Otherwise, when the average motion statistics of the chosen origin group is not larger than a threshold, the motion is determined to be around the bot with the highest likelihood within the origin group.

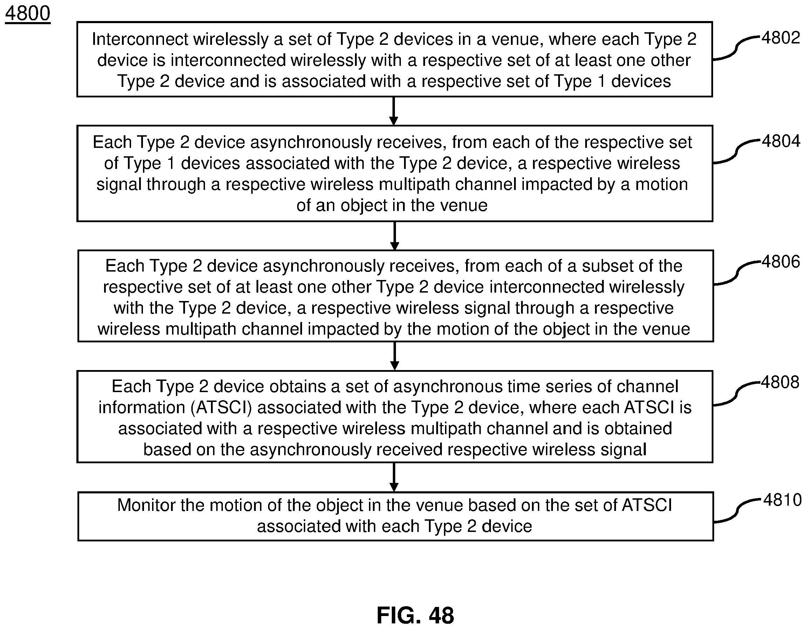

FIG. 48 illustrates a flow chart of an exemplary method for wireless monitoring with motion detection and localization, according to some embodiments of the present teaching. At operation 4802, a set of Type 2 devices in a venue are interconnected wirelessly, such that each Type 2 device is interconnected wirelessly with a respective set of at least one other Type 2 device and is associated with a respective set of Type 1 devices. At operation 4804, each Type 2 device asynchronously receives, from each of the respective set of Type 1 devices associated with the Type 2 device, a respective wireless signal through a respective wireless multipath channel impacted by a motion of an object in the venue. At operation 4806, each Type 2 device asynchronously receives, from each of a subset of the respective set of at least one other Type 2 device interconnected wirelessly with the Type 2 device, a respective wireless signal through a respective wireless multipath channel impacted by the motion of the object in the venue.

In some embodiments, for each pair of two interconnected Type 2 devices, only one Type 2 device receives a wireless signal from the other Type 2 device. As such, for each given Type 2 device, it may receive a wireless signal from each Type 2 device in a corresponding subset of the Type 2 device(s) interconnected wirelessly with the given Type 2 device. In some embodiments, one or more Type 2 devices may not receive any wireless signal from another Type 2 device, although the one or more Type 2 devices may transmit wireless signals to another Type 2 device. In other words, the subset can be an empty set for one or more Type 2 devices.

At operation 4808, each Type 2 device obtains a set of asynchronous time series of channel information (ATSCI) associated with the Type 2 device, where each ATSCI is associated with a respective wireless multipath channel and is obtained based on the asynchronously received respective wireless signal. At operation 4810, the motion of the object in the venue is monitored based on the set of ATSCI associated with each Type 2 device. The order of the operations in FIG. 48 may be changed according to various embodiments of the present teaching.

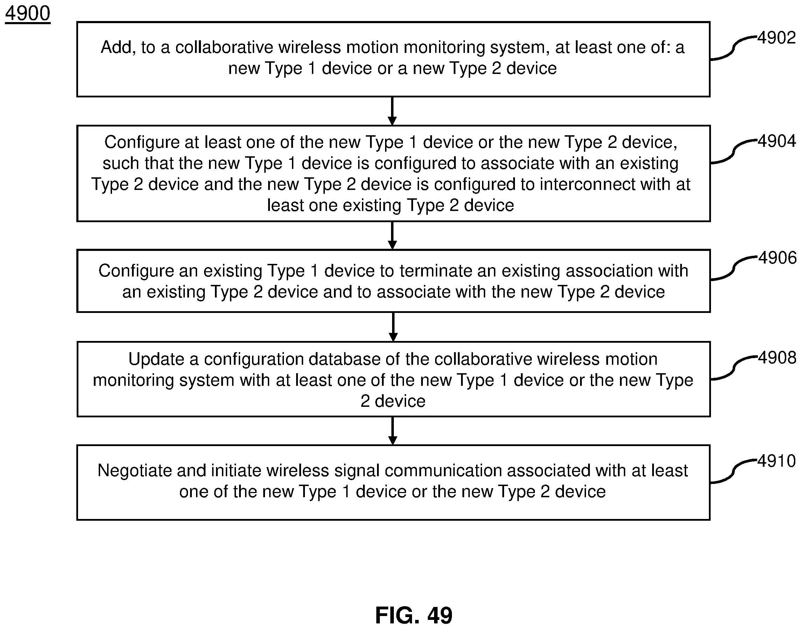

FIG. 49 illustrates a flow chart of an exemplary method 4900 for managing a collaborative wireless motion monitoring system, e.g. the system performing operations in FIG. 48, with motion detection and localization, according to some embodiments of the present teaching. At operation 4902, at least one of: a new Type 1 device or a new Type 2 device, is added to the collaborative wireless motion monitoring system. At operation 4904, at least one of the new Type 1 device or the new Type 2 device is configured such that the new Type 1 device is configured to associate with an existing Type 2 device and the new Type 2 device is configured to interconnect with at least one existing Type 2 device. Optionally at operation 4906, an existing Type 1 device is configured to terminate an existing association with an existing Type 2 device and to associate with the new Type 2 device. At operation 4908, a configuration database of the collaborative wireless motion monitoring system is updated with at least one of the new Type 1 device or the new Type 2 device. At operation 4910, wireless signal communication associated with at least one of the new Type 1 device or the new Type 2 device is negotiated and initiated. The order of the operations in FIG. 49 may be changed according to various embodiments of the present teaching.

In some embodiments, there are M interconnected TypeB devices (e.g. wireless receiver that receives wireless probing signals, extract CI, "Origin", mesh routers, a wireless device), each with Ni TypeA devices (e.g. wireless transmitters that sends probing signals, "Bot"), i=1, ..., M. The interconnection may include configurations such as point-to-point, ring, star, circular, bus, mesh, tree, hybrid and daisy chain. For an Origin connected to Ki neighboring Origins, any other immediately connected Origin is considered a special bot). The TypeA devices may transmit wireless probing signals to TypeB devices. The TypeB devices may be wireless transceiver that receives wireless probing signals and extracts CI (channel information, e.g. CSI, CIR, CFR, RSSI, etc.) from wireless signals. A TypeB device may function as TypeA device to send wireless probing signals to another TypeB device. Motion statistics are computed for each link between a TypeA device and a TypeB device. The motion statistics are preprocessed and combined to localize the motion of different users.

In some embodiments, the TypeA and TypeB devices jointly form an interconnected sensing network. TypeB devices are interconnected wirelessly in some configuration such as point-to-point, ring, star, circular, bus, mesh, tree, hybrid and daisy chain. A wireless link between two interconnected TypeB devices may be one-way or two-way links. In some embodiments, the TypeA devices may be wireless transmitters or receivers or both. They may serve as peripheral or terminal devices (leaf nodes) in the network. Each TypeA device may have one wireless link to send/receive probing signal to/from a TypeB device in the network. In some embodiments, the TypeB devices are wireless transceivers (both TX and RX). TypeB devices may serve as central or "core" devices (non-leaf nodes) in the network. Each TypeB device may have at least one wireless link to send/receive probing signal to/from interconnected TypeB device. The TypeB device may have at least one wireless link to receive probing signal from another TypeB device. The TypeB device may have wireless links to receive probing signals from TypeA devices associated with it. M represents number of TypeB devices; Ni represents number of TypeA devices associated with i^th TypeB device; Ki represents number of other TypeB devices directly interconnected with i^th TypeB device.

Wireless signals can be used to track hand motion and perform gesture recognition. For example, a passive WiFi-based gesture recognition can motivate practical gesture recognition with interesting features, like: penetration of walls, relaxing LOS constraints, readily available infrastructure, privacy protection, better user experience, etc. In some embodiments, the present teaching discloses a WiFi-based passive gesture recognition system (hereinafter "WiCode") using commodity WiFi devices that can work in through-the-wall scenarios.

Building a practically feasible and generalized gesture recognition system using WiFi poses multiple challenges. First, given the low bandwidths in commercial Wi-Fi systems (20-80 MHz), it is difficult to isolate the signal of interest, i.e., corresponding to the moving target. For example, with a 40 MHz bandwidth, all the multipaths with a path length differing by 7.5 m are superimposed on a single Channel Impulse Response (CIR) tap. To address this challenge, one approach is to create prototypes based on CSI for a set of pre-defined gestures and locations which were matched during the testing phase. But it is practically impossible to build a training database of CSI prototypes spanning the wide range of possible locations, users, and environments. This approach also restricted the application to a limited set of pre-defined gestures whose CSI patterns are available. These issues are referred to as "location/user dependency" and "pattern inconsistency." Another issue of the approach is a lack of understanding of the complex function that governs the relationship between the movement of a target and the background/environment change. On the other hand, the disclosed WiCode system does not compare CSI signatures directly; instead, the WiCode system derives statistical information and focuses on extracting information to reconstruct the actual trajectory of the gesture. Such disclosed system does not limit the set of gestures and does not require training.

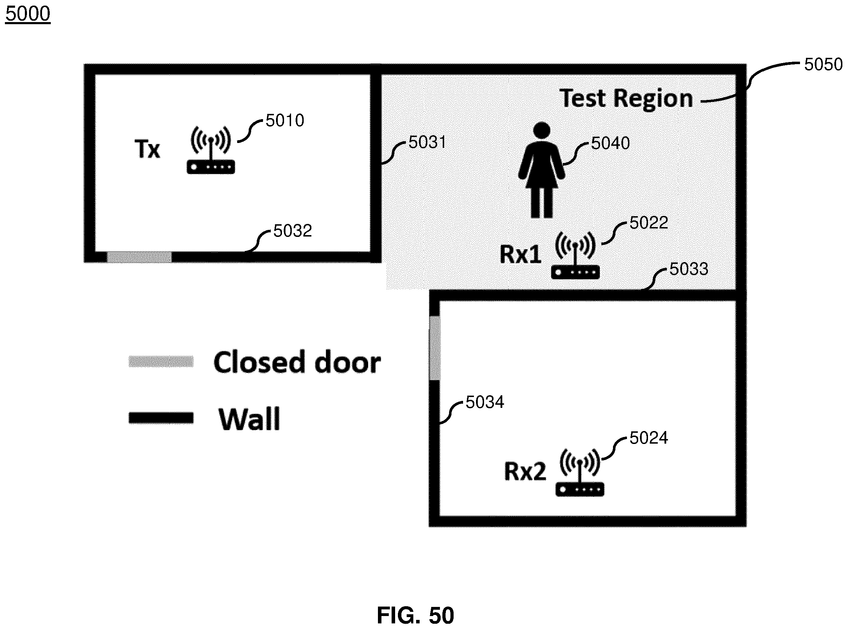

Second, the commercial Wi-Fi lies either in the 2.4 GHz or 5.2 GHz band in which the EM waves can easily penetrate walls and span typical indoor spaces due to higher wavelength. But the signal reflected off the hand is completely immersed in the intense multipath in an indoor environment. As such, most works limit their coverage to Line-of-Sight (LOS) or distances around 1 m so that the signal of interest dominates the irrelevant signals from the static environment. The disclosed system addresses this problem using correlation, which boosts the dynamic signal generated by the movement of the hand and allows NLOS and through-the-wall setups. A typical through-the-wall experimental environment 5000 is shown in FIG. 50.

As shown in FIG. 50, the wireless environment 5000 includes one or more transmitters 5010, one or more receivers 5022, 5024, and a testing user 5040, e.g. a person, located in different rooms. The transmitters and receivers can implement functions of a wireless motion recognition system, e.g. the WiCode system, to track a movement of a body part of the user 5040 in a test region 5050, e.g. tracking movement of a hand, a foot, an arm, a leg, a head or a finger of the user 5040, to determine or recognize a gesture formed by the user 5040. Based on the recognized gesture, the WiCode system may automatically control an operation of a device, e.g. a computer, a smartphone, a tablet, an IoT device, etc.

In some embodiments, while the user 5040 is moving a hand in the test region 5050, the transmitter 5010 may transmit a first wireless signal through a wireless multipath channel of the test region 5050. The receiver 5014 can receive a second wireless signal through the wireless multipath channel, where the second wireless signal differs from the first wireless signal due to the wireless multipath channel that is impacted by a motion of the user's hand in the test region 5050. As such, a processor coupled to at least one of the transmitters and receivers can obtain a time series of channel information (TSCI) of the wireless multipath channel based on the second wireless signal, track the hand motion based on the TSCI to generate a gesture trajectory of the hand, and determine a gesture shape based on the gesture trajectory and a plurality of pre-determined gesture shapes. In various embodiments, each channel information (CI) comprises at least one of: a channel state information (CSI), channel impulse response (CIR), channel frequency response (CFR), or received signal strength index (RSSI). In some embodiments, the first wireless signal is transmitted using a plurality of transmit antennas of the transmitter; the second wireless signal is received using a plurality of receive antennas of the receiver; and each CI is associated with a respective one of the plurality of transmit antennas of the transmitter and associated with a respective one of the plurality of receive antennas of the receiver.

While the user 5040 is located in the test region 5050, each transmitter/receiver may or may not be located within the test region 5050 for wireless gesture recognition. In some embodiments, the transmitter 5010 is a Bot as described above; and each receiver 5022, 5024 is an Origin as described above. In other embodiments, the receivers 5022, 5024 are two receive antennas of a same Origin for wireless motion recognition.

In the example shown in FIG. 50, there is no line-of-sight (LOS) between the transmitter 5010 and the receiver 5022, 5024. In addition, there is at least one wall 5031, 5032, 5034, located between the transmitter 5010 and the receiver 5022, 5024. There is a wall 5031 located between the transmitter 5010 and the user 5040, such that the first wireless signal passes through at least one wall before reaching the user 5040. In addition, there may be a wall 5033 located between the user 5040 and the receiver 5024.

During a hand gesture, different parts of the hand move with different velocities and significantly contribute to the channel perturbation. Building a physical model, therefore, becomes challenging for hand gestures. While researchers modeled either whole-body movements focusing on the speed of the torso or used finger gestures that can be controlled, the WiCode system adopts a hand gesture model by specifying a unique method of performing a gesture and derives a mathematical expression governing the statistical relationships between the channel information, e.g. between CSIs.

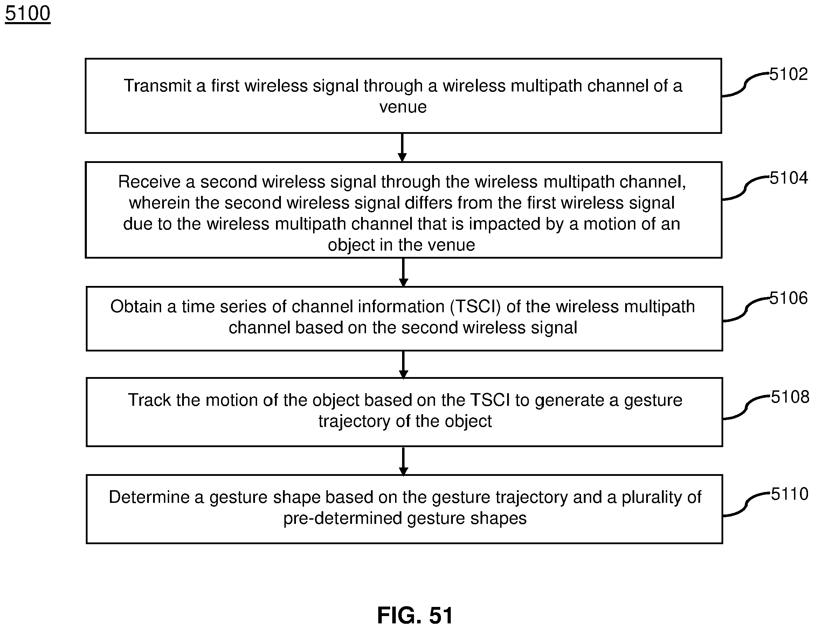

FIG. 51 illustrates a flow chart of an exemplary method 5100 for wireless motion recognition, according to some embodiments of the present disclosure. At operation 5102, a first wireless signal is transmitted from a first wireless device, e.g. a transmitter, through a wireless multipath channel of a venue to a second wireless device, e.g. a receiver. At operation 5104, a second wireless signal is received by the second wireless device through the wireless multipath channel. The second wireless signal differs from the first wireless signal due to the wireless multipath channel that is impacted by a motion of an object in the venue. At operation 5106, a time series of channel information (TSCI) of the wireless multipath channel is obtained based on the second wireless signal, e.g. using a processor, a memory communicatively coupled with the processor and a set of instructions stored in the memory. At operation 5108, the motion of the object is tracked based on the TSCI to generate a gesture trajectory of the object. At operation 5110, a gesture shape is determined based on the gesture trajectory and a plurality of pre-determined gesture shapes. The order of the operations in FIG. 51 may be changed according to various embodiments of the present teaching.

In some embodiments, the disclosed WiCode system utilizes a statistical model of the time-variance of the wireless multipath channel, e.g. Wi-Fi channel. The system designs the way of performing gestures to have a unique correspondence between the relative distance moved by the hand and the correlation decay. As the hand moves away from a particular point in space, the correlation between the CSIs of the Wi-Fi channel decays monotonically. Leveraging this property, one may analyze gestures including straight-line segments. Algorithms are designed to automatically identify different straight-line segments and determine the angle between two segments and intersection points of different segments. In some embodiments, these features can be combined to demonstrate a gesture recognition system including upper English case alphabets.

In some embodiments, the disclosed WiCode system includes a unique gesture model to derive a statistical relation between the CSIs corresponding to a gesture. An understanding is provided, for the first time, on the changes in CSIs with the movement of the hand in severe through-the-wall scenarios. This opens up many possibilities to develop practical gesture recognition systems and extend the current applications using Wi-Fi that were restricted only to LOS setups. In some embodiments, the present teaching discloses a complete gesture recognition system including gesture segmentation, turn angle determination, matching point detection, and gesture classification. A prototype for the system can be created on commercial Wi-Fi devices for wireless motion recognition, e.g. using the upper-case English alphabets as the set of gestures.

Gesture Model: a statistical model may be developed to explain the changes in the wireless channel induced by a hand gesture. A wireless channel can be represented by its Channel State Information (CSI) or equivalently by its Channel Impulse Response (CIR). A gesture may be treated as a continuous movement of a hand (or another body part) and can thus be represented by a CIR/CSI time series. It is useful to quantify the relationships/similarities between any two CSIs in the time series to develop a correspondence between the hand movement and the variations in the wireless channel. For example, one may adopt the Time Reversal Resonating Strength (TRRS) metric.

TRRS has its roots originating from the time reversal phenomenon. In some embodiments, one can assume that the wireless channel between a transmitter (Tx) and a receiver (Rx) can be denoted by the CIR $h(l)$, where $l = 0, 1, \ldots,$ $L$ - 1 and L is the total number of taps; and assume that the CIR is normalized i.e., $\sum_{l=0}^{L-1} |h(l)|^2 = 1$. If the Tx sends an impulse $\delta(l)$, the Rx receives $y(l) = h(l)$. Now, if the Rx sends $h^*(-l)$ i.e., a time reversed and a conjugate version of the channel, then the received signal at the Tx is $y'(l) = h^*(-l) \text{å} h(l)$, where å denotes convolution. The wireless channel from Tx→Rx and Rx→Tx is the same due to channel reciprocity. The zeroth tap of $y'(l)$ becomes:

$$y'(0) = \sum_{l=0}^{L-1} h^*(l) h(l) = \sum_{l=0}^{L-1} |h(l)|^2 = 1. \tag{C1}$$

That is, one can know if the channel at a later time instance is different from the initial channel by sending a time inversed and conjugate version of the initial CIR from Rx and recording $y'(0)$ at Tx. Alternatively, one can compute,

$$\eta(h_1, h_2) = \left| \frac{\sum_{l=0}^{L-1} h_1(l) h_2(l)^*}{\sqrt{\sum_{l=0}^{L-1} |h_1(l)|^2} \sqrt{\sum_{l=0}^{L-1} |h_2(l)|^2}} \right|, \tag{C2}$$

which gives the TRRS between two CIRs $h_1$ and $h_2$. The value of $\eta$ lies between 0 and 1 where 0 is achieved by a pair of uncorrelated CIRs and 1 is achieved by matching CIRs. Below, one may simplify Eq. (C2) for the case of a hand gesture. One may develop a relation between the distance moved by the hand and the effect on the TRRS value.

Let $h_0$ denote the CIR when the hand is at an initial position. Due to the multiple reflections in an indoor environment, each tap in the CIR can be explicitly written in terms of the multipath components (MPCs) as:

$$h_0(l) = \sum_{m \in M} \zeta_{l,m} e^{-j2\pi f_c \tau_{0,l}(m)}, \tag{C3}$$

where M is the set of multipath, $\zeta$ is the complex path gain, $f_c$ is the carrier frequency and $\tau$ is the path delay. When the hand is moved by a short distance x, let the corresponding CIR be denoted by $h_x$. Then,

$$h_0(l) h_x(l)^* = \sum_{m \in M} \zeta_{l,m} e^{-j2\pi f_c \tau_{0,l}(m)} \sum_{m \in M} \zeta_{l,m}^{\text{å}} e^{j2\pi f_c \tau_{x,l}(m)}, \tag{C4}$$

where the set M can be considered as unchanged for a short displacement. Assuming a sufficiently large bandwidth such that the significant MPCs are captured on distinct CIR taps, one can approximate the numerator of $\eta(h_0, h_x)$ as:

$$\sum_{l=0}^{L-1} h_0(l) h_x(l)^* \approx \sum_{l=0}^{L-1} |\zeta_l|^2 e^{j2\pi f_c (\tau_{x,l} - \tau_{0,l})}. \tag{C5}$$

Eq. (C5) does not indicate a direct relationship between the distance moved, x and the drop/decay in the TRRS value. To make this correspondence more evident, one may simplify the equation by exploiting the following observations.

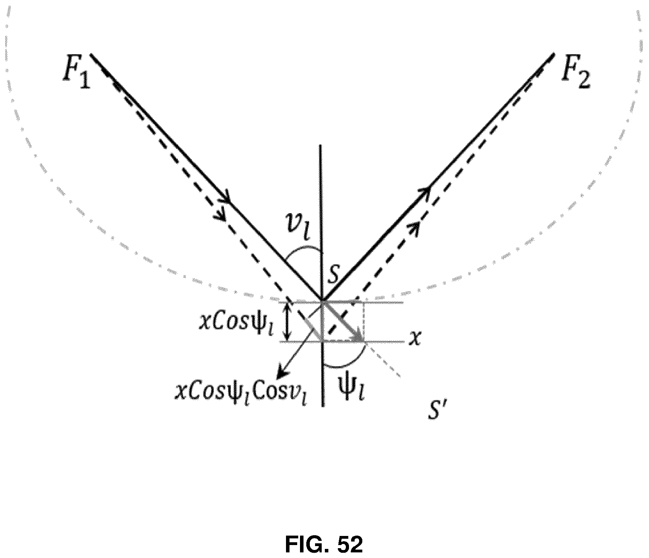

Path length difference: The change in the path length when the hand moves by a small distance x can be calculated by using the angle of reflection $v_l$ and the angle between the surface normal and the moving direction, $\psi_l$ as indicated in FIG. 52. The total path length change depends only on the displacement along the normal to the reflecting surface. This is because a small displacement along the surface does not impact the total length of the path by the geometric definition of an ellipse. The difference in the delays for the paths can be written as:

$$\tau_{x,l} - \tau_{0,l} = \frac{2x\mathrm{Cos}\psi_l \mathrm{Cos}v_l}{c} \tag{C6}$$

Uniform scattering: In a rich indoor environment with a lot of multipath, one can assume that the MPCs are uniformly distributed in the space. For instance, at any point in space, one can assume that the angle of incidence of the MPCs is uniformly distributed in $[0, 2\pi]$. This assumption can help to simplify the summation in (C5) to integral over the angles:

$$\sum_{l=0}^{L-1} h_0(l)h_x(l)^* \approx K \int_{v_l=0}^{2\pi} \int_{\psi_l=0}^{2\pi} e^{(j2\pi f_c \frac{2x\mathrm{Cos}\psi_l \mathrm{Cos}v_l}{c})} dv_l d\psi_l, \tag{C7}$$

where K is a normalization constant.

Fraction of multipaths: Amongst the dense multipath, only a fraction of the MPCs are influenced by the movement of the hand. Let this fraction be *a*. The right hand side (RHS) of (C7) can be simplified to (C9) below.

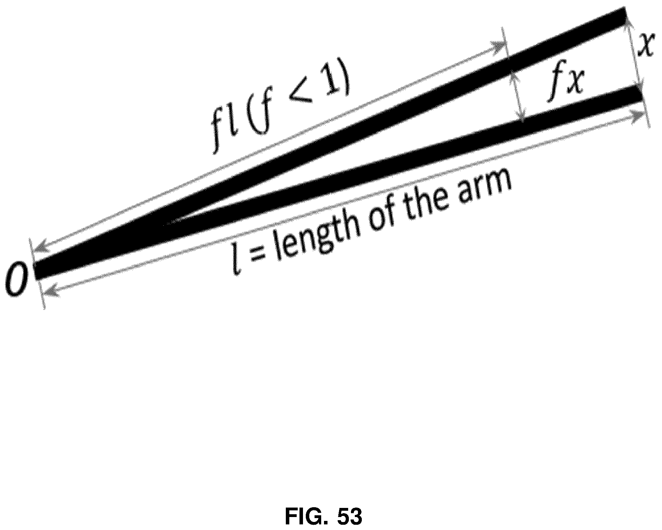

Method of performing the gesture: During a typical gesture, different parts of the hand move with different speeds and in different directions. Modeling an arbitrary hand movement is therefore complex. In some embodiments, one may adopt a unique way of performing a gesture with a hand as shown in FIG. 53 with the arm stretched and pivoted about the shoulder. The advantages of such a constrained movement are at least three-fold. First, for every unique location of the wrist, the location of all the other scatterers (segments of the hand) is fixed and unique. Second the locus of the moving scatterers (different parts of the hand) is unique and does not overlap/intersect with each other. Third, when the hand is moved in accordance with FIG. 53, the hand can be modeled as a combination of multiple scatterers whose displacement increases linearly from 0 to x, where x is the displacement of the wrist. This results in a summation term as shown in Eq. (C10).

$$K \int_{v_l=0}^{2\pi} \int_{\psi_l=0}^{2\pi} a + (1-a)e^{j2\pi f_c \frac{2x\mathrm{Cos}\psi_l \mathrm{Cos}v_l}{c}} dv_l d\psi_l \tag{C8}$$

$$= Ka(2\pi)^2 + K(1-a)(2\pi)^2 J_0^2(\frac{2\pi f_c x}{c}). \tag{C9}$$

$$= Ka(2\pi)^2 + \frac{K(1-a)(2\pi)^2}{N_D} \sum_{i=1}^{N_D} J_0^2(\frac{2\pi f_c xi}{cN_D}), \tag{C10}$$

where $J_0(.)$ is a zeroth-order Bessel function of the first kind.

The denominator of (C2) becomes:

$$\sqrt{\sum_{l=0}^{L-1} |h_1(l)|^2} \sqrt{\sum_{l=0}^{L-1} |h_2(l)|^2} = \int_{v_l=0}^{2\pi} \int_{\psi_l=0}^{2\pi} 1 dv_l d\psi_l \tag{C11}$$

$$\eta(h_o, h_x) = a + \frac{(1-a)}{N_D} \sum_{i=1}^{N_D} J_0^2(\frac{2\pi f_c xi}{cN_D}) \tag{C12}$$

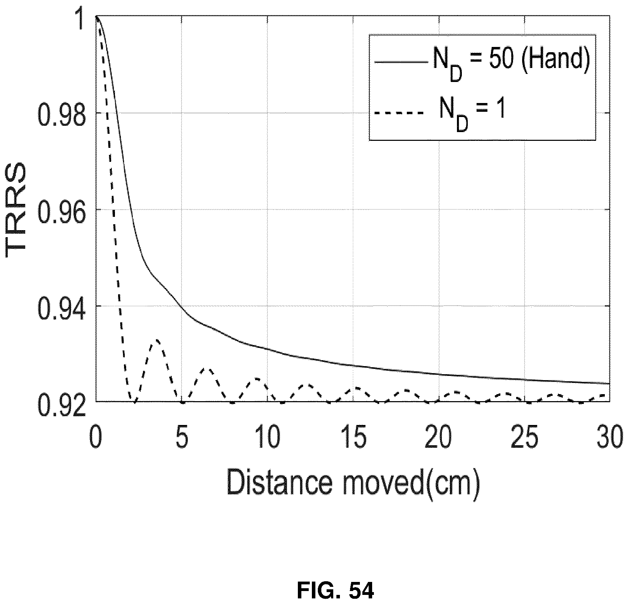

Eq.(C12) specifies a relation between the TRRS decay and the distance moved by the wrist with the hand stretched. For $N_D = 50$, the RHS is plotted and is shown in FIG. 54 indicating a monotonous decay. FIG. 54 illustrates an exemplary TRRS in case of hand movement (dynamic scatterers with increasing speed, $N_D = 50$) and a cart movement (dynamic scatterers with one speed, $N_D = 1$), according to some embodiments of the present disclosure. One may exploit this monotonous decay to develop a simple likelihood-based approach for gesture classification.

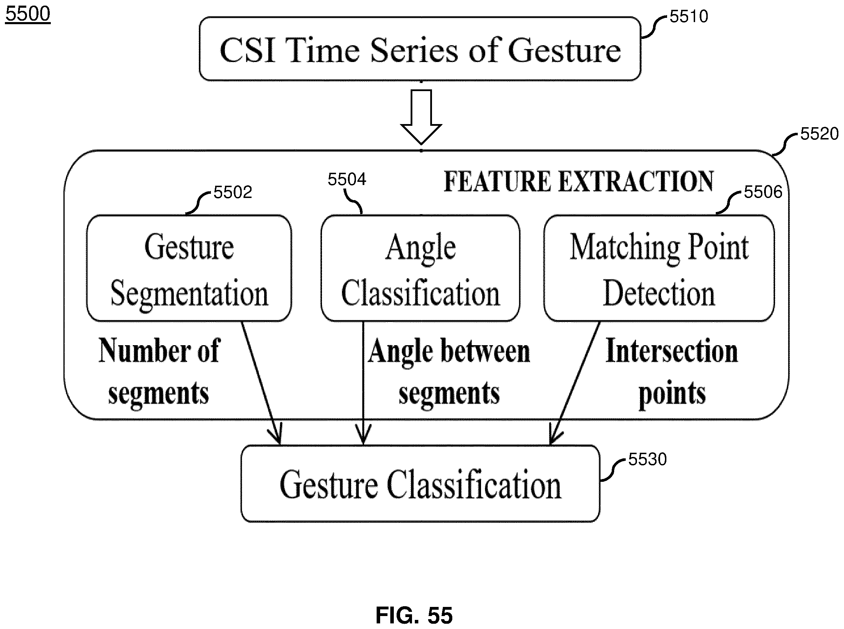

Feature extraction: in some embodiments, an exemplary pipeline may be designed to extract unique features for each gesture shape and use them for classifying gestures. One may consider gestures including merely straight-line segments. It is sufficient to know the number of segments, the angle between two adjacent segments, and the locations of the intersection points between line segments, if any, to describe any shape composed of straight-line segments. An overview of the feature extraction module is shown in FIG. 55.

FIG. 55 illustrates a workflow of an exemplary wireless gesture recognition/classification system 5500, e.g. the WiCode system, according to some embodiments of the present disclosure. As shown in FIG. 55, the system 5500 includes a feature extraction module 5520 for extracting features from the CSI time series of gesture 5510 obtained based on wireless signals; and includes a gesture classification module 5530 for recognizing or classifying the gesture based on the extracted features. The feature extraction module 5520 in this example includes: a gesture segmentation module 5502, an angle classification module 5504, and a matching point detection module 5506.

Since the system may not have the information about the absolute/relative direction of motion of the hand, the system can focus on the relative shape of the trajectory. In some embodiments, the features for the trajectories of letters 'N' and 'Z' may be the same with three line segments, acute angles between adjacent segments, and no intersection points. Similarly, the trajectory features for 'M' and 'W' may be the same.

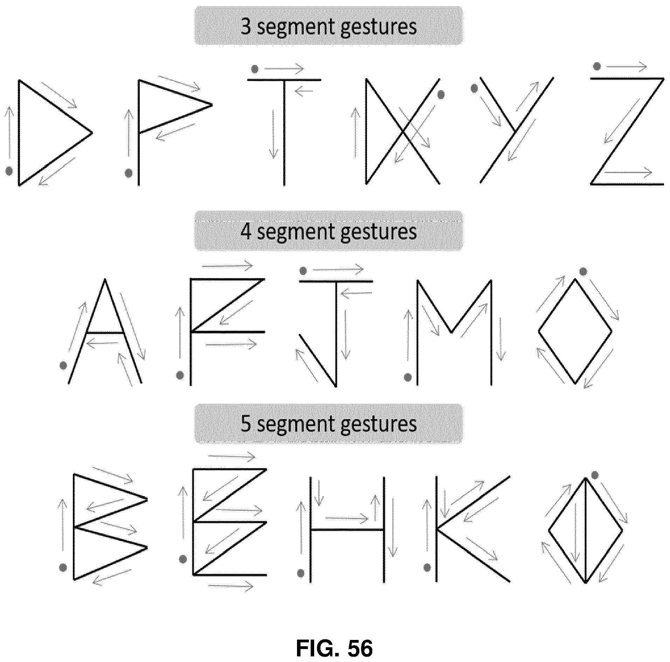

Some sample trajectories are shown in FIG. 56. Considering the uppercase English alphabets with more than two gesture segments, one may obtain a set of 16 shapes with unique features. A WiCode prototype can demonstrate gesture classification on this set of 16 gesture shapes. Each straight line in a gesture shape is called a segment. For example, the 'D'-shaped gesture is composed of 3 segments, as shown in FIG. 56. The gesture segmentation module 5502 aims to determine the number of segments in a given gesture shape. The circular dot in FIG. 56 indicates the initial point for each shape.

When the hand changes the direction of motion, there is a reduced speed at the location of the turn. Assuming the user performs the gesture following reduced/zero speed during turn events, the goal of the gesture segmentation module 5502 is simplified to finding the number of prolonged/zero speed instances. One may leverage the motion statistics to achieve this goal. Motion statistics represent the extent of motion/disturbance in the wireless channel as perceived by the transceivers. A smaller dynamic object closer to a transceiver and a larger dynamic object farther away from the transceiver could cause a similar amount of disturbance and result in the same motion statistics. Similarly, a smaller object in faster motion and a larger object with slower motion could have the same motion statistics. Motion statistics are calculated from the correlation of the CSIs. The theoretical values lie between -1 and 1, with 1 indicating the highest motion/disturbance level.

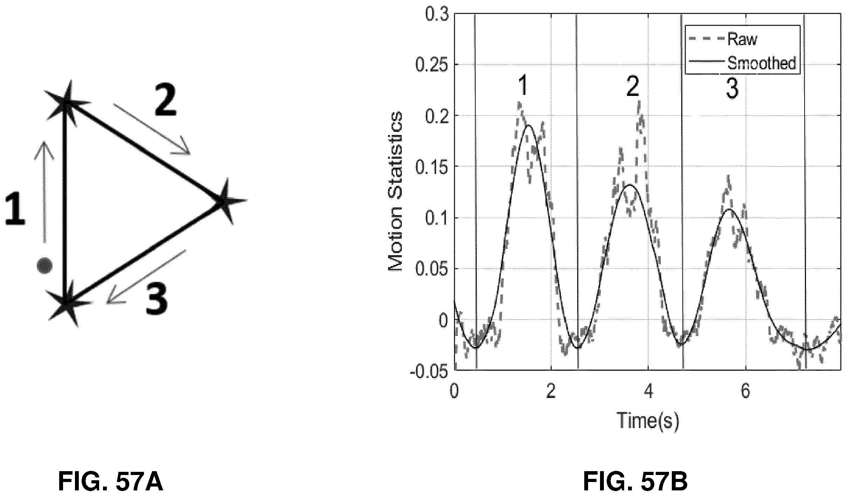

During a gesture, the person may be located at a fixed distance from the transceivers. Therefore, the motion statistics can capture the relative rapidness of the motion of the hand. Consider a 'D' shaped gesture trajectory shown in FIG. 57A and the corresponding motion statistics along with the different gesture segments shown in FIG. 57B. The motion statistics are lower at the location of the turns as marked in stars in FIG. 57A. The number of straight-line segments in a gesture could be determined from the number of local minima/valleys in the motion statistics plot.

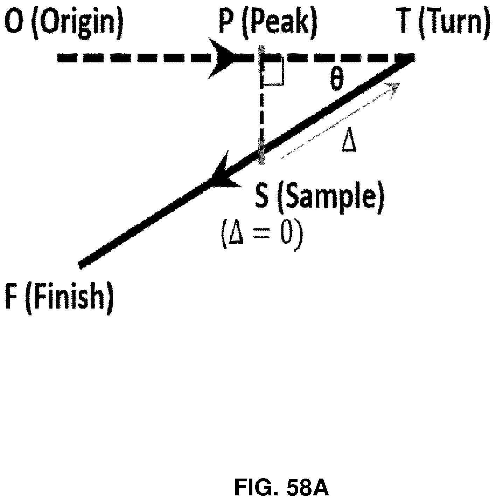

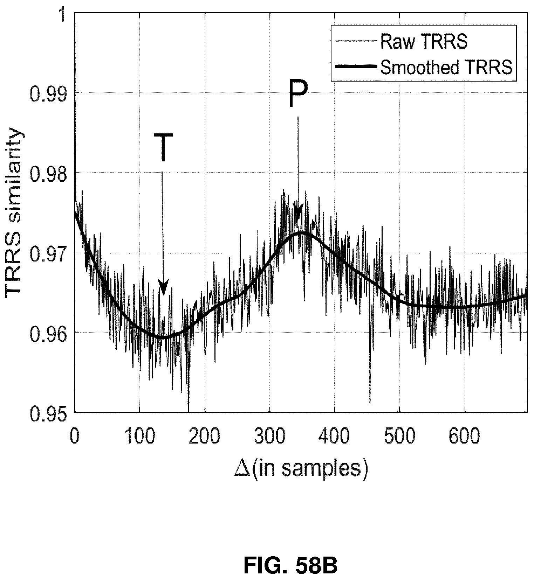

Turn Angle Classification: A sudden change in the direction of movement of the hand is referred to as a "turn" event. For instance, FIG. 58A shows a gesture trajectory beginning at the Origin ('**O**'), following a straight line till a "turn" occurs at the point 'T'; and FIG. 58B shows the corresponding TRRS decay feature. The trajectory after the point 'T' is again a straight line till it reaches the endpoint, '**F**.' The angle between the two straight line segments is referred to as the turn angle and is denoted by $\theta$. In some embodiments, the angle classification module 5504 may classify the turn angle into three groups/classes, namely, (i) $\theta \approx 0°$, (ii) $\theta \approx 45°$, and (iii) $\theta \approx 90°$.

Consider any point '**S**' on the second segment of the trajectory in FIG. 58A. Point 'P' is the closest point to 'S' on the first segment. If one takes the TRRS similarity between the CSI at the point'**S**' and all the CSIs along the trajectory, moving backward, one may observe a valley for the CSI at the point'**T'** and a peak for the CSI at the point '**P'** as shown in FIG. 58B. This plot in FIG. 58B is referred to as $S_\Delta$ for any point '**S**' on the second segment. The direct correspondence between the relative distance and the TRRS is a result of the monotonous decay pattern. Leveraging the relative pairwise TRRS relationships between 'S', 'P' and 'T', one may define two features, r and $f$ defined below, and use them to assign probability scores for different $\theta$.

First, $f$ represents a fraction of the second segment from the turn location for which a peak can be observed on the $S_\Delta$ plot. If 'S' is the farthest point on the second segment from '**T'** for which a peak is observed on the $S_\Delta$ plot, then $f$ is defined by:

$$f = \frac{\sum_{i \in (T,S)} \text{Motion Statistics}(i)}{\sum_{i \in (T,F)} \text{Motion Statistics}(i)}. \tag{C13}$$

As the monotonous decay of the TRRS curve is observed only upto a certain distance, a peak may not be observed if the distance SP is beyond a certain limit. Although this limit is not universal, one can roughly obtain a range of values of $f$ for different $\theta$. In this example, $f \leq 0.2$ is assigned to $\theta \approx 90°$, and $f$ should be equal to 1 for $\theta \approx 0°$.

For each point 'S' on the second segment, the corresponding point 'T' and 'P' can be obtained from the $S_\Delta$ curve. The curve y = SP is obtained from the TRRS (S,P) for all the pairs of (S,P) where S lies on the second segment. For a given turn angle $\theta$, the parameter r is defined as the ratio of areas between the curves y = $T_{max}$ - SP and y = $T_{max}$ - ST where $T_{max}$ is the highest TRRS between points on the two segments. Ideally $T_{max} \approx 1$ as the TRRS between points close to the point 'T' lying on different segments is close to 1. If $\theta = 45°$, SP = PT and assuming a uniform environment, TRRS($S,P$) $\approx$ TRRS(P,T) resulting in r $\approx$ 1. For $\theta = 0°$, TRRS(S,P) $\approx T_{max}$ which makes r $\approx$ 0.

The ideal values of the parameters $f$ and r are shown in the Table 2 below. In reality, due to the following non-idealities, the values may differ from their ideal values. First, the monotonous decay of the TRRS is not evident over a large distance. Therefore, for higher acute angles, the peaks may not be detected for the entire length of the second segment and $f < 1$, especially for $\theta \approx 45°$. Second, TRRS(SP) is not always equal to 1 for $\theta \approx 0°$. This is because the human body and hand are not rigid objects and the CSI may not match exactly even though the person intends to do so. Therefore, r > 0 for $\theta \approx 0°$. Third, since there is no reference when drawing gestures in the air, it is difficult for the person to take a precise 45° turn. Therefore, the value of r varies from 0.5 to greater than 1 for an acute angle turn.

Table 2: Theoretical values of f and r for different 0.

| Turn angle | r | f |
|---|---|---|
| $\theta \approx 0'$ | 0 | 1 |
| $\theta \approx 45°$ | 1 | 1 |
| $\theta \approx 90°$ | Undefined | 0 |

Using the parameters $f$ and r, the angle classification module 5504 may define probability scores for classifying the angle $\theta$. The scoring is given as follows:

$$P(\theta \approx 0°) = \text{sgn}(f - (0.7 - \varepsilon))\max(\min(1, \frac{1-r}{1-\delta}), 0), \qquad (C14)$$

$$P(\theta \approx 45°) = \text{sgn}(0.7 - f)\text{sgn}(f - (0.2 - \varepsilon)) +$$
$$\text{sgn}(f - (0.7 - \varepsilon))\min(\frac{r-0.2}{1-\delta}, 1), \qquad (C15)$$

$$P(\theta \approx 90°) = \text{sgn}(0.2 - f), \qquad (C16)$$

where sgn(.) denotes the sign function.

As such, if $f < 0.2$, then $\theta \approx 90°$; if $0.7 > f \geq 0.2$ or r > 1, $0 < \theta < 90°$. If $f \geq 0.7$ and r < 1, assuming r is $U$~$[\delta, 1]$ for $\theta \in [0, 45°]$, $P(\theta = 0°) = (1 - r)/(1 - \delta)$, and $P(\theta = 45°) = (r - \delta)/(1 - \delta)$, where $\varepsilon$ is an arbitrarily small positive quantity. In this example, one may use $\delta = 0.2$ based on the experimental data. For example, if r = 0.3 and $f = 0.9$, then,

$$P(\theta \approx 0°) = \frac{0.7}{0.8} = 0.87, \qquad (C17)$$

$$P(\theta \approx 45°) = \frac{0.1}{0.8} = 0.12, \qquad (C18)$$

$$P(\theta \approx 90°) = 0. \qquad (C19)$$

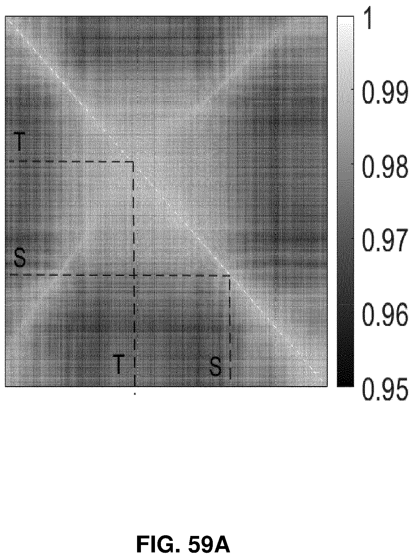

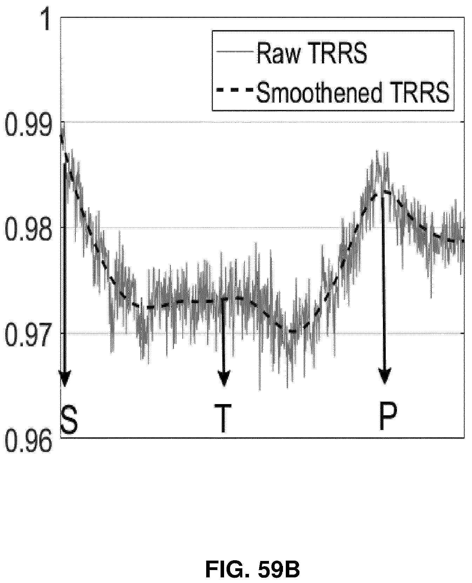

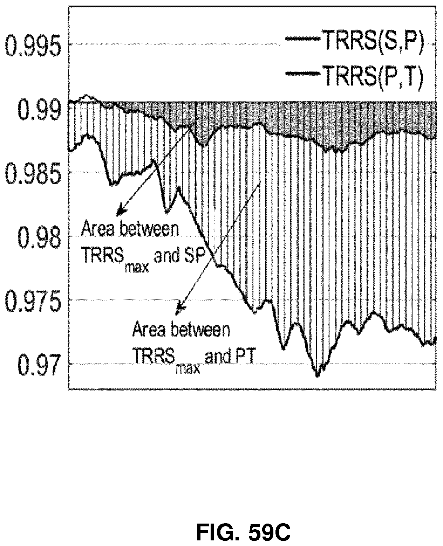

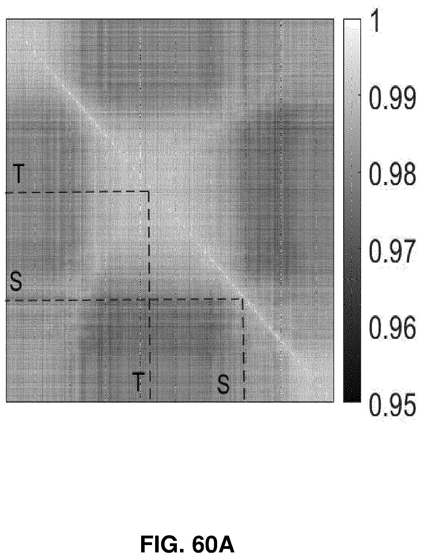

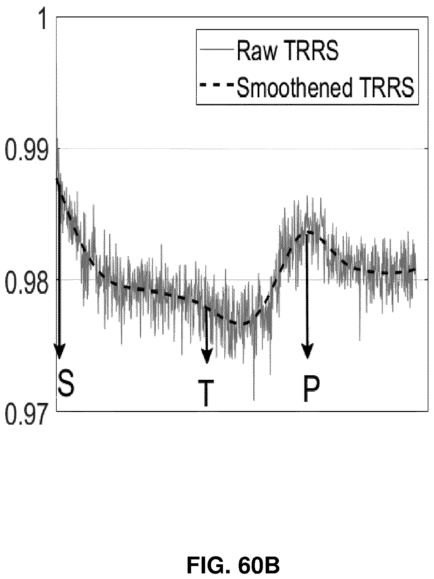

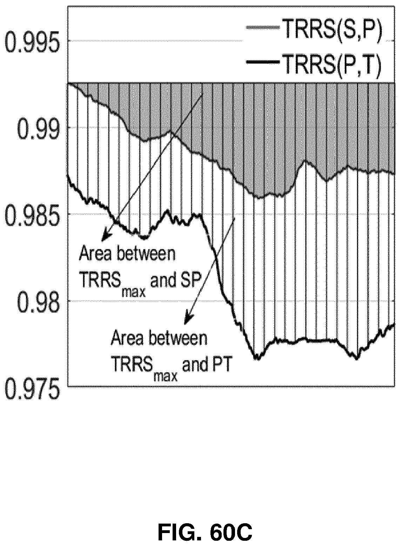

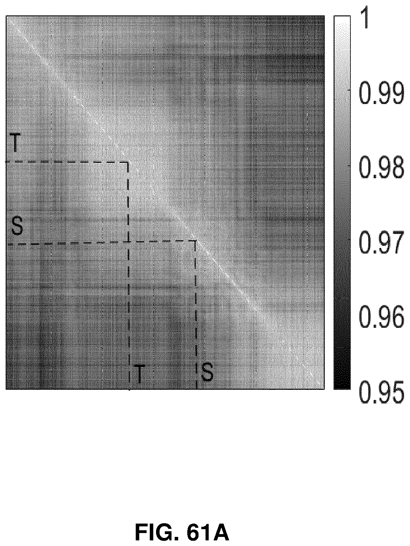

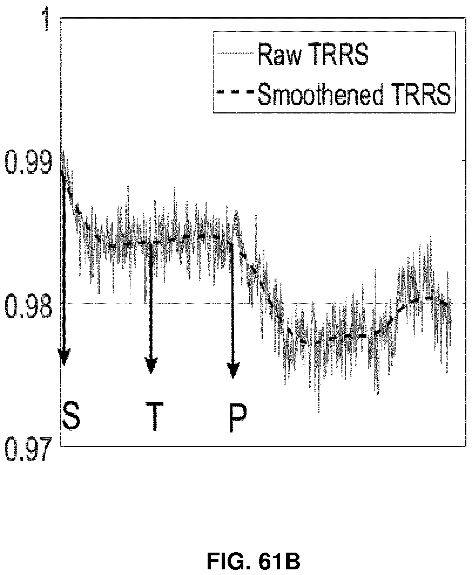

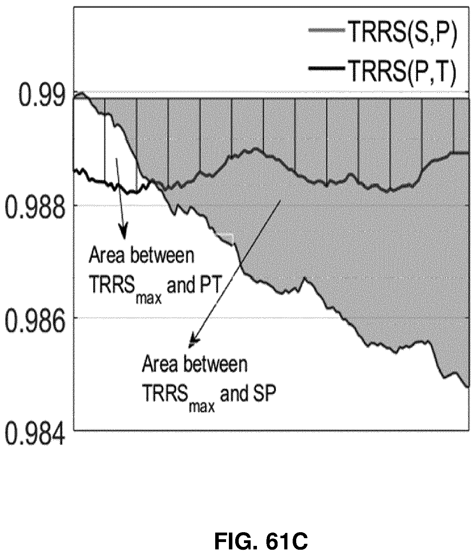

The angle classification may be done by assigning the class with the maximum probability score to the angle $\theta$. The TRRS matrix of the CSI time-series of a turn and the corresponding features are shown in FIGS. 59-61 for different $\theta$ in {0°, 45°, 90°}, where each column corresponds to one $\theta$. FIGS. 59A-59C illustrate an exemplary TRRS decay associated with a 0° turn, according to some embodiments of the present disclosure. FIGS. 60A-60C illustrate an exemplary TRRS decay associated with a 45° turn, according to some embodiments of the present disclosure. FIGS. 61A-61C illustrate an exemplary TRRS decay associated with a 90° turn, according to some embodiments of the present disclosure. Each of FIGS. 59A, 60A, 61A shows the TRRS matrix of the CSI time-series corresponding to the turn; each of FIGS. 59B, 60B, 61B shows the $s_\Delta$ plot for a point **S** on the second segment; and each of FIGS. 59C, 60C, 61C shows the TRRS between the CSIs at points S,P and TRRS between the CSIs at points P,T, for every **S** on the second segment.

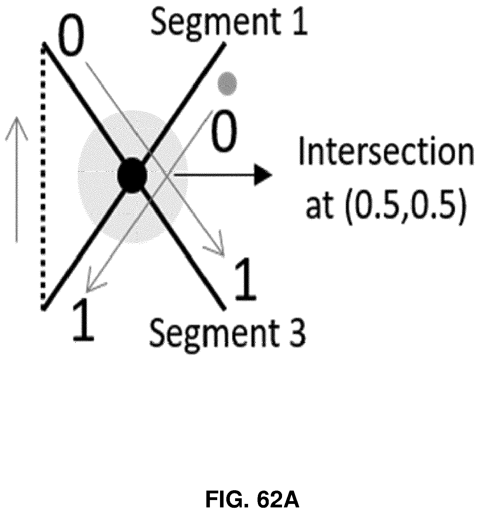

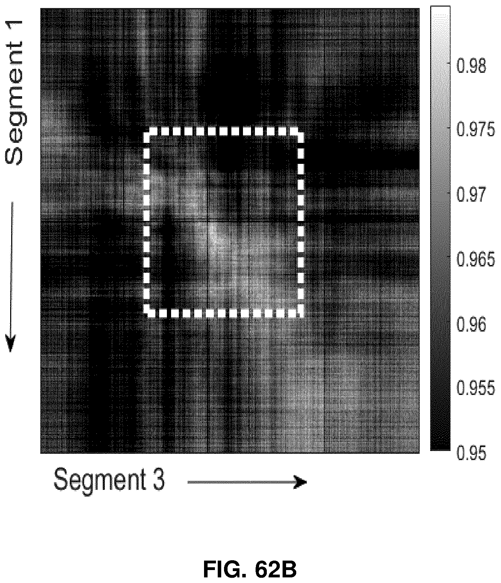

Matching Point Detection: The aim of the matching point detection module 5506 is to check for intersections/crossings between any two non-adjacent segments of a gesture trajectory. For example, the first and the third segments of all the 3-segment gestures. Consider an X-shaped gesture shown in FIG. 62A. The intersection point between segment 1 and segment 3 is marked by a circle in FIG. 62A. If an intersection/crossing occurs in a gesture trajectory, it implies that the spatial orientation/location of the arm is almost the same at those two time instances, resulting in a relatively high TRRS value between the two CSIs (ideally equal to 1), as shown in FIG. 62B. Therefore, to detect matching points, the matching point detection module 5506 may look for the highest TRRS between CSIs of the two segments and assign probability scores based on the location of the maximum.

As mentioned earlier, one may use the motion statistics as an approximate indicator of the relative speed of the gesture. One may assume that the total length of each segment is equal to 1 and the distance between any two points X and Y on a segment AB is given by:

$$\frac{\sum_{i \in (X,Y)} \text{Motion Statistics}(i)}{\sum_{i \in (A,B)} \text{Motion Statistics}(i)}. \qquad (C20)$$

Assuming that the distance is measured from the start point of each segment, the intersection point between the 1st and the 3rd segment in an X-shape can be denoted by (0.5, 0.5). Similarly, for the D-shape, intersection can be denoted by (0,1). In reality, since the user does not have any reference of the trajectory drawn, it is difficult to cross segments at the desired location. In some embodiments, the matching point detection module 5506 may allow a margin of 0.25 as indicated by the extended circular region in FIG. 62A. The probability score for a given intersection point $P\{(m,n)\}$ is given by the product of an indicator function indicating if the maximum value occurs in the specified region and a normalized relative maximum of TRRS as:

$$P\{(m, n)\} = 1_{(m,n)} * \frac{T(i_{max}, j_{max}) - \min(T(i_{max}, :), T(:, j_{max}))}{1 - \min(T(i_{max}, :), T(:, j_{max}))}, \qquad (C21)$$

where $1_{(m,n)} = 1$ if $T_{max} \in (m_{0.25}, n_{0.25})$ and 0 otherwise, and $m_{0.25}$ is the region of radius 0.25 around $m$. The indices of the CSI on the 1st and the 3rd segments at which the maximum value of TRRS i.e., $T_{max}$ occurs are given by $i_{max}$ and $j_{max}$. In FIG. 62B, the TRRS matrix between the CSIs of the 1st and the 3rd segments of an X-shaped gesture is shown. Probability score for the matching point $(m, n)$ may be calculated as $P\{(m,n)\} = 0.763$ in this example.

Gesture classification: Gestures can be classified at the gesture classification module 5530 according to their shapes using the features extracted in the previous modules 5502, 5504, 5506. A gesture shape including straight line segments is characterised based on the number of segments, angle between segments and the intersection points. The probability score of a gesture shape may be computed by the product of the probability scores of each of its features. For instance, if the angle between segment $i$ and $i + 1$ is denoted by $\theta_i$, the matching/intersection point between $i^{th}$ and $j^{th}$ segment is denoted by $MP_{i,j}$, then probability score of an X-shaped gesture is given by the product of $P(\theta_1 \approx 45°)$, $P(\theta_2 \approx 45°)$, and $P(MP_{1,3} = (0.5,0.5))$.

Performance evaluation: One may evaluate the performance of the disclosed gesture classification system. In some embodiments, one can build a prototype of *WiCode* on off-the-shelf commercial WIFI chipsets with a bandwidth of 80 MHz and 2×2 MIMO using a sampling rate of 300 Hz. A typical through-the-wall setup is shown in FIG. 1. The transmitter (Tx) and the receiver (Rx) are placed in different rooms. Gestures are performed in a different room with at least one wall between each transceiver and the gesture location.

Gesture Segmentation Accuracy: The gesture segmentation module accurately estimates the number of segments in a gesture trajectory. To evaluate this, one can collect 100 samples each of gestures with 3,4 and 5 segments. The number of segments was correctly identified in all the cases. The gesture segmentation accuracy is therefore 100%. In the gesture classification accuracy evaluation, one can therefore evaluate the performance of classifying gestures of the same number of segments since there is no misclassification among gestures with different number of segments.

Gesture Classification Accuracy: For evaluating the overall performance of the gesture classification algorithm, one can select sets of uppercase English alphabets with the same number of segments and classify them. One may divide the alphabets with unique gesture shapes into three groups: (1) 3 segments: D, P, T, X, Y and Z shapes; (2) 4 segments: A, F, J, M and O shapes; and (3) 5 segments: B, E, H, K and Q shapes, as shown in FIG. 56.

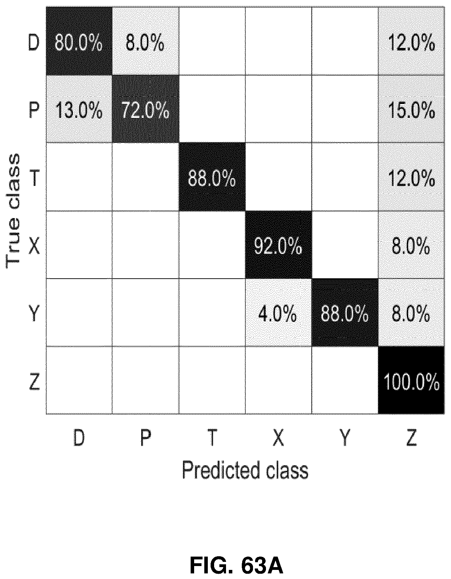

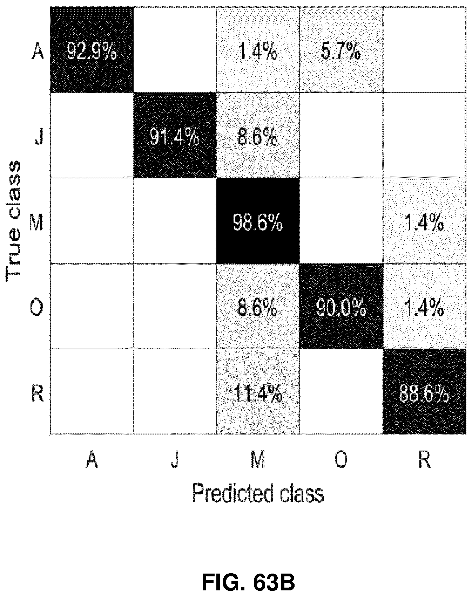

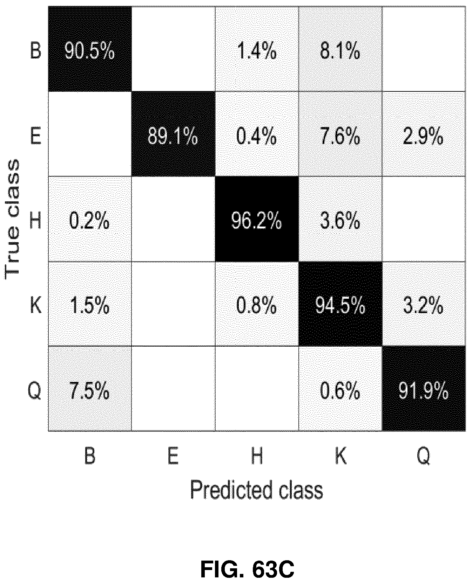

The confusion matrix for each group is shown in FIGS. 63A-63C, with FIG. 63A showing the confusion matrix of 3-segment shapes, FIG. 63B showing the confusion matrix of 4-segment shapes, and FIG. 63C showing the confusion matrix of 5-segment shapes. Since the gesture segmentation accuracy is very high, there is no misclassification among gesture shapes from different groups. In other embodiments, the gesture set need not be restricted to the alphabets and can be generalized to include a broader set of gestures including straight line segments.

In some embodiments, a wireless motion/gesture recognition method includes steps s1 to s5 as described below.

At step s1: capture CSI while performing a gesture using multiple transmit (Tx) antennas and multiple receive (Rx) antennas.

At step s2: the number of straight-line segments present in the gesture may be determined from the number of time instances at which the relative speed becomes zero or is minimum, which includes step s2a. At step s2a: relative speed profile may be computed from the ACF. The local minima of the speed profile/motion intensity may give the time instances of direction change. The number of such time instances plus one may determine the number of line segments present in a gesture shape.

At step s3: the angle between two adjacent segments may be determined by using the monotonous TRRS decay, which includes steps s3a to s3b.

At step s3a: for every point/CSI on the second segment (say S), there exists a point/CSI on segment 1 (say P) which is at the shortest distance amongst all the other points and hence have a relatively higher similarity, which includes steps s3a1 to s3a3. At step s3a1: for every S, a curve $S_\Lambda$ may be obtained by recording the similarity between S and all the previous CSIs. At step s3a2: for every S, the corresponding P may be determined from the location of the local maxima. At step s3a3: the location of the local minima between S and P may correspond to the instance of the turn (say T), i.e., the point of contact between the first and the second segment.

At step s3b: the angle between the segments may be classified by observing the pairwise values of similarity between the CSIs of S and P and the similarity between CSIs of P and T, which includes steps s3b1 to s3b3. The points P and T are determined for every location of S along the second segment. At step s3b1: the angle $\theta$ is nearly zero if the similarity between CSIs of S and P is always 1, while similarity between P and T decreases as S moves away from T. At step s3b2: the angle $\theta$ is nearly 90 degrees if the point P cannot be detected when the point S is farther than a threshold from the turn. At step s3b3: if the point P could be detected but similarity between S and P also decreases along with the similarity between CSIs at P and T, this may indicate $\theta$ nearly 45 degrees.

At step s4: intersection points between any two non-adjacent segments may be detected by the relatively high TRRS at crossing points, which includes steps s4a to s4b. At step s4a: two non-adjacent line segments may intersect at different positions along their length. At step s4b: probability that the segments intersect/cross each other at a given point may be determined by the value and location of the highest similarity (may be TRRS) between CSIs corresponding to the two segments.

At step s5: probability of a particular gesture shape may be computed from the product of the probability scores for each of the features extracted in steps s2, s3 and s4. The gesture shape with the higher or highest probability score may be assigned to the observed testing gesture sample.

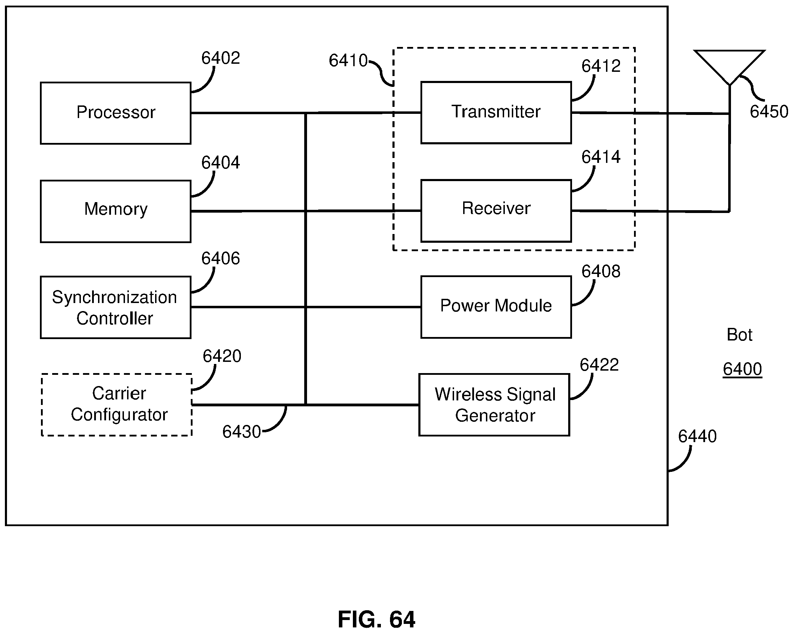

FIG. 64 illustrates an exemplary block diagram of a first wireless device, e.g. a Bot 6400, of a wireless system, e.g. a wireless material sensing system, according to one embodiment of the present teaching. The Bot 6400 is an example of a device or part of a device that can be configured to implement the various methods described herein. As shown in FIG. 64, the Bot 6400 includes a housing 6440 containing a processor 6402, a memory 6404, a transceiver 6410 comprising a transmitter 6412 and receiver 6414, a synchronization controller 6406, a power module 6408, an optional carrier configurator 6420 and a wireless signal generator 6422.

In this embodiment, the processor 6402 controls the general operation of the Bot 6400 and can include one or more processing circuits or modules such as a central processing unit (CPU) and/or any combination of general-purpose microprocessors, microcontrollers, digital signal processors (DSPs), field programmable gate array (FPGAs), programmable logic devices (PLDs), controllers, state machines, gated logic, discrete hardware components, dedicated hardware finite state machines, or any other suitable circuits, devices and/or structures that can perform calculations or other manipulations of data.

The memory 6404, which can include both read-only memory (ROM) and random access memory (RAM), can provide instructions and data to the processor 6402. A portion of the memory 6404 can also include non-volatile random access memory (NVRAM). The processor 6402 typically performs logical and arithmetic operations based on program instructions stored within the memory 6404. The instructions (a.k.a., software) stored in the memory 6404 can be executed by the processor 6402 to perform the methods described herein. The processor 6402 and the memory 6404 together form a processing system that stores and executes software. As used herein, "software" means any type of instructions, whether referred to as software, firmware, middleware, microcode, etc. which can configure a machine or device to perform one or more desired functions or processes. Instructions can include code (e.g., in source code format, binary code format, executable code format, or any other suitable format of code). The instructions, when executed by the one or more processors, cause the processing system to perform the various functions described herein.

The transceiver 6410, which includes the transmitter 6412 and receiver 6414, allows the Bot 6400 to transmit and receive data to and from a remote device (e.g., an Origin or another Bot). An antenna 6450 is typically attached to the housing 6440 and electrically coupled to the transceiver 6410. In various embodiments, the Bot 6400 includes (not shown) multiple transmitters, multiple receivers, and multiple transceivers. In one embodiment, the antenna 6450 is replaced with a multi-antenna array 6450 that can form a plurality of beams each of which points in a distinct direction. The transmitter 6412 can be configured to wirelessly transmit signals having different types or functions, such signals being generated by the processor 6402. Similarly, the receiver 6414 is configured to receive wireless signals having different types or functions, and the processor 6402 is configured to process signals of a plurality of different types.

The Bot 6400 in this example may serve as a Bot in FIG. 10A for detecting a material type of a surface of an object in a venue. For example, the wireless signal generator 6422 may generate and transmit, via the transmitter 6412, a wireless signal through a wireless multipath channel of the venue. The wireless signal carries information of the channel. Because the wireless signal is reflected at the surface of the object, the channel information includes MRF information of the object's surface material. As such, the material type can be indicated and detected based on the wireless signal. The generation of the wireless signal at the wireless signal generator 6422 may be based on a request for material sensing from another device, e.g. an Origin, or based on a system pre-configuration. That is, the Bot 6400 may or may not know that the wireless signal transmitted will be used for material sensing.

In some embodiments, the Bot 6400 in this example may also serve as: Bot 110 in FIG. 1 for detecting object motion in a venue; Bot 2712 in FIG. 27A for detecting and tracking a writing in a venue; Bot 1 4210 or Bot 2 4220 in FIG. 42 for detecting object motion in a venue; and/or Bot 5010 in FIG. 50 for wireless motion recognition in a venue. In some embodiments, the Bot 6400 in this example may be used to detect object and events as in FIGS. 43A-43B, 47, or in any other scenario where a Bot or transmitter is used in the present disclosure.

The synchronization controller 6406 in this example may be configured to control the operations of the Bot 6400 to be synchronized or un-synchronized with another device, e.g. an Origin or another Bot. In one embodiment, the synchronization controller 6406 may control the Bot 6400 to be synchronized with an Origin that receives the wireless signal transmitted by the Bot 6400. In another embodiment, the synchronization controller 6406 may control the Bot 6400 to transmit the wireless signal asynchronously with other Bots. In another embodiment, each of the Bot 6400 and other Bots may transmit the wireless signals individually and asynchronously.

The carrier configurator 6420 is an optional component in Bot 6400 to configure transmission resources, e.g. time and carrier, for transmitting the wireless signal generated by the wireless signal generator 6422. In one embodiment, each CI of the time series of CI has one or more components each corresponding to a carrier or sub-carrier of the transmission of the wireless signal. The wireless material sensing may be based on any one or any combination of the components.

The power module 6408 can include a power source such as one or more batteries, and a power regulator, to provide regulated power to each of the above-described modules in FIG. 64. In some embodiments, if the Bot 6400 is coupled to a dedicated external power source (e.g., a wall electrical outlet), the power module 6408 can include a transformer and a power regulator.

The various modules discussed above are coupled together by a bus system 6430. The bus system 6430 can include a data bus and, for example, a power bus, a control signal bus, and/or a status signal bus in addition to the data bus. It is understood that the modules of the Bot 6400 can be operatively coupled to one another using any suitable techniques and mediums.

Although a number of separate modules or components are illustrated in FIG. 64, persons of ordinary skill in the art will understand that one or more of the modules can be combined or commonly implemented. For example, the processor 6402 can implement not only the functionality described above with respect to the processor 6402, but also implement the functionality described above with respect to the wireless signal generator 6422. Conversely, each of the modules illustrated in FIG. 64 can be implemented using a plurality of separate components or elements.

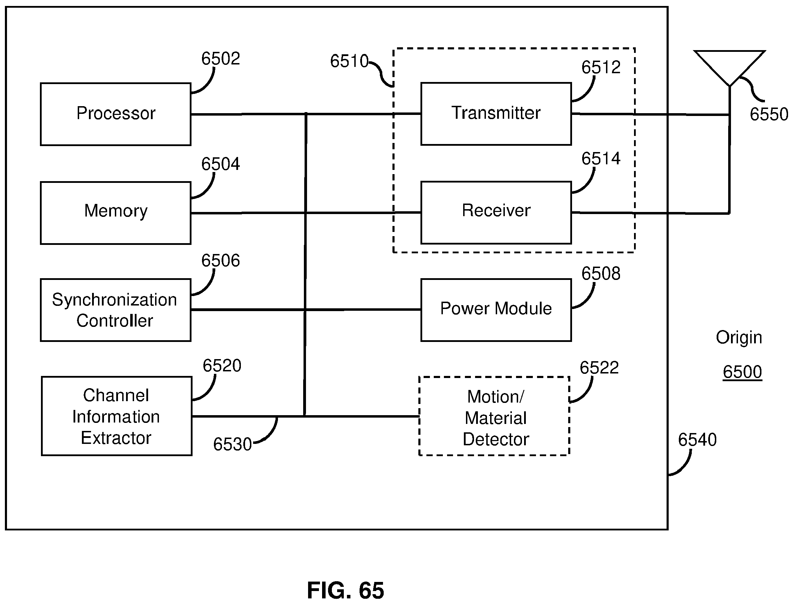

FIG. 65 illustrates an exemplary block diagram of a second wireless device, e.g. an Origin 6500, of a wireless system, e.g. a wireless material sensing system, according to one embodiment of the present teaching. The Origin 6500 is an example of a device or part of a device that can be configured to implement the various methods described herein. The Origin 6500 in this example may serve as an Origin in FIG. 10A for wireless material sensing in a venue. As shown in FIG. 65, the Origin 6500 includes a housing 6540 containing a processor 6502, a memory 6504, a transceiver 6510 comprising a transmitter 6512 and a receiver 6514, a power module 6508, a synchronization controller 6506, a channel information extractor 6520, and an optional motion/material detector 6522.

In some embodiments, the Origin 6500 in this example may serve as: Origin 120 in FIG. 1 for detecting object motion in a venue; Origin 2714 in FIG. 27A for wireless writing tracking in a venue; Origin 4201 in FIG. 42 for detecting object motion in a venue; and/or Origin 5022, 5024 in FIG. 50 for wireless motion recognition in a venue. In some embodiments, the Origin 6500 in this example may also be used to detect object and events as in FIGS. 43A-43B, 47, or in any other scenario where an Origin or receiver is used in the present disclosure.

In this embodiment, the processor 6502, the memory 6504, the transceiver 6510 and the power module 6508 work similarly to the processor 6402, the memory 6404, the transceiver 6410 and the power module 6408 in the Bot 6400. An antenna 6550 or a multi-antenna array 6550 is typically attached to the housing 6540 and electrically coupled to the transceiver 6510.

In one embodiment, the Origin 6500 may be a second wireless device that has a different type from that of the first wireless device (e.g. the Bot 6400). In another embodiment, the Origin 6500 and the Bot 6400 are coupled to each other on a same device. The channel information extractor 6520 in the Origin 6500 is configured for receiving the wireless signal through the wireless multipath channel, and obtaining a plurality of channel information (CI) of the wireless multipath channel based on the wireless signal. The channel information extractor 6520 may send the extracted CI to the optional motion/material detector 6522 or to a motion/material detector outside the Origin 6500 for detecting a material type in the venue.

The motion/material detector 6522 is an optional component in the Origin 6500. In one embodiment, it is within the Origin 6500 as shown in FIG. 65. In another embodiment, it is outside the Origin 6500 and in another device, which may be a Bot, another Origin, a cloud server, a fog server, a local server, and an edge server. The optional motion/material detector 6522 may be configured for detecting a material of an object in the venue based on MRF information related to the material of the object. The MRF information is computed based on the plurality of CI by the motion/material detector 6522 or another motion/material detector outside the Origin 6500.

In some embodiments, the motion/material detector 6522 may be configured for detecting a motion of an object in the venue based on motion information related to the motion of the object. The motion information associated with the first and second wireless devices is computed based on the time series of CI by the motion/material detector 6522 or another motion/material detector outside the Origin 6500.

The synchronization controller 6506 in this example may be configured to control the operations of the Origin 6500 to be synchronized or un-synchronized with another device, e.g. a Bot, another Origin, or an independent motion detector. In one embodiment, the synchronization controller 6506 may control the Origin 6500 to be synchronized with a Bot that transmits a wireless signal. In another embodiment, the synchronization controller 6506 may control the Origin 6500 to receive the wireless signal asynchronously with other Origins. In another embodiment, each of the Origin 6500 and other Origins may receive the wireless signals individually and asynchronously. In one embodiment, the optional motion/material detector 6522 or a motion/material detector outside the Origin 6500 is configured for asynchronously computing respective heterogeneous MRF information related to the material of the object based on the respective plurality of CI.

The various modules discussed above are coupled together by a bus system 6530. The bus system 6530 can include a data bus and, for example, a power bus, a control signal bus, and/or a status signal bus in addition to the data bus. It is understood that the modules of the Origin 6500 can be operatively coupled to one another using any suitable techniques and mediums.

Although a number of separate modules or components are illustrated in FIG. 65, persons of ordinary skill in the art will understand that one or more of the modules can be combined or commonly implemented. For example, the processor 6502 can implement not only the functionality described above with respect to the processor 6502, but also implement the functionality described above with respect to the channel information extractor 6520. Conversely, each of the modules illustrated in FIG. 65 can be implemented using a plurality of separate components or elements.

In one embodiment, in addition to the Bot 6400 and the Origin 6500, the system may also comprise: an assistance device, a third wireless device, e.g. another Bot, configured for transmitting an additional heterogeneous wireless signal through an additional wireless multipath channel impacted by the motion of the object in the venue, or a fourth wireless device, e.g. another Origin, that has a different type from that of the third wireless device. The fourth wireless device may be configured for: receiving the additional heterogeneous wireless signal through the additional wireless multipath channel impacted by the motion of the object in the venue, and obtaining a time series of additional channel information (CI) of the additional wireless multipath channel based on the additional heterogeneous wireless signal. The additional CI of the additional wireless multipath channel is associated with a different protocol or configuration from that associated with the CI of the wireless multipath channel. For example, the wireless multipath channel is associated with LTE, while the additional wireless multipath channel is associated with Wi-Fi. In this case, the optional motion/material detector 6522 or a motion/material detector outside the Origin 6500 is configured for detecting the motion of the object or sensing a material in the venue based on both the motion information associated with the first and second wireless devices and additional motion information associated with the third and fourth wireless devices computed by at least one of: an additional motion detector and the fourth wireless device based on the time series of additional CI.

The following numbered clauses provide implementation examples for periodic or transient motion detection.

Clause 1. A method of a wireless target motion detection system, comprising: transmitting a wireless signal from a Type1 heterogeneous wireless device in a venue through a wireless multipath channel of the venue, wherein an object in the venue is undergoing a target motion; receiving the wireless signal by a Type2 heterogeneous wireless device in the venue through the wireless multipath channel, wherein the received wireless signal differs from the transmitted wireless signal due to the wireless multipath channel of the venue and a modulation of the wireless signal by the object undergoing the target motion in the venue; obtaining a time series of channel information (TSCI) of the wireless multipath channel based on the received wireless signal using a processor, a memory communicatively coupled with the processor and a set of instructions stored in the memory; and detecting the target motion of the object based on the TSCI.

Clause 2. The method of the wireless target motion detection system of clause 1, comprising: computing a time series of spatial-temporal information (STI) of the object based on the TSCI, wherein a STI comprises at least one of: location, position, change in position, distance, change in distance, speed, change in speed, acceleration, change in acceleration, orientation, direction, change in direction, angle, change in angle, angular speed, change in angular speed, angular acceleration, change in angular acceleration, size, change in size, shrinking, expansion, shape, change in shape, deformation, and transformation; and detecting the target motion of the object based on the time series of STI (TSSTI).

Clause 3. The method of the wireless target motion detection system of clause 2, comprising: computing a time series of features (TSF) based on the TSCI, wherein a feature comprises at least one of: a quantity, scalar, vector, matrix, data structure, temporal feature, frequency feature, time-frequency feature, dominant feature, representative feature, characteristic feature, typical feature, atypical feature, magnitude, phase, magnitude of a component of a CI (CI component), phase of the CI component, similarity measure, similarity score, similarity between two CI, similarity between two vectors of CI, similarity between CI components, distance measure, distance score, distance between two CI, distance between two vectors of CI, distance between CI components, Euclidean distance, absolute distance, L-1 distance, L-2 distance, L-k distance, weighted distance, graph distance, distance metric, norm, L-1 norm, L-2 norm, L-k norm, correlation, correlation of two CI, correlation between two vectors of CI, correlation between CI components, autocorrelation function (ACF), feature of ACF, spectrum, feature of spectrum, spectrogram, feature of spectrogram, local maximum, local minimum, zero crossing, correlation coefficient, inner product, dot product, outer product, covariance, auto-covariance, cross covariance, discrimination score, mean, variance, standard deviation, derivative, variation, total variation, spread, dispersion, variability, deviation, total deviation, divergence, entropy, range, skewness, kurtosis, variance-to-mean ratio, maximum-to-minimum ratio, likelihood, repeatedness, periodicity, impulsiveness, sudden-ness, recurrence, period, time, timing, starting time, initiating time, ending time, duration , or time trend; and computing the TSSTI based on the TSF.

Clause 4. The method of the wireless target motion detection system of clause 3, comprising: wherein the object is a human; wherein the target motion is a fall-down motion of the object; wherein a feature of the TSF comprises at least one of: a component of a CI, a magnitude of a component of a CI, an autocorrelation function of the TSCI; wherein the STI comprises at least one of: the speed or the acceleration.

Clause 5. The method of the wireless target motion detection system of clause 2, comprising: in an offline stage, computing at least one representative STI template based on a set of training TSSTI, each training TSSTI computed based on a respective training TSCI obtained based on a respective training wireless signal from a respective training Type1 device received by a respective training Type2 device in a respective training venue when a respective training object in the respective training venue undergoes a respective training target motion; and in an online stage, detecting the target motion of the object based on the TSSTI and the at least one representative STI template.

Clause 6. The method of the wireless target motion detection system of clause 5, comprising: cleaning the set of training TSSTI; computing the at least one representative STI template based on the set of cleaned training TSSTI.

Clause 7. The method of the wireless target motion detection system of clause 6, comprising: cleaning each training TSSTI by segmenting the TSSTI into a respective initial non-target segment of STI, a respective target segment of STI, and a respective trailing non-target segment of STI, wherein the target segment of STI corresponds to the respective training target motion of the respective training object.

Clause 8. The method of the wireless target motion detection system of clause 7, comprising: segmenting the TSSTI based on at least one of: a respective first constraint on the respective initial non-target segment, a respective second constraint on the respective target segment, or a respective third constraint on the respective trailing non-target segment.

Clause 9. The method of the wireless target motion detection system of clause 8, comprising at least one of: constraining the respective initial non-target segment to start from the beginning of the TSSTI and to have a first duration that is at least one of: less than a first threshold, or being a fraction of a duration of the TSSTI; constraining the respective target segment to have a second duration not greater than a target duration associated with the target motion of the object; or constraining the respective trailing non-target segment to end at the end of the TSSTI and to have a third duration being another fraction of the duration of the TSSTI.

Clause 10. The method of the wireless target motion detection system of clause 7, comprising: segmenting the training TSSTI based on a mapping between the training TSSTI and another training TSSTI with a mapping score between the two TSSTI associated with the mapping, wherein each STI of training TSSTI is mapped to at least one STI in the mapping, wherein the mapping score comprises at least one of: a similarity score and a mismatch score.

Clause 11. The method of the wireless target motion detection system of clause 10, comprising: computing a plurality of candidate mappings between the two TSSTI and a plurality of mapping scores associated with the candidate mappings, wherein each candidate mapping is between a candidate target segment of the training TSSTI and another candidate target segment of the another training TSSTI, and a mapping score associated with the candidate mapping is normalized based on a length associated with the candidate target segment and the another candidate target segment; computing the mapping based on the plurality of candidate mappings and the associated mapping scores.

Clause 12. The method of the wireless target motion detection system of clause 11, comprising: determining a particular candidate mapping associated with an optimal mapping score among all the candidate mappings, wherein the optimal mapping score comprises at least one of: a maximum similarity score and a minimum mismatch score; and choosing the particular candidate mapping as the mapping between the two TSSTI and the associated optimal mapping score as the associated mapping score between the two TSSTI.

Clause 13. The method of the wireless target motion detection system of clause 11, comprising: computing iteratively the plurality of mapping scores associated with the number of candidate mappings; determining a series of partial mappings between subsets of the training TSSTI and subsets of the another training TSSTI, and computing iteratively a quantity associated with each partial mapping, wherein each partial mapping is a mapping between a partial segment of the training TSSTI and a partial segment of the another training TSSTI, wherein the series of partial mappings comprises the plurality of candidate mappings; in an initial iteration, initializing iteration by determining an initial partial mapping between a single STI of the training TSSTI and a single STI of the another training TSSTI and computing an initial quantity associated with the initial partial mapping; in subsequent iterations, computing iteratively the quantity associated with each partial mapping based on a value associated with another partial mapping computed in a previous iteration, wherein the partial mapping is between a first segment of the training TSSTI and a second segment of the another training TSSTI, and the another partial mapping is between a third segment of the training TSSTI and a fourth segment of the another TSSTI, wherein at least one of: the third segment is a subset of the first segment, or the fourth segment is a subset of the second segment; computing the plurality of mapping scores based on the quantities associated with the series of partial mappings.

Clause 14. The method of the wireless target motion detection system of clause 11, comprising: computing iteratively the plurality of mapping scores associated with the number of candidate mappings; determining a series of partial mappings between subsets of the training TSSTI and subsets of the another training TSSTI, and computing iteratively a quantity associated with each partial mapping, wherein each partial mapping is a mapping between a partial segment of the training TSSTI and a partial segment of the another training TSSTI, wherein the series of partial mappings comprises the plurality of candidate mappings; in an initial iteration, initializing iteration by determining a group of initial partial mappings comprising a mapping between a single STI of the training TSSTI and a single STI of the another training TSSTI and computing initial quantities associated with the group of initial partial mappings; in subsequent iterations, computing iteratively quantities associated with a group of partial mappings based on at least one value computed in at least one previous iteration; computing the plurality of mapping scores based on the quantities associated with the series of partial mappings.

Clause 15. The method of the wireless target motion detection system of clause 14, comprising: wherein the quantity associated with a partial mapping is a function of a measure component associated with the partial mapping and a length component associated with the partial mapping; wherein the measure component is at least one of: a similarity component and a mismatch component; in the initial iteration, computing an initial measure component and an initial length component associated with the initial partial mapping; in subsequent iterations, computing iteratively a measure component and a length component associated with each partial mapping based on at least one of: another measure component computed in a past iteration or another length component computed in another past iteration, and computing the quantity as the function of the measure component and the length component.

Clause 16. The method of the wireless target motion detection system of clause 10, comprising: segmenting the training TSSTI based on a plurality of pairwise mappings, wherein each pairwise mapping is a mapping between the training TSSTI and one of the rest of the training TSSTI; computing a plurality of candidate segmentations of the training TSSTI each based on a respective pairwise mapping, each candidate segmentation comprising a candidate initial non-target segment, a candidate target segment, and a candidate trailing non-target segment of the training TSSTI; segmenting the training TSSTI by combining the plurality of candidate segmentations.

Clause 17. The method of the wireless target motion detection system of clause 16, comprising: determining two respective candidate boundary points of each candidate segmentation: a respective candidate first boundary point between the respective candidate initial segment and the respective candidate target segment, and a respective candidate second boundary point between the respective candidate target segment and the respective candidate trailing segment of the candidate segmentation; segmenting the training TSSTI by computing a first boundary point between the initial segment and the target segment of the training TSSTI as a first function of the candidate first boundary points of the plurality of candidate segmentation; segmenting the training TSSTI by computing a second boundary point between the target segment and the trailing segment of the training TSSTI as a second function of the candidate second boundary points of the plurality of candidate segmentation.

Clause 18. The method of the wireless target motion detection system of clause 17: wherein at least one of: the first function or the second function comprises at least one of: a mean, median, mode, weighted average, centroid, arithmetic mean, geometric mean, harmonic mean, trimmed mean, conditional mean, maximum, minimum, percentile, maximum likelihood, and transformation.

Clause 19. The method of the wireless target motion detection system of clause 7: computing a representative STI template based on at least one of: the target segments of the cleaned training TSSTI, a time derivative of the target segments, or a signal processing of the target segments.

Clause 20. The method of the wireless target motion detection system of clause 19: computing the representative STI template by computing a TSSTI that optimizes a combined score with respect to the set of cleaned training TSSTI; wherein optimizing comprises at least one of: maximization, minimization, constrained maximization, or constrained minimization; wherein the combined score comprises an aggregation of at least one of: a plurality of first scores each being a first pairwise score between the TSSTI and a cleaned training TSSTI based on a pairwise mapping between the pair, a plurality of second scores each being a second pairwise score between the time derivative of the TSSTI and the time derivative of a cleaned training TSSTI based on the pairwise mapping, or a plurality of third scores each being a third pairwise score between the signal processed TSSTI and a signal processed cleaned training TSSTI based on the pairwise mapping; wherein the aggregation comprising at least one of: sum, product, mean, median, mode, arithmetic mean, geometric mean, harmonic mean, trimmed mean, weighted sum, weighted product, weighted mean, weighed median, weighted mode, or discriminative cost; wherein the discriminative cost comprising a weighted difference between a first normalized aggregation of a first pairwise mapping score between the TSSTI and each of a first subset of the cleaned training TSSTI and a second normalized aggregation of a second pairwise mapping score between the TSSTI and each of a second subset of the cleaned training TSSTI; wherein any normalized aggregation comprises at least one of: mean, median, mode, arithmetic mean, geometric mean, harmonic mean, trimmed mean, weighted mean, weighted median or weighted mode.

Clause 21. The method of the wireless target motion detection system of clause 5, comprising: in the offline stage, computing the at least one representative STI template based on a first dynamic time warping (DTW); in the online stage: computing a test mapping between the TSSTI and each representative STI template with respective associated test mapping score based on a second DTW; detecting the target motion of the object if a test mapping score satisfies a detection criterion.

Clause 22. The method of the wireless target motion detection system of clause 2, comprising: detecting a presence of motion based on at least one of: the TSCI, and the TSSTI before detecting the target motion of the object.

Clause 23. The method of the wireless target motion detection system of clause 22, comprising: wherein the wireless signal comprises a time series of probing signals with piecewise-constant instantaneous probe rates corresponding to piecewise-constant instantaneous inter-probe periods; wherein the CI of the TSCI have respective piecewise-constant instantaneous CI rates corresponding to the piecewise-constant instantaneous probe rates; wherein the STI of the TSSTI have respective piecewise-constant instantaneous STI rates corresponding to the piecewise-constant instantaneous CI rates of the TSCI; in a standby mode, configuring the instantaneous STI rates, and the instantaneous CI rates to be a default rate by configuring the instantaneous probe rate to be the default rate; in the standby mode, detecting a presence of motion based on at least one of: the CI at the default rate, or the STI at the default rate; in a task mode, configuring the instantaneous STI rates, and the instantaneous CI rates to be an elevated rate by configuring the instantaneous probe rate to be the elevated rate, wherein the elevated rate is greater than the default rate; in the task mode, detecting the target motion of the object based on at least one of: the CI at the elevated rate, or the STI at the elevated rate; changing between the task mode and the standby mode.

Clause 24. A Type2 heterogeneous wireless device of a wireless target motion detection system, comprising: a wireless receiver; a processor communicatively coupled with the wireless receiver; a memory communicatively coupled with the processor; a set of instructions stored in the memory which, when executed by the processor, cause the Type2 heterogeneous wireless device in a venue to perform: receiving a wireless signal through a wireless multipath channel of the venue, wherein an object undergoes a target motion in the venue, wherein the wireless signal is transmitted from a Type1 heterogeneous wireless device in the venue, wherein the received wireless signal differs from the transmitted wireless signal due to the wireless multipath channel of the venue and a modulation of the wireless signal by the object undergoing the target motion in the venue, obtaining a time series of channel information (TSCI) of the wireless multipath channel based on the received wireless signal, computing a time series of spatial-temporal information (TSSTI) of the object based on the TSCI, and detecting the target motion of the object based on at least one of: the TSSTI, or the TSCI.

Clause 25. The Type2 heterogeneous wireless device of the wireless target motion detection system of clause 24, wherein the set of instructions further case the Type2 device to perform: in an offline stage, computing at least one representative STI template based on a set of training TSSTI, each training TSSTI computed based on a respective training TSCI obtained based on a respective training wireless signal from a respective training Type1 device received by a respective training Type2 device in a respective training venue when a respective training object in the respective training venue undergoes a respective training target motion; and in an online stage, detecting the target motion of the object based on the TSSTI and the at least one representative STI template.

Clause 26. The Type2 heterogeneous wireless device of the wireless target motion detection system of clause 25, wherein the set of instructions further case the Type2 device to perform: cleaning each training TSSTI by segmenting the TSSTI into a respective initial non-target segment of spatial-temporal information (STI), a respective target segment of STI, and a respective trailing non-target segment of STI, wherein the target segment of STI corresponds to the respective training target motion of the respective training object; segmenting the training TSSTI based on a mapping between the training TSSTI and another training TSSTI, and a mapping score between the two TSSTI associated with the mapping, wherein each STI of the training TSSTI is mapped to at least one STI in the mapping, wherein the mapping score comprises at least one of: a similarity score and a mismatch score; computing a plurality of candidate mappings between the two TSSTI and a plurality of mapping scores associated with the candidate mappings; determining a particular candidate mapping associated with an optimal mapping score among all the candidate mappings as the mapping between the two TSSTI, wherein the optimal mapping score comprises at least one of: a maximum similarity score and a minimum mismatch score; and computing a representative STI template based on at least one of: the target segments of the cleaned training TSSTI, a time derivative of the target segments, or a signal processing of the target segments.

Clause 27. The Type2 heterogeneous wireless device of the wireless target motion detection system of clause 24, wherein the set of instructions further case the Type2 device to perform: detecting a presence of motion based on at least one of: the TSCI, and the TSSTI before detecting the target motion of the object; wherein the wireless signal comprises a time series of probing signals with piecewise-constant instantaneous probe rates corresponding to piecewise-constant instantaneous inter-probe periods; wherein the CI of the TSCI have respective piecewise-constant instantaneous CI rates corresponding to the piecewise-constant instantaneous probe rates; wherein the STI of the TSSTI have respective piecewise-constant instantaneous STI rates corresponding to the piecewise-constant instantaneous CI rates of the TSCI; in a standby mode of the online stage, configuring the instantaneous STI rates, and the instantaneous CI rates to be a default rate by configuring the instantaneous probe rate to be the default rate; in the standby mode, detecting a presence of motion based on at least one of: the CI at the default rate, or the STI at the default rate; in a task mode of the online stage, configuring the instantaneous STI rates, and the instantaneous CI rates to be an elevated rate by configuring the instantaneous probe rate to be the elevated rate, wherein the elevated rate is greater than the default rate; in the task mode, detecting the target motion of the object based on at least one of: the CI at the elevated rate, or the STI at the elevated rate; and changing between the task mode and the standby mode.

Clause 28. A wireless target motion detection system, comprising: a Type1 heterogeneous wireless device in a venue configured to transmit a wireless signal through a wireless multipath channel of the venue, wherein an object undergoes a target motion in the venue; and a Type2 heterogeneous wireless device in the venue configured to: in an online stage, receive the wireless signal through the wireless multipath channel of the venue, wherein the received wireless signal differs from the transmitted wireless signal due to the wireless multipath channel of the venue and a modulation of the wireless signal by the object undergoing the target motion in the venue, obtain a time series of channel information (TSCI) of the wireless multipath channel based on the received wireless signal, compute a time series of spatial-temporal information (STI) of the object based on the TSCI, detecting the target motion of the object based on at least one of: the time series of STI (TSSTI), or the TSCI, wherein in an offline stage before the online stage, at least one representative STI template is computed based on a set of training TSSTI, each training TSSTI computed based on a respective training TSCI obtained based on a respective training wireless signal from a respective training Type1 device received by a respective training Type2 device in a respective training venue when a respective training object in the respective training venue undergoes a respective training target motion, wherein each training TSSTI is cleaned by segmenting the training TSSTI into a respective initial non-target segment of STI, a respective target segment of STI corresponding to the respective training target motion of the respective training object, and a respective trailing non-target segment of STI, wherein the training TSSTI is segmented based on a mapping between the training TSSTI and another training TSSTI, and a mapping score between the two TSSTI associated with the mapping, the mapping score comprises at least one of: a similarity score and a mismatch score, wherein a plurality of candidate mappings between the two TSSTI are computed, each candidate mapping associated with a mapping score; wherein a particular candidate mapping associated with an optimal mapping score among all the candidate mappings is determined as the mapping between the two TSSTI, the optimal mapping score comprising at least one of: a maximum similarity score and a minimum mismatch score; and wherein a representative STI template is computed based on at least one of: the target segments of the set of cleaned training TSSTI, a time derivative of the target segments, or a signal processing of the target segments.

Clause 29. The wireless target motion detection system of clause 28, wherein the Type2 device is further configured to perform: in the online stage, detecting a presence of motion based on at least one of: the TSCI, and the TSSTI before detecting the target motion of the object; wherein the wireless signal comprises a time series of probing signals with piecewise-constant instantaneous probe rates corresponding to piecewise-constant instantaneous inter-probe periods; wherein the CI of the TSCI have respective piecewise-constant instantaneous CI rates corresponding to the piecewise-constant instantaneous probe rates; wherein the STI of the TSSTI have respective piecewise-constant instantaneous STI rates corresponding to the piecewise-constant instantaneous CI rates of the TSCI; in a standby mode of the online stage, configuring the instantaneous STI rates, and the instantaneous CI rates to be a default rate by configuring the instantaneous probe rate to be the default rate; in the standby mode, detecting a presence of motion based on at least one of: the CI at the default rate, or the STI at the default rate; in a task mode of the online stage, configuring the instantaneous STI rates, and the instantaneous CI rates to be an elevated rate by configuring the instantaneous probe rate to be the elevated rate, wherein the elevated rate is greater than the default rate; in the task mode, detecting the target motion of the object based on at least one of: the CI at the elevated rate, or the STI at the elevated rate; and changing between the task mode and the standby mode in the online stage.

Clause 30. A method of a wireless target motion detection system, comprising: in an online stage: transmitting a wireless signal from a Type1 heterogeneous wireless device in a venue through a wireless multipath channel of the venue, wherein an object in the venue is undergoing a target motion; receiving the wireless signal by a Type2 heterogeneous wireless device in the venue through the wireless multipath channel, wherein the received wireless signal differs from the transmitted wireless signal due to the wireless multipath channel of the venue and a modulation of the wireless signal by the object undergoing the target motion in the venue; obtaining a time series of channel information (TSCI) of the wireless multipath channel based on the received wireless signal using a processor, a memory communicatively coupled with the processor and a set of instructions stored in the memory; computing a time series of spatial-temporal information (STI) of the object based on the TSCI; detecting the target motion of the object based on a comparison of the time series of STI (TSSTI) with at least one representation STI template; in an offline stage: computing the at least one representative STI template based on a set of training TSSTI, each training TSSTI computed based on a respective training TSCI obtained based on a respective training wireless signal from a respective training Type1 device received by a respective training Type2 device in a respective training venue when a respective training object in the respective training venue undergoes a respective training target motion; cleaning each training TSSTI by segmenting the training TSSTI into a respective initial non-target segment of STI, a respective target segment of STI corresponding to the respective training target motion of the respective training object, and a respective trailing non-target segment of STI; segmenting the training TSSTI based on a mapping between the training TSSTI and another training TSSTI with a mapping score between the two TSSTI associated with the mapping, the mapping score comprises at least one of: a similarity score and a mismatch score; computing a plurality of candidate mappings between the two TSSTI, each candidate mapping associated with a respective mapping score; determining a particular candidate mapping associated with an optimal mapping score among all the candidate mappings as the mapping between the two TSSTI, the optimal mapping score comprising at least one of: a maximum similarity score and a minimum mismatch score; and computing a representative STI template is computed based on at least one of: the target segments of the set of cleaned training TSSTI, a time derivative of the target segments, or a signal processing of the target segments; in the online stage: computing a test mapping between the TSSTI and each representative STI template with respective associated test mapping score; detecting the target motion of the object if a test mapping score satisfies a detection criterion.

The following numbered clauses provide implementation examples for wireless material sensing.

Clause A1. A method/device/system/software of a wireless material sensing system, comprising: transmitting a wireless probe signal from a Type1 heterogeneous wireless device at a target material surface of an object using N1 transmit (Tx) antennas of the Type1 device through a wireless multipath channel of a venue, wherein the target material surface is a surface of a target material of the object; receiving the wireless probe signal by a Type2 heterogeneous wireless device using N2 receive (Rx) antennas of the Type2 device, wherein the received signal comprises at least one of: a reflection or a refraction, of the wireless probe signal at the target material surface; obtaining a plurality of channel information (CI) of the wireless multipath channel based on the received wireless probe signal using a processor, a memory communicatively coupled with the processor and a set of instructions stored in the memory, wherein each CI is associated with a Tx antenna of the Type1 device and a Rx antenna of the Type2 device, wherein each CI comprises at least one of: channel state information (CSI), channel impulse response (CIR), channel frequency response (CFR), or received signal strength index (RSSI); computing a material analytics based on the number of CI; and computing a type of the target material of the object based on the material analytics.

Clause A2. The method/device/system/software of the wireless material sensing system of Clause A1, wherein: the material analytics is associated with the reflection of the wireless probe signal at the target material surface.

Clause A3. The method/device/system/software of the wireless material sensing system of Clause A2, wherein: a CI associated with a Tx antenna and a Rx antenna comprises a CIR comprising of a number of tabs; the material analytics is based on at least one of: an amplitude of a tab of the CIR associated with the reflection of the wireless probe signal at the target material surface, a distance between the Tx antenna and the target material surface, a distance between the Rx antenna and the target material surface, a Tx gain associated with the transmission of the wireless probe signal in the Type1 device, and an Rx gain associated with the reception of the wireless probe signal in the Type2 device.

Clause A4. The method/device/system/software of the wireless material sensing system of Clause A2 or Clause A3, wherein: each CI comprises a CIR with a number of tabs; the Tx antennas of the Type1 device and the Rx antennas of the Type2 device are in line-of-sight (LOS) such that the received signal comprises a direct LOS component of the wireless probe signal; each CIR has tabs with large magnitude corresponding to the LOS component of the wireless probe signal in the received signal.

Clause A5. The method/device/system/software of the wireless material sensing system of Clause A4, wherein: the Type1 device and the Type2 device are the same device; the Tx antenna array and the Rx antenna array are next to each other.

Clause A6. The method/device/system/software of the wireless material sensing system of Clause A5, wherein: the material analytics increases with: amplitude of tabs of CIRs associated with the reflection of the wireless probe signal at the target material surface, and the distance between the target material surface and the antenna arrays; and the material analytics decreases with: a Tx gain associated with the transmission of the wireless probe signal in the Type1 device, and an Rx gain associated with the reception of the wireless probe signal in the Type2 device.

Clause A7. The method/device/system/software of the wireless material sensing system of Clause A6, wherein: the material analytics is proportional to a product of an amplitude of CIR tabs associated with the reflection and the distance between the target material surface and the antenna arrays; and the material analytics is inversely proportional to a product of the Tx gain and the Rx gain.

Clause A8. The method/device/system/software of the wireless material sensing system of Clauses A5-A7, further comprising: interpolating all CIRs by an interpolation factor; and computing the material analytics based on the interpolated CIRs.

Clause A9. The method/device/system/software of the wireless material sensing system of Clause A8, further comprising: synchronizing all the CIR; and computing the material analytics based on the synchronized CIRs.

Clause A10. The method/device/system/software of the wireless material sensing system of Clause A9, further comprising: for each CIR: synchronizing a respective background CIR with the CIR, scaling the synchronized background CIR, and computing the respective background-subtracted CIR by subtracting the scaled synchronized background CIR from the CIR; and computing the material analytics based on the plurality of background-subtracted CIRs.

Clause A11. The method/device/system/software of the wireless material sensing system of Clause A10, further comprising: computing a plurality of spatial-temporal quantities, each based on a respective background-subtracted CIR; computing the material analytics based on the plurality of spatial-temporal quantities.

Clause A12. The method/device/system/software of the wireless material sensing system of Clauses A8-A11, further comprising: interpolating the CIRs based in at least one of: linear interpolation, polynomial interpolation and spline interpolation.

Clause A13. The method/device/system/software of the wireless material sensing system of Clauses A9-A12, further comprising: aligning the CIRs based on LOS tabs, wherein the LOS tabs are CIR tabs with large magnitude corresponding to the LOS component of the wireless probe signal.

Clause A14. The method/device/system/software of the wireless material sensing system of Clause A13, further comprising: determining a particular CIR as a reference CIR; determining a reference window of tabs of the particular CIR encompassing its large-magnitude LOS tabs; computing matching score between the reference window of the reference CIR and a sliding window of another CIR in search of the best-matched sliding window with optimal matching score; aligning the another CIR with the reference CIR based on reference window and the best-matched sliding window; rotating the another CIR such that the best-matched sliding window is shifted to the same tab location as the reference window.

Clause A15. The method/device/system/software of the wireless material sensing system of Clause A14, wherein: the tab location of the sliding window is within a search range of the tab location of the reference window; the matching score comprises at least one of: cross correlation, cross covariance, $L\_1$ distance, absolute difference, $L\_2$ distance, Euclidean distance, $L\_k$ distance, a function of the above, or another matching score.

Clause A16. The method/device/system/software of the wireless material sensing system of Clauses A13-A15, further comprising: determining a particular CIR as a reference CIR; computing a representative tab location of the particular CIR; computing the representative tab location of a second CIR; aligning the second CIR with the reference CIR based on the representative tab locations of the reference CIR and the second CIR; rotating the second CIR such that its representative tab location is as close to the representative tab location of the reference CIR.

Clause A17. The method/device/system/software of the wireless material sensing system of Clause A16, further comprising: computing the representative tab location of a CIR by normalizing the CIR and treating the normalized CIR as a probability density function (pdf) with its tab index being a real-valued variable $X$ and the normalized CIR tab magnitude being its pdf $f(X)$; wherein the representative tab location comprises at least one of: a mean of $X$, the expected value of $X$, the $X$ corresponding to a centroid of $f(X)$, a mode of $X$, the value of $X$ with maximum $f(X)$, a median of $X$, the value of $X$ at 50-percentile, a 50-percentile of $X$, the value of $X$ at Y-percentile wherein $0<=Y<=100$, a conditional mean of $X$, a conditional mode of $X$, a conditional median of $X$, a conditional percentile of $X$, a conditional quantity of $X$ subject to at least one of: $X$ is between the mean plus an offset $Y1$ and the mean plus an offset $Y2>=Y1$,

X is between the mode plus an offset Y3 and the mode plus an offset Y4>=Y3, X is between the median plus an offset Y5 and the mode plus an offset Y6>=Y5, or X is between its Y7-percentile and its Y8-percentile, wherein 0<=Y7<=Y8<=100; wherein the conditional quantity comprises at least one of: conditional mean, conditional mode, conditional median, or conditional Y-percentile.

Clause A18. The method/device/system/software of the wireless material sensing system of Clauses A10-A17, further comprising: transmitting another wireless probe signal from the N1 Tx antennas of the Type1 device through the wireless multipath channel of the venue with the object removed in a field of interest; receiving the another wireless probe signal by the N2 Rx antennas of the Type2 heterogeneous wireless; obtaining the plurality of background CIRs of the wireless multipath channel based on the received another wireless probe signal, wherein the respective background CIR subtracted from the respective CIR is associated with the same Tx and Rx antennas associated with the respective CIR.

Clause A19. The method/device/system/software of the wireless material sensing system of Clause A18, further comprising: obtaining a plurality of trial CIRs of the wireless multipath channel based on the received another wireless probe signal; detecting if there is object or not in the field of interest based on the plurality of trial CIRs; if no object is detected, obtaining the plurality of background CIRs as the plurality of trial CIRs automatically; otherwise, repeating the procedures by transmitting and receiving yet another wireless probe signal to obtain another plurality of trial CIRs.

Clause A20. The method/device/system/software of the wireless material sensing system of Clauses A10-A19, further comprising: scaling all tabs of the synchronized background CIR by a scaling factor; computing the scaling factor to optimize a matching score between the CIR and the scaled synchronized background CIR, wherein the matching score comprises at least one of: cross correlation, cross covariance, $L\_1$ distance, absolute difference, $L\_2$ distance, Euclidean distance, $L\_k$ distance, a function of the above, or another matching score.

Clause A21. The method/device/system/software of the wireless material sensing system of Clauses A10-A20, further comprising: computing a plurality of candidate material analytics, each based on a respective background-subtracted CIR; computing the material analytics as an aggregate analytics of the plurality of candidate material analytics, wherein the aggregate analytics comprises at least one of: a mean, a mode, a median, a percentile, a scaling, a weighted mean, a trimmed mean, a geometric mean, a harmonic mean, or a function of any of the above.

Clause A22. The method/device/system/software of the wireless material sensing system of Clause A21, further comprising: for each Tx antenna and for each Rx antenna: determining that a background-subtracted CIR is associated with the Tx antenna and the Rx antenna, with a first CIR tab associated with the LOS component of the wireless probe signal, identifying a maximum magnitude of the background-subtracted CIR after the first CIR tab, the maximum magnitude associated with a second CIR tab of the background-subtracted CIR, computing the candidate material analytics based on the second CIR tab and the maximum magnitude.

Clause A23. The method/device/system/software of the wireless material sensing system of Clause A22, further comprising: for the Tx antenna and the Rx antenna: determining a first distance between the Tx antenna and the Rx antenna, computing a time difference between the first CIR tab and the second CIR tab, computing a second distance based on the time difference, computing a third distance based on the first distance and the second distance, and computing the associated candidate material analytics based on the maximum magnitude and the third distance.

Clause A24. The method/device/system/software of the wireless material sensing system of Clause A23, wherein: the time difference is computed based on a sampling frequency of the CIR; the second distance is computed as a product of a wave propagation speed of the wireless probe signal in the venue and the time difference; the third distance is computed as a weighted sum of the first distance and the second distance; the associated candidate material analytics is computed based on at least one of: a transmitter gain, a receiver gain, and a sum of the first distance and the second distance.

Clause A25. The method/device/system/software of the wireless material sensing system of Clauses A1-A24, further comprise: transmitting an additional wireless probe signal from the N1 Tx antennas of the Type1 device at the target material surface of the object through the wireless multipath channel of the venue; receiving the additional wireless probe signal by the N2 Rx antennas of the Type2 device; obtaining a plurality of additional CIs of the wireless multipath channel based on the received additional wireless probe signal, wherein each additional CI is associated with a Tx antenna of the Type1 device and a Rx antenna of the Type2 device, wherein each additional CI comprises at least one of: channel state information (CSI), channel impulse response (CIR), channel frequency response (CFR), or received signal strength index (RSSI); computing an additional material analytics based on the number of additional CI; and computing the type of the target material of the object based on the additional material analytics.

Clause A26. The method/device/system/software of the wireless material sensing system of Clause A25, further comprise: computing an aggregate material analytics based on the material analytics and the additional material analytics; and computing the type of the target material of the object based on the aggregate material analytics.

Clause A27. The method/device/system/software of the wireless material sensing system of Clauses A25-A26, further comprise: refining the material analytics based on the additional material analytics.

Clause A28. The method/device/system/software of the wireless material sensing system of Clauses A1-A27, further comprise: in a training phase: for each of a plurality of training material: transmitting a wireless training probe signal from N3 Tx antennas of a training Type1 device at a training material surface of a respectively training object through a training wireless multipath channel of a training venue, receiving the wireless training probe signal by N4 Rx antennas of a training Type2 device, obtaining a plurality of training CIs of the training wireless multipath channel based on the received wireless training probe signal, wherein each training CI is associated with a Tx antenna of the training Type1 device and a Rx antenna of the training Type2 device, wherein each training CI comprises at least one of: channel state information (CSI), channel impulse response (CIR), channel frequency response (CFR), or received signal strength index (RSSI), and computing a training material analytics based on the number of additional CI, and training a classifier based on machine learning and the training material analytics of each training material; in an operating phase: computing the type of the target material of the object based on the classifier.

The following numbered clauses provide implementation examples for wireless writing tracking.

Clause B1. A system for wireless writing tracking, comprising: a transmitter configured for transmitting a first wireless signal through a wireless multipath channel of a venue; a receiver configured for receiving a second wireless signal through the wireless multipath channel, wherein the second wireless signal comprises a reflection of the first wireless signal by a tip of a writing instrument in the venue; and a processor configured for: obtaining a time series of channel information (CI) of the wireless multipath channel based on the second wireless signal, wherein each CI comprises at least one of: a channel state information (CSI), channel impulse response (CIR), channel frequency response (CFR), or received signal strength index (RSSI), and tracking a movement of the tip of the writing instrument based on the time series of CI (TSCI).

Clause B2. The system of Clause B1, wherein: each CI comprises a CIR including a number of taps; a location of the tip of the writing instrument is determined based on a plurality of spatial bins in the venue; each of the plurality of spatial bins is determined by: a respective direction and a respective distance range originating from the receiver; and each direction is identified by a corresponding azimuth angle and a corresponding elevation angle.

Clause B3. The system of Clause B2, wherein: the movement of the tip is along a surface; and any point on the surface has a zero elevation angle with respect to the receiver.

Clause B4. The system of Clause B3, wherein the processor is further configured for: generating a time series of background-subtracted CIRs based on a time series of background CIRs and the time series of CIRs, wherein the time series of background-subtracted CIRs are generated by, for each CIR: synchronizing a respective background CIR with the CIR, scaling the synchronized background CIR, and computing a respective background-subtracted CIR by subtracting the scaled synchronized background CIR from the CIR; and tracking the movement of the tip based on the time series of background-subtracted CIRs.

Clause B5. The system of Clause B4, wherein: the transmitter is further configured for transmitting a third wireless signal through the wireless multipath channel of the venue, with no moving object in the venue; the receiver is further configured for receiving a fourth wireless signal through the wireless multipath channel; and the processor is further configured for obtaining the time series of background CIRs of the wireless multipath channel based on the fourth wireless signal.

Clause B6. The system of Clause B5, wherein: the first wireless signal and the third wireless signal are transmitted using a plurality of transmit antennas of the transmitter; the second wireless signal and the fourth wireless signal are received using a plurality of receive antennas of the receiver; each background CIR is obtained by averaging over the plurality of receive antennas and over distance ranges of interest within the venue; and each CIR and the respective background CIR synchronized with the CIR are associated with a same respective one of the plurality of transmit antennas of the transmitter and associated with a same respective one of the plurality of receive antennas of the receiver.

Clause B7. The system of Clauses B4-B6, wherein the processor is further configured for: for each of a plurality of distance ranges of interest and for each of the background-subtracted CIRs, computing a directional CIR by applying beamforming on the background-subtracted CIR, with respect to each of a plurality of directions originating from the receiver, wherein the plurality of distance ranges of interest and the plurality of directions form a plurality of spatial bins of interest.

Clause B8. The system of Clause B7, wherein the processor is further configured for: for each time instance and for each spatial bin of interest, transforming the directional CIR into frequency domain with a moving time window to compute signal powers at different frequencies, including a zero frequency and a plurality of non-zero frequencies.

Clause B9. The system of Clause B8, wherein the processor is further configured for: generating a first power matrix including power values for each time instance and for each spatial bin of interest, wherein each power value in the first power matrix is a maximum signal power among the plurality of non-zero frequencies, for a respective time instance and for a respective spatial bin of interest.

Clause B10. The system of Clause B9, wherein the processor is further configured for: comparing each power value in the first power matrix with a first threshold, to generate a corresponding element of a filtered first power matrix, wherein each element of the filtered first power matrix is equal to: a corresponding power value of the first power matrix, when the corresponding power value is greater than the first threshold, or zero, when the corresponding power value is not greater than the first threshold.

Clause B11. The system of Clause B10, wherein the processor is further configured for: for each time instance, determining a first set of spatial bins of interest including at least one spatial bin, wherein an element of the filtered first power matrix corresponding to the time instance and each of the at least one spatial bin is equal to a non-zero power value.

Clause B12. The system of Clause B11, wherein the processor is further configured for: determining a presence of at least one moving target in the venue based on the first set of spatial bins of interest, wherein each of the at least one moving target has a location in the first set of spatial bins of interest for at least one time instance.

Clause B13. The system of Clause B12, wherein the processor is further configured for: refining the locations of the at least one moving target based on interpolation.

Clause B14. The system of Clauses B12-B13, wherein the processor is further configured for: for each of the at least one moving target, determining that two locations of the moving target at two consecutive time instances are continuous when the two locations are closer than a distance threshold, generating a continuous trajectory of the moving target based on continuous locations of the moving target, computing a continuity score for the moving target to indicate a length of the continuous trajectory of the moving target, and determining a candidate trajectory for the tip of the writing instrument based on the continuous trajectory, when the continuity score is greater than a predetermined threshold.

Clause B15. The system of Clause B14, wherein the two locations are closer than the distance threshold when elevation angles of the two locations are closer than a predetermined threshold.

Clause B16. The system of Clauses B14-B15, wherein the two locations are closer than the distance threshold when: azimuth angles of the two locations are closer than a first predetermined threshold; elevation angles of the two locations are closer than a second predetermined threshold; and distance ranges of the two locations are closer than a third predetermined threshold.

Clause B17. The system of Clauses B14-B16, wherein the processor is further configured for: when a single candidate trajectory is determined in total based on the at least one moving target, determining a moving trajectory of the tip of the writing instrument based on the single candidate trajectory, and identifying the tip of the writing instrument based on the moving target having the single candidate trajectory.

Clause B18. The system of Clauses B14-B17, wherein the processor is further configured for: when a plurality of candidate trajectories are determined in total based on the at least one moving target, determining an average elevation angle for all locations associated with each of the plurality of candidate trajectories, determining a moving trajectory of the tip of the writing instrument based on a lowest elevation candidate trajectory associated with a lowest average elevation angle, among the plurality of candidate trajectories, and identifying the tip of the writing instrument based on the moving target having the lowest elevation candidate trajectory.

Clause B19. The system of Clause B18, wherein the processor is further configured for at least one of: smoothing the moving trajectory of the tip of the writing instrument based on at least one of: outlier removal, interpolation or moving average; filtering a noisy portion of the moving trajectory based on cosine transform; or discarding at least one frequency component based on weighted average, while transforming back the moving trajectory to signal domain.

Clause B20. The system of Clauses B14-B19, wherein the processor is further configured for: generating a second power matrix including power values for each time instance and for each spatial bin of interest, wherein each power value in the second power matrix is a signal power at the zero frequency, for a respective time instance and for a respective spatial bin of interest; comparing each power value in the second power matrix with a second threshold, to generate a corresponding element of a filtered second power matrix, wherein each element of the filtered second power matrix is equal to: a corresponding power value of the second power matrix, when the corresponding power value is greater than the second threshold, or zero, when the corresponding power value is not greater than the second threshold; for each time instance, determining a second set of spatial bins of interest including at least one spatial bin, wherein an element of the filtered second power matrix corresponding to the time instance and each of the at least one spatial bin is equal to a non-zero power value; and determining a presence of at least one static target in the venue based on the second set of spatial bins of interest, wherein each of the at least one static target has a location in the second set of spatial bins of interest for at least one time instance.

Clause B21. The system of Clause B20, wherein the processor is further configured for: for one of the at least one moving target, determining that a length of the continuous trajectory of the moving target is greater than a predetermined threshold, determining that the continuous trajectory of the moving target discontinues at a time instance, and seeking a location at the time instance for a static target in the second set of spatial bins of interest, to determine a continuous location with respect to the continuous trajectory of the moving target at the time instance.

Clause B22. The system of Clauses B1-B21, wherein the transmitter and the receiver are physically coupled to each other.

Clause B23. A wireless device of a wireless writing tracking system, comprising: a processor; a memory communicatively coupled to the processor; and a receiver communicatively coupled to the processor, wherein: an additional wireless device of the wireless writing tracking system is configured for transmitting a first wireless signal through a wireless multipath channel of a venue, the receiver is configured for receiving a second wireless signal through the wireless multipath channel, the second wireless signal comprises a reflection of the first wireless signal by a tip of a writing instrument in the venue, and the processor is configured for: obtaining a time series of channel information (CI) of the wireless multipath channel based on the second wireless signal, wherein each CI comprises at least one of: a channel state information (CSI), channel impulse response (CIR), channel frequency response (CFR), or received signal strength index (RSSI), and tracking a movement of the tip of the writing instrument based on the time series of CI (TSCI).

Clause B24. The wireless device of Clause B23, wherein: each CI comprises a CIR; a location of the tip of the writing instrument is determined based on a plurality of spatial bins in the venue; each of the plurality of spatial bins is determined by: a respective direction and a respective distance range originating from the receiver; each direction is identified by a corresponding azimuth angle and a corresponding elevation angle; the movement of the tip is along a surface; and any point on the surface has a zero elevation angle with respect to the receiver.

Clause B25. The wireless device of Clause B24, wherein the processor is further configured for: for each time instance and for each spatial bin of the plurality of spatial bins, transforming the CIR into frequency domain to compute signal powers at different frequencies, including a zero frequency and a plurality of non-zero frequencies.

Clause B26. The wireless device of Clause B25, wherein the processor is further configured for: generating a first power matrix including power values for each time instance and for each spatial bin, wherein each power value in the first power matrix is a maximum signal power among the plurality of non-zero frequencies, for a respective time instance and for a respective spatial bin; comparing each power value in the first power matrix with a first threshold, to generate a corresponding element of a filtered first power matrix, wherein each element of the filtered first power matrix is equal to: a corresponding power value of the first power matrix, when the corresponding power value is greater than the first threshold, or zero, when the corresponding power value is not greater than the first threshold; for each time instance, determining a first set of spatial bins including at least one spatial bin, wherein an element of the filtered first power matrix corresponding to the time instance and each of the at least one spatial bin is equal to a non-zero power value; and determining a presence of at least one moving target in the venue based on the first set of spatial bins, wherein each of the at least one moving target has a location in the first set of spatial bins for at least one time instance.

Clause B27. The wireless device of Clause B26, wherein the processor is further configured for: for each of the at least one moving target, determining that two locations of the moving target at two consecutive time instances are continuous when the two locations are closer than a distance threshold, generating a continuous trajectory of the moving target based on continuous locations of the moving target, computing a continuity score for the moving target to indicate a length of the continuous trajectory of the moving target, and determining a candidate trajectory for the tip of the writing instrument based on the continuous trajectory, when the continuity score is greater than a predetermined threshold; and when a plurality of candidate trajectories are determined in total based on the at least one moving target, determining an average elevation angle for all locations associated with each of the plurality of candidate trajectories, determining a moving trajectory of the tip of the writing instrument based on a lowest elevation candidate trajectory associated with a lowest average elevation angle, among the plurality of candidate trajectories, and identifying the tip of the writing instrument based on the moving target having the lowest elevation candidate trajectory.

Clause B28. The wireless device of Clause B27, wherein the processor is further configured for at least one of: smoothing the moving trajectory of the tip of the writing instrument based on at least one of: outlier removal, interpolation or moving average; filtering a noisy portion of the moving trajectory based on cosine transform; or discarding at least one frequency component based on weighted average, while transforming back the moving trajectory to signal domain.

Clause B29. A method of a wireless writing tracking system, comprising: transmitting a first wireless signal through a wireless multipath channel of a venue; receiving a second wireless signal through the wireless multipath channel, wherein the second wireless signal comprises a reflection of the first wireless signal by a tip of a writing instrument in the venue; obtaining a time series of channel information (CI) of the wireless multipath channel based on the second wireless signal, wherein each CI comprises at least one of: a channel state information (CSI), channel impulse response (CIR), channel frequency response (CFR), or received signal strength index (RSSI); and tracking a writing of the tip of the writing instrument based on the time series of CI (TSCI).

Clause B30. The method of Clause B29, wherein: a location of the tip of the writing instrument is determined based on a plurality of spatial bins in the venue; each of the plurality of spatial bins is determined by: a respective direction and a respective distance range originating from the receiver; each direction is identified by a corresponding azimuth angle and a corresponding elevation angle; the writing of the tip is on a surface; any point on the surface has a zero elevation angle with respect to the receiver; and the transmitter and the receiver are physically coupled to each other.

The following numbered clauses provide implementation examples for improving accuracy and efficiency of wireless monitoring.

Clause C1. A method/system/software/device of a wireless monitoring system, comprising: transmitting a wireless signal from a Type 1 heterogeneous wireless device with N1 transmit antennas through a wireless multipath channel of a venue, wherein the wireless multipath channel is impacted by a motion of an object in the venue, receiving the wireless signal by a Type 2 heterogeneous wireless device with N2 receive antennas through the wireless multipath channel, wherein the received wireless signal differs from the transmitted wireless signal due to the wireless multipath channel of the venue; obtaining a number of time series of channel information (TSCI) of the wireless multipath channel based on the received wireless signal using a processor, a memory communicatively coupled with the processor and a set of instructions stored in the memory, each TSCI associated with one of the N1 transmit antennas and one of the N2 receive antennas; monitoring the motion of the object in the venue based on the number of TSCI.
Clause C2. The method/system/software/device of the wireless monitoring system of Clause C1, comprising: pre-processing the number of TSCI; and monitoring the motion of the object in the venue based on the number of preprocessed TSCI.
Clause C3. The method/system/software/device of the wireless monitoring system of Clause C2, comprising: identifying a time window as a questionable time window which is at least one of: noisy, abnormal, atypical, irregular, untrustworthy, questionable, and erratic; identifying all channel information (CI) in the questionable time window as questionable CI; computing the preprocessed TSCI by removing all questionable CI from the number of TSCI.

A time window may be questionable, i.e. may be noisy, abnormal, atypical, irregular, untrustworthy, questionable, or erratic, when characteristics of the TSCI in the time window exhibit fluctuations larger than a predefined or adaptive threshold. According to different embodiments, the characteristics of the TSCI may be: differences between the TSCI at adjacent time stamps in the time window; a function of the differences; amplitudes of the TSCI at consecutive time stamps in the time window; or a function of the amplitudes.

Clause C4. The method/system/software/device of the wireless monitoring system of Clause C3: wherein the questionable time window has zero time duration; wherein the questionable time window comprises a single time stamp.
Clause C5. The method/system/software/device of the wireless monitoring system of Clauses C3-C4, further comprising: computing a testing measure of the time window based on the number of TSCI; identifying the time window as the questionable time window based on the testing measure.
Clause C6. The method/system/software/device of the wireless monitoring system of Clause C5: wherein computing the testing measure comprises at least one of: an addition, sum, subtraction, difference, multiplication, product, scaling, division, ratio, summation, summation over time, summation over frequency, summation over a sliding time window, normalization, vector sum, negation, absolute value, intersection, union, complement, mean, median, mode, average, weighted average, weighted median, weighted mode, arithmetic mean, geometric mean, harmonic mean, trimmed mean, time average, L-0 norm, L-1 norm, L-2 norm, L-k norm, L-0 distance, L-1 distance, L-2 distance, L-k distance, statistics, short term statistics, long term statistics, autocorrelation function, auto-covariance function, cross correlation function, cross covariance function, moment generating function, ordered statistics, histogram, percentile, variance, standard deviation, range, duration, measure of variation, spread, dispersion, divergence, interquartile range, total variation, total differential, deviation, absolute deviation, deviation from mean, deviation from trimmed mean, deviation from median, total deviation, slope, derivative, partial derivative, first order derivative, second order derivative, higher-order derivative, integration, weighted integration, partial integration, zero crossing, minimum, local minimum, maximum, local maximum, line, tangent, intersection, max derivative, minimum derivative, feature, scalar, vector, magnitude, phase, real part, purely imaginary part, square, cube, root, power, sine, cosine, tangent, cotangent, secant, cosecant, polynomial, exponential, logarithm, function, linear function, piecewise-linear function, nonlinear function, scalar function, vector function, discrete function, continuous function, algebraic function, polynomial function, exponential function, logarithmic function, trigonometric function, transcendental function, logical function, elliptical function, parabolic function, hyperbolic function, game function, zeta function, limiting function, absolute function, indicator function, floor function, rounding function, sign function, piecewise constant function, composite function, function of function, quantization, thresholding, moving function, sliding function, moving average, moving median, moving statistics, moving operation, function of moving window of neighboring items of a time series, function of multiple frequency-related features, function of multiple time-related features, transformation, frequency transform, inverse frequency transform, discrete transform, discrete time transform, short-time transform, Laplace transform, Hilbert transform, sine transform, cosine transform, triangular transform, wavelet transform, DCT, DST, DFT, FFT, Hadamard transform, integer transform, power-of-2 transform, sparse transform, sparse transform, projection, decomposition, matching pursuit, sparse approximation, principle component analysis (PCA), independent component analysis (ICA), singular value decomposition (SVD), eigen-decomposition, orthogonal decomposition, eigenvalue, singular value, graph-based processing, graph-based transform, graph signal processing, compressive sensing, classification, identifying a class/group/category, labeling, learning, machine learning, neural network, detection, estimation, feature extraction, learning network, feature extraction, denoising, signal enhancement, coding, encryption, mapping, remapping, vector quantization, filtering, lowpass filtering, highpass filtering, bandpass filtering, matched filtering, Kalman filtering, preprocessing, postprocessing, particle filter, FIR filtering, IIR filtering, autoregressive (AR) filtering, adaptive filtering, smoothing, median filtering, mode filtering, sampling, random sampling, resampling function, downsampling, down-converting, upsampling, up-converting, interpolation, extrapolation, importance sampling, Monte Carlo sampling, special function, Bessel function, error function, complementary error function, Beta function, Gamma function, integral function, Gaussian function, Poisson function, another quantity, another scalar operation, another vector operation, another sliding operation, and another function.

Clause C7. The method/system/software/device of the wireless monitoring system of Clauses C5-C6, further comprising: wherein the time window comprises a plurality of time stamps; computing a plurality of instantaneous testing measures, each associated with a respective time stamp in the time window; computing the testing measure based on an aggregating of the plurality of instantaneous testing measures.

Clause C8. The method/system/software/device of the wireless monitoring system of Clause C7, further comprising: aggregating the plurality of instantaneous testing measures based on at least one of: an addition, sum, subtraction, difference, multiplication, product, scaling, division, ratio, summation, summation over time, summation over frequency, summation over a sliding time window, normalization, vector sum, negation, absolute value, intersection, union, complement, mean, median, mode, average, weighted average, weighted median, weighted mode, arithmetic mean, geometric mean, harmonic mean, trimmed mean, time average, L-0 norm, L-1 norm, L-2 norm, L-k norm, L-0 distance, L-1 distance, L-2 distance, L-k distance, statistics, short term statistics, long term statistics, autocorrelation function, auto-covariance function, cross correlation function, cross covariance function, moment generating function, ordered statistics, histogram, percentile, variance, standard deviation, range, duration, measure of variation, spread, dispersion, divergence, interquartile range, total variation, total differential, deviation, absolute deviation, deviation from mean, deviation from trimmed mean, deviation from median, total deviation, slope, derivative, partial derivative, first order derivative, second order derivative, higher-order derivative, integration, weighted integration, partial integration, zero crossing, minimum, local minimum, maximum, local maximum, line, tangent, intersection, max derivative, minimum derivative, feature, scalar, vector, magnitude, phase, real part, purely imaginary part, square, cube, root, power, sine, cosine, tangent, cotangent, secant, cosecant, polynomial, exponential, logarithm, function, linear function, piecewise-linear function, nonlinear function, scalar function, vector function, discrete function, continuous function, algebraic function, polynomial function, exponential function, logarithmic function, trigonometric function, transcendental function, logical function, elliptical function, parabolic function, hyperbolic function, game function, zeta function, limiting function, absolute function, indicator function, floor function, rounding function, sign function, piecewise constant function, composite function, function of function, quantization, thresholding, moving function, sliding function, moving average, moving median, moving statistics, moving operation, function of moving window of neighboring items of a time series, function of multiple frequency-related features, function of multiple time-related features, transformation, frequency transform, inverse frequency transform, discrete transform, discrete time transform, short-time transform, Laplace transform, Hilbert transform, sine transform, cosine transform, triangular transform, wavelet transform, DCT, DST, DFT, FFT, Hadamard transform, integer transform, power-of-2 transform, sparse transform, sparse transform, projection, decomposition, matching pursuit, sparse approximation, principle component analysis (PCA), independent component analysis (ICA), singular value decomposition (SVD), eigen-decomposition, orthogonal decomposition, eigenvalue, singular value, graph-based processing, graph-based transform, graph signal processing, compressive sensing, classification, identifying a class/group/category, labeling, learning, machine learning, neural network, detection, estimation, feature extraction, learning network, feature extraction, denoising, signal enhancement, coding, encryption, mapping, remapping, vector quantization, filtering, lowpass filtering, highpass filtering, bandpass filtering, matched filtering, Kalman filtering, preprocessing, postprocessing, particle filter, FIR filtering, IIR filtering, autoregressive (AR) filtering, adaptive filtering, smoothing, median filtering, mode filtering, sampling, random sampling, resampling function, downsampling, down-converting, upsampling, up-converting, interpolation, extrapolation, importance sampling, Monte Carlo sampling, special function, Bessel function, error function, complementary error function, Beta function, Gamma function, integral function, Gaussian function, Poisson function, another quantity, another scalar operation, another vector operation, another sliding operation, and another function.

Clause C9. The method/system/software/device of the wireless monitoring system of Clauses C5-C8, further comprising: computing an adaptive threshold of the time window based on the number of TSCI; identifying the time window as the questionable time window if the testing measure exceeds the adaptive threshold.

Clause C10. The method/system/software/device of the wireless monitoring system of Clause C9: wherein computing the adaptive threshold comprises at least one of: an addition, sum, subtraction, difference, multiplication, product, scaling, division, ratio, summation, summation over time, summation over frequency, summation over a sliding time window, normalization, vector sum, negation, absolute value, intersection, union, complement, mean, median, mode, average, weighted average, weighted median, weighted mode, arithmetic mean, geometric mean, harmonic mean, trimmed mean, time average, L-0 norm, L-1 norm, L-2 norm, L-k norm, L-0 distance, L-1 distance, L-2 distance, L-k distance, statistics, short term statistics, long term statistics, autocorrelation function, auto-covariance function, cross correlation function, cross covariance function, moment generating function, ordered statistics, histogram, percentile, variance, standard deviation, range, duration, measure of variation, spread, dispersion, divergence, interquartile range, total variation, total differential, deviation, absolute deviation, deviation from mean, deviation from trimmed mean, deviation from median, total deviation, slope, derivative, partial derivative, first order derivative, second order derivative, higher-order derivative, integration, weighted integration, partial integration, zero crossing, minimum, local minimum, maximum, local maximum, line, tangent, intersection, max derivative, minimum derivative, feature, scalar, vector, magnitude, phase, real part, purely imaginary part, square, cube, root, power, sine, cosine, tangent, cotangent, secant, cosecant, polynomial, exponential, logarithm, function, linear function, piecewise-linear function, nonlinear function, scalar function, vector function, discrete function, continuous function, algebraic function, polynomial function, exponential function, logarithmic function, trigonometric function, transcendental function, logical function, elliptical function, parabolic function, hyperbolic function, game function, zeta function, limiting function, absolute function, indicator function, floor function, rounding function, sign function, piecewise constant function, composite function, function of function, quantization, thresholding, moving function, sliding function, moving average, moving median, moving statistics, moving operation, function of moving window of neighboring items of a time series, function of multiple frequency-related features, function of multiple time-related features, transformation, frequency transform, inverse frequency transform, discrete transform, discrete time transform, short-time transform, Laplace transform, Hilbert transform, sine transform, cosine transform, triangular transform, wavelet transform, DCT, DST, DFT, FFT, Hadamard transform, integer transform, power-of-2 transform, sparse transform, sparse transform, projection, decomposition, matching pursuit, sparse approximation, principle component analysis (PCA), independent component analysis (ICA), singular value decomposition (SVD), eigen-decomposition, orthogonal decomposition, eigenvalue, singular value, graph-based processing, graph-based transform, graph signal processing, compressive sensing, classification, identifying a class/group/category, labeling, learning, machine learning, neural network, detection, estimation, feature extraction, learning network, feature extraction, denoising, signal enhancement, coding, encryption, mapping, remapping, vector quantization, filtering, lowpass filtering, highpass filtering, bandpass filtering, matched filtering, Kalman filtering, preprocessing, postprocessing, particle filter, FIR filtering, IIR filtering, autoregressive (AR) filtering, adaptive filtering, smoothing, median filtering, mode filtering, sampling, random sampling, resampling function, downsampling, down-converting, upsampling, up-converting, interpolation, extrapolation, importance sampling, Monte Carlo sampling, special function, Bessel function, error function, complementary error function, Beta function, Gamma function, integral function, Gaussian function, Poisson function, another quantity, another scalar operation, another vector operation, another sliding operation, and another function.

Clause C11. The method/system/software/device of the wireless monitoring system of Clause C5, Clause C7 or Clause C9, further comprising: computing at least one of: the testing measure, the instantaneous testing measure, and the adaptive threshold, based on at least one of: an amount of antenna of Type 1 device, amount of antenna of Type 2 device, co-location of the Type 1 device and the Type 2 device, amount of Type 1 device(s) to be used, amount of Type 2 device(s) to be used, protocol between Type 1 device and Type 2 device, signaling between Type 1 device and Type 2 device, setting of the wireless multipath channel, carrier frequency of the wireless multipath channel, bandwidth of the wireless multipath channel, characteristics of the wireless multipath channel, channel switching of the wireless multipath channel, setting of the wireless signal, carrier frequency of the wireless signal, number of subcarriers of the wireless signal, bandwidth of the wireless signal, characteristics of the wireless signal, channel switching of the wireless signal, signaling of the wireless signal, standard of the wireless signal, setting of the standard of the wireless signal, protocol of the wireless signal, signal strength of the wireless signal, timing of the wireless signal, sounding rate of the wireless signal, timing of sounding signals of the wireless signal, choice of sounding signals of the wireless signal, rate of sounding signals of the wireless signal, choice of the channel information (CI), precision of the CI, amount of the CI, timing of the CI, the preprocessing of the number of TSCI, the monitoring of the motion of the object, a task associated with the monitoring, and another factor.

Clause C12. The method/system/software/device of the wireless monitoring system of Clauses C1-C11, further comprising: computing at least one time series of features (TSF) based on the number of TSCI; monitoring the motion of the object in the venue based on the at least one TSF.

Clause C13. The method/system/software/device of the wireless monitoring system of Clause C12, further comprising: wherein computing the time series of features based on at least one of: an addition, sum, subtraction, difference, multiplication, product, scaling, division, ratio, summation, summation over time, summation over frequency, summation over a sliding time window, normalization, vector sum, negation, absolute value, intersection, union, complement, mean, median, mode, average, weighted average, weighted median, weighted mode, arithmetic mean, geometric mean, harmonic mean, trimmed mean, time average, L-0 norm, L-1 norm, L-2 norm, L-k norm, L-0 distance, L-1 distance, L-2 distance, L-k distance, statistics, short term statistics, long term statistics, autocorrelation function, auto-covariance function, cross correlation function, cross covariance function, moment generating function, ordered statistics, histogram, percentile, variance, standard deviation, range, duration, measure of variation, spread, dispersion, divergence, interquartile range, total variation, total differential, deviation, absolute deviation, deviation from mean, deviation from trimmed mean, deviation from median, total deviation, slope, derivative, partial derivative, first order derivative, second order derivative, higher-order derivative, integration, weighted integration, partial integration, zero crossing, minimum, local minimum, maximum, local maximum, line, tangent, intersection, max derivative, minimum derivative, feature, scalar, vector, magnitude, phase, real part, purely imaginary part, square, cube, root, power, sine, cosine, tangent, cotangent, secant, cosecant, polynomial, exponential, logarithm, function, linear function, piecewise-linear function, nonlinear function, scalar function, vector function, discrete function, continuous function, algebraic function, polynomial function, exponential function, logarithmic function, trigonometric function, transcendental function, logical function, elliptical function, parabolic function, hyperbolic function, game function, zeta function, limiting function, absolute function, indicator function, floor function, rounding function, sign function, piecewise constant function, composite function, function of function, quantization, thresholding, moving function, sliding function, moving average, moving median, moving statistics, moving operation, function of moving window of neighboring items of a time series, function of multiple frequency-related features, function of multiple time-related features, transformation, frequency transform, inverse frequency transform, discrete transform, discrete time transform, short-time transform, Laplace transform, Hilbert transform, sine transform, cosine transform, triangular transform, wavelet transform, DCT, DST, DFT, FFT, Hadamard transform, integer transform, power-of-2 transform, sparse transform, sparse transform, projection, decomposition, matching pursuit, sparse approximation, principle component analysis (PCA), independent component analysis (ICA), singular value decomposition (SVD), eigen-decomposition, orthogonal decomposition, eigenvalue, singular value, graph-based processing, graph-based transform, graph signal processing, compressive sensing, classification, identifying a class/group/category, labeling, learning, machine learning, neural network, detection, estimation, feature extraction, learning network, feature extraction, denoising, signal enhancement, coding, encryption, mapping, remapping, vector quantization, filtering, lowpass filtering, highpass filtering, bandpass filtering, matched filtering, Kalman filtering, preprocessing, post-processing, particle filter, FIR filtering, IIR filtering, autoregressive (AR) filtering, adaptive filtering, smoothing, median filtering, mode filtering, sampling, random sampling, resampling function, downsampling, down-converting, upsampling, up-converting, interpolation, extrapolation, importance sampling, Monte Carlo sampling, special function, Bessel function, error function, complementary error function, Beta function, Gamma function, integral function, Gaussian function, Poisson function, another quantity, another scalar operation, another vector operation, another sliding operation, and another function.

Clause C14. The method/system/software/device of the wireless monitoring system of Clauses C12-C13: wherein a feature is at least one of: resistant, insensitive, and invariant, with respect to at least one of: phase noise, phase distortion, phase imperfection, phase offset, phase error, amplitude noise, amplitude distortion, amplitude imperfection, gain, AGC (automatic gain control) gain, thermal noise, and quantization noise. According to various embodiments, the phase noise is basically the consequence of synchronization errors: 1) channel frequency offset (CFO); 2) sampling frequency offset (SFO); and 3) symbol timing offset (STO), 4) thermal noise, and 5) quantization noise. These are the main sources of phase errors. As for the amplitude noise, the main sources are 1) thermal noise, 2) AGC gains, and 3) quantization noise.

Clause C15. The method/system/software/device of the wireless monitoring system of Clauses C12-C14: monitoring at least one of: a periodic motion and a transient motion, based on the at least one TSF.

Clause C16. The method/system/software/device of the wireless monitoring system of Clauses C1-C15, further comprising: generating at least one of: a response, an assistance and a presentation, based on the monitoring.

Clause C17. The method/system/software/device of the wireless monitoring system of Clause C16, further comprising: generating at least one of: the response, the assistance and the presentation, based on at least one of: checking at least one of: information source, information service, digital service, skill store, service store, information store, information provider, service provider, skill provider, information hub, information server, cloud server, fog server, edge server, local server, hub device, information requested by a user of the system, information of interest to user, weather information, news, news related to user, daily news briefing, user's to-do lists, user's calendars, user's upcoming events, events of interest to the user, user's connected accounts, user's telephone messages, user's email accounts, user's messaging accounts, information of another user associated with the user, information associated with the motion, and another information relevant to the user, tuning to at least one of: a content source, content service, preferred source, favorite source, usual source, random source, designated source, news source, music source, social media source, station, channel, web site, and another networked source, controlling at least one of: a smart system, smart device, smart service, lighting system, speaker system, air conditioning system, heating system, water heating system, ventilation system, entertainment system, music system, recording system, home security system, sound system, media system, haptic system, scent, smell, fragrance, taste, virtual reality system, augmented reality system, background music, camera, video recorder, another sensor, lamp, radio, television, appliance, device, equipment, fixture, oven, stove, coffee machine, microwave oven, car, garage, door, window, curtain, blind, computer, monitor, printer, and another smart device, adjusting at least one of: service setting, lighting settings, lighting source, brightness, color, animation, signs, symbols, lighting effects, audio settings, speaker settings, volume, sound effects, music genre, background music, intensity setting, temperature settings, fan speed, flow settings, haptic settings, and another settings, presenting at least one of: standard message, scripted message, dynamically generated message, message generated based on the monitoring of the motion of the object, interactive message, audible message, verbal message, voice synthesized message, visual message, text message, animated message, greeting message, welcome message, reporting, briefing, daily briefing, regular briefing, timed briefing, news, headlines, topical news, news of interest, music, media, reminder, reminder associated with at least one of: user's calendar, user's to-do list, and another user's calendar, status report, house status, office status, building status, facility status, motion status of user, motion analytics, past record of analytics of user, historical record of analytics of user, trend of user, location status, warning, alarm, verbal warning, audible warning, visual warning, animated warning, summary, and another presentation, generating a presentation in at least one of: smart device, smart device with a speaker, smart device with a display, smart device with a user-interface (UI), networked device, Wi-Fi enabled device, 4G-enabled device, 5G-enabled device, 6G-enabled device, 7G-enabled device, Bluetooth-enabled device, BLE enabled device, Zigbee-enabled device, internet-of-things (IoT) device, smart phone, tablet, speaker, TV, thermostat, watch, glasses, accessories, haptic device, remote device, supervisor device, caregiver device, emergency service device, and another device, downloading a skill, acquiring a skill, installing a skill, adopting a skill, optimizing the skill, applying a skill, updating a skill, learning a skill, training a skill, developing a skill, and another action.

Clause C18. The method/system/software/device of the wireless monitoring system of Clauses C1-C17: wherein the wireless signal comprises at least one of: wireless local area network (WLAN) signal, WWAN signal, WPAN signal, WBAN signal, WiFi signal, WiFi 4/5/6/7/8 signal, IEEE 802.11 signal, IEEE 802.11n/ac/ax/be signal, cellular communication signal, 3G/4G/LTE/5G/6G/7G/8G signal, IEEE 802.15 signal, IEEE 802.16 signal, Bluetooth signal, Bluetooth Low Energy (BLE) signal, RFID signal, Zigbee signal, UWB signal, WiMax signal, unicast signal, multicast signal, broadcast signal, laser signal, LIDAR signal, radar signal, light signal, infra-red signal, ultra-violet signal, acoustic signal, ultra-sound signal, radio signal, electromagnetic (EM) wave, microwave signal, millimeter wave (mmWave) signal, radio frequency (RF) signal with a carrier frequency higher than 100kHz, and another wireless signal.

Clause C19. The method/system/software/device of the wireless monitoring system of Clauses C1-C18, further comprising: monitoring the motion of the object based on at least one of: at least one of: a detection, recognition, training, verification, classifying, monitoring, tracking, counting, locationing, localization, navigation, guidance, filtering, processing, preprocessing, postprocessing, correction, activation, accessing, application, analysis, deduction, inference, observation, summarization, decision, and conclusion, of a target, and computing at least one of: occurrence, co-occurrence, relationship, analytics, parameter, characteristics, feature, representation, frequency, trend, statistics, state, status, stage, condition, situation, indicator, transition, change, timing, classification, and information, of the target; wherein the target comprises at least one of: intruder, people, user, human, child, baby, older adult, patient, pet, animal, object, material, tool, machine, device, vehicle, car, defect, fault, motion, movement, motion sequence, event, presence, proximity, activity, daily activity, behavior, phenomenon, history, trend, variation, change, regularity, irregularity, repetitiveness, periodic motion, repeated motion, stationary motion, cyclo-stationary motion, regular motion, breathing, heartbeat, vital sign, gait, vibration, at least one of: motion, feature, cycle, and characteristics, of at least one of: body parts, hand, elbow, arm, leg, foot, limbs, head, waist, wrist, and eye, during at least one of: walking, running, exercise, locomotion, activity, and man-machine interaction, transient motion, impulsive motion, sudden motion, fall-down, danger, life threat, window breaking, user-interface, gesture, hand sign, handwriting, keystroke, facial expression, facial feature, emotion, body feature, body language, dancing movement, rhythmic movement, periodic motion, health, well-being, health condition, sleep, sleep stage, biometric, security, safety, intrusion, event, suspicious event, suspicious motion, alarm, alert, siren, location, distance, speed, acceleration, angle, angular speed, angular acceleration, locationing, map, geometry estimation, map learning, energy management, power transfer, wireless power transfer, machine learning, supervised learning, unsupervised learning, semi-supervised learning, clustering, feature extraction, featuring training, principal component analysis, eigen-decomposition, frequency decomposition, time decomposition, time-frequency decomposition, functional decomposition, other decomposition, training, discriminative training, supervised training, unsupervised training, semi-supervised training, neural network, augmented reality, wireless communication, data communication, signal broadcasting, networking, coordination, administration, encryption, protection, cloud computing, and another target.

Clause C20. The method/system/software/device of the wireless monitoring system of Clauses C12-C19, comprising: associating an event with a characteristics of the TSF; detecting the event by recognizing the characteristics of the TSF.

Clause C21. The method/system/software/device of the wireless monitoring system of Clause C20: wherein the event comprises at least one of: all entrance and exit doors closed, front door partially open, front door fully open, back door partially open, back door fully open, more than one of the entrance and exit doors open, garage door closed, garage door partially open, garage door fully open, all windows closed, one of the windows partially open, one of the windows fully open, a particular one of the windows partially open, a particular one of the windows fully open, a number of the windows open, a particular number of the windows open, no motion in house, motion in house, motion at entrance area, motion in kitchen, motion in dining room, motion in living room, motion in first rest room, motion in second rest room, motion in first bedroom, motion in second bedroom, motion in ground floor, motion in second floor, motion in basement, motion in stairs, an entrance, an entrance through garage, an entrance through front door, an entrance through back door, a daily activity, a typical activity, an atypical activity, a regular activity, an irregular activity, a usual activity, an unusual activity, a danger, a fall-down, an exit, an exit through garage, an exit through front door, an exit through back door, a suspicious exit, a suspicious behavior, a suspicious activity, a user in first bedroom sleeping, the user in first bedroom sleeping in rapid-eye-movement (REM) sleep, the user in first bedroom sleeping in non-REM (NREM) sleep, the user in first bedroom awake from sleep, a user in kitchen cooking, a user in living room watching TV, a user in second bedroom doing homework, and another event.

The following numbered clauses provide implementation examples for wireless monitoring for motion detection and localization.

Clause D1. A method of a collaborative wireless motion monitoring system, comprising: interconnecting wirelessly a set of TypeB heterogeneous wireless devices in a venue, wherein there is at least one object in the venue each undergoing respective motion, wherein each TypeB device is interconnected wirelessly with a respective set of at least one other TypeB device in the venue, wherein each TypeB device is associated with a respective set of TypeA devices in the venue; for each TypeB device: communicating asynchronously a respective wireless signal between the TypeB device and each of the respective set of TypeA devices associated with the TypeB device, through a respective wireless multipath channel impacted by the respective motion of the at least one object in the venue, communicating asynchronously a respective wireless signal between the TypeB device and each of the respective set of other TypeB devices interconnected with the TypeB device, through a respective wireless multipath channel impacted by the respective motion of the at least one object in the venue, and obtaining a set of asynchronous time series of channel information (CI) associated with the TypeB device, each asynchronous time series of CI (ATSCI) of respective wireless multipath channel obtained based on respective asynchronously received wireless signal; monitoring the respective motion of the at least one object in the venue based on the set of ATSCI associated with each TypeB device.

Clause D2. The method of the collaborative wireless motion monitoring system of Clause D1, comprising: monitoring the respective motion of the at least one object in the venue individually based on an ATSCI associated with a particular TypeB device and at least one of: a particular TypeA device associated with the particular TypeB device (an AB-device-pair), and a particular other TypeB device interconnected with the particular TypeB device (a BB-device-pair).

Clause D3. The method of the collaborative wireless motion monitoring system of Clauses D1-C2, comprising: monitoring the respective motion of the at least one object in the venue jointly based on at least two ATSCI associated with a particular TypeB device.

Clause D4. The method of the collaborative wireless motion monitoring system of Clauses D1-D3, comprising: monitoring the respective motion of the at least one object in the venue jointly based on at least two ATSCI.

Clause D5. The method of the collaborative wireless motion monitoring system of Clauses D1-D4, comprising: monitoring the respective motion of the at least one object in the venue groupwise based on all ATSCI associated with a TypeB device.

Clause D6. The method of the collaborative wireless motion monitoring system of Clauses D1-D5, comprising: monitoring the respective motion of the at least one object in the venue groupwise based on all ATSCI associated with a group of at least two TypeB devices.

Clause D7. The method of the collaborative wireless motion monitoring system of Clauses D1-D6, comprising: monitoring the respective motion of the at least one object in the venue globally based on all ATSCI.

Clause D8. The method of the collaborative wireless motion monitoring system of Clauses D1-D7, comprising: computing a set of asynchronous motion statistics (MS) based on all the ATSCI, each MS computed based on a respective ATSCI associated a device-pair comprising a TypeB device and another device; monitoring the respective motion of the at least one object in the venue based on the set of MS.

Clause D9. The method of the collaborative wireless motion monitoring system of Clause D8, comprising: monitoring the respective motion of the at least one object in the venue individually based on a MS associated with a particular device-pair associated with a particular TypeB device.

Clause D10. The method of the collaborative wireless motion monitoring system of Clauses D8-D9, comprising: monitoring the respective motion of the at least one object in the venue jointly based on at least two MS associated with a particular TypeB device.

Clause D11. The method of the collaborative wireless motion monitoring system of Clause D10, comprising: computing at least one joint statistics based on the at least two MS associated with the particular TypeB device; monitoring the respective motion of the at least one object in the venue jointly based on the at least one joint statistics.

Clause D12. The method of the collaborative wireless motion monitoring system of Clauses D8-D11, comprising: monitoring the respective motion of the at least one object in the venue jointly based on at least two MS.

Clause D13. The method of the collaborative wireless motion monitoring system of Clause D12, comprising: computing at least one joint statistics based on the at least two MS; monitoring the respective motion of the at least one object in the venue jointly based on the at least one joint statistics.

Clause D14. The method of the collaborative wireless motion monitoring system of Clauses D8-D13, comprising: monitoring the respective motion of the at least one object in the venue groupwise based on all MS associated with a particular TypeB device.

Clause D15. The method of the collaborative wireless motion monitoring system of Clause D14, comprising: computing at least one group statistics based on all MS associated with the particular TypeB device; monitoring the respective motion of the at least one object in the venue jointly based on the at least one group statistics.

Clause D16. The method of the collaborative wireless motion monitoring system of Clauses D8-D15, comprising: monitoring the respective motion of the at least one object in the venue groupwise based on all MS associated with a group of at least two TypeB devices.

Clause D17. The method of the collaborative wireless motion monitoring system of Clause D16, comprising: computing at least one group statistics based on all MS associated with the group of at least two TypeB devices; monitoring the respective motion of the at least one object in the venue jointly based on the at least one group statistics.

Clause D18. The method of the collaborative wireless motion monitoring system of Clauses D8-D17, comprising: monitoring the respective motion of the at least one object in the venue globally based on all MS.

Clause D19. The method of the collaborative wireless motion monitoring system of Clause D18, comprising: computing at least one global statistics based on all MS; monitoring the respective motion of the at least one object in the venue jointly based on the at least one global statistics.

Clause D20. The method of the collaborative wireless motion monitoring system of Clauses D1-D19, comprising: computing a set of asynchronous time series of motion statistics (ATSMS) based on all the ATSCI, each ATSMS computed based on a respective ATSCI associated a device-pair comprising a TypeB device and another device; monitoring the respective motion of the at least one object in the venue based on the set of ATSMS.

Clause D21. The method of the collaborative wireless motion monitoring system of Clause D20, comprising: monitoring the respective motion of the at least one object in the venue individually based on an ATSMS associated with a particular device-pair associated with a particular TypeB device.

Clause D22. The method of the collaborative wireless motion monitoring system of Clauses D20-D21, comprising: monitoring the respective motion of the at least one object in the venue jointly based on at least two ATSMS associated with a particular TypeB device.

Clause D23. The method of the collaborative wireless motion monitoring system of Clause D22, comprising: computing at least one time series of joint statistics based on the at least two ATSMS associated with the particular TypeB device; monitoring the respective motion of the at least one object in the venue jointly based on the at least one joint statistics.

Clause D24. The method of the collaborative wireless motion monitoring system of Clauses D20-D23, comprising: monitoring the respective motion of the at least one object in the venue jointly based on at least two ATSMS.

Clause D25. The method of the collaborative wireless motion monitoring system of Clause D24, comprising: computing at least one joint statistics based on the at least two ATSMS; monitoring the respective motion of the at least one object in the venue jointly based on the at least one joint statistics.

Clause D26. The method of the collaborative wireless motion monitoring system of Clauses D20-D25, comprising: monitoring the respective motion of the at least one object in the venue groupwise based on all ATSMS associated with a particular TypeB device.

Clause D27. The method of the collaborative wireless motion monitoring system of Clause D26, comprising: computing at least one group statistics based on all ATSMS associated with the particular TypeB device; monitoring the respective motion of the at least one object in the venue jointly based on the at least one group statistics.

Clause D28. The method of the collaborative wireless motion monitoring system of Clauses D20-D27, comprising:

monitoring the respective motion of the at least one object in the venue groupwise based on all ATSMS associated with a group of at least two TypeB devices.

Clause D29. The method of the collaborative wireless motion monitoring system of Clause D28, comprising: computing at least one group statistics based on all ATSMS associated with the group of at least two TypeB devices; monitoring the respective motion of the at least one object in the venue jointly based on the at least one group statistics.

Clause D30. The method of the collaborative wireless motion monitoring system of Clauses D20-D29, comprising: monitoring the respective motion of the at least one object in the venue globally based on all ATSMS.

Clause D31. The method of the collaborative wireless motion monitoring system of Clause D30, comprising: computing at least one global statistics based on all ATSMS; monitoring the respective motion of the at least one object in the venue jointly based on the at least one global statistics.

Clause D32. The method of the collaborative wireless motion monitoring system of Clauses D20-D31, wherein a motion statistics (MS) of a ATSMS comprises at least one of: similarity measure, similarity score, similarity between two CI, similarity between two vectors of CI, similarity between two windows of CI, similarity between two windows of CI with unequal window length, distance score, distance measure between two CI, distance measure between two vectors of CI, distance measure between two windows of CI, distance measure between two windows of CI aligned and mapped, distance measure between two windows of CI aligned using dynamic time warping (DTW), Euclidean distance, absolute distance, L-1 distance, L-2 distance, L-k distance, weighted distance, graph distance, distance metric, norm, L-1 norm, L-2 norm, L-k norm, pseudo metric, extended metric, quasimetric, metametric, semimetric, premetric, pseudoquasimetric, metric tensor, bilinear form, correlation, correlation of two CI, correlation coefficient, correlation indicator, autocorrelation, a feature of autocorrelation function (ACF), cross correlation, inner product, dot product, outer product, covariance, auto-covariance, cross covariance, discrimination score, mean, variance, likelihood, probability distribution function, sample distribution, moment generating function, expected value, expected function, location, localization, location coordinate, change in location, position, map position, height, horizontal location, vertical location, distance, displacement, speed, acceleration, rotational speed, rotational acceleration, direction, angle of motion, azimuth, direction of motion, rotation, path, deformation, transformation, shrinking, expanding, positional characteristics, gait, gait cycle, gesture, handwriting, head motion, mouth motion, hand motion, leg motion, body motion, heart motion, internal organ motion, tool motion, machine motion, complex motion, combination of multiple motions, motion trend, repeatedness, periodicity, pseudo-periodicity, impulsiveness, suddenness, fall-down occurrence, recurrence, transient event, behavior, transient behavior, period, time trend, temporal profile, temporal characteristics, occurrence, time, timing, starting time, initiating time, ending time, duration, history, motion classification, motion type, change, temporal change, frequency change, CI change, timing change, gait cycle change, frequency spectrum, frequency characteristics, frequency, presence, absence, proximity, approaching, receding, object identifier, object composition, mouth-related rate, eye-related rate, walking rate, breathing rate, heart rate, tidal volume, depth of breath, inhale time, exhale time, inhale time to exhale time ratio, airflow rate, heart heat-to-beat interval, heart rate variability, motion detection statistics, motion identification statistics, motion recognition statistics, signal statistics, signal dynamics, anomaly, parameter, motion magnitude, motion phase, motion signal transformation, motion feature, presence of object, absence of object, entrance of object, exit of object, change of object, motion cycle, motion count, gait cycle, motion rhythm, deformation motion, size, length, area, volume, capacity, shape, form, tag, starting/initiating location, ending location, starting/initiating quantity, ending quantity, event occurrence, event statistics, fall-down event, security event, accident event, home event, office event, factory event, warehouse event, manufacturing event, assembly line event, maintenance event, vehicle-related event, navigation event, tracking event, door event, door-open event, door-close event, window event, window-open event, window-close event, repeatable event, one-time event, consumed quantity, unconsumed quantity, state, physical state, health state, well-being state, emotional state, mental state, another event, analytics, output responses, and another information.

Clause D33. The method of the collaborative wireless motion monitoring system of Clauses D20-D32, further comprising: for each device-pair, wherein the device-pair comprising at least one of: a pair of associated TypeA device and TypeB device (AB-device-pair), and a pair of interconnected TypeB devices (BB-device-pair): computing an asynchronous time series of motion statistics (ATSMS) based on respective ATSCI associated with the device-pair, and applying a respective first processing to the ATSMS with respective parameters; for each device-pair associated with each TypeB device: computing an asynchronous time series of intermediate statistics (ATSIS) for the device-pair based on all ATSMS associated with all device-pairs associated with the TypeB device, applying a respective second processing to the ATSIS with respective parameters; associating each object and its motion to at least one of: a respective TypeB device, a TypeA device, and a NULL device (meaning that the object and its motion are not associated any TypeA device or TypeB device), based on all the asynchronous ATSIS; monitoring the motion of each object based on at least one of: the associated TypeB device, the associated device-pair associated with the TypeB device and the TypeA device, and the associated device-pair associated with two TypeB devices.

Clause D34. The method of the collaborative wireless motion monitoring system of Clause D33, wherein an intermediate statistics (IS) of a ATSIS comprises at least one of: similarity measure, similarity score, similarity between two CSI, similarity between two vectors of CSI, similarity between two windows of CSI, similarity between two windows of CSI with unequal window length, distance score, distance measure between two CSI, distance measure between two vectors of CSI, distance measure between two windows of CSI, distance measure between two windows of CSI aligned and mapped, distance measure between two windows of CSI aligned using dynamic time warping (DTW), Euclidean distance, absolute distance, L-1 distance, L-2 distance, L-k distance, weighted distance, graph distance, distance metric, norm, L-1 norm, L-2 norm, L-k norm, pseudo metric, extended metric, quasimetric, metametric, semimetric, premetric, pseudoquasimetric, metric tensor, bilinear form, correlation, correlation of two CSI, correlation coefficient, correlation indicator, autocorrelation, a feature of autocorrelation function (ACF), cross correlation, inner product, dot product, outer product, covariance, auto-covariance, cross covariance, discrimination score, mean, variance, likelihood, probability distribution function, sample distribution, moment generating function, expected value, expected function, location, localization, location coordinate, change in location, position, map position, height, horizontal location, vertical location, distance, displacement, speed, acceleration, rotational speed, rotational acceleration, direction, angle of motion, azimuth, direction of motion, rotation, path, deformation, transformation, shrinking, expanding, positional characteristics, gait, gait cycle, gesture, handwriting, head motion, mouth motion, hand motion, leg motion, body motion, heart motion, internal organ motion, tool motion, machine motion, complex motion, combination of multiple motions, motion trend, repeatedness, periodicity, pseudo-periodicity, impulsiveness, sudden-ness, fall-down occurrence, recurrence, transient event, behavior, transient behavior, period, time trend, temporal profile, temporal characteristics, occurrence, time, timing, starting time, initiating time, ending time, duration, history, motion classification, motion type, change, temporal change, frequency change, CI change, timing change, gait cycle change, frequency spectrum, frequency characteristics, frequency, presence, absence, proximity, approaching, receding, object identifier, object composition, mouth-related rate, eye-related rate, walking rate, breathing rate, heart rate, tidal volume, depth of breath, inhale time, exhale time, inhale time to exhale time ratio, airflow rate, heart heat-to-beat interval, heart rate variability, motion detection statistics, motion identification statistics, motion recognition statistics, signal statistics, signal dynamics, anomaly, parameter, motion magnitude, motion phase, motion signal transformation, motion feature, presence of object, absence of object, entrance of object, exit of object, change of object, motion cycle, motion count, gait cycle, motion rhythm, deformation motion, size, length, area, volume, capacity, shape, form, tag, starting/initiating location, ending location, starting/initiating quantity, ending quantity, event occurrence, event statistics, fall-down event, security event, accident event, home event, office event, factory event, warehouse event, manufacturing event, assembly line event, maintenance event, vehicle-related event, navigation event, tracking event, door event, door-open event, door-close event, window event, window-open event, window-close event, repeatable event, one-time event, consumed quantity, unconsumed quantity, state, physical state, health state, well-being state, emotional state, mental state, another event, analytics, output responses, and another information.

Clause D35. The method of the collaborative wireless motion monitoring system of Clauses D33-D34, comprising: computing an intermediate statistics (IS) of a ATSIS associated with all device-pairs associated the TypeB device based on at least one of: a sum of motion statistics (MS) associated with all device-pairs associated with the TypeB device, a sum of MS associated with all AB-device-pairs associated with the TypeB device, a sum of MS associated with all BB-device-pairs associated with the TypeB device, a weighted sum of MS associated with all device-pairs associated with the TypeB device, a weighted sum of MS associated with all AB-device-pairs associated with the TypeB device, a weighted sum of MS associated with all BB-device-pairs associated with the TypeB device, a weighted difference between two MS associated with an AB-device-pair and a BB-device-pair associated with the TypeB device, a weighted difference between two MS associated with two AB-device-pairs associated with the TypeB device, a weighted difference between two MS associated with two BB-device-pairs associated with the TypeB device, a function of each MS associated with all device-pairs associated with the TypeB device, a function of each MS associated with all AB-device-pairs associated with the TypeB device, a function of each MS associated with all BB-device-pairs associated with the TypeB device, a feature of each MS associated with all device-pairs associated with the TypeB device, a feature of each MS associated with all AB-device-pairs associated with the TypeB device, a feature of each MS associated with all BB-device-pairs associated with the TypeB device, a polynomial of each MS associated with all device-pairs associated with the TypeB device, a polynomial of each MS associated with all AB-device-pairs associated with the TypeB device, a polynomial of each MS associated with all BB-device-pairs associated with the TypeB device, a respective function of each MS associated with all device-pairs associated with the TypeB device, a function of all MS associated with all device-pairs associated with the TypeB device, a function of all MS associated with all AB-device-pairs associated with the TypeB device, a function of all MS associated with all BB-device-pairs associated with the TypeB device, a maximum of all MS associated with all device-pairs associated with the TypeB device, a maximum of all MS associated with all AB-device-pairs associated with the TypeB device, a maximum of all MS associated with all BB-device-pairs associated with the TypeB device, a minimum of all MS associated with all device-pairs associated with the TypeB device, a minimum of all MS associated with all AB-device-pairs associated with the TypeB device, a minimum of all MS associated with all BB-device-pairs associated with the TypeB device, a first order derivative of ATSMS associated with all device-pairs associated with the TypeB device, a first order derivative of ATSMS associated with all AB-device-pairs associated with the TypeB device, a first order derivative of ATSMS associated with all BB-device-pairs associated with the TypeB device, a high order derivative of ATSMS associated with all device-pairs associated with the TypeB device, a high order derivative of ATSMS associated with all AB-device-pairs associated with the TypeB device, a high order derivative of ATSMS associated with all BB-device-pairs associated with the TypeB device, a filtering of ATSMS associated with all device-pairs associated with the TypeB device, a filtering of ATSMS associated with all AB-device-pairs associated with the TypeB device, a filtering of ATSMS associated with all BB-device-pairs associated with the TypeB device, a function of a sliding window of ATSMS associated with all device-pairs associated with the TypeB device, a function of a sliding window of ATSMS associated with all AB-device-pairs associated with the TypeB device, a function of a sliding window of ATSMS associated with all BB-device-pairs associated with the TypeB device, a mean of a sliding window of ATSMS associated with all device-pairs associated with the TypeB device, a mean of a sliding window of ATSMS associated with all AB-device-pairs associated with the TypeB device, a mean of a sliding window of ATSMS associated with all BB-device-pairs associated with the TypeB device, a variance of a sliding window of ATSMS associated with all device-pairs associated with the TypeB device, a variance of a sliding window of ATSMS associated with all AB-device-pairs associated with the TypeB device, a variance of a sliding window of ATSMS associated with all BB-device-pairs associated with the TypeB device, an autocorrelation function (ACF) of ATSMS associated with all device-pairs associated with the TypeB device, an autocorrelation function (ACF) of ATSMS associated with all AB-device-pairs associated with the TypeB device, an autocorrelation function (ACF) of ATSMS associated with all BB-device-pairs associated with the TypeB device, a respective function of a respective sliding window of ATSMS associated with all device-pairs associated with the TypeB device, a respective function of a respective sliding window of ATSMS associated with all AB-device-pairs associated with the TypeB device, a respective function of a respective sliding window of ATSMS associated with all BB-device-pairs associated with the TypeB device, a sum of a function of each MS associated with all device-pairs associated with the TypeB device, a sum of a function of each MS associated with all AB-device-pairs associated with the TypeB device, a sum of a function of each MS associated with all BB-device-pairs associated with the TypeB device, a weighted sum of respective functions of each MS associated with all device-pairs associated with the TypeB device, a weighted sum of respective functions of each MS associated with all AB-device-pairs associated with the TypeB device, a weighted sum of respective functions of each MS associated with all BB-device-pairs associated with the TypeB device, a weighted difference of respective functions of two MS associated with an AB-device-pair and a BB-device-pair associated with the TypeB device, a weighted difference of respective functions of two MS associated with two AB-device-pairs associated with the TypeB device, a weighted difference of respective functions of two MS associated with two BB-device-pairs associated with the TypeB device, a weighted sum of a nonlinear transformation of each MS associated with all device-pairs associated with the TypeB device, a weighted sum of a nonlinear transformation of each MS associated with all AB-device-pairs associated with the TypeB device, a weighted sum of a nonlinear transformation of each MS associated with all BB-device-pairs associated with the TypeB device, a weighted sum of respective nonlinear transformation of each MS associated with all device-pairs associated with the TypeB device, a weighted sum of respective nonlinear transformation of each MS associated with all AB-device-pairs associated with the TypeB device, a weighted sum of respective nonlinear transformation of each MS associated with all BB-device-pairs associated with the TypeB device, a weighted sum of respective polynomial of each MS associated with all device-pairs associated with the TypeB device, a weighted sum of respective polynomial of each MS associated with all AB-device-pairs associated with the TypeB device, a weighted sum of respective polynomial of each MS associated with all BB-device-pairs associated with the TypeB device, a weighted sum of respective thresholding of each MS associated with all device-pairs associated with the TypeB device, a weighted sum of respective thresholding of each MS associated with all AB-device-pairs associated with the TypeB device, a weighted sum of respective thresholding of each MS associated with all BB-device-pairs associated with the TypeB device, a comparison of MS associated with all device-pairs associated with the TypeB device with respective thresholds, a comparison of MS associated with all AB-device-pairs associated with the TypeB device with respective thresholds, a comparison of MS associated with all BB-device-pairs associated with the TypeB device with respective thresholds, a ratio of a first function of MS associated with all device-pairs associated with the TypeB device to a second function of the MS, a ratio of a first function of MS associated with all AB-device-pairs associated with the TypeB device to a second function of the MS, a ratio of a first function of MS associated with all BB-device-pairs associated with the TypeB device to a second function of the MS, and another statistics.

Clause D36. The method of the collaborative wireless motion monitoring system of Clauses D33-D35, comprising: associating an object and its motion to a TypeB device based on at least one of: comparing intermediate statistics (IS) associated with BB-device-pairs with a threshold T1, identifying the TypeB device with an IS associated with a BB-device-pair associated with the TypeB device exceeding the threshold T1, comparing IS associated with AB-device-pairs with a threshold T2, identifying the TypeB device with an IS associated with a AB-device-pair associated with the TypeB device exceeding the threshold T2, comparing a weighted sum of IS associated with all device-pairs associated with any TypeB device with a threshold T3, identifying the TypeB device with weighted sum of IS associated with all device-pair associated with the TypeB device exceeding the threshold T3, comparing a weighted sum of IS associated with all AB-device-pairs associated with any TypeB device with a threshold T4, identifying the TypeB device with weighted sum of IS associated with all AB-device-pair associated with the TypeB device exceeding the threshold T4, comparing a weighted sum of IS associated with all BB-device-pairs associated with any TypeB device with a threshold T5, identifying the TypeB device with weighted sum of IS associated with all BB-device-pair associated with the TypeB device exceeding the threshold T5, comparing a median of IS associated with all device-pairs associated with any TypeB device with a threshold T6, identifying the TypeB device with median of IS associated with all device-pairs associated with the TypeB device exceeding the threshold T6, comparing a median of IS associated with all AB-device-pairs associated with any TypeB device with a threshold T7, identifying the TypeB device with median of IS associated with all AB-device-pairs associated with the TypeB device exceeding the threshold T7, comparing a median of IS associated with all BB-device-pairs associated with any TypeB device with a threshold T8, identifying the TypeB device with median of IS associated with all BB-device-pairs associated with the TypeB device exceeding the threshold T8, comparing a maximum of IS associated with all device-pairs associated with any TypeB device with a threshold T9, identifying the TypeB device with maximum of IS associated with all device-pairs associated with the TypeB device exceeding the threshold T9, comparing a maximum of IS associated with all AB-device-pairs associated with any TypeB device with a threshold T10, identifying the TypeB device with maximum of IS associated with all AB-device-pairs associated with the TypeB device exceeding the threshold T10, comparing a maximum of IS associated with all BB-device-pairs associated with any TypeB device with a threshold T11, identifying the TypeB device with maximum of IS associated with all BB-device-pairs associated with the TypeB device exceeding the threshold T11, comparing a representative value of IS associated with all device-pairs associated with any TypeB device with a threshold T12, identifying the TypeB device with representative value of IS associated with all device-pairs associated with the TypeB device exceeding the threshold T12, comparing a representative value of IS associated with all AB-device-pairs associated with any TypeB device with a threshold T13, identifying the TypeB device with representative value of IS associated with all AB-device-pairs associated with the TypeB device exceeding the threshold T13, comparing a representative value of IS associated with all BB-device-pairs associated with any TypeB device with a threshold T14, identifying the TypeB device with representative value of IS associated with all BB-device-pairs associated with the TypeB device exceeding the threshold T14, and another analysis of the IS.

Clause D37. The method of the collaborative wireless motion monitoring system of Clauses D33-D36, comprising: associating an object and its motion to a TypeA device associated with a TypeB device based on at least one of: comparing intermediate statistics (IS) associated with BB-device-pairs with a threshold T1, identifying the TypeB device with an IS associated with a BB-device-pair associated with the TypeB device less than the threshold T1, comparing IS associated with AB-device-pairs with a threshold T2, identifying the TypeA device and the TypeB device whose AB-device pair has an associated IS exceeding the threshold T2, identifying the TypeA device whose AB-device pair has an associated IS being maximum among all AB-device-pairs associated the TypeB device, comparing a weighted sum of IS associated with all device-pairs associated with any TypeB device with a threshold T3, identifying the TypeB device with weighted sum of IS associated with all device-pair associated with the TypeB device exceeding the threshold T3, identifying the TypeB device with weighted sum of IS associated with all device-pair associated with the TypeB device less than the threshold T3, comparing a weighted sum of IS associated with all AB-device-pairs associated with any TypeB device with a threshold T4, identifying the TypeB device with weighted sum of IS associated with all AB-device-pair associated with the TypeB device exceeding the threshold T4, identifying the TypeB device with weighted sum of IS associated with all AB-device-pair associated with the TypeB device less than the threshold T4, comparing a weighted sum of IS associated with all BB-device-pairs associated with any TypeB device with a threshold T5, identifying the TypeB device with weighted sum of IS associated with all BB-device-pair associated with the TypeB device less than the threshold T5, comparing a median of IS associated with all device-pairs associated with any TypeB device with a threshold T6, identifying the TypeB device with median of IS associated with all device-pairs associated with the TypeB device exceeding the threshold T6, identifying the TypeB device with median of IS associated with all device-pairs associated with the TypeB device less than the threshold T6, comparing a median of IS associated with all AB-device-pairs associated with any TypeB device with a threshold T7, identifying the TypeB device with median of IS associated with all AB-device-pairs associated with the TypeB device exceeding the threshold T7, identifying the TypeB device with median of IS associated with all AB-device-pairs associated with the TypeB device less than the threshold T7, comparing a median of IS associated with all BB-device-pairs associated with any TypeB device with a threshold T8, identifying the TypeB device with median of IS associated with all BB-device-pairs associated with the TypeB device less than the threshold T8, comparing a maximum of IS associated with all device-pairs associated with any TypeB device with a threshold T9, identifying the TypeB device with maximum of IS associated with all device-pairs associated with the TypeB device exceeding the threshold T9, identifying the TypeB device with maximum of IS associated with all device-pairs associated with the TypeB device less than the threshold T9, comparing a maximum of IS associated with all AB-device-pairs associated with any TypeB device with a threshold T10, identifying the TypeB device with maximum of IS associated with all AB-device-pairs associated with the TypeB device exceeding the threshold T10, identifying the TypeB device with maximum of IS associated with all AB-device-pairs associated with the TypeB device less than the threshold T10, comparing a maximum of IS associated with all BB-device-pairs associated with any TypeB device with a threshold T11, identifying the TypeB device with maximum of IS associated with all BB-device-pairs associated with the TypeB device less than the threshold T11, comparing a representative value of IS associated with all device-pairs associated with any TypeB device with a threshold T12, identifying the TypeB device with representative value of IS associated with all device-pairs associated with the TypeB device exceeding the threshold T12, identifying the TypeB device with representative value of IS associated with all device-pairs associated with the TypeB device less than the threshold T12, comparing a representative value of IS associated with all AB-device-pairs associated with any TypeB device with a threshold T13, identifying the TypeB device with representative value of IS associated with all AB-device-pairs associated with the TypeB device exceeding the threshold T13, identifying the TypeB device with representative value of IS associated with all AB-device-pairs associated with the TypeB device less than the threshold T13, comparing a representative value of IS associated with all BB-device-pairs associated with any TypeB device with a threshold T14, identifying the TypeB device with representative value of IS associated with all BB-device-pairs associated with the TypeB device less than the threshold T14, and another analysis of the IS.

Clause D38. The method of the collaborative wireless motion monitoring system of Clauses D1-D37, comprising: associating each TypeB device with a region of the venue.

Clause D39. The method of the collaborative wireless motion monitoring system of Clauses D1-D38, further comprising: associating each TypeA device with a region of the venue.

Clause D40. The method of the collaborative wireless motion monitoring system of Clauses D1-D39, further comprising: associating an AB-device-pair with a region of the venue, wherein the AB-device-pair comprises a TypeB device and a TypeA device associated with the TypeB device.

Clause D41. The method of the collaborative wireless motion monitoring system of Clauses D1-D40, further comprising: associating a BB-device-pair with a region of the venue, wherein the BB-device-pair comprises two interconnected TypeB devices.

Clause D42. The method of the collaborative wireless motion monitoring system of Clauses D1-D41, further comprising: associating a TypeB device with a first region of the venue; associating a TypeA device with a second region of the venue, wherein the TypeA device is associated with the TypeB device; associating another TypeB device with a third region of the venue, wherein the another TypeB device is interconnected with the TypeB.

Clause D43. The method of the collaborative wireless motion monitoring system of Clauses D37-D42: wherein the first region and the second region are at least one of: identical, overlapping, and non-overlapping.

Clause D44. The method of the collaborative wireless motion monitoring system of Clauses D37-D43: wherein the first region and the third region are at least one of: identical, overlapping, and non-overlapping.

Clause D45. The method of the collaborative wireless motion monitoring system of Clauses D37-D44: wherein the second region and the third region are at least one of: identical, overlapping, and non-overlapping.

Clause D46. The method of the collaborative wireless motion monitoring system of Clauses D1-D45: wherein a region associated a TypeB device comprises a union of regions associated with TypeA devices associated with the TypeB device.

Clause D47. The method of the collaborative wireless motion monitoring system of Clauses D1--D46, wherein the channel information (CI) comprises at least one of: channel state information (CSI), channel impulse response (CIR), channel frequency response (CFR), received signal strength index (RSSI), signal strength, signal amplitude, signal phase, spectral power measurement, modem parameters, dynamic beamforming information, transfer function components, radio state, measurable modem variables, sensed data, coarse-grained/ fine-grained information of a layer comprising physical layer, data link layer, and MAC layer, digital setting, gain setting, RF filter setting, RF front end switch setting, DC offset setting, DC correction setting, IQ compensation setting, effects on the wireless signal by the environment (venue) during propagation, transformation of an input signal (transmitted wireless signal) to an output signal (the received wireless signal), stable behavior of the environment, state profile, wireless channel characteristics of frequency components (e.g. subcarriers) in a bandwidth, channel characteristics, channel filter response, timestamp, auxiliary information, data, meta data, user data, account data, access data, security data, session data, status data, supervisory data, household data, identity (ID), identifier, device data, network data, neighborhood data, environment data, real-time data, sensor data, stored data, encrypted data, compressed data, protected data, and another channel information.

Clause D48. The method of the collaborative wireless motion monitoring system of Clauses D1--D47, wherein the wireless signal comprises at least one of: a pinging signal, sounding signal, beacon signal, pilot signal, probe signal, handshake signal, acknowledgement signal, synchronization signal, enquiry signal, transmitted/received signal, EM radiation, RF signal/transmission, bandlimited signal, baseband signal, wireless/mobile/cellular communication signal, mesh signal, signal in licensed/unlicensed/ISM band, wireless/mobile/cellular network signal, light signal/communication, unicast/multicast/broadcast signal, downlink/uplink signal, standard compliant signal (e.g. WLAN, WWAN, WPAN, WBAN, international, national, industry, defacto, IEEE, IEEE 802, 802.11/15/16, WiFi, 802.11n/ac/ax/be, 3GPP, 3G/4G/LTE/5G/6G/7G/8G, Bluetooth, BLE, Zigbee, RFID, UWB, WiMax), standard frame, management/control/data frame, management/control/data signal, standardized wireless/cellular communication protocol, protocol signal, reference signal, source signal, motion probe/detection/sensing signal, line-of-sight (LOS) component signal, non-LOS component signal, a plurality of signals, a series of signals, a series of regularly timed signals, a series of irregularly timed signals, a series of best-effort transmitted signals, and another wireless signal.

Clause D49. The method of the collaborative wireless motion monitoring system of Clauses D1-D48: wherein a ATSCI associated with a particular TypeB device and another device, is at least one of: extracted, generated, computed, and sensed, at a layer (e.g. PHY layer, MAC layer) of the receiving device receiving a respective wireless signal from the transmitting device; wherein the ATSCI is obtained by an application comprising at least one of: a firmware, driver, software, downloadable app, wireless monitoring application software, and wireless monitoring system; wherein the another device is at least one of: a particular TypeA device associated with the particular TypeB device, and a particular other TypeB device interconnected with the particular TypeB device; wherein one of the particular TypeB device and the another device is the receiving device, and the other one is the transmitting device.

Clause D50. The method of the collaborative wireless motion monitoring system of Clauses D1-D49, further comprising: adding at least one of: a new TypeA device and a new TypeB device to the system, wherein the new TypeA device is associated with an existing TypeB device, wherein the new TypeB device is interconnected to a set of at least one existing TypeB device.

Clause D51. The method of the collaborative wireless motion monitoring system of Clauses D1-D50, further comprising: configuring at least one of: a new TypeA device, a new TypeB device and the system, wherein the new TypeA device is configured to associate with the existing TypeB device, wherein the new TypeB device is configured to interconnect with the set of at least one existing TypeB device, wherein a configuration database of the system is updated with at least one of: the new TypeA device and the new TypeB device.

Clause D52. The method of the collaborative wireless motion monitoring system of Clauses D1-D51, further comprising: configuring an existing TypeA device to terminate an existing associating to an existing TypeB device; configuring the existing TypeA device to associate with a new TypeB device.

Clause D53. The method of the collaborative wireless motion monitoring system of Clauses D1-D52, further comprising: negotiating and initiating wireless signal communication associated with at least one of: a new TypeA device and a new TypeB device.

Clause D54. The method of the collaborative wireless motion monitoring system of Clauses D1-D53, further comprising: remove at least one of: a TypeA device and a TypeB device from the system.

Clause D55. The method of the collaborative wireless motion monitoring system of Clauses D1-D54, further comprising: processing the set of ATSCI in at least one of the following manner: sporadically, continuously, simultaneously, contemporaneously, dynamically, adaptively, on-demand and as-needed.

Clause D56. The method of the collaborative wireless motion monitoring system of Clauses D1-D55, further comprising: managing the system by at least one of: adding at least one of: a new TypeA device and a new TypeB device, registering at least one of: the new TypeA device and the new TypeB device, configuring at least one of: the new TypeA device and the new TypeB device, associating the new TypeA device with an existing TypeB device, interconnecting the new TypeB device to at least one existing TypeB device, starting at least one of: the new TypeA device and the new TypeB device, handshaking with at least one of: any TypeA device and any TypeB device, negotiating with at least one of: any TypeA device and any TypeB device, coordinating at least one of: any TypeA device and any TypeB device, managing at least one of: any TypeA device and any TypeB device, identifying at least one of: any TypeA device and any TypeB device, stopping at least one of: any TypeA device and any TypeB device, pausing at least one of: any TypeA device and any TypeB device, restarting at least one of: any TypeA device and any TypeB device, initiating at least one of: any TypeA device and any TypeB device, synchronizing at least one of: any TypeA device and any TypeB device, replacing at least one of: any TypeA device and any TypeB device, upgrading at least one of: any TypeA device and any TypeB device, configuring the asynchronous communication of any wireless signal, configuring the monitoring of the at least one object in the venue, reconfiguring at least one of: an existing TypeA device and an existing TypeB device, changing the interconnection of the TypeB devices, changing the association of any TypeA device, changing the asynchronous communication of any wireless signal, changing the monitoring of the at least one object in the venue, updating a configuration database of the system, propagating an updated configuration to at least one of: any TypeA device, any TypeB device, a system server, a system database, a user device, a user application of the user device, and a user software of the user device, alerting a user based on the monitoring of the at least one object in the venue, notifying the user, generating a presentation for the user, and doing another administrative task.

Clause D57. The method of the collaborative wireless motion monitoring system of Clauses D1-D56, whereas monitoring the respective motion of the at least one object in the venue comprises at least one of: sensing task, at least one of: monitoring, sensing, detection, recognition, estimation, verification, identification, authentication, classification, locationing, guidance, navigation, tracking, and counting of, or in, at least one of: the at least one object, vehicle, machine, tool, human, baby, elderly, patient, pet, presence, proximity, activity, daily activity, well-being, vital sign, breathing, heartbeat, health condition, sleep, sleep stage, walking, exercise, fall-down, danger, intrusion, security, safety, life-threat, emotion, movement, motion, motion degree, periodic motion, repeated motion, stationary motion, cyclo-stationary motion, regular motion, transient motion, sudden motion, suspicious motion, irregularity, trend, breathing, human biometrics, environment informatics, gait, gesture, room, venue, indoor venue, cars in parking facility, computation task, analysis, machine learning, supervised learning, unsupervised learning, semi-supervised learning, clustering, feature extraction, featuring training, principal component analysis, eigen-decomposition, frequency decomposition, time decomposition, time-frequency decomposition, functional decomposition, other decomposition, training, discriminative training, supervised training, unsupervised training, semi-supervised training, neural network, map-based or model-based processing/correction, geometry estimation, analytics computation, IoT task, smart task for at least one of: home, office, factory, vehicle, building, facility, structure, and device, energy management, power transfer, wireless power transfer, activating a device/system (e.g. security system, access system, alarm, siren, speaker, television, entertaining system, camera, heater/air-conditioning (HVAC) system, ventilation system, lighting system, gaming system, coffee machine, cooking device, cleaning device, housekeeping device), miscellaneous task, at least one of: transmission, processing, storage, and analysis, of data, parameters, analytics, and derived data, administration, configuration, upgrading, coordination, broadcasting, synchronization, networking, communication, encryption, protection, compression, storage, database, archiving, query, cloud computing, presentation, augmented reality, virtual reality, other processing, and other task.

The following numbered clauses provide implementation examples for wireless motion recognition.

Clause E1. A system for wireless motion recognition, comprising: a transmitter configured for transmitting a first wireless signal through a wireless multipath channel of a venue; and a receiver configured for receiving a second wireless signal through the wireless multipath channel, wherein the second wireless signal differs from the first wireless signal due to the wireless multipath channel that is impacted by a motion of an object in the venue; and a processor configured for: obtaining a time series of channel information (TSCI) of the wireless multipath channel based on the second wireless signal, tracking the motion of the object based on the TSCI to generate a gesture trajectory of the object, and determining a gesture shape based on the gesture trajectory and a plurality of pre-determined gesture shapes.

Clause E2. The system of Clause E1, wherein: the object is a body part of a user; the user is at least one of: a human being, an animal, a robot, or a movable machine; the motion comprises a continuous movement of the body part; and the body part comprises at least one of the following of the user: a hand, a foot, an arm, a leg, a head or a finger.

Clause E3. The system of Clause E2, wherein: during the motion of the object, the user is located at a fixed distance from the transmitter and at a fixed distance from the receiver.

Clause E4. The system of Clauses E1-E3, wherein: each of the plurality of pre-determined gesture shapes comprises at least one straight-line segment; and each straight-line segment of the at least one straight-line segment represents a spatially continuous movement along the straight-line segment.

Clause E5. The system of Clause E4, wherein the plurality of pre-determined gesture shapes are different from each other based on at least one of: different numbers of straight-line segments in the pre-determined gesture shapes; different turn angles between two adjacent straight-line segments in the pre-determined gesture shapes, wherein the two adjacent straight-line segments represent a spatially continuous movement from one to the other of the two adjacent straight-line segments; different numbers of intersection points in the pre-determined gesture shapes, wherein each intersection point is a point at an intersection between two non-adjacent straight-line segments; or different locations of the intersection points in the pre-determined gesture shapes.

Clause E6. The system of Clause E5, wherein the processor is further configured for: for each of the plurality of pre-determined gesture shapes, computing a corresponding matching probability that a shape of the gesture trajectory matches the pre-determined gesture shape; and identifying one of the plurality of pre-determined gesture shapes, wherein the identified gesture shape corresponds to a maximum matching probability among the plurality of pre-determined gesture shapes.

Clause E7. The system of Clause E6, wherein the processor is further configured for: comparing the maximum matching probability with a threshold; when the maximum matching probability is larger than the threshold, recognizing the gesture shape as the identified gesture shape, and automatically controlling an operation of a device based on the recognized gesture shape; and when the maximum matching probability is not larger than the threshold, determining the gesture shape as an unknown gesture shape.

Clause E8. The system of Clauses E6-E7, wherein the processor is further configured for: for each of the plurality of pre-determined gesture shapes, computing a first probability that the shape of the gesture trajectory has the same number of straight-line segments as the pre-determined gesture shape, computing a second probability that the shape of the gesture trajectory has the same turn angle between two adjacent straight-line segments as the pre-determined gesture shape, for each pair of two adjacent straight-line segments in both the shape of the gesture trajectory and the pre-determined gesture shape, computing a third probability that the shape of the gesture trajectory has an intersection point at the same location of two non-adjacent straight-line segments as the pre-determined gesture shape, for each pair of two non-adjacent straight-line segments having an intersection point in the pre-determined gesture shape, and computing the corresponding matching probability based on a function of: the first probability, each second probability and each third probability.

Clause E9. The system of Clause E8, wherein computing the first probability comprises: determining a first quantity of time instances at which a speed of the motion becomes zero or reaches a local minimum along the gesture trajectory; and estimating a second quantity of straight-line segments in the gesture trajectory based on the first quantity, wherein the first probability is computed based on the second quantity.

Clause E10. The system of Clause E9, wherein computing the first probability further comprises: computing an auto-correlation function (ACF) based on the TSCI; generating a relative speed profile for the motion of the object based on the ACF; and determining a third quantity of local minima in the relative speed profile, wherein the first quantity of time instances is determined based on the third quantity. In some embodiments, the relative speed profile in Clause E10 can be replaced by a profile for motion strength or motion intensity, to determine the first quantity of time instances in a similar manner, without going beyond the scope of the present disclosure.

Clause E11. The system of Clauses E8-E10, wherein computing the second probability comprises: for the pair of two adjacent straight-line segments, computing an angle between the two adjacent straight-line segments of the gesture trajectory based on a monotonous decay feature of CI similarity scores, wherein the two adjacent straight-line segments include a first segment and a second segment, and represent a spatially continuous movement from the second segment to the first segment, wherein each point on the gesture trajectory corresponds to a channel information (CI) of the TSCI obtained when the object is located at that point.

Clause E12. The system of Clause E11, wherein computing the second probability further comprises: for each first point on the first segment, computing a similarity score between a first CI corresponding to the first point and each CI obtained before the first CI, to generate a first CI similarity profile for the first point, detecting a second point on the second segment, wherein a second CI corresponding to the second point is associated with a local maximum of the first CI similarity profile for the first point, and determining a turn point between the first segment and the second segment, wherein a third CI corresponding to the turn point is associated with a local minimum of the first CI similarity profile for the first point.

Clause E13. The system of Clause E12, wherein computing the second probability further comprises: performing a classification of the angle between the two adjacent straight-line segments into an angle range, wherein: the second probability is computed based on the classification, the angle is classified into a first angle range including 0 degree, under a determination that the similarity score between CIs corresponding to the first point and the second point is kept to be 1 as the first point moves away from the turn point, while a similarity score between CIs corresponding to the second point and the turn point decreases as the first point moves away from the turn point, the angle is classified into a second angle range including 90 degrees, under a determination that the second point cannot be detected when the first point is farther than a threshold from the turn point, and the angle is classified into a third angle range including 45 degrees, under a determination that the similarity score between CIs corresponding to the first point and the second point decreases along with the similarity score between CIs corresponding to the second point and the turn point. In some embodiments, the first angle range is a range near 0 degree; the second angle range is a range near 90 degrees; and the third angle range is a range near 45 degrees.

Clause E14. The system of Clauses E11-E13, wherein: each of the CI similarity scores comprises at least one of the following computed based on two CIs: a time reversal resonating strength (TRRS), a correlation, a covariance, or a distance score; and the first wireless signal is based on at least one of the following standards: WiFi, LTE, 3G, 4G, 5G or 6G.

Clause E15. The system of Clause E8, wherein computing the third probability comprises: for the pair of two non-adjacent straight-line segments in both the shape of the gesture trajectory and the pre-determined gesture shape, determining an intersection location of the two non-adjacent straight-line segments in the pre-determined gesture shape, wherein the third probability is computed based on CI similarity scores.

Clause E16. The system of Clause E15, wherein computing the third probability further comprises: computing a plurality of similarity scores, wherein each of the plurality of similarity scores is computed between CIs corresponding to two points on the two non-adjacent straight-line segments respectively in the gesture trajectory; determining a highest similarity score among the plurality of similarity scores; and identifying locations of the two points, on the two non-adjacent straight-line segments respectively in the gesture trajectory, corresponding to the highest similarity score.

Clause E17. The system of Clause E16, wherein the third probability is computed based on: the identified locations in the gesture trajectory, the intersection location in the pre-determined gesture shape, and a predetermined location margin.

Clause E18. The system of Clauses E15-E17, wherein: each of the CI similarity scores comprises a time reversal resonating strength (TRRS) computed based on two CIs; and the first wireless signal comprises a WiFi signal.

Clause E19. The system of Clauses E1-E18, wherein: there is no line-of-sight (LOS) between the transmitter and the receiver.

Clause E20. The system of Clauses E1-E19, wherein: there is at least one wall located between the transmitter and the receiver; there is at least one wall located between the transmitter and the object; or there is at least one wall located between the object and the receiver.

Clause E21. The system of Clauses E1-E20, wherein: the first wireless signal passes through at least one wall before reaching the object.

Clause E22. The system of Clauses E1-E21, wherein: each CI comprises at least one of: a channel state information (CSI), channel impulse response (CIR), channel frequency response (CFR), or received signal strength index (RSSI).

Clause E23. The system of Clauses E1-E22, wherein: the first wireless signal is transmitted using a plurality of transmit antennas of the transmitter; the second wireless signal is received using a plurality of receive antennas of the receiver; and each CI is associated with a respective one of the plurality of transmit antennas of the transmitter and associated with a respective one of the plurality of receive antennas of the receiver.

Clause E24. A wireless device of a wireless motion recognition system, comprising: a processor; a memory communicatively coupled to the processor; and a receiver communicatively coupled to the processor, wherein: an additional wireless device of the wireless motion recognition system is configured for transmitting a first wireless signal through a wireless multipath channel of a venue to the receiver, the receiver is configured for receiving a second wireless signal through the wireless multipath channel, the second wireless signal differs from the first wireless signal due to the wireless multipath channel that is impacted by a motion of an object in the venue, and the processor is configured for: obtaining a time series of channel information (TSCI) of the wireless multipath channel based on the second wireless signal, tracking the motion of the object based on the TSCI to generate a gesture trajectory of the object, and determining a gesture shape based on the gesture trajectory and a plurality of pre-determined gesture shapes.

Clause E25. The wireless device of Clause E24, wherein: each of the plurality of pre-determined gesture shapes comprises at least one straight-line segment; each straight-line segment of the at least one straight-line segment represents a spatially continuous movement along the straight-line segment; and the plurality of pre-determined gesture shapes are different from each other based on at least one of: different numbers of straight-line segments in the pre-determined gesture shapes, different turn angles between two adjacent straight-line segments in the pre-determined gesture shapes, wherein the two adjacent straight-line segments represent a spatially continuous movement from one to the other of the two adjacent straight-line segments, different numbers of intersection points in the pre-determined gesture shapes, wherein each intersection point is a point at an intersection between two non-adjacent straight-line segments, or different locations of the intersection points in the pre-determined gesture shapes.

Clause E26. The wireless device of Clause E25, wherein the processor is further configured for: for each of the plurality of pre-determined gesture shapes, computing a corresponding matching probability that a shape of the gesture trajectory matches the pre-determined gesture shape; identifying one of the plurality of pre-determined gesture shapes, wherein the identified gesture shape corresponds to a maximum matching probability among the plurality of pre-determined gesture shapes; comparing the maximum matching probability with a threshold; when the maximum matching probability is larger than the threshold, recognizing the gesture shape as the identified gesture shape, and automatically controlling an operation of a device based on the recognized gesture shape; and when the maximum matching probability is not larger than the threshold, determining the gesture shape as an unknown gesture shape.

Clause E27. The wireless device of Clause E26, wherein the processor is further configured for: for each of the plurality of pre-determined gesture shapes, computing a first probability that the shape of the gesture trajectory has the same number of straight-line segments as the pre-determined gesture shape, computing a second probability that the shape of the gesture trajectory has the same turn angle between two adjacent straight-line segments as the pre-determined gesture shape, for each pair of two adjacent straight-line segments in both the shape of the gesture trajectory and the pre-determined gesture shape, computing a third probability that the shape of the gesture trajectory has an intersection point at the same location of two non-adjacent straight-line segments as the pre-determined gesture shape, for each pair of two non-adjacent straight-line segments having an intersection point in the pre-determined gesture shape, and computing the corresponding matching probability based on a product of: the first probability, each second probability and each third probability.

Clause E28. A method of a wireless motion recognition system, comprising: transmitting a first wireless signal through a wireless multipath channel of a venue; receiving a second wireless signal through the wireless multipath channel, wherein the second wireless signal differs from the first wireless signal due to the wireless multipath channel that is impacted by a motion of an object in the venue; obtaining a time series of channel information (TSCI) of the wireless multipath channel based on the second wireless signal; tracking the motion of the object based on the TSCI to generate a gesture trajectory of the object; and determining a gesture shape based on the gesture trajectory and a plurality of pre-determined gesture shapes.

Clause E29. The method of Clause E28, wherein: the object is a body part of a user; the user is at least one of: a human being, an animal, a robot, or a movable machine; the motion comprises a continuous movement of the body part; the body part comprises at least one of the following of the user: a hand, a foot, an arm, a leg, a head or a finger; and during the motion of the object, the user is located at a fixed distance from the transmitter and at a fixed distance from the receiver.

Clause E30. The method of Clauses E28-E29, wherein: there is no line-of-sight (LOS) between the transmitter and the receiver; and the first wireless signal passes through at least one wall before reaching the object.

In some embodiments, wireless sensing partner identification and qualification system are disclosed. A Type2 device may be installed in a venue with many smart devices (e.g. IoT devices, WiFi enabled device, WiFi Direct enabled device, WiFi P2P enabled device, 5G device, Zigbee device) which can potentially serve as Typel device to form a wireless sensing network with the Type2 device. The Type2 device may probe/scan/discover/identify/ locate/find/search for/request/ authenticate/associate with/negotiate/connect/pair/register/connect to some of the smart devices to serve as Typel devices so as to jointly form a wireless sensing network/system. The connection between the Typel and Type2 devices may be a P2P (e.g. WiFi Direct) connection. The smart devices (candidate Typel devices) may include multiple smart TVs at different locations in the venue, smart speakers, smart set-top-boxes (STBs), smart lightings, smart bulbs, smart refrigerator, smart appliances, smart furniture, smart fixtures, smart sockets, smart plugs, smart chargers, smart ornaments, smart clocks, smart watches, smart smoke detectors, smart door bell, smart cameras, smart thermostats, smart vacuum cleaners, computers, tablets, phones, routers, base stations, etc. The Type2 device may be an Origin, a router, repeater/mesh router/mesh device, a base station, a 4G/5G mini/micro/nano/pico-cell base station, a Hex Command, a client, a WiFi client, an IoT device, or one of the smart devices. A smart device may function both as a Typel device and as a Type2 device. The venue may be home, office, building, warehouse, facility, structure, etc. In some embodiments, an APP can help a user to rename the WiFi-sensing ready devices. The devices may be pre-paired and pre-registered to an account in the system. For example, once CSI services are enabled, motion intensity bars will appear to represent each of these devices. When a user walks towards one of the devices, its motion bar will increase. This will help the user to locate the intended device. The system will investigate after locating the device, whether the CSI can be turned ON/OFF, to help user to confirm the intended device. The user can then rename the intended device, e.g. to a friendly name.

Clause P1. A method/device/system/software of a wireless sensing system, comprising: transmitting a wireless signal from a Typel heterogeneous wireless device of the system with N1 transmit antennas through a wireless multipath channel of a venue, wherein the wireless multipath channel is impacted by a movement of an object in the venue; receiving the wireless signal by a Type2 heterogeneous wireless device of the system with N2 receive antennas through the wireless multipath channel, wherein the received wireless signal differs from the transmitted wireless signal due to the wireless multipath channel of the venue; obtaining a number of time series of channel information (TSCI) of the wireless multipath channel based on the received wireless signal using a processor, a memory and a set of instructions, each TSCI associated with one of the N1 transmit antennas and one of the N2 receive antennas; computing a time series of motion analytics (TSMA) of the object based on the number of TSCI; computing an information of a target device based on the TSMA, wherein the target device is one of: the Typel device and the Type2 device.

Clause P2. The method/device/system/software of the wireless sensing system of clause P1, further comprising: monitoring the motion of the object based on the TSMA.

Clause P2b. The method/device/system/software of the wireless sensing system of clause P1, further comprising: prompting a training object to undergo a training movement to impact the wireless multipath channel so that the number of TSCI can be obtained and the TSMA and consequently the information of the target device can be computed.

Clause P3. The method/device/system/software of the wireless sensing system of clause P1, further comprising: wherein the object is a training object undergoing a training movement.

Clause P3b. The method/device/system/software of the wireless sensing system of clause P3: wherein the object undergoes the training movement based on a prompting by the system.

Clause P3c. The method/device/system/software of the wireless sensing system of clause P3b: wherein the object undergoes the training movement in response to a prompting by the system.

Clause P4. The method/device/system/software of the wireless sensing system of clause P3, further comprising: wherein the training object is at a known location.

Clause P5. The method/device/system/software of the wireless sensing system of clause P3, further comprising: wherein the training object comprises at least one of: a user of the system, a living object, a plant, an animal, a pet, a human, or a machine.

Clause P6. The method/device/system/software of the wireless sensing system of clause P3, further comprising: wherein the training movement comprises at least one of: a movement towards or away from the target device, a radial movement with respect to the target device, a tangential movement with respect to the target device, a repeating movement, a periodic movement, and a transient movement.

Clause P7. The method/device/system/software of the wireless sensing system of clause P3, further comprising: wherein the training object is a user of the wireless sensing system; wherein the user undergoes the training movement to identify or confirm the target device.

Clause P8. The method/device/system/software of the wireless sensing system of clause P7, further comprising: wherein the user moves towards or away from the target device in the training movement.

Clause P9. The method/device/system/software of the wireless sensing system of clause P8, further comprising: identifying the target device by computing an identity (ID) of the target device based on the TSMA and the training movement, wherein the information is the ID.

Clause P10. The method/device/system/software of the wireless sensing system of clause P9, further comprising: confirming the ID of the target device based on a prediction of the ID of the target device.

Clause P11. The method/device/system/software of the wireless sensing system of clause P9, further comprising: performing at least one of the following based on the ID of the target device: customizing or configuring the target device, customizing or configuring the system, customizing or configuring a network or an interconnection of the system, customizing or configuring a server of the system, customizing or configuring an app on a user device, customizing or configuring a presentation of the system, customizing or configuring a wireless sensing task, a wireless sensing algorithm, a fusion algorithm, or an aggregation algorithm associated with the system, confirming an admissibility, acceptability, sufficiency, suitability or a qualification of the target device, confirming a role of the target device in the system, qualifying at least one of: the target device, the TSCI, the wireless signal, the transmission of the wireless signal, the reception of the wireless signal, and the obtaining of the TSCI, locating the target device, computing a location of the target device, computing a coordinate of the target device with respect to a map, naming the target device, renaming the target device, obtaining a location of the target device from a user, obtaining a name or a label of the target device from the user, obtaining a network configuration or interconnection of the system from the user, and obtaining from the user a configuration of the wireless sensing task, a wireless sensing algorithm, a fusion algorithm, or an aggregation algorithm.

Clause P12. The method/device/system/software of the wireless sensing system of clause P1, further comprising: analyzing a behavior of the TSMA associated with the movement of the object; computing the information of the target device based on the analysis of the behavior of the TSMA.

Clause P13. The method/device/system/software of the wireless sensing system of clause P12, further comprising: analyzing the behavior of the TSMA based on a prediction of an identity of the target device.

Clause P14. The method/device/system/software of the wireless sensing system of clause P12, further comprising: recognizing a pattern of the TSMA; computing the information of the target device based on the recognition of the pattern of the TSMA.

Clause P15. The method/device/system/software of the wireless sensing system of clause P14, further comprising: recognizing the pattern of the TSMA based on the training movement and a prediction of the information of the target device; confirming the information of the target device based on the recognized pattern of the TSMA.

Clause P16. The method/device/system/software of the wireless sensing system of clause P14: wherein the pattern comprises at least one of: a monotonic increasing trend of a feature of the motion analytics in the TSMA as the object moves towards the target device in a neighborhood of the target device, a monotonic decreasing trend of the feature of the motion analytics in the TSMA as the object moves away from the target device in the neighborhood of the target device, a local maximum of the feature of the motion analytics in the TSMA at a point of closest approach of the object in the neighborhood of the target device, a positive derivative or differential of the feature of the motion analytics in the TSMA as the object moves towards the target device in the neighborhood of the target device, a negative derivative or differential of the feature of the motion analytics in the TSMA as the object moves away from the target device in the neighborhood of the target device, a zero derivative or differential of the feature of the motion analytics in the TSMA at the point of closest approach, a negative second derivative (or differential of differential) of the feature of the motion analytics in the TSMA at the point of closest approach, a repetition of the feature of the motion analytics in the TSMA, a relaxation oscillation of the feature of the motion analytics in the TSMA, and a damping of the feature of the motion analytics in the TSMA.

Clause P17. The method/device/system/software of the wireless sensing system of clause P1: wherein the motion analytics comprises at least one of: a magnitude, a phase, a product, a square, a square root, a sum, a weighted sum, an inverse, a mean, a weighted mean, a trimmed mean, a conditional mean, a geometric mean, a harmonic mean, a thresholding, a soft thresholding, a hard thresholding, a quantization, a logical value, a set, a collection, a time, an occurrence, an event, an event statistics, a label, a mapping, a time duration, a timing, a time period, a regularity, a periodicity, a repetition, a recurrence, a change, a differential, an impulsiveness, an anomaly, a time averaging, a sliding window, a filtering output, a lowpass filtering, a bandpass filtering, a highpass filtering, a maximum, a minimum, a local maximum, a local minimum, a conditional maximum, a conditional minimum, a transformation, a transform, linear transform, nonlinear transform, a Fourier transform, a Laplace transform, a Hadamard transform, a trigonometric transform, a sparse transform, a graph-based transform, a component, a spectral component, a spectral feature, a spectral characteristics, a principal component analysis, an independent component analysis, an eigen-decomposition, a singular value decomposition, an orthogonal projection, a non-orthogonal projection, an over-complete projection, a histogram, a sample mean, a standard deviation, a variance, a high order statistics, a centroid, a cluster center, a percentile, a median, a mode, a normalization, a correlation, a covariance, an auto-correlation, an auto-covariance, a cross-correlation, a cross-covariance, likelihood, probability distribution function, sample distribution, moment generating function, expected value, expected function, a length, an area, a volume, a shape, a contour, a shade, a location, a position, a localization, a coordinate, a distance, a direction, a displacement, a speed, a velocity, an acceleration, an integration, a derivative, a slope, a second derivative, a high order derivative, an angle, an angular distance, an angular speed, an angular acceleration, total variation, absolute variation, square variation, spread, dispersion, variability, deviation, absolute deviation, square deviation, total deviation, divergence, range, interquartile range, skewness, kurtosis, L-moment, coefficient of variation, quartile coefficient of dispersion, mean absolute difference, Gini coefficient, relative mean difference, median absolute deviation, average absolute deviation, distance standard deviation, coefficient of dispersion, entropy, variance-to-mean ratio, maximum-to-minimum ratio, variation measure, regularity measure, similarity measure, a similarity score, a distance, L-1 distance, absolute distance, L-2 distance, Euclidean distance, L-k distance, a norm, a medoid distance, a classification, a motion classification, a recognition, a gait, a gait cycle, a gesture, a handwriting, presence, absence, proximity, approaching, receding, breathing rate, heart rate, tidal volume, depth of breath, inhale time, exhale time, inhale time to exhale time ratio, airflow rate, heart heat-to-beat interval, heart rate variability, and another analytics.

Clause P18. A method/device/system/software of a wireless sensing system, comprising: transmitting a set of wireless signal from a set of Type1 heterogeneous wireless device of the system, each wireless signal from a respective Type1 device with a respective amount of transmit antennas through a wireless multipath channel of a venue, wherein the wireless multipath channel is impacted by a movement of an object in a neighborhood of a particular Type1 device in the venue; receiving the set of wireless signals by a Type2 heterogeneous wireless device of the system with N2 receive antennas through the wireless multipath channel, wherein the received wireless signal differs from the transmitted wireless signal due to the wireless multipath channel of the venue; obtaining a number of respective time series of channel information (TSCI) of the wireless multipath channel based on a respective received wireless signal associated with a respective Type1 device using a processor, a memory and a set of instructions, each TSCI associated with one of the N1 transmit antennas and one of the N2 receive antennas; computing a set of time series of motion analytics (TSMA) of the object, each TSMA based on the number of respective TSCI associated with the respective Type1 device; computing an information of a target device based on the set of TSMA, wherein the target device is the particular Type1 device.

Clause P19. The method/device/system/software of the wireless sensing system of clause P18, further comprising: monitoring the motion of the object based on the TSMA.

Clause P20. The method/device/system/software of the wireless sensing system of clauses P18-P19, further comprising: wherein the object is a training object undergoing a training movement.

Clause P21. The method/device/system/software of a wireless sensing system of clauses P18-P20, comprising: wherein the object is a user of the wireless sensing system; wherein the user moves towards or away from the target device in the neighborhood of the target device.

Clause P22. The method/device/system/software of the wireless sensing system of clause P21, further comprising: identifying the target device by computing an identity (ID) of the target device based on the set of TSMA and the training movement, wherein the information is the ID.

Clause P23. The method/device/system/software of the wireless sensing system of clause P22, further comprising: performing at least one of the following based on the ID of the target device: customizing or configuring the target device, customizing or configuring the system, customizing or configuring a network or an interconnection of the system, customizing or configuring a server of the system, customizing or configuring an app on a user device, customizing or configuring a presentation of the system, customizing or configuring a wireless sensing task, a wireless sensing algorithm, a fusion algorithm, or an aggregation algorithm associated with the system, confirming an admissibility, acceptability, sufficiency, suitability or a qualification of the target device, confirming a role of the target device in the system, qualifying at least one of: the target device, the TSCI, the wireless signal, the transmission of the wireless signal, the reception of the wireless signal, and the obtaining of the TSCI, locating the target device, computing a location of the target device, computing a coordinate of the target device with respect to a map, naming the target device, renaming the target device, obtaining a location of the target device from a user, obtaining a name or a label of the target device from the user, obtaining a network configuration or interconnection of the system from the user, and obtaining from the user a configuration of the wireless sensing task, a wireless sensing algorithm, a fusion algorithm, or an aggregation algorithm.

Clause P24. The method/device/system/software of the wireless sensing system of clauses P22-P23, further comprising: analyzing a behavior of the set of TSMA associated with the movement of the object; computing the identity of the target device based on the analysis of the behavior of the set of TSMA.

Clause P25. The method/device/system/software of the wireless sensing system of clause P24, further comprising: analyzing the identity of the set of TSMA based on a prediction of the identity of the target device.

Clause P26. The method/device/system/software of the wireless sensing system of clauses P24-P25, further comprising: recognizing a pattern of the TSMA; computing the identity of the target device based on the recognition of the pattern of the TSMA.

Clause P27. The method/device/system/software of the wireless sensing system of clause P26, further comprising: recognizing the pattern of the TSMA based on the training movement and a prediction of the identity of the target device; confirming the identity of the target device based on the recognized pattern of the TSMA.

Clause P28. The method/device/system/software of the wireless sensing system of clauses P26-P27: wherein a target TSMA is the TSMA associated with the target device; wherein a non-target TSMA is one of the set of TSMA that is not the target TSMA; wherein the pattern comprises at least one of: a monotonic increasing trend of a feature of the motion analytics in the target TSMA as the object moves towards the target device in a neighborhood of the target device, a monotonic increasing trend of the feature of the motion analytics in the target TSMA but not in the non-target TSMA as the object moves towards the target device in the neighborhood of the target device, a monotonic increasing trend of the feature of the motion analytics in both the target TSMA and the non-target TSMA, with the feature being greater in the target TSMA than in the non-target TSMA, as the object moves towards the target device in the neighborhood of the target device, a monotonic decreasing trend of the feature of the motion analytics in the target TSMA as the object moves away from the target device in the neighborhood of the target device, a monotonic decreasing trend of the feature of the motion analytics in the target TSMA but not in the non-target TSMA as the object moves away from the target device in the neighborhood of the target device, a monotonic decreasing trend of the feature of the motion analytics in both the target TSMA and the non-target TSMA, with the feature being greater in the target TSMA than in the non-target TSMA, as the object moves away from the target device in the neighborhood of the target device, a maximum of the feature of the motion analytics in the target TSMA at a point of closest approach of the object in the neighborhood of the target device, a maximum of the feature of the motion analytics in the target TSMA but not in the non-target TSMA at the point of closest approach, a maximum of the feature of the motion analytics in both the target TSMA and the non-target TSMA, with the maximum being greater in the target TSMA than in the non-target TSMA, at the point of closest approach, a positive derivative or differential of the feature of the motion analytics in the target TSMA as the object moves towards the target device in the neighborhood of the target device, a positive derivative or differential of the feature of the motion analytics in the target TSMA but not in the non-target TSMA as the object moves towards the target device in the neighborhood of the target device, a positive derivative or differential of the feature of the motion analytics in both the target TSMA and the non-target TSMA, with the feature being greater in the target TSMA than in the non-target TSMA, as the object moves towards the target device in the neighborhood of the target device, a negative derivative or differential of the feature of the motion analytics in the target TSMA as the object moves away from the target device in the neighborhood of the target device, a negative derivative or differential of the feature of the motion analytics in the target TSMA but not in the non-target TSMA as the object moves away from the target device in the neighborhood of the target device, a negative derivative or differential of the feature of the motion analytics in both the target TSMA and the non-target TSMA, with the feature being greater in the target TSMA than in the non-target TSMA, as the object moves away from the target device in the neighborhood of the target device, a zero derivative or differential of the feature of the motion analytics in the target TSMA at the point of closest approach, a zero derivative or differential of the feature of the motion analytics in the target TSMA but not in the non-target TSMA at the point of closest approach, a zero derivative or differential of the feature of the motion analytics in both the target TSMA and the non-target TSMA, with the feature being greater in the target TSMA than in the non-target TSMA, at the point of closest approach, a negative second derivative (or differential of differential) of the feature of the motion analytics in the target TSMA at the point of closest approach, a negative second derivative (or differential of differential) of the feature of the motion analytics in the target TSMA but not in the non-target TSMA at the point of closest approach, and a negative second derivative (or differential of differential) of the feature of the motion analytics in both the target TSMA and the non-target TSMA, with the feature being greater in the target TSMA than in the non-target TSMA, at the point of closest approach.

The features described above may be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that may be used, directly or indirectly, in a computer to perform a certain activity or bring about a certain result. A computer program may be written in any form of programming language (e.g., C, Java), including compiled or interpreted languages, and it may be deployed in any form, including as a stand-alone program or as a module, component, subroutine, a browser-based web application, or other unit suitable for use in a computing environment.

Suitable processors for the execution of a program of instructions include, e.g., both general and special purpose microprocessors, digital signal processors, and the sole processor or one of multiple processors or cores, of any kind of computer. Generally, a processor will receive instructions and data from a read-only memory or a random access memory or both. The essential elements of a computer are a processor for executing instructions and one or more memories for storing instructions and data. Generally, a computer will also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory may be supplemented by, or incorporated in, ASICs (application-specific integrated circuits).

While the present teaching contains many specific implementation details, these should not be construed as limitations on the scope of the present teaching or of what may be claimed, but rather as descriptions of features specific to particular embodiments of the present teaching. Certain features that are described in this specification in the context of separate embodiments may also be implemented in combination in a single embodiment. Conversely, various features that are described in the context of a single embodiment may also be implemented in multiple embodiments separately or in any suitable sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems may generally be integrated together in a single software product or packaged into multiple software products.

Particular embodiments of the subject matter have been described. Any combination of the features and architectures described above is intended to be within the scope of the following claims. Other embodiments are also within the scope of the following claims. In some cases, the actions recited in the claims may be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A system for wireless material sensing, comprising:

   a transmitter configured for transmitting, using a plurality of transmit antennas, a first wireless signal through a wireless multipath channel of a venue;
   a receiver configured for receiving, using a plurality of receive antennas, a second wireless signal through the wireless multipath channel, wherein the second wireless signal comprises a reflection or a refraction of the first wireless signal at a target material surface of an object in the venue, wherein the target material surface is a surface of a target material of the object; and
   a processor configured for:

      obtaining a plurality of channel information (CI) of the wireless multipath channel based on the second wireless signal, wherein each CI is associated with a respective one of the plurality of transmit antennas of the transmitter and associated with a respective one of the plurality of receive antennas of the receiver, wherein each CI comprises at least one of: a channel state information (CSI), channel impulse response (CIR), channel frequency response (CFR), or received signal strength index (RSSI),

computing a material analytics based on the plurality of CI, and

determining a type of the target material of the object based on the material analytics.

2. The system of claim 1, wherein:

the first wireless signal is a wireless probe signal; and

the material analytics is associated with the reflection of the wireless probe signal at the target material surface.

3. The system of claim 2, wherein:

a CI associated with a transmit antenna and a receive antenna comprises a CIR including a number of tabs; and

the material analytics is computed based on at least one of:

an amplitude of a tab of the CIR associated with the reflection of the wireless probe signal at the target material surface,

a distance between the transmit antenna and the target material surface,

a distance between the receive antenna and the target material surface,

a transmit antenna gain associated with transmitting the first wireless signal at the transmitter, or

a receive antenna gain associated with receiving the second wireless signal at the receiver.

4. The system of claim 2 or claim 3, wherein:

each CI comprises a CIR with a number of tabs;

the plurality of transmit antennas of the transmitter and the plurality of receive antennas of the receiver are in line-of-sight (LOS) such that the second wireless signal comprises a LOS component of the wireless probe signal; and

each CIR comprises a tab with a magnitude corresponding to the LOS component of the wireless probe signal.

5. The system of claim 4, wherein:

the transmitter and the receiver are physically coupled to each other;

the plurality of transmit antennas and the plurality of receive antennas are next to each other;

the material analytics is proportional to a product of (a) an amplitude of CIR tabs associated with the reflection and (b) a distance between the target material surface and the transmit and receive antennas;

the material analytics is inversely proportional to a product of (c) a transmit antenna gain associated with transmitting the first wireless signal at the transmitter and (d) a receive antenna gain associated with receiving the second wireless signal at the receiver; and

the processor is further configured for:

interpolating all CIRs by an interpolation factor, and

computing the material analytics based on the interpolated CIRs.

6. The system of claim 4 or claim 5, wherein the processor is further configured for:

for each CIR:

synchronizing a respective background CIR with the CIR,

scaling the synchronized background CIR, and

computing a respective background-subtracted CIR by subtracting the scaled synchronized background CIR from the CIR; and

computing the material analytics based on the plurality of background-subtracted CIRs.

7. The system of claim 5 or claim 6, wherein the processor is further configured for:

aligning the CIRs based on LOS tabs, wherein each of LOS tabs is a CIR tab with a magnitude corresponding to the LOS component of the wireless probe signal.

8. The system of claim 7, wherein the processor is further configured for:

> determining one of the CIRs as a reference CIR;
> determining a reference window of tabs of the reference CIR encompassing at least one LOS tab;
> computing a matching score between the reference window of the reference CIR and a sliding window of an additional CIR to determine a best-matched sliding window with a maximum matching score, wherein:

>> a tab location of the sliding window is within a search range with respect to a tab location of the reference window,
>> the matching score is computed based on at least one of: cross correlation, cross covariance, L_1 distance, absolute difference, L_2 distance, Euclidean distance, or L_k distance;

> aligning the additional CIR with the reference CIR based on the reference window and the best-matched sliding window; and
> rotating the additional CIR such that the best-matched sliding window is shifted to the same tab location as the reference window.

9. The system of claim 7 or claim 8, wherein the processor is further configured for:

> determining one of the CIRs as a reference CIR;
> computing a representative tab location of the reference CIR;
> computing a representative tab location of an additional CIR, wherein each representative tab location of a corresponding CIR is computed by:

>> normalizing the corresponding CIR; and
>> generating a probability density function based on: a tab index of the normalized CIR and a tab magnitude of the normalized CIR;

> aligning the additional CIR with the reference CIR based on the representative tab locations of the reference CIR and the additional CIR; and
> rotating the additional CIR such that its representative tab location is closer to the representative tab location of the reference CIR.

10. The system according to any of claims 6 to 9, wherein:

> the transmitter is further configured for transmitting, using the plurality of transmit antennas, an additional wireless probe signal through the wireless multipath channel of the venue, with the object removed from a field of interest;
> the receiver is further configured for receiving, using the plurality of receive antennas, the additional wireless probe signal through the wireless multipath channel; and
> the processor is further configured for:

>> obtaining a plurality of trial CIRs of the wireless multipath channel based on the additional wireless probe signal,
>> determining whether there is any object in the field of interest based on the plurality of trial CIRs to generate a determination result,
>> when the determination result indicates that there is no object in the field of interest, obtaining the plurality of background CIRs based on the plurality of trial CIRs automatically, and
>> when the determination result indicates that there is an object in the field of interest, informing the transmitter to transmit another wireless probe signal to obtain another plurality of trial CIRs.

11. The system according to any of claims 6 to 10, wherein the processor is further configured for:
computing each of a plurality of candidate material analytics based on a respective background-subtracted CIR, wherein the material analytics is an aggregate analytics of the plurality of candidate material analytics.

12. The system of claim 11, wherein computing each candidate material analytics comprises:
for each transmit antenna and each receive antenna:

determining that a background-subtracted CIR is associated with the transmit antenna and the receive antenna, with a first CIR tab associated with the LOS component of the wireless probe signal,

identifying a maximum magnitude of the background-subtracted CIR after the first CIR tab, wherein the maximum magnitude is associated with a second CIR tab of the background-subtracted CIR, and

computing the candidate material analytics based on the second CIR tab and the maximum magnitude.

13. The system of claim 12, wherein computing each candidate material analytics further comprises:
for the transmit antenna and the receive antenna:

determining a first distance between the transmit antenna and the receive antenna,

computing a time difference between the first CIR tab and the second CIR tab, based on a sampling frequency of the background-subtracted CIR,

computing a second distance based on a product of the time difference and a wave propagation speed of the wireless probe signal in the venue,

computing a third distance based on a weighted sum of the first distance and the second distance, and computing the candidate material analytics based on the maximum magnitude and the third distance.

14. The system according to any previous claim, wherein:

in a training phase of the system, for each of a plurality of training materials:

the transmitter is configured for transmitting, using the plurality of transmit antennas, a first wireless training signal through a training wireless multipath channel of a training venue,

the receiver is configured for receiving, using the plurality of receive antennas, a second wireless training signal through the training wireless multipath channel, wherein the second wireless training signal comprises a reflection or a refraction of the first wireless training signal at a surface of the training material in the training venue,

and
the processor is configured for:

obtaining a plurality of training CI of the training wireless multipath channel based on the second wireless training signal, wherein each training CI is associated with a respective one of the plurality of transmit antennas and associated with a respective one of the plurality of receive antennas, wherein each training CI comprises at least one of: a channel state information (CSI), channel impulse response (CIR), channel frequency response (CFR), or received signal strength index (RSSI), and

computing a training material analytics based on the plurality of training CI;

in the training phase of the system, training a classifier based on machine learning and the training material analytics of each training material; and

in an operating phase of the system, determining the type of the target material of the object based on the classifier.

15. A method of a wireless material sensing system, comprising:

transmitting, using N1 transmit antennas of a transmitter, a first wireless signal through a wireless multipath channel of a venue;

receiving, using N2 receive antennas of a receiver, a second wireless signal through the wireless multipath channel, wherein the second wireless signal comprises a reflection or a refraction of the first wireless signal at a surface of a target material of an object in the venue, wherein N1 and N2 are positive integers;

obtaining a plurality of channel information (CI) of the wireless multipath channel based on the second wireless signal, wherein each CI is associated with a respective one of the N1 transmit antennas and associated with a respective one of the N2 receive antennas, wherein each CI comprises at least one of: a channel state information (CSI), channel impulse response (CIR), channel frequency response (CFR), or received signal strength index (RSSI);

computing a material analytics based on the plurality of CI; and

determining a type of the target material of the object based on the material analytics.

FIG. 1

```
┌────────────────────────────────────────────────────────────────────┐
│ Transmit, by a transmitter, a first wireless signal through a        │─╮ 202
│ wireless multipath channel of a venue to a receiver                  │─╯
└────────────────────────────────────────────────────────────────────┘
                              │
                              ▼
┌────────────────────────────────────────────────────────────────────┐
│ Receive, by the receiver, a second wireless signal through the       │─╮ 204
│ wireless multipath channel, wherein the second wireless signal       │─╯
│ differs from the first wireless signal due to the wireless multipath │
│ channel that is impacted by a target motion of an object in the venue│
└────────────────────────────────────────────────────────────────────┘
                              │
                              ▼
┌────────────────────────────────────────────────────────────────────┐
│ Obtain a time series of channel information (TSCI) of the wireless   │─╮ 206
│ multipath channel based on the second wireless signal                │─╯
└────────────────────────────────────────────────────────────────────┘
                              │
                              ▼
┌────────────────────────────────────────────────────────────────────┐
│ Compute a time series of spatial-temporal information (TSSTI) of the │─╮ 208
│ object based on the TSCI                                             │─╯
└────────────────────────────────────────────────────────────────────┘
                              │
                              ▼
┌────────────────────────────────────────────────────────────────────┐
│ Detect the target motion of the object based on at least one of: the │─╮ 210
│ TSSTI or the TSCI                                                    │─╯
└────────────────────────────────────────────────────────────────────┘
```

**FIG. 2**

FIG. 3A

FIG. 3B

FIG. 3C

FIG. 3D

**FIG. 4**

FIG. 5B

FIG. 5A

**FIG. 6**

EP 3 869 223 A1

FIG. 7A

**FIG. 7B**

**FIG. 7C**

EP 3 869 223 A1

FIG. 7D

FIG. 8A

FIG. 8B

FIG. 8C

FIG. 9

**FIG. 10A**

EP 3 869 223 A1

FIG. 10B

1100

Channel Impulse Response (CIR)

1101 — CIR collection

1102 — CIR interpolation

1103 — CIR synchronization

1104 — Noise cancellation

1105 — Target detection

1106 — Material reflection feature (MRF) estimation

1108 — Material identification

*Testing stage*

1120

MRF database generation

1107 — MRF database

*Training stage*

1110

Material type

**FIG. 11**

```
┌────────────────────────────────────────────────────────────┐
│  Transmit, by a plurality of transmit antennas of a          │ ⟋1202
│  transmitter, a first wireless signal through a wireless     │
│  multipath channel of a venue to a receiver                  │
└────────────────────────────────────────────────────────────┘
                             │
                             ▼
┌────────────────────────────────────────────────────────────┐
│  Receive, by a plurality of receive antennas of the         │ ⟋1204
│  receiver, a second wireless signal through the wireless    │
│  multipath channel, wherein the second wireless             │
│  signal comprises a reflection or a refraction of the       │
│  first wireless signal at a surface of a target material    │
│  of an object in the venue                                  │
└────────────────────────────────────────────────────────────┘
                             │
                             ▼
┌────────────────────────────────────────────────────────────┐
│  Obtain a plurality of channel information (CI) of the       │ ⟋1206
│  wireless multipath channel based on the second             │
│  wireless signal, wherein each CI is associated             │
│  with a respective one of the plurality of transmit          │
│  antennas and associated with a respective one of           │
│  the plurality of receive antennas                          │
└────────────────────────────────────────────────────────────┘
                             │
                             ▼
┌────────────────────────────────────────────────────────────┐
│  Compute a material analytics based on the plurality of CI  │ ⟋1208
└────────────────────────────────────────────────────────────┘
                             │
                             ▼
┌────────────────────────────────────────────────────────────┐
│  Determine a type of the target material of the object       │ ⟋1210
│  based on the material analytics                            │
└────────────────────────────────────────────────────────────┘
```

**FIG. 12**

EP 3 869 223 A1

Interpolate all CIRs by an interpolation factor, based on at least one of: linear interpolation, polynomial interpolation or spline interpolation ⟋‑1302

Synchronize all of the interpolated CIRs by aligning the CIRs based on LOS tabs, wherein each of LOS tabs is a CIR tab with a magnitude corresponding to the LOS component of the wireless probe signal ⟋‑1304

computing the material analytics based on the synchronized CIRs ⟋‑1306

**FIG. 13**

<u>1400</u>

Determine one of the CIRs as a reference CIR ⟶1402

Determine a reference window of tabs of the reference CIR encompassing at least one LOS tab ⟶1404

Compute a matching score between the reference window of the reference CIR and a sliding window of an additional CIR to determine a best-matched sliding window with a maximum matching score ⟶1406

Align the additional CIR with the reference CIR based on the reference window and the best-matched sliding window ⟶1408

Rotate the additional CIR such that the best-matched sliding window is shifted to a same tab location as the reference window ⟶1410

**FIG. 14**

<u>1500</u>

```
┌────────────────────────────────────────────────────────────────┐
│        Determine one of the CIRs as a reference CIR            │──1502
└────────────────────────────────────────────────────────────────┘
                              │
                              ▼
┌────────────────────────────────────────────────────────────────┐
│     Compute a representative tab location of the reference CIR  │──1504
└────────────────────────────────────────────────────────────────┘
                              │
                              ▼
┌────────────────────────────────────────────────────────────────┐
│     Compute a representative tab location of an additional CIR  │──1506
└────────────────────────────────────────────────────────────────┘
                              │
                              ▼
┌────────────────────────────────────────────────────────────────┐
│ Align the additional CIR with the reference CIR based on the    │──1508
│ representative tab locations of the reference CIR and the       │
│ additional CIR                                                  │
└────────────────────────────────────────────────────────────────┘
                              │
                              ▼
┌────────────────────────────────────────────────────────────────┐
│ Rotate the additional CIR such that its representative tab      │──1510
│ location is closer to the representative tab location of the    │
│ reference CIR                                                   │
└────────────────────────────────────────────────────────────────┘
```

**FIG. 15**

EP 3 869 223 A1

EP 3 869 223 A1

1600

```
┌─────────────────────────────────────────────────────────────────┐
│   Synchronize a respective background CIR with a CIR (unprocessed) │──1602
└─────────────────────────────────────────────────────────────────┘
                            │
                            ▼
┌─────────────────────────────────────────────────────────────────┐
│              Scale the synchronized background CIR                 │──1604
└─────────────────────────────────────────────────────────────────┘
                            │
                            ▼
┌─────────────────────────────────────────────────────────────────┐
│  Compute a respective background-subtracted CIR by subtracting     │──1606
│     the scaled synchronized background CIR from the CIR            │
└─────────────────────────────────────────────────────────────────┘
                            │
                            ▼
┌─────────────────────────────────────────────────────────────────┐
│  Compute a spatial-temporal quantity based on a respective         │──1608
│              background-subtracted CIR                             │
└─────────────────────────────────────────────────────────────────┘
                            │
                            ▼
                      ╱──────────╲
           YES       ╱    Any      ╲
        ◄───────────◄  unprocessed  ► ──1609
                     ╲    CIR?      ╱
                      ╲────────────╱
                            │ NO
                            ▼
┌─────────────────────────────────────────────────────────────────┐
│  Compute the material analytics based on the plurality of          │──1610
│            spatial-temporal quantities                            │
└─────────────────────────────────────────────────────────────────┘
```

**FIG. 16**

<u>1700</u>

| Transmit, using the plurality of transmit antennas, an additional wireless probe signal through the wireless multipath channel of the venue, with the object removed from a field of interest | 1702 |

↓

| Receive, using the plurality of receive antennas, the additional wireless probe signal through the wireless multipath channel | 1704 |

↓

| Obtain the plurality of background CIRs of the wireless multipath channel based on the additional wireless probe signal, wherein both a respective CIR and a respective background CIR subtracted from the respective CIR are associated with a same transmit antenna and a same receive antenna | 1706 |

**FIG. 17**

1800

Transmit, using the plurality of transmit antennas, an additional wireless probe signal through the wireless multipath channel of the venue, with the object removed from a field of interest ⟩ 1802

Receive, using the plurality of receive antennas, the additional wireless probe signal through the wireless multipath channel ⟩ 1804

Obtain a plurality of trial CIRs of the wireless multipath channel based on the additional wireless probe signal ⟩ 1806

Determine whether there is any object in the field of interest based on the plurality of trial CIRs to generate a determination result ⟩ 1808

1809

YES  Any object in field of interest?

NO

Obtain the plurality of background CIRs based on the plurality of trial CIRs automatically ⟩ 1810

**FIG. 18**

EP 3 869 223 A1

1900

| Identify a pair of transmit antenna and receive antenna | 1902 |

Determine that a background-subtracted CIR is associated with the transmit antenna and the receive antenna, with a first CIR tab associated with the LOS component of the wireless probe signal — 1904

Identify a maximum magnitude of the background-subtracted CIR after the first CIR tab, wherein the maximum magnitude is associated with a second CIR tab of the background-subtracted CIR — 1906

Compute a candidate material analytics based on the second CIR tab and the maximum magnitude — 1908

Any more antenna pair? — 1909

YES

NO

Compute the material analytics based on an aggregate analytics of the plurality of candidate material analytics — 1910

**FIG. 19**

EP 3 869 223 A1

EP 3 869 223 A1

2000

Identify a pair of transmit antenna and receive antenna ⟋2002

Determine a first distance between the transmit antenna and the receive antenna ⟋2004

Compute a time difference between the first CIR tab and the second CIR tab, based on a sampling frequency of the background-subtracted CIR ⟋2006

Compute a second distance based on a product of the time difference and a wave propagation speed of the wireless probe signal in the venue ⟋2008

Compute a third distance based on a weighted sum of the first distance and the second distance ⟋2010

Compute a candidate material analytics based on the maximum magnitude and the third distance ⟋2012

Any more antenna pair? ⟋2013

YES

NO

Compute the material analytics based on an aggregate analytics of the plurality of candidate material analytics ⟋2014

**FIG. 20**

2100

Transmit, by the plurality of transmit antennas of the transmitter, a third wireless signal through the wireless multipath channel of the venue ⟋2102

Receive, by the plurality of receive antennas of the receiver, a fourth wireless signal through the wireless multipath channel, wherein the fourth wireless signal comprises a reflection or a refraction of the third wireless signal at the surface of the target material of the object in the venue ⟋2104

Obtain a plurality of additional channel information (CI) of the wireless multipath channel based on the fourth wireless signal, wherein each additional CI is associated with a respective one of the plurality of transmit antennas and a respective one of the plurality of receive antennas ⟋2106

Compute an additional material analytics based on the plurality of additional CI ⟋2108

Compute an aggregate material analytics based on the material analytics and the additional material analytics ⟋2110

Determine the type of the target material of the object based on the aggregate material analytics ⟋2112

**FIG. 21**

2200

Transmit, by a plurality of transmit antennas of a training transmitter, a first wireless training signal through a training wireless multipath channel of a training venue including a training target material to a training receiver ⌐2202

Receive, by a plurality of receive antennas of the training receiver, a second wireless training signal through the training wireless multipath channel, wherein the second wireless training signal comprises a reflection or a refraction of the first wireless training signal at a surface of the training target material ⌐2204

Obtain a plurality of training CI of the training wireless multipath channel based on the second wireless training signal, wherein each training CI is associated with a respective one of the plurality of transmit antennas and a respective one of the plurality of receive antennas ⌐2206

Compute a training material analytics based on the plurality of training CI ⌐2208

YES ◁ Any more training material? ⌐2209

NO

Train a classifier based on machine learning and all training material analytics ⌐2210

**FIG. 22**

FIG. 23

**FIG. 24**

FIG. 25A

EP 3 869 223 A1

**FIG. 25B**

**FIG. 26A**

**FIG. 26B**

FIG. 26C

2700

2710

2712

2714

2720

2730

2770

2732

2740

2750

**FIG. 27A**

2751

2752

**FIG. 27B**

**FIG. 27C**

EP 3 869 223 A1

2800

Transmit a first wireless signal through a wireless multipath channel of a venue ⎯2802

Receive a second wireless signal through the wireless multipath channel, wherein the second wireless signal comprises a reflection of the first wireless signal by a tip of a writing instrument in the venue ⎯2804

Obtain a time series of channel information (CI) of the wireless multipath channel based on the second wireless signal ⎯2806

Track a writing of the tip of the writing instrument based on the time series of CI (TSCI) ⎯2808

**FIG. 28**

EP 3 869 223 A1

FIG. 29A

EP 3 869 223 A1

**FIG. 29B**

FIG. 29C

FIG. 30

**FIG. 31B**

**FIG. 31A**

152

FIG. 32

FIG. 33

**FIG. 34**

FIG. 35A

FIG. 35B

**FIG. 36A**

**FIG. 36B**

**FIG. 36C**

FIG. 37

**FIG. 38**

**FIG. 39A**

FIG. 39B

**FIG. 39C**

**FIG. 40**

EP 3 869 223 A1

**FIG. 41B**

**FIG. 41A**

FIG. 42

**FIG. 43A**

**FIG. 43B**

EP 3 869 223 A1

```
┌──────────────────────────────────────────────────────────────┐
│ Transmit a first wireless signal from a first wireless device │──4402
│ with multiple transmit antennas through a wireless multipath  │
│ channel of a venue                                            │
└──────────────────────────────────────────────────────────────┘
                              │
                              ▼
┌──────────────────────────────────────────────────────────────┐
│ Receive a second wireless signal by a second wireless device  │──4404
│ with multiple receive antennas through the wireless multipath │
│ channel, wherein the second wireless signal differs from the  │
│ first wireless signal due to the wireless multipath channel   │
│ that is impacted by a motion of an object in the venue         │
└──────────────────────────────────────────────────────────────┘
                              │
                              ▼
┌──────────────────────────────────────────────────────────────┐
│ Obtain a number of time series of channel information (TSCI)   │──4406
│ of the wireless multipath channel based on the second wireless │
│ signal, wherein each TSCI is associated with a respective one  │
│ of the transmit antennas and a respective one of the receive   │
│ antennas                                                       │
└──────────────────────────────────────────────────────────────┘
                              │
                              ▼
┌──────────────────────────────────────────────────────────────┐
│ Preprocess the number of TSCI to remove or reduce low quality  │──4408
│ CI                                                             │
└──────────────────────────────────────────────────────────────┘
                              │
                              ▼
┌──────────────────────────────────────────────────────────────┐
│ Monitor the motion of the object in the venue based on the     │──4410
│ number of preprocessed TSCI                                    │
└──────────────────────────────────────────────────────────────┘
```

**FIG. 44**

EP 3 869 223 A1

<u>4500</u>

Compute a plurality of instantaneous testing measures, where each of the instantaneous testing measures is associated with a respective one of time stamps in a time window ⟩—4502

Compute a testing measure of the time window based on an aggregation of the plurality of instantaneous testing measures ⟩—4504

Compute an adaptive threshold of the time window based on the number of TSCI ⟩—4506

Identify, based on the testing measure and the adaptive threshold, the time window as a questionable time window which is at least one of: noisy, abnormal, atypical, irregular, untrustworthy, questionable, or erratic ⟩—4508

Identify all channel information (CI) in the questionable time window as questionable CI ⟩—4510

Compute the preprocessed TSCI by removing all questionable CI from the number of TSCI ⟩—4512

**FIG. 45**

```
┌─────────────────────────────────────────────────────────────────────┐
│  Compute at least one time series of features (TSF) based on the     │──4602
│                    number of TSCI                                     │
└─────────────────────────────────────────────────────────────────────┘
                                    │
                                    ▼
┌─────────────────────────────────────────────────────────────────────┐
│      Associate an event with a characteristics of the at least one   │──4604
│                              TSF                                      │
└─────────────────────────────────────────────────────────────────────┘
                                    │
                                    ▼
┌─────────────────────────────────────────────────────────────────────┐
│   Detect the event by recognizing the characteristics of the at      │──4606
│                        least one TSF                                  │
└─────────────────────────────────────────────────────────────────────┘
                                    │
                                    ▼
┌─────────────────────────────────────────────────────────────────────┐
│   Monitor the motion of the object in the venue based on the at      │──4608
│                      least one TSF                                    │
└─────────────────────────────────────────────────────────────────────┘
                                    │
                                    ▼
┌─────────────────────────────────────────────────────────────────────┐
│  Generate, based on the monitoring, at least one of: a response, an  │──4610
│              assistance or a presentation                            │
└─────────────────────────────────────────────────────────────────────┘
```

**FIG. 46**

FIG. 47

4800

Interconnect wirelessly a set of Type 2 devices in a venue, where each Type 2 device is interconnected wirelessly with a respective set of at least one other Type 2 device and is associated with a respective set of Type 1 devices — 4802

Each Type 2 device asynchronously receives, from each of the respective set of Type 1 devices associated with the Type 2 device, a respective wireless signal through a respective wireless multipath channel impacted by a motion of an object in the venue — 4804

Each Type 2 device asynchronously receives, from each of a subset of the respective set of at least one other Type 2 device interconnected wirelessly with the Type 2 device, a respective wireless signal through a respective wireless multipath channel impacted by the motion of the object in the venue — 4806

Each Type 2 device obtains a set of asynchronous time series of channel information (ATSCI) associated with the Type 2 device, where each ATSCI is associated with a respective wireless multipath channel and is obtained based on the asynchronously received respective wireless signal — 4808

Monitor the motion of the object in the venue based on the set of ATSCI associated with each Type 2 device — 4810

**FIG. 48**

EP 3 869 223 A1

| Add, to a collaborative wireless motion monitoring system, at least one of: a new Type 1 device or a new Type 2 device | 4902 |

| Configure at least one of the new Type 1 device or the new Type 2 device, such that the new Type 1 device is configured to associate with an existing Type 2 device and the new Type 2 device is configured to interconnect with at least one existing Type 2 device | 4904 |

| Configure an existing Type 1 device to terminate an existing association with an existing Type 2 device and to associate with the new Type 2 device | 4906 |

| Update a configuration database of the collaborative wireless motion monitoring system with at least one of the new Type 1 device or the new Type 2 device | 4908 |

| Negotiate and initiate wireless signal communication associated with at least one of the new Type 1 device or the new Type 2 device | 4910 |

**FIG. 49**

EP 3 869 223 A1

FIG. 50

**5100**

5102 — Transmit a first wireless signal through a wireless multipath channel of a venue

5104 — Receive a second wireless signal through the wireless multipath channel, wherein the second wireless signal differs from the first wireless signal due to the wireless multipath channel that is impacted by a motion of an object in the venue

5106 — Obtain a time series of channel information (TSCI) of the wireless multipath channel based on the second wireless signal

5108 — Track the motion of the object based on the TSCI to generate a gesture trajectory of the object

5110 — Determine a gesture shape based on the gesture trajectory and a plurality of pre-determined gesture shapes

**FIG. 51**

**FIG. 52**

**FIG. 53**

**FIG. 54**

EP 3 869 223 A1

5500

**FIG. 55**

3 segment gestures

4 segment gestures

5 segment gestures

FIG. 56

**FIG. 57B**

**FIG. 57A**

FIG. 58A

**FIG. 58B**

FIG. 59A

**FIG. 59B**

EP 3 869 223 A1

FIG. 59C

**FIG. 60A**

FIG. 60B

**FIG. 60C**

FIG. 61A

**FIG. 61B**

FIG. 61C

Legend: TRRS(S,P), TRRS(P,T)

Area between TRRS$_{max}$ and PT

Area between TRRS$_{max}$ and SP

0.99
0.988
0.986
0.984

FIG. 62A

FIG. 62B

**FIG. 63A**

Confusion matrix with True class (rows D, P, T, X, Y, Z) versus Predicted class (columns D, P, T, X, Y, Z):

| True class \ Predicted class | D | P | T | X | Y | Z |
|---|---|---|---|---|---|---|
| D | 80.0% | 8.0% | | | | 12.0% |
| P | 13.0% | 72.0% | | | | 15.0% |
| T | | | 88.0% | | | 12.0% |
| X | | | | 92.0% | | 8.0% |
| Y | | | | 4.0% | 88.0% | 8.0% |
| Z | | | | | | 100.0% |

FIG. 63B

FIG. 63C

FIG. 64

**FIG. 65**

Europäisches
Patentamt

European
Patent Office

Office européen
des brevets

# EUROPEAN SEARCH REPORT

Application Number

EP 21 15 8553

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KAISHUN WU: "Wi-metal: Detecting metal by using wireless networks", 2016 IEEE INTERNATIONAL CONFERENCE ON COMMUNICATIONS (ICC), 1 May 2016 (2016-05-01), pages 1-6, XP055539959, DOI: 10.1109/ICC.2016.7511472 ISBN: 978-1-4799-6664-6 * the whole document * ----- | 1-15 | INV. G01S7/41 G01S13/88 G01V3/12 G01V3/38 |
| A | CN 110 766 067 A (ZHIJIANG COLLEGE OF ZHEJIANG UNIV TECHNOLOGY) 7 February 2020 (2020-02-07) * figures 1-5 * ----- | 14 | |

TECHNICAL FIELDS
SEARCHED      (IPC)

G01S
G01V

The present search report has been drawn up for all claims

| Place of search | Date of completion of the search | Examiner |
|---|---|---|
| Munich | 21 June 2021 | Reeck, Guido |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 21 15 8553

This annex lists the patent family members relating to the patent documents cited in the above-mentioned European search report.
The members are as contained in the European Patent Office EDP file on
The European Patent Office is in no way liable for these particulars which are merely given for the purpose of information.

21-06-2021

| Patent document cited in search report | Publication date | Patent family member(s) | Publication date |
|---|---|---|---|
| CN 110766067 A | 07-02-2020 | NONE | |

EPO FORM P0459

For more details about this annex : see Official Journal of the European Patent Office, No. 12/82